(19) Europäisches Patentamt
European Patent Office
Office européen des brevets

(11) **EP 4 478 088 A2**

(12) **EUROPEAN PATENT APPLICATION**

(43) Date of publication:
**18.12.2024 Bulletin 2024/51**

(51) International Patent Classification (IPC):
**G01S 13/56** (2006.01)

(21) Application number: **24210184.8**

(22) Date of filing: **13.06.2022**

(52) Cooperative Patent Classification (CPC):
**G01S 7/415; G01S 7/006; G01S 7/292; G01S 13/56;** G01S 7/2883; G01S 7/414; G01S 7/417; G01S 13/003; G01S 13/66; G01S 13/862

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.06.2021 US 202163209907 P**
**18.06.2021 US 202117352185**
**19.08.2021 US 202163235103 P**
**06.10.2021 US 202163253083 P**
**22.12.2021 US 202163293065 P**
**30.05.2022 US 202217827902**
**12.06.2022 US 202217838228**
**12.06.2022 US 202217838231**
**12.06.2022 US 202217838244**

(62) Document number(s) of the earlier application(s) in accordance with Art. 76 EPC:
**22178761.7 / 4 102 247**

(71) Applicant: **ORIGIN RESEARCH WIRELESS, INC.**
**Rockville, MD 20852 (US)**

(72) Inventors:
• **WANG, Beibei**
  **Clarksville, 21029 (US)**
• **OZTURK, Muhammed Zahid**
  **Beltsville, 20705 (US)**
• **WU, Chenshu**
  **Beltsville, 20705 (US)**
• **ZENG, Xiaolu**
  **Beijing, 100081 (CN)**

• **REGANI, Sai Deepika**
  **Hayttsville, 20783 (US)**
• **HU, Yuqian**
  **College Park, 20740 (US)**
• **LIU, K.J. Ray**
  **Potomac, 20854 (US)**
• **AU, Oscar Chi-Lim**
  **San Jose, 95136 (US)**
• **HAN, Yi**
  **Ellicott, 21042 (US)**
• **LAI, Hung-Quoc Duc**
  **Parkville, 21234 (US)**
• **CLAFFEY, David**
  **Somerville, 02143 (US)**
• **CHEN, Chun-I**
  **Brookeville, 20833 (US)**
• **BUGOS, Dan**
  **Baltimore, 21230 (US)**
• **ZAN, Peng**
  **Gaithersburg, 20879 (US)**
• **ZHU, Guozhen**
  **Greenbelt, 20770 (US)**

(74) Representative: **Boult Wade Tennant LLP**
**Salisbury Square House**
**8 Salisbury Square**
**London EC4Y 8AP (GB)**

Remarks:
This application was filed on 31-10-2024 as a divisional application to the application mentioned under INID code 62.

(54) **SYSTEM AND METHOD FOR RADIO-ASSISTED SOUND SENSING**

(57) Methods, apparatus and systems for sound sensing and wireless sensing are described. In one example, a described system comprises: a sensor configured to obtain a baseband mixture signal in a venue; a transmitter configured to transmit a first radio signal through a wireless channel of the venue; a receiver configured to receive a second radio signal through the wireless channel; and a processor. The baseband mixture signal comprises a mixture of a first source signal and an additional signal. The first source signal is generated by a first motion of a first object in the venue. The second radio signal differs from the first radio signal due to the wireless channel and at least the first motion of the first object in the venue. The processor is configured for: obtaining a radio feature of the second radio signal, constructing a first adaptive filter for the baseband mixture signal based on the radio feature, filtering the baseband mixture signal using the first adaptive filter to obtain a first output signal, and generating an estimation of the first source signal based on the first output signal.

**Description**

**TECHNICAL FIELD**

The present teaching generally relates to sound sensing and wireless sensing. More specifically, the present teaching relates to: speech enhancement and separation based on both audio and radio signals; wireless sensing based on channel information; wireless sensing based on linkwise motion statistics; and device identification and qualification based on wireless signals for wireless sensing.

**BACKGROUND**

Humans are enormously capable of understanding a noisy speech (a.k.a. speech enhancement (SE)) or separating one speaker from another (a.k.a. speech separation (SS)), which may be collectively called SES, and is known as a cocktail party problem. SES capability for machines is of great demand for many applications, such as voice commands, five speech recording, etc., yet remains a challenging problem using microphones.

Monaural SES methods achieved remarkable progress in recent years with the help of deep learning, especially when there is not much background noise. However, fundamental problems still exist in estimating the number of sources in a mixture, associating output sources with the desired speakers (a.k.a. label permutation problem), and tracing the speakers for long periods of time. Although these problems can be solved for clean mixtures, by clustering-based methods and permutation invariant training (PIT), their performance can decrease with noisy mixtures. Overall, audio-only approaches suffer from these ill-posed problems inherently.

To overcome the problems and enhance SES, multimodal systems have been introduced to exploit readily available information beyond audio, such as video. Similar to human perception, which also uses lip motion and facial information, audiovisual systems are shown to improve SES performance, especially in challenging cases, such as same-speaker mixtures. Same and similar-speaker mixtures are especially difficult for audio-only methods, as the distinction between the two sources is minimal. Additional visual information about the speaker, e.g., videos or even a facial picture of the user, or other information, such as voice activity detection, or pitch improves the SES performance. However, camera-based methods require good lighting conditions and raise potential privacy concerns.

A wireless sensing task may comprise target detection, motion target detection, stationary target detection, transition target detection, motion detection, human/tree motion detection, presence detection, child presence detection (CPD), in vehicle monitoring, in-vehicle CPD, vital sign monitoring, breathing detection, breathing monitoring, sleep monitoring, driver monitoring, driver behavior analysis, driver fatigue detection, inattentive driver detection, occupancy detection, people/passenger counting, etc. For example, CPD is becoming a regulatory requirement to save children's fives when they are left alone in unattended vehicles. However, most of the existing works require dedicated devices and suffer from limited accuracy and coverage.

With the proliferation of automobiles, the heat-stroke and death of children caused by being left alone in a vehicle have gained an increasing attention all over the world. According to the Heat Stress From Enclosed Vehicles and the latest update, 882 children have died (an average of 38 per year) and many more have suffered disabilities due to organ or brain damages caused by Pediatric Vehicular Heatstroke (PVH) since 1998 in the US. As more than 97% of the children reported are under the age of 6 who have little ability to exit the vehicle on his/her own, CPD is becoming a necessary function to improve the safety of cars especially in hot weather when the temperature inside the car can become fatal within a few minutes. Toward this end, from 2022, the European New Car Assessment Programme (NCAP) will reward solutions of CPD Systems, which are also considered as a regulatory requirement for all newly manufactured passenger vehicles starting from 2023. Equipped with CPD, a child left alone in an unattended car can be detected and caregivers or emergency services will be alerted to avoid heatstroke fatalities.

Early CPD systems are implemented by leveraging the information from a variety of sensors equipped on the baby seat, such as the optical/weight/heat/pressure sensors. However, the sensor-based methods have several drawbacks, such as the limited coverage making it hard to detect a child outside the baby seat, high false alarm rate (for example, a child cannot be easily distinguished from an inanimate item of a similar weight using weight sensors), and ad-hoc parameters corresponding to different children and cars. Later, wireless transceivers and capacitive/electric sensors were introduced to reduce the false alarm rate while the detection area is still limited within/next to the baby seat. Pyroelectric Infrared (PIR) sensor-based approaches turned out to be able to enlarge the coverage by detecting the motion of a child. However, PIR sensors are very sensitive to the temperature of the surrounding environment which degrades its reliability in practice. Vision-based CPD systems are more reliable in detection accuracy by using image/video processing. But they usually require dedicated hardware/cameras and thus increase the cost and energy consumption of the car. In addition, the quality of the image/video is sensitive to light conditions. Although the latest machine learning-based techniques have achieved better detection accuracy, they still heavily depend on the input image quality, thus preventing their practical deployments.

Object motion detection becomes more and more important nowadays. For example, for security and/or management purposes, a user may want to detect any object motion in the user's house; a manager of a supermarket may want to detect any object motion in the supermarket; and a nurse in a hospital may want to detect any motion of a patient in the hospital.

Existing systems and methods for detecting object motions cannot provide enough accuracy and often lead to false alarms. Existing approaches include those based on passive infrared (PIR), active infrared (AIR) and Ultrasonic. PIR sensors are the most widely used motion sensor in home security systems, which detect human motions by sensing the difference between background heat and the heat emitted by moving people. However, solutions based on PIR sensors are prone to false alarms due to its sensitivity to environmental changes, like hot/cold air flow and sunlight. These solutions are easily defeated by blocking the body heat emission, e.g. wearing a heat-insulating full-body suit. In addition, the solutions have limited detection ranges and need line-of-sight (LOS). In AIR based approaches, an infrared (IR) emitter sends a beam of IR which will be received by an IR receiver. When the beam is interrupted, a motion is detected. However, this kind of approaches can be easily seen as using a regular camera or any IR detection mechanism and also has limited range and thus need LOS. Ultrasonic sensors detect human motion by sending out ultrasonic sound waves into a space and measuring the speed at which they return, and motion can be detected if there are frequency changes. However, this kind of approaches can be defeated by wearing an anechoic suit. In addition, ultrasound cannot penetrate solid objects such as furniture or boxes and thus cause gaps in detection field. Furthermore, slow movements by a burglar may not trigger an alarm in an ultrasound-based detection system.

In real-world applications, it is not only the presence of motion but also where the motion happens that matters. For instance, smart home technologies can fully realize the potential energy saving for automatic control of utilities such as lighting, heating and indoor surveillance camera only at the presence of motion within a small range. Moreover, area-aware motion detection can provide important location-related context for further activity recognition of daily living. However, most existing approaches only aim at detecting motion in a pre-defined (e.g. a large building) area without investigating where (e.g. which room in the building) the target motion is. Previous approaches have also attempted to localize a human target using fingerprinting-based methods or geometric mapping-based methods. However, they usually require high setup efforts such as multiple transceivers with a specific geometric arrangement, or dedicated calibration and even training before achieving the precise localization, and therefore are not practical for motion localization. Thus, existing systems and methods for wireless sensing and localization are not entirely satisfactory.

With the proliferation of Internet of Things (IoT) applications, billions of household appliances, phones, smart devices, security systems, environment sensors, vehicles and buildings, and other radio-connected devices will transmit data and communicate with each other or people, and everything will be able to be measured and tracked all the time. Among the various approaches to measure what is happening in the surrounding environment, wireless sensing has received an increasing attention in recent years because of the ubiquitous deployment of wireless radio devices. In addition, human activities affect wireless signal propagations, therefore understanding and analyzing the way how wireless signals react to human activities can reveal rich information about the activities. As more bandwidth becomes available in the new generation of wireless systems, wireless sensing will make many smart IoT applications only imagined today possible in the near future. That is because when the bandwidth increases, one can see many more multipaths, in a rich-scattering environment such as in indoors or metropolitan area, which can be treated as hundreds of virtual antennas/sensors. Before an IoT device or any smart device is qualified and configured to use for wireless sensing, the device needs to be identified by the system. As such, an efficient and effective method for device identification of a wireless sensing system is desirable.

## SUMMARY

The present teaching generally relates to sound sensing and wireless sensing. More specifically, the present teaching relates to: speech enhancement and separation based on both audio and radio signals; wireless sensing based on channel information; wireless sensing based on linkwise motion statistics; and device identification and qualification based on wireless signals for wireless sensing.

In one embodiment, a system for radio-assisted signal estimation is described. The system comprises: a sensor configured to obtain a baseband mixture signal in a venue; a transmitter configured to transmit a first radio signal through a wireless channel of the venue; a receiver configured to receive a second radio signal through the wireless channel; and a processor. The baseband mixture signal comprises a mixture of a first source signal and an additional signal. The first source signal is generated by a first motion of a first object in the venue. The second radio signal differs from the first radio signal due to the wireless channel and at least the first motion of the first object in the venue. The processor is configured for: obtaining a radio feature of the second radio signal, constructing a first adaptive filter for the baseband mixture signal based on the radio feature, filtering the baseband mixture signal using the first adaptive filter to obtain a first output signal, and generating an estimation of the first source signal based on the first output signal.

In another embodiment, a method for radio-assisted signal estimation is described. The method comprises:

obtaining a baseband mixture signal in a venue, wherein the baseband mixture signal comprises a mixture of a first source signal and an additional signal, wherein the first source signal is generated by a first motion of a first object in the venue; obtaining a radio feature of a radio signal transmitted from a transmitter to a receiver in the venue, wherein the received radio signal differs from the transmitted radio signal due to a wireless channel of the venue and at least the first motion of the first object in the venue; constructing a first adaptive filter for the baseband mixture signal based on the radio feature; filtering the baseband mixture signal using the first adaptive filter to obtain a first output signal; and generating an estimation of the first source signal based on the first output signal.

In one embodiment, a system for wireless sensing is described. The system comprises: a transmitter configured to transmit a wireless signal through a wireless multipath channel of a venue, wherein the wireless multipath channel is impacted by a motion of an object in the venue; a receiver configured to receive the wireless signal through the wireless multipath channel, wherein the received wireless signal differs from the transmitted wireless signal due to the wireless multipath channel and the motion of the object; and a processor. The processor is configured for: obtaining N1 time series of channel information (TSCI) of the wireless multipath channel based on the received wireless signal, wherein N1=N2*N3, wherein N2 is a quantity of transmit antennas on the transmitter, wherein N3 is a quantity of receive antennas on the receiver, wherein each TSCI is associated with a respective transmit antenna of the transmitter and a respective receive antenna of the receiver, computing N4 selected projections based on the N1 TSCI, wherein N4 is a positive integer, and performing a sensing task associated with the motion of the object based on the N4 selected projections.

In another embodiment, a wireless device of a system for wireless sensing is described. The wireless device comprises: a processor; a memory communicatively coupled to the processor; and a receiver communicatively coupled to the processor. An additional wireless device of the system is configured to transmit a wireless signal through a wireless multipath channel of a venue. The wireless multipath channel is impacted by a motion of an object in the venue. The receiver is configured to receive the wireless signal through the wireless multipath channel. The received wireless signal differs from the transmitted wireless signal due to the wireless multipath channel and the motion of the object. The processor is configured for: obtaining N1 time series of channel information (TSCI) of the wireless multipath channel based on the received wireless signal, wherein N1=N2*N3, wherein N2 is a quantity of transmit antennas on the transmitter, wherein N3 is a quantity of receive antennas on the receiver, wherein each TSCI is associated with a respective transmit antenna of the transmitter and a respective receive antenna of the receiver, computing N4 selected projections based on the N1 TSCI, wherein N4 is a positive integer, and performing a sensing task associated with the motion of the object based on the N4 selected projections.

In yet another embodiment, a method for wireless sensing is described. The method comprises: transmitting a wireless signal from a transmitter through a wireless multipath channel of a venue, wherein the wireless multipath channel is impacted by a motion of an object in the venue; receiving the wireless signal by a receiver through the wireless multipath channel, wherein the received wireless signal differs from the transmitted wireless signal due to the wireless multipath channel and the motion of the object; obtaining N1 time series of channel information (TSCI) of the wireless multipath channel based on the received wireless signal, wherein N1=N2*N3, wherein N2 is a quantity of transmit antennas on the transmitter, wherein N3 is a quantity of receive antennas on the receiver, wherein each TSCI is associated with a respective transmit antenna of the transmitter and a respective receive antenna of the receiver; computing N4 selected projections based on the N1 TSCI, wherein N4 is a positive integer; and performing a sensing task associated with the motion of the object based on the N4 selected projections.

In one embodiment, a method of a wireless sensing system is described. The method comprises: determining a plurality of heterogeneous wireless devices of the wireless sensing system in a venue; determining a plurality of device-links each of comprises two of the heterogeneous wireless devices, wherein one of the two heterogeneous wireless devices functions as a transmitter and the other one of the two heterogeneous wireless devices functions as a receiver; for each respective device-link of the plurality of device-links, transmitting a respective wireless signal from a respective transmitter of the respective device-link through a wireless multipath channel of the venue, wherein the wireless multipath channel is impacted by a motion of an object in the venue, receiving the respective wireless signal by a respective receiver of the respective device-link through the wireless multipath channel, wherein the respective received wireless signal differs from the respective transmitted wireless signal due to the wireless multipath channel of the venue and the motion of the object, obtaining a respective time series of channel information (TSCI) of the wireless multipath channel based on the respective received wireless signal of the respective device-link, computing a respective linkwise motion statistics (link-MS) for the respective device-link based on the respective TSCI; performing a sensing task associated with the motion of the object based on at least one of: all the TSCI or all the link-MS; and computing a location in the venue associated with the sensing task based on all the link-MS.

In another embodiment, a system for wireless sensing is described. The system comprises: a plurality of heterogeneous wireless devices forming a plurality of device-links in a venue, wherein each of the plurality of device-links comprises two of the heterogeneous wireless devices, wherein one of the two heterogeneous wireless devices functions as a transmitter and the other one of the two heterogeneous wireless devices functions as a receiver; and at least one processor. For each respective device-link of the plurality of device-links: a respective transmitter of the respective device-link is configured to transmit a respective wireless signal through a wireless multipath channel of the venue, the wireless multipath channel is impacted by a motion of an object in the venue, a respective receiver of the respective device-link is configured to receive the respective wireless signal through the wireless multipath channel, the respective received wireless signal differs from the respective transmitted wireless signal due to the wireless multipath channel of the venue and the motion of the object, and the at least one processor is configured to obtain a respective time series of channel information (TSCI) of the wireless multipath channel based on the respective received wireless signal of the respective device-link, and to compute a respective linkwise motion statistics (link-MS) for the respective device-link based on the respective TSCI. The at least one processor is further configured for: performing a sensing task associated with the motion of the object based on at least one of: all the TSCI or all the link-MS, and computing a location in the venue associated with the sensing task based on all the link-MS.

In one embodiment, a system for wireless sensing is described. The system comprises: a transmitter configured to transmit a wireless signal through a wireless multipath channel of a venue, wherein the wireless multipath channel is impacted by a movement of an object in the venue; a receiver configured to receive the wireless signal through the wireless multipath channel, wherein the received wireless signal differs from the transmitted wireless signal due to the wireless multipath channel and the movement of the object; and a processor. The processor is configured for: obtaining a number of time series of channel information (TSCI) of the wireless multipath channel based on the received wireless signal, computing a time series of motion analytics (TSMA) based on the number of TSCI, computing an information of a target device based on the TSMA, wherein the target device is one of: the transmitter, the receiver, or an additional device in the venue, wherein the information of the target device comprises at least one of: an identity, a name, a label, a tag, or a location.

In another embodiment, a wireless device of a system for wireless sensing is described. The wireless device comprises: a processor; a memory communicatively coupled to the processor; and a receiver communicatively coupled to the processor. An additional wireless device of the system is configured to transmit a wireless signal through a wireless multipath channel of a venue. The wireless multipath channel is impacted by a movement of an object in the venue. The receiver is configured to receive the wireless signal through the wireless multipath channel. The received wireless signal differs from the transmitted wireless signal due to the wireless multipath channel and the movement of the object. The processor is configured for: obtaining a number of time series of channel information (TSCI) of the wireless multipath channel based on the received wireless signal, computing a time series of motion analytics (TSMA) based on the number of TSCI, computing an information of a target device based on the TSMA. The target device is one of: the transmitter, the receiver, or an additional device in the venue. The information of the target device comprises at least one of: an identity, a name, a label, a tag, or a location.

In yet another embodiment, a method for wireless sensing is described. The method comprises: transmitting a wireless signal from a transmitter through a wireless multipath channel of a venue, wherein the wireless multipath channel is impacted by a movement of an object in the venue; receiving the wireless signal by a receiver through the wireless multipath channel, wherein the received wireless signal differs from the transmitted wireless signal due to the wireless multipath channel and the movement of the object; obtaining a number of time series of channel information (TSCI) of the wireless multipath channel based on the received wireless signal; computing a time series of motion analytics (TSMA) based on the number of TSCI; and computing an information of a target device based on the TSMA. The target device is one of: the transmitter, the receiver, or an additional device in the venue. The information of the target device comprises at least one of: an identity, a name, a label, a tag, or a location.

Other concepts relate to software for implementing the present teaching on sound sensing and wireless sensing. Additional novel features will be set forth in part in the description which follows, and in part will become apparent to those skilled in the art upon examination of the following and the accompanying drawings or may be learned by production or operation of the examples. The novel features of the present teachings may be realized and attained by practice or use of various aspects of the methodologies, instrumentalities and combinations set forth in the detailed examples discussed below.

The following numbered clauses show further illustrative examples only:

    1. A system for radio-assisted signal estimation, comprising:

        a sensor configured to obtain a baseband mixture signal in a venue, wherein the baseband mixture signal comprises a mixture of a first source signal and an additional signal, wherein the first source signal is generated by a first motion of a first object in the venue;
        a transmitter configured to transmit a first radio signal through a wireless channel of the venue;
        a receiver configured to receive a second radio signal through the wireless channel, wherein the second radio signal differs from the first radio signal due to the wireless channel and at least the first motion of the first object in the venue; and
        a processor configured for:

obtaining a radio feature of the second radio signal,
constructing a first adaptive filter for the baseband mixture signal based on the radio feature,
filtering the baseband mixture signal using the first adaptive filter to obtain a first output signal, and
generating an estimation of the first source signal based on the first output signal.

2. The system of clause 1, wherein constructing the first adaptive filter comprises:

constructing a first baseband filter without using the radio feature of the second radio signal;
constructing a second baseband filter based on the radio feature of the second radio signal, wherein the second baseband filter comprises at least one signal processing element similar to that of the first baseband filter; and constructing the first adaptive filter based on the first baseband filter, the second baseband filter, a third filter and a fourth filter.

3. The system of clauses 1 or 2, wherein:

the first baseband filter comprises: a first pre-processing in a first signal domain, a first transformation from the first signal domain to a first transformed domain, and a first transformed-domain filter in the first transformed domain;
the second baseband filter comprises: a second pre-processing in a second signal domain, a second transformation from the second signal domain to a second transformed domain, and a second transformed-domain filter in the second transformed domain;
the third filter comprises: a third pre-processing based on outputs of the first and second baseband filters, and a third transformed-domain filter in a third signal domain; and
the fourth filter comprises: a fourth transformed-domain filter in the first transformed domain based on output of the third transformed-domain filter, a first inverse transformation from the first transformed domain to the first signal domain, and a post-processing in the first signal domain.

4. The system of clauses 1 to 3, wherein:

at least one of the first pre-processing, the second pre-processing or the third pre-processing comprises at least one of: feature extraction, magnitude computation, high-pass filter, random rotation in IQ plane, phase cleaning, or magnitude cleaning;
at least one of the first signal domain or the second signal domain is a time domain; and
at least one of the first transformed domain or the second transformed domain is a time-frequency domain.

5. The system of clauses 1 to 4, wherein:

at least one of the first transformation or the second transformation comprises at least one of: an adaptive encoder, a short-time Fourier transform, a projection into the time-frequency domain, a number of kernels, a number of convolutional filters, or the number of convolutional filters followed by another number of convolutional filters;
at least one of the first transformed-domain filter, the second transformed-domain filter, the third transformed-domain filter, or the fourth transformed-domain filter comprises at least one of: reshaping, concatenation, neural network, dual-path recurrent neural network, neural network with bidirectional long short-term memory, or deep neural network;
the first inverse transformation comprises at least one of: an inverse of the first transformation, or a transposed convolution operation;
the post-processing comprises at least one of: concatenation, overlap-and-add (OLA), synchronized overlap-and-add (SOLA), overlap-and-save, overlap-and-discard, or overlap-and-scrap.

6. The system of clauses 1 to 5, wherein filtering the baseband mixture signal using the first adaptive filter comprises:

filtering the baseband mixture signal in the first signal domain using the first baseband filter to generate a first intermediate signal in the first transformed domain;
filtering a baseband radio-derived signal in the second signal domain using the second baseband filter to generate a second intermediate signal in the second transformed domain, wherein the baseband radio-derived signal is derived from the second radio signal based on the radio feature;
filtering a combination of the first intermediate signal and the second intermediate signal using the third filter to construct the fourth transformed-domain filter of the fourth filter; and

filtering a transformed baseband mixture signal using the fourth filter to obtain the first output signal, wherein the transformed baseband mixture signal is obtained by preprocessing the baseband mixture signal using the first pre-processing followed by transforming from the first signal domain to the first transformed domain using the first transformation.

7. The system of clauses 1 to 6, wherein:

the additional signal comprises a mixture of a second source signal and a third signal;

the second source signal is generated by a second motion of a second object in the venue;

the second radio signal differs from the first radio signal due to: the wireless channel, the first motion of the first object, and the second motion of the second object;

the processor is further configured for:

constructing a second adaptive filter for the baseband mixture signal based on the radio feature,

filtering the baseband mixture signal using the second adaptive filter to obtain a second output signal, and

generating an estimation of the second source signal based on the second output signal.

8. The system of clauses 1 to 7, wherein:

the processor is further configured for constructing the second adaptive filter based on the first baseband filter, the second baseband filter, an additional third filter and an additional fourth filter;

the additional third filter comprises: an additional third pre-processing based on outputs of the first and second baseband filters, and an additional third transformed-domain filter in the third signal domain; and

the additional fourth filter comprises: an additional fourth transformed-domain filter in the first transformed domain based on output of the additional third transformed-domain filter, the first inverse transformation from the first transformed domain to the first signal domain, and the post-processing in the first signal domain.

9. The system of clauses 1 to 8, wherein filtering the baseband mixture signal using the second adaptive filter comprises:

filtering an additional baseband radio-derived signal in the second signal domain using the second baseband filter to generate an additional second intermediate signal in the second transformed domain, wherein the additional baseband radio-derived signal is derived from the second radio signal based on the radio feature;

filtering a combination of the first intermediate signal, and the additional second intermediate signal using the additional third filter to construct the additional fourth transformed-domain filter of the additional fourth filter; and

filtering the transformed baseband mixture signal using the additional fourth filter to obtain the second output signal.

10. The system of clauses 1 to 9, wherein the processor is further configured for:

filtering a combination of the first intermediate signal, the second intermediate signal and the additional second intermediate signal using the additional third filter to construct the fourth transformed-domain filter of the fourth filter and the additional fourth transformed-domain filter of the additional fourth filter.

11. The system of clauses 1 to 10, wherein the processor is further configured for:

obtaining, based on the second radio signal, the radio feature comprising a number of time series of channel information (TSCI) of the wireless channel, wherein

each TSCI is associated with a transmit antenna of the transmitter and a receive antenna of the receiver,

the second radio signal comprises a series of sounding signals such that each channel information (CI) is associated with a corresponding sounding signal,

each CI comprises at least one of: channel state information (CSI), channel impulse response (CIR), channel frequency response (CFR), or received signal strength index (RSSI); and

deriving the baseband radio-derived signal from the second radio signal based on the number of TSCI.

12. The system of clauses 1 to 11, wherein the processor is further configured for:

performing beamforming based on the number of TSCI;
detecting a first location of the first object, wherein the first location is associated with a first range and a first direction;
determining a first beamformed TSCI associated with the first direction;
determining a first tab of each CI of the first beamformed TSCI associated with the first range; and
deriving the baseband radio-derived signal from the second radio signal based on the first tab of each CI of the first beamformed TSCI.

13. The system of clauses 1 to 12, wherein the processor is further configured for:

detecting a second location of the second object, wherein the second location is associated with a second range and/or a second direction;
determining a second beamformed TSCI associated with the second direction;
determining a second tab of each CI of the second beamformed TSCI associated with the second range;
deriving the additional baseband radio-derived signal from the second radio signal based on the second tab of each CI of the second beamformed TSCI; and
constructing the second adaptive filter for the baseband mixture signal based on the additional baseband radio-derived signal.

14. The system of clauses 1 to 13, wherein:

the first signal domain is a time domain associated with a first sampling rate;
the second signal domain is a time domain associated with a second sampling rate;
the second radio signal is at least one of: a radio signal with a carrier frequency larger than 10GHz, a millimeter wave radio signal, a radio signal with a bandwidth larger than 200MHz, a WLAN signal, a WiFi signal, a wireless communication signal, an ultra-wide band (UWB) radio signal, or a radar signal;
the first object is at least one of: a first person actively generating the first source signal, a first device actively outputting the first source signal, or an object passively vibrating according to the first source signal; and
the first source signal comprises at least one of: a sound, a speech signal, a musical sound, an instrument sound, a man-made sound, a machine sound, a synthesized sound, an audio signal, a visual signal, an imaging signal, or a baseband sensing signal.

15. A method for radio-assisted signal estimation, comprising:

obtaining a baseband mixture signal in a venue, wherein the baseband mixture signal comprises a mixture of a first source signal and an additional signal, wherein the first source signal is generated by a first motion of a first object in the venue;
obtaining a radio feature of a radio signal transmitted from a transmitter to a receiver in the venue, wherein the received radio signal differs from the transmitted radio signal due to a wireless channel of the venue and at least the first motion of the first object in the venue;
constructing a first adaptive filter for the baseband mixture signal based on the radio feature;
filtering the baseband mixture signal using the first adaptive filter to obtain a first output signal; and
generating an estimation of the first source signal based on the first output signal.

**BRIEF DESCRIPTION OF DRAWINGS**

The methods, systems, and/or devices described herein are further described in terms of exemplary embodiments. These exemplary embodiments are described in detail with reference to the drawings. These embodiments are non-limiting exemplary embodiments, in which like reference numerals represent similar structures throughout the several views of the drawings.

FIG. 1 illustrates an overview of a speech enhancement and separation system using audio and radio signals, according to some embodiments of the present disclosure.
FIG. 2 illustrates an exemplary block diagram of a speech enhancement and separation system, according to some embodiments of the present disclosure.
FIG. 3 illustrates a constant false alarm rate (CFAR) window for radio feature extraction, according to some embodiments of the present disclosure.
FIG. 4 illustrates an amplitude map for radio feature extraction, according to some embodiments of the present disclosure.

FIG. 5 illustrates a variance map for radio feature extraction, according to some embodiments of the present disclosure.

FIG. 6 illustrates a detection map for radio feature extraction, according to some embodiments of the present disclosure.

FIG. 7 illustrates a clustering output for radio feature extraction, according to some embodiments of the present disclosure.

FIG. 8A and FIG. 8B illustrate a unimodal system and a multimodal system respectively, according to some embodiments of the present disclosure.

FIG. 9 illustrates a detailed structure of a speech enhancement and separation system, according to some embodiments of the present disclosure.

FIG. 10 illustrates a reshaping operation and a workflow of a dual-path recurrent neural network (DPRNN), according to some embodiments of the present disclosure.

FIG. 11 illustrates learning curves for audio-only (AO) and audio-radio (AR) systems, according to some embodiments of the present disclosure.

FIG. 12 illustrates a performance comparison between audio-only (AO) and audio-radio (AR) systems, according to some embodiments of the present disclosure.

FIG. 13 illustrates a differential gain for an audio-radio (AR) system compared to an audio-only (AO) system, according to some embodiments of the present disclosure.

FIGS. 14A-14C illustrate different experimental settings for a speech enhancement and separation system, according to some embodiments of the present disclosure.

FIG. 15 illustrates a flow chart of an exemplary method for radio-assisted signal estimation, according to some embodiments of the present disclosure.

FIG. 16 illustrates a system for radio-assisted signal estimation, according to some embodiments of the present disclosure.

FIG. 17 illustrates a first adaptive filter in a system for radio-assisted signal estimation, according to some embodiments of the present disclosure.

FIG. 18 illustrates a detailed diagram of a first adaptive filter in a system for radio-assisted signal estimation, according to some embodiments of the present disclosure.

FIG. 19 illustrates an exemplary situation of multipath propagation inside a car, according to some embodiments of the present disclosure.

FIG. 20 illustrates an exemplary diagram of a wireless sensing system, according to some embodiments of the present disclosure.

FIG. 21 illustrates exemplary breathing rate estimation with and without boosted ACF of a breathing signal, according to some embodiments of the present disclosure.

FIG. 22 illustrates exemplary Motion statistics in different scenarios for wireless sensing, according to some embodiments of the present disclosure.

FIGS. 23A-23B illustrate exemplary performance of a wireless sensing system, according to some embodiments of the present disclosure.

FIGS. 24A-24B illustrate exemplary performance of a wireless sensing system with respect to sample rate, according to some embodiments of the present disclosure.

FIG. 25 illustrates exemplary performance of a wireless sensing system with respect to bandwidth, according to some embodiments of the present disclosure.

FIG. 26 illustrates a flow chart of an exemplary method for wireless sensing, according to some embodiments of the present disclosure.

FIG. 27A and FIG. 27B illustrate an exemplary single-way structure for wireless sensing, according to some embodiments of the present disclosure.

FIG. 28 illustrates an exemplary multi-way structure for wireless sensing, according to some embodiments of the present disclosure.

FIG. 29 illustrates an exemplary diagram showing a setup for multi-way sensing, according to some embodiments of the present disclosure.

FIG. 30 illustrates an exemplary room setup for multi-way sensing, according to some embodiments of the present disclosure.

FIG. 31 illustrates another exemplary room setup for multi-way sensing, according to some embodiments of the present disclosure.

FIG. 32 illustrates an exemplary diagram showing an exemplary method for wireless sensing, according to some embodiments of the present disclosure.

FIG. 33 illustrates an exemplary diagram showing an exemplary method for multi-way sensing, according to some embodiments of the present disclosure.

FIG. 34 illustrates an exemplary performance of response time for wireless sensing based on repetition test, according to some embodiments of the present disclosure.

FIG. 35 illustrates an exemplary performance of various ratios for wireless sensing based on repetition test, according to some embodiments of the present disclosure.

FIG. 36 illustrates an exemplary performance of response time for wireless sensing based on transition test, according to some embodiments of the present disclosure.

FIG. 37 illustrates an exemplary performance of various ratios for wireless sensing based on transition test, according to some embodiments of the present disclosure.

FIG. 38 illustrates a flow chart of an exemplary method for wireless sensing, according to some embodiments of the present disclosure.

FIG. 39 illustrates an exemplary overview of an ADL (activity of daily living) fusion engine for wireless sensing, according to some embodiments of the present disclosure.

FIGS. 40-41 illustrate exemplary diagrams for link detection of an ADL-based wireless sensing system, according to some embodiments of the present disclosure.

FIGS. 42-45 illustrate exemplary diagrams for location detection of an ADL-based wireless sensing system, according to some embodiments of the present disclosure.

FIG. 46 illustrates an exemplary diagram for selection operation of an ADL-based wireless sensing system, according to some embodiments of the present disclosure.

FIG. 47 illustrates exemplary images of a graphic user interface of an app for wireless sensing, according to some embodiments of the present disclosure.

FIG. 48 illustrates an exemplary floor plan with devices deployed for wireless sensing, according to some embodiments of the present disclosure.

FIG. 49 illustrates exemplary motion statistics response used for device identification for wireless sensing, according to some embodiments of the present disclosure.

FIG. 50 illustrates an exemplary image of a graphic user interface of an app for adding devices for wireless sensing, according to some embodiments of the present disclosure.

FIG. 51 illustrates exemplary images of a graphic user interface of an app for deleting a device for wireless sensing, according to some embodiments of the present disclosure.

FIG. 52 illustrates an exemplary floor plan for identifying devices used for wireless sensing, according to some embodiments of the present disclosure.

FIG. 53 illustrates a different exemplary floor plan for identifying devices used for wireless sensing, according to some embodiments of the present disclosure.

FIG. 54 illustrates exemplary motion statistics and decision made for identifying a first device used for wireless sensing, according to some embodiments of the present disclosure.

FIG. 55 illustrates exemplary motion statistics and decision made for identifying a second device used for wireless sensing, according to some embodiments of the present disclosure.

FIG. 56 illustrates a flow chart of an exemplary method for identifying devices used for wireless sensing, according to some embodiments of the present disclosure.

FIG. 57 illustrates an exemplary block diagram of a first wireless device of a system for wireless sensing or sound sensing, according to some embodiments of the present disclosure.

FIG. 58 illustrates an exemplary block diagram of a second wireless device of a system for wireless sensing or sound sensing, according to some embodiments of the present disclosure.

## DETAILED DESCRIPTION

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and/or circuitry have been described at a relatively high-level, without detail, in order to avoid unnecessarily obscuring aspects of the present teachings.

In one embodiment, the present teaching discloses a method, apparatus, device, system, and/or software (method/apparatus/device/system/software) of a wireless monitoring system. A time series of channel information (CI) of a wireless multipath channel (channel) may be obtained (e.g. dynamically) using a processor, a memory communicatively coupled with the processor and a set of instructions stored in the memory. The time series of CI (TSCI) may be extracted from a wireless signal (signal) transmitted between a Type 1 heterogeneous wireless device (e.g. wireless transmitter, TX) and a Type 2 heterogeneous wireless device (e.g. wireless receiver, RX) in a venue through the channel. The channel may be impacted by an expression (e.g. motion, movement, expression, and/or change in position/pose/shape/expression) of an object in the venue. A characteristics and/or a spatial-temporal information (STI, e.g. motion information) of the object and/or of the motion of the object may be monitored based on the TSCI. A task may be performed based on the characteristics and/or STI. A presentation associated with the task may be generated in a user-interface (UI) on a device of a user. The TSCI may be a wireless signal stream. The TSCI or each CI may be preprocessed. A device may be a station (STA). The symbol "A/B" means "A and/or B" in the present teaching.

The expression may comprise placement, placement of moveable parts, location, position, orientation, identifiable place, region, spatial coordinate, presentation, state, static expression, size, length, width, height, angle, scale, shape, curve, surface, area, volume, pose, posture, manifestation, body language, dynamic expression, motion, motion sequence, gesture, extension, contraction, distortion, deformation, body expression (e.g. head, face, eye, mouth, tongue, hair, voice, neck, limbs, arm, hand, leg, foot, muscle, moveable parts), surface expression (e.g. shape, texture, material, color, electromagnetic (EM) characteristics, visual pattern, wetness, reflectance, translucency, flexibility), material property (e.g. living tissue, hair, fabric, metal, wood, leather, plastic, artificial material, solid, liquid, gas, temperature), movement, activity, behavior, change of expression, and/or some combination.

The wireless signal may comprise: transmitted/received signal, EM radiation, RF signal/transmission, signal in licensed/unlicensed /ISM band, bandlimited signal, baseband signal, wireless/mobile/cellular communication signal, wireless/mobile/cellular network signal, mesh signal, light signal/communication, downlink/uplink signal, unicast/multicast/broadcast signal, standard (e.g. WLAN, WWAN, WPAN, WBAN, international, national, industry, defacto, IEEE, IEEE 802, 802.11/15/16, WiFi, 802.11n/ac/ax/be, 3G/4G/LTE/5G/6G/7G/8G, 3GPP, Bluetooth, BLE, Zigbee, RFID, UWB, WiMax) compliant signal, protocol signal, standard frame, beacon/pilot/probe/enquiry/acknowledgement/handshake/synchronization signal, management/control/data frame, management/control/data signal, standardized wireless/cellular communication protocol, reference signal, source signal, motion probe/detection/sensing signal, and/or series of signals. The wireless signal may comprise a line-of-sight (LOS), and/or a non-LOS component (or path/link). Each CI may be extracted/generated/computed/sensed at a layer (e.g. PHY/MAC layer in OSI model) of Type 2 device and may be obtained by an application (e.g. software, firmware, driver, app, wireless monitoring software/system).

The wireless multipath channel may comprise: a communication channel, analog frequency channel (e.g. with analog carrier frequency near 700/800/900MHz, 1.8/1.8/2.4/3/5/6/27/60 GHz), coded channel (e.g. in CDMA), and/or channel of a wireless network/system (e.g. WLAN, WiFi, mesh, LTE, 4G/5G, Bluetooth, Zigbee, UWB, RFID, microwave). It may comprise more than one channel. The channels may be consecutive (e.g. with adjacent/overlapping bands) or non-consecutive channels (e.g. non-overlapping WiFi channels, one at 2.4GHz and one at 5GHz).

The TSCI may be extracted from the wireless signal at a layer of the Type 2 device (e.g. a layer of OSI reference model, physical layer, data link layer, logical link control layer, media access control (MAC) layer, network layer, transport layer, session layer, presentation layer, application layer, TCP/IP layer, internet layer, link layer). The TSCI may be extracted from a derived signal (e.g. baseband signal, motion detection signal, motion sensing signal) derived from the wireless signal (e.g. RF signal). It may be (wireless) measurements sensed by the communication protocol (e.g. standardized protocol) using existing mechanism (e.g. wireless/cellular communication standard/network, 3G/LTE/4G/5G/6G/7G/8G, WiFi, IEEE 802.11/15/16). The derived signal may comprise a packet with at least one of: a preamble, a header and a payload (e.g. for data/control/management in wireless links/networks). The TSCI may be extracted from a probe signal (e.g. training sequence, STF, LTF, L-STF, L-LTF, L-SIG, HE-STF, HE-LTF, HE-SIG-A, HE-SIG-B, CEF) in the packet. A motion detection/sensing signal may be recognized/identified base on the probe signal. The packet may be a standard-compliant protocol frame, management frame, control frame, data frame, sounding frame, excitation frame, illumination frame, null data frame, beacon frame, pilot frame, probe frame, request frame, response frame, association frame, reassociation frame, disassociation frame, authentication frame, action frame, report frame, poll frame, announcement frame, extension frame, enquiry frame, acknowledgement frame, RTS frame, CTS frame, QoS frame, CF-Poll frame, CF-Ack frame, block acknowledgement frame, reference frame, training frame, and/or synchronization frame.

The packet may comprise a control data and/or a motion detection probe. A data (e.g. ID/parameters/ characteristics/ settings/ control signal/command/instruction/ notification/ broadcasting-related information of the Type 1 device) may be obtained from the payload. The wireless signal may be transmitted by the Type 1 device. It may be received by the Type 2 device. A database (e.g. in local server, hub device, cloud server, storage network) may be used to store the TSCI, characteristics, STI, signatures, patterns, behaviors, trends, parameters, analytics, output responses, identification information, user information, device information, channel information, venue (e.g. map, environmental model, network, proximity devices/networks) information, task information, class/category information, presentation (e.g. UI) information, and/or other information.

The Type 1/Type 2 device may comprise at least one of: electronics, circuitry, transmitter (TX)/receiver (RX)/transceiver, RF interface, "Origin Satellite"/"Tracker Bot", unicast/multicast/broadcasting device, wireless source device, source/destination device, wireless node, hub device, target device, motion detection device, sensor device, remote/wireless sensor device, wireless communication device, wireless-enabled device, standard compliant device, and/or receiver. The Type 1 (or Type 2) device may be heterogeneous because, when there are more than one instances of Type 1 (or Type 2) device, they may have different circuitry, enclosure, structure, purpose, auxiliary functionality, chip/IC, processor, memory, software, firmware, network connectivity, antenna, brand, model, appearance, form, shape, color, material, and/or specification. The Type 1/Type 2 device may comprise: access point, router, mesh router, internet-of-things (IoT) device, wireless terminal, one or more radio/RF subsystem/wireless interface (e.g. 2.4GHz radio, SGHz radio, front haul radio, backhaul radio), modem, RF front end, RF/radio chip or integrated circuit (IC).

At least one of: Type 1 device, Type 2 device, a link between them, the object, the characteristics, the STI, the monitoring of the motion, and the task may be associated with an identification (ID) such as UUID. The Type 1/Type 2/another device may obtain/store/retrieve/ access/preprocess/condition/process/analyze/monitor/apply the TSCI. The Type 1 and Type 2 devices may communicate network traffic in another channel (e.g. Ethernet, HDMI, USB, Bluetooth, BLE, WiFi, LTE, other network, the wireless multipath channel) in parallel to the wireless signal. The Type 2 device may passively observe/monitor/receive the wireless signal from the Type 1 device in the wireless multipath channel without establishing connection (e.g. association/authentication) with, or requesting service from, the Type 1 device.

The transmitter (i.e. Type 1 device) may function as (play role of) receiver (i.e. Type 2 device) temporarily, sporadically, continuously, repeatedly, interchangeably, alternately, simultaneously, concurrently, and/or contemporaneously; and vice versa. A device may function as Type 1 device (transmitter) and/or Type 2 device (receiver) temporarily, sporadically, continuously, repeatedly, simultaneously, concurrently, and/or contemporaneously. There may be multiple wireless nodes each being Type 1 (TX) and/or Type 2 (RX) device. A TSCI may be obtained between every two nodes when they exchange/communicate wireless signals. The characteristics and/or STI of the object may be monitored individually based on a TSCI, or jointly based on two or more (e.g. all) TSCI.

The motion of the object may be monitored actively (in that Type 1 device, Type 2 device, or both, are wearable of/associated with the object) and/or passively (in that both Type 1 and Type 2 devices are not wearable of/associated with the object). It may be passive because the object may not be associated with the Type 1 device and/or the Type 2 device. The object (e.g. user, an automated guided vehicle or AGV) may not need to carry/install any wearables/fixtures (i.e. the Type 1 device and the Type 2 device are not wearable/attached devices that the object needs to carry in order perform the task). It may be active because the object may be associated with either the Type 1 device and/or the Type 2 device. The object may carry (or installed) a wearable/a fixture (e.g. the Type 1 device, the Type 2 device, a device communicatively coupled with either the Type 1 device or the Type 2 device).

The presentation may be visual, audio, image, video, animation, graphical presentation, text, etc. A computation of the task may be performed by a processor (or logic unit) of the Type 1 device, a processor (or logic unit) of an IC of the Type 1 device, a processor (or logic unit) of the Type 2 device, a processor of an IC of the Type 2 device, a local server, a cloud server, a data analysis subsystem, a signal analysis subsystem, and/or another processor. The task may be performed with/without reference to a wireless fingerprint or a baseline (e.g. collected, processed, computed, transmitted and/or stored in a training phase/survey/current survey/previous survey/recent survey/initial wireless survey, a passive fingerprint), a training, a profile, a trained profile, a static profile, a survey, an initial wireless survey, an initial setup, an installation, a re-training, an updating and a reset.

The Type 1 device (TX device) may comprise at least one heterogeneous wireless transmitter. The Type 2 device (RX device) may comprise at least one heterogeneous wireless receiver. The Type 1 device and the Type 2 device may be collocated. The Type 1 device and the Type 2 device may be the same device. Any device may have a data processing unit/apparatus, a computing unit/system, a network unit/system, a processor (e.g. logic unit), a memory communicatively coupled with the processor, and a set of instructions stored in the memory to be executed by the processor. Some processors, memories and sets of instructions may be coordinated.

There may be multiple Type 1 devices interacting (e.g. communicating, exchange signal/control/notification/other data) with the same Type 2 device (or multiple Type 2 devices), and/or there may be multiple Type 2 devices interacting with the same Type 1 device. The multiple Type 1 devices/Type 2 devices may be synchronized and/or asynchronous, with same/different window width/size and/or time shift, same/different synchronized start time, synchronized end time, etc. Wireless signals sent by the multiple Type 1 devices may be sporadic, temporary, continuous, repeated, synchronous, simultaneous, concurrent, and/or contemporaneous. The multiple Type 1 devices/Type 2 devices may operate independently and/or collaboratively. A Type 1 and/or Type 2 device may have/comprise/be heterogeneous hardware circuitry (e.g. a heterogeneous chip or a heterogeneous IC capable of generating/receiving the wireless signal, extracting CI from received signal, or making the CI available). They may be communicatively coupled to same or different servers (e.g. cloud server, edge server, local server, hub device).

Operation of one device may be based on operation, state, internal state, storage, processor, memory output, physical location, computing resources, network of another device. Difference devices may communicate directly, and/or via another device/server/hub device/cloud server. The devices may be associated with one or more users, with associated settings. The settings may be chosen once, pre-programmed, and/or changed (e.g. adjusted, varied, modified)/varied over time. There may be additional steps in the method. The steps and/or the additional steps of the method may be performed in the order shown or in another order. Any steps may be performed in parallel, iterated, or otherwise repeated or performed in another manner. A user may be human, adult, older adult, man, woman, juvenile, child, baby, pet, animal, creature, machine, computer module/software, etc.

In the case of one or multiple Type 1 devices interacting with one or multiple Type 2 devices, any processing (e.g. time domain, frequency domain) may be different for different devices. The processing may be based on locations, orientation, direction, roles, user-related characteristics, settings, configurations, available resources, available bandwidth, network connection, hardware, software, processor, co-processor, memory, battery life, available power, antennas, antenna types, directional/unidirectional characteristics of the antenna, power setting, and/or other parameters/characteristics of the devices.

The wireless receiver (e.g. Type 2 device) may receive the signal and/or another signal from the wireless transmitter (e.g. Type 1 device). The wireless receiver may receive another signal from another wireless transmitter (e.g. a second Type 1 device). The wireless transmitter may transmit the signal and/or another signal to another wireless receiver (e.g. a second Type 2 device). The wireless transmitter, wireless receiver, another wireless receiver and/or another wireless transmitter may be moving with the object and/or another object. The another object may be tracked.

The Type 1 and/or Type 2 device may be capable of wirelessly coupling with at least two Type 2 and/or Type 1 devices. The Type 1 device may be caused/controlled to switch/establish wireless coupling (e.g. association, authentication) from the Type 2 device to a second Type 2 device at another location in the venue. Similarly, the Type 2 device may be caused/controlled to switch/establish wireless coupling from the Type 1 device to a second Type 1 device at yet another location in the venue. The switching may be controlled by a server (or a hub device), the processor, the Type 1 device, the Type 2 device, and/or another device. The radio used before and after switching may be different. A second wireless signal (second signal) may be caused to be transmitted between the Type 1 device and the second Type 2 device (or between the Type 2 device and the second Type 1 device) through the channel. A second TSCI of the channel extracted from the second signal may be obtained. The second signal may be the first signal. The characteristics, STI and/or another quantity of the object may be monitored based on the second TSCI. The Type 1 device and the Type 2 device may be the same. The characteristics, STI and/or another quantity with different time stamps may form a waveform. The waveform may be displayed in the presentation.

The wireless signal and/or another signal may have data embedded. The wireless signal may be a series of probe signals (e.g. a repeated transmission of probe signals, a re-use of one or more probe signals). The probe signals may change/vary over time. A probe signal may be a standard compliant signal, protocol signal, standardized wireless protocol signal, control signal, data signal, wireless communication network signal, cellular network signal, WiFi signal, LTE/5G/6G/7G signal, reference signal, beacon signal, motion detection signal, and/or motion sensing signal. A probe signal may be formatted according to a wireless network standard (e.g. WiFi), a cellular network standard (e.g. LTE/SG/6G), or another standard. A probe signal may comprise a packet with a header and a payload. A probe signal may have data embedded. The payload may comprise data. A probe signal may be replaced by a data signal. The probe signal may be embedded in a data signal. The wireless receiver, wireless transmitter, another wireless receiver and/or another wireless transmitter may be associated with at least one processor, memory communicatively coupled with respective processor, and/or respective set of instructions stored in the memory which when executed cause the processor to perform any and/or all steps needed to determine the STI (e.g. motion information), initial STI, initial time, direction, instantaneous location, instantaneous angle, and/or speed, of the object.

The processor, the memory and/or the set of instructions may be associated with the Type 1 device, one of the at least one Type 2 device, the object, a device associated with the object, another device associated with the venue, a cloud server, a hub device, and/or another server.

The Type 1 device may transmit the signal in a broadcasting manner to at least one Type 2 device(s) through the channel in the venue. The signal is transmitted without the Type 1 device establishing wireless connection (e.g. association, authentication) with any Type 2 device, and without any Type 2 device requesting services from the Type 1 device. The Type 1 device may transmit to a particular media access control (MAC) address common for more than one Type 2 devices. Each Type 2 device may adjust its MAC address to the particular MAC address. The particular MAC address may be associated with the venue. The association may be recorded in an association table of an Association Server (e.g. hub device). The venue may be identified by the Type 1 device, a Type 2 device and/or another device based on the particular MAC address, the series of probe signals, and/or the at least one TSCI extracted from the probe signals.

For example, a Type 2 device may be moved to a new location in the venue (e.g. from another venue). The Type 1 device may be newly set up in the venue such that the Type 1 and Type 2 devices are not aware of each other. During set up, the Type 1 device may be instructed/guided/caused/controlled (e.g. using dummy receiver, using hardware pin setting/connection, using stored setting, using local setting, using remote setting, using downloaded setting, using hub device, or using server) to send the series of probe signals to the particular MAC address. Upon power up, the Type 2 device may scan for probe signals according to a table of MAC addresses (e.g. stored in a designated source, server, hub device, cloud server) that may be used for broadcasting at different locations (e.g. different MAC address used for different venue such as house, office, enclosure, floor, multi-storey building, store, airport, mall, stadium, hall, station, subway, lot, area, zone, region, district, city, country, continent). When the Type 2 device detects the probe signals sent to the particular MAC address, the Type 2 device can use the table to identify the venue based on the MAC address.

A location of a Type 2 device in the venue may be computed based on the particular MAC address, the series of probe signals, and/or the at least one TSCI obtained by the Type 2 device from the probe signals. The computing may be performed by the Type 2 device.

The particular MAC address may be changed (e.g. adjusted, varied, modified) over time. It may be changed according to a time table, rule, policy, mode, condition, situation and/or change. The particular MAC address may be selected based on availability of the MAC address, a pre-selected fist, collision pattern, traffic pattern, data traffic between the Type 1 device and another device, effective bandwidth, random selection, and/or a MAC address switching plan. The particular MAC address may be the MAC address of a second wireless device (e.g. a dummy receiver, or a receiver that serves as a dummy receiver).

The Type 1 device may transmit the probe signals in a channel selected from a set of channels. At least one CI of the selected channel may be obtained by a respective Type 2 device from the probe signal transmitted in the selected channel.

The selected channel may be changed (e.g. adjusted, varied, modified) over time. The change may be according to a time table, rule, policy, mode, condition, situation, and/or change. The selected channel may be selected based on availability of channels, random selection, a pre-selected fist, co-channel interference, inter-channel interference, channel traffic pattern, data traffic between the Type 1 device and another device, effective bandwidth associated with channels, security criterion, channel switching plan, a criterion, a quality criterion, a signal quality condition, and/or consideration.

The particular MAC address and/or an information of the selected channel may be communicated between the Type 1 device and a server (e.g. hub device) through a network. The particular MAC address and/or the information of the selected channel may also be communicated between a Type 2 device and a server (e.g. hub device) through another network. The Type 2 device may communicate the particular MAC address and/or the information of the selected channel to another Type 2 device (e.g. via mesh network, Bluetooth, WiFi, NFC, ZigBee, etc.). The particular MAC address and/or selected channel may be chosen by a server (e.g. hub device). The particular MAC address and/or selected channel may be signaled in an announcement channel by the Type 1 device, the Type 2 device and/or a server (e.g. hub device). Before being communicated, any information may be pre-processed.

Wireless connection (e.g. association, authentication) between the Type 1 device and another wireless device may be established (e.g. using a signal handshake). The Type 1 device may send a first handshake signal (e.g. sounding frame, probe signal, request-to-send RTS) to the another device. The another device may reply by sending a second handshake signal (e.g. a command, or a clear-to-send CTS) to the Type 1 device, triggering the Type 1 device to transmit the signal (e.g. series of probe signals) in the broadcasting manner to multiple Type 2 devices without establishing connection with any Type 2 device. The second handshake signals may be a response or an acknowledge (e.g. ACK) to the first handshake signal. The second handshake signal may contain a data with information of the venue, and/or the Type 1 device. The another device may be a dummy device with a purpose (e.g. primary purpose, secondary purpose) to establish the wireless connection with the Type 1 device, to receive the first signal, and/or to send the second signal. The another device may be physically attached to the Type 1 device.

In another example, the another device may send a third handshake signal to the Type 1 device triggering the Type 1 device to broadcast the signal (e.g. series of probe signals) to multiple Type 2 devices without establishing connection (e.g. association, authentication) with any Type 2 device. The Type 1 device may reply to the third special signal by transmitting a fourth handshake signal to the another device. The another device may be used to trigger more than one Type 1 devices to broadcast. The triggering may be sequential, partially sequential, partially parallel, or fully parallel. The another device may have more than one wireless circuitries to trigger multiple transmitters in parallel. Parallel trigger may also be achieved using at least one yet another device to perform the triggering (similar to what as the another device does) in parallel to the another device. The another device may not communicate (or suspend communication) with the Type 1 device after establishing connection with the Type 1 device. Suspended communication may be resumed. The another device may enter an inactive mode, hibernation mode, sleep mode, stand-by mode, low-power mode, OFF mode and/or power-down mode, after establishing the connection with the Type 1 device. The another device may have the particular MAC address so that the Type 1 device sends the signal to the particular MAC address. The Type 1 device and/or the another device may be controlled and/or coordinated by a first processor associated with the Type 1 device, a second processor associated with the another device, a third processor associated with a designated source and/or a fourth processor associated with another device. The first and second processors may coordinate with each other.

A first series of probe signals may be transmitted by a first antenna of the Type 1 device to at least one first Type 2 device through a first channel in a first venue. A second series of probe signals may be transmitted by a second antenna of the Type 1 device to at least one second Type 2 device through a second channel in a second venue. The first series and the second series may/may not be different. The at least one first Type 2 device may/may not be different from the at least one second Type 2 device. The first and/or second series of probe signals may be broadcasted without connection (e.g. association, authentication) established between the Type 1 device and any Type 2 device. The first and second antennas may be same/different.

The two venues may have different sizes, shape, multipath characteristics. The first and second venues may overlap. The respective immediate areas around the first and second antennas may overlap. The first and second channels may be same/different. For example, the first one may be WiFi while the second may be LTE. Or, both may be WiFi, but the first one may be 2.4GHz WiFi and the second may be SGHz WiFi. Or, both may be 2.4GHz WiFi, but have different channel numbers, SSID names, and/or WiFi settings.

Each Type 2 device may obtain at least one TSCI from the respective series of probe signals, the CI being of the respective channel between the Type 2 device and the Type 1 device. Some first Type 2 device(s) and some second Type 2 device(s) may be the same. The first and second series of probe signals may be synchronous/asynchronous. A probe signal may be transmitted with data or replaced by a data signal. The first and second antennas may be the same.

The first series of probe signals may be transmitted at a first rate (e.g. 30Hz). The second series of probe signals may be transmitted at a second rate (e.g. 200Hz). The first and second rates may be same/different. The first and/or second rate may be changed (e.g. adjusted, varied, modified) over time. The change may be according to a time table, rule, policy, mode, condition, situation, and/or change. Any rate may be changed (e.g. adjusted, varied, modified) over time.

The first and/or second series of probe signals may be transmitted to a first MAC address and/or second MAC address respectively. The two MAC addresses may be same/different. The first series of probe signals may be transmitted in a first channel. The second series of probe signals may be transmitted in a second channel. The two channels may be same/different. The first or second MAC address, first or second channel may be changed over time. Any change may be according to a time table, rule, policy, mode, condition, situation, and/or change.

The Type 1 device and another device may be controlled and/or coordinated, physically attached, or may be of/in/of a common device. They may be controlled by/connected to a common data processor, or may be connected to a common bus interconnect/ network/ LAN/ Bluetooth network/ NFC network/ BLE network/ wired network/ wireless network/ mesh network/ mobile network/ cloud. They may share a common memory, or be associated with a common user, user device, profile, account, identity (ID), identifier, household, house, physical address, location, geographic coordinate, IP subnet, SSID, home device, office device, and/or manufacturing device.

Each Type 1 device may be a signal source of a set of respective Type 2 devices (i.e. it sends a respective signal (e.g. respective series of probe signals) to the set of respective Type 2 devices). Each respective Type 2 device chooses the Type 1 device from among all Type 1 devices as its signal source. Each Type 2 device may choose asynchronously. At least one TSCI may be obtained by each respective Type 2 device from the respective series of probe signals from the Type 1 device, the CI being of the channel between the Type 2 device and the Type 1 device.

The respective Type 2 device chooses the Type 1 device from among all Type 1 devices as its signal source based on identity (ID) or identifier of Type 1/Type 2 device, task to be performed, past signal source, history (e.g. of past signal source, Type 1 device, another Type 1 device, respective Type 2 receiver, and/or another Type 2 receiver), threshold for switching signal source, and/or information of a user, account, access info, parameter, characteristics, and/or signal strength (e.g. associated with the Type 1 device and/or the respective Type 2 receiver).

Initially, the Type 1 device may be signal source of a set of initial respective Type 2 devices (i.e. the Type 1 device sends a respective signal (series of probe signals) to the set of initial respective Type 2 devices) at an initial time. Each initial respective Type 2 device chooses the Type 1 device from among all Type 1 devices as its signal source.

The signal source (Type 1 device) of a particular Type 2 device may be changed (e.g. adjusted, varied, modified) when (1) time interval between two adjacent probe signals (e.g. between current probe signal and immediate past probe signal, or between next probe signal and current probe signal) received from current signal source of the Type 2 device exceeds a first threshold; (2) signal strength associated with current signal source of the Type 2 device is below a second threshold; (3) a processed signal strength associated with current signal source of the Type 2 device is below a third threshold, the signal strength processed with low pass filter, band pass filter, median filter, moving average filter, weighted averaging filter, linear filter and/or non-linear filter; and/or (4) signal strength (or processed signal strength) associated with current signal source of the Type 2 device is below a fourth threshold for a significant percentage of a recent time window (e.g. 70%, 80%, 90%). The percentage may exceed a fifth threshold. The first, second, third, fourth and/or fifth thresholds may be time varying.

Condition (1) may occur when the Type 1 device and the Type 2 device become progressively far away from each other, such that some probe signal from the Type 1 device becomes too weak and is not received by the Type 2 device. Conditions (2)-(4) may occur when the two devices become far from each other such that the signal strength becomes very weak.

The signal source of the Type 2 device may not change if other Type 1 devices have signal strength weaker than a factor (e.g. 1, 1.1, 1.2, or 1.5) of the current signal source.

If the signal source is changed (e.g. adjusted, varied, modified), the new signal source may take effect at a near future time (e.g. the respective next time). The new signal source may be the Type 1 device with strongest signal strength, and/or processed signal strength. The current and new signal source may be same/different.

A list of available Type 1 devices may be initialized and maintained by each Type 2 device. The list may be updated by examining signal strength and/or processed signal strength associated with the respective set of Type 1 devices. A Type 2 device may choose between a first series of probe signals from a first Type 1 device and a second series of probe signals from a second Type 1 device based on: respective probe signal rate, MAC addresses, channels, characteristics/properties/ states, task to be performed by the Type 2 device, signal strength of first and second series, and/or another consideration.

The series of probe signals may be transmitted at a regular rate (e.g. 100 Hz). The series of probe signals may be scheduled at a regular interval (e.g. 0.01s for 100 Hz), but each probe signal may experience small time perturbation, perhaps due to timing requirement, timing control, network control, handshaking, message passing, collision avoidance, carrier sensing, congestion, availability of resources, and/or another consideration.

The rate may be changed (e.g. adjusted, varied, modified). The change may be according to a time table (e.g. changed once every hour), rule, policy, mode, condition and/or change (e.g. changed whenever some event occur). For example, the rate may normally be 100Hz, but changed to 1000Hz in demanding situations, and to 1Hz in low power/standby situation. The probe signals may be sent in burst.

The probe signal rate may change based on a task performed by the Type 1 device or Type 2 device (e.g. a task may need 100 Hz normally and 1000 Hz momentarily for 20 seconds). In one example, the transmitters (Type 1 devices), receivers (Type 2 device), and associated tasks may be associated adaptively (and/or dynamically) to classes (e.g. classes that are: low-priority, high-priority, emergency, critical, regular, privileged, non-subscription, subscription, paying, and/or non-paying). A rate (of a transmitter) may be adjusted for the sake of some class (e.g. high priority class). When the need of that class changes, the rate may be changed (e.g. adjusted, varied, modified). When a receiver has critically low power, the rate may be reduced to reduce power consumption of the receiver to respond to the probe signals. In one example, probe signals may be used to transfer power wirelessly to a receiver (Type 2 device), and the rate may be adjusted to control the amount of power transferred to the receiver.

The rate may be changed by (or based on): a server (e.g. hub device), the Type 1 device and/or the Type 2 device. Control signals may be communicated between them. The server may monitor, track, forecast and/or anticipate the needs of the Type 2 device and/or the tasks performed by the Type 2 device, and may control the Type 1 device to change the rate. The server may make scheduled changes to the rate according to a time table. The server may detect an emergency situation and change the rate immediately. The server may detect a developing condition and adjust the rate gradually.

The characteristics and/or STI (e.g. motion information) may be monitored individually based on a TSCI associated with a particular Type 1 device and a particular Type 2 device, and/or monitored jointly based on any TSCI associated with the particular Type 1 device and any Type 2 device, and/or monitored jointly based on any TSCI associated with the particular Type 2 device and any Type 1 device, and/or monitored globally based on any TSCI associated with any Type 1 device and any Type 2 device. Any joint monitoring may be associated with: a user, user account, profile, household, map of venue, environmental model of the venue, and/or user history, etc.

A first channel between a Type 1 device and a Type 2 device may be different from a second channel between another Type 1 device and another Type 2 device. The two channels may be associated with different frequency bands, bandwidth, carrier frequency, modulation, wireless standards, coding, encryption, payload characteristics, networks, network ID, SSID, network characteristics, network settings, and/or network parameters, etc.

The two channels may be associated with different kinds of wireless system (e.g. two of the following: WiFi, LTE, LTE-A, LTE-U, 2.5G, 3G, 3.5G, 4G, beyond 4G, 5G, 6G, 7G, a cellular network standard, UMTS, 3GPP, GSM, EDGE, TDMA, FDMA, CDMA, WCDMA, TD-SCDMA, 802.11 system, 802.15 system, 802.16 system, mesh network, Zigbee, NFC, WiMax, Bluetooth, BLE, RFID, UWB, microwave system, radar like system). For example, one is WiFi and the other is LTE.

The two channels may be associated with similar kinds of wireless system, but in different network. For example, the first channel may be associated with a WiFi network named "Pizza and Pizza" in the 2.4GHz band with a bandwidth of 20MHz while the second may be associated with a WiFi network with SSID of "StarBud hotspot" in the 5GHz band with a bandwidth of 40MHz. The two channels may be different channels in same network (e.g. the "StarBud hotspot" network).

In one embodiment, a wireless monitoring system may comprise training a classifier of multiple events in a venue based on training TSCI associated with the multiple events. A CI or TSCI associated with an event may be considered/may comprise a wireless sample/characteristics/fingerprint associated with the event (and/or the venue, the environment, the object, the motion of the object, a state/ emotional state/ mental state/ condition/ stage/ gesture/ gait/ action/ movement/ activity/ daily activity/ history/ event of the object, etc.).

For each of the multiple known events happening in the venue in a respective training (e.g. surveying, wireless survey, initial wireless survey) time period associated with the known event, a respective training wireless signal (e.g. a respective series of training probe signals) may be transmitted by an antenna of a first Type 1 heterogeneous wireless device using a processor, a memory and a set of instructions of the first Type 1 device to at least one first Type 2 heterogeneous wireless device through a wireless multipath channel in the venue in the respective training time period.

At least one respective time series of training CI (training TSCI) may be obtained asynchronously by each of the at least one first Type 2 device from the (respective) training signal. The CI may be CI of the channel between the first Type 2 device and the first Type 1 device in the training time period associated with the known event. The at least one training TSCI may be preprocessed. The training may be a wireless survey (e.g. during installation of Type 1 device and/or Type 2 device).

For a current event happening in the venue in a current time period, a current wireless signal (e.g. a series of current probe signals) may be transmitted by an antenna of a second Type 1 heterogeneous wireless device using a processor, a memory and a set of instructions of the second Type 1 device to at least one second Type 2 heterogeneous wireless device through the channel in the venue in the current time period associated with the current event.

At least one time series of current CI (current TSCI) may be obtained asynchronously by each of the at least one second Type 2 device from the current signal (e.g. the series of current probe signals). The CI may be CI of the channel between the second Type 2 device and the second Type 1 device in the current time period associated with the current event. The at least one current TSCI may be preprocessed.

The classifier may be applied to classify at least one current TSCI obtained from the series of current probe signals by the at least one second Type 2 device, to classify at least one portion of a particular current TSCI, and/or to classify a combination of the at least one portion of the particular current TSCI and another portion of another TSCI. The classifier may partition TSCI (or the characteristics/STI or other analytics or output responses) into clusters and associate the clusters to specific events/ objects/ subjects/ locations/ movements/ activities. Labels/tags may be generated for the clusters. The clusters may be stored and retrieved. The classifier may be applied to associate the current TSCI (or characteristics/STI or the other analytics/output response, perhaps associated with a current event) with: a cluster, a known/specific event, a class/ category/ group/ grouping/ list/ cluster/ set of known events/subjects/locations/movements/activities, an unknown event, a class/ category/ group/ grouping/ list/ cluster/ set of unknown events/subjects/locations/movements/activities, and/or another event/subject/location/movement/activity/ class/ category/ group/ grouping/ list/ cluster/ set. Each TSCI may comprise at least one CI each associated with a respective timestamp. Two TSCI associated with two Type 2 devices may be different with different: starting time, duration, stopping time, amount of CI, sampling frequency, sampling period. Their CI may have different features. The first and second Type 1 devices may be at same location in the venue. They may be the same device. The at least one second Type 2 device (or their locations) may be a permutation of the at least one first Type 2 device (or their locations). A particular second Type 2 device and a particular first Type 2 device may be the same device.

A subset of the first Type 2 device and a subset of the second Type 2 device may be the same. The at least one second Type 2 device and/or a subset of the at least one second Type 2 device may be a subset of the at least one first Type 2 device. The at least one first Type 2 device and/or a subset of the at least one first Type 2 device may be a permutation of a subset of the at least one second Type 2 device. The at least one second Type 2 device and/or a subset of the at least one second Type 2 device may be a permutation of a subset of the at least one first Type 2 device. The at least one second Type 2 device and/or a subset of the at least one second Type 2 device may be at same respective location as a subset of the at least one first Type 2 device. The at least one first Type 2 device and/or a subset of the at least one first Type 2 device may be at same respective location as a subset of the at least one second Type 2 device.

The antenna of the Type 1 device and the antenna of the second Type 1 device may be at same location in the venue. Antenna(s) of the at least one second Type 2 device and/or antenna(s) of a subset of the at least one second Type 2 device may be at same respective location as respective antenna(s) of a subset of the at least one first Type 2 device. Antenna(s) of the at least one first Type 2 device and/or antenna(s) of a subset of the at least one first Type 2 device may be at same respective location(s) as respective antenna(s) of a subset of the at least one second Type 2 device.

A first section of a first time duration of the first TSCI and a second section of a second time duration of the second section of the second TSCI may be aligned. A map between items of the first section and items of the second section may be computed. The first section may comprise a first segment (e.g. subset) of the first TSCI with a first starting /ending time, and/or another segment (e.g. subset) of a processed first TSCI. The processed first TSCI may be the first TSCI processed by a first operation. The second section may comprise a second segment (e.g. subset) of the second TSCI with a second starting time and a second ending time, and another segment (e.g. subset) of a processed second TSCI. The processed second TSCI may be the second TSCI processed by a second operation. The first operation and/or the second operation may comprise: subsampling, resampling, interpolation, filtering, transformation, feature extraction, pre-processing, and/or another operation.

A first item of the first section may be mapped to a second item of the second section. The first item of the first section may also be mapped to another item of the second section. Another item of the first section may also be mapped to the second item of the second section. The mapping may be one-to-one, one-to-many, many-to-one, many-to-many. At least one function of at least one of: the first item of the first section of the first TSCI, another item of the first TSCI, timestamp of the first item, time difference of the first item, time differential of the first item, neighboring timestamp of the first item, another timestamp associated with the first item, the second item of the second section of the second TSCI, another item of the second TSCI, timestamp of the second item, time difference of the second item, time differential of the second item, neighboring timestamp of the second item, and another timestamp associated with the second item, may satisfy at least one constraint.

One constraint may be that a difference between the timestamp of the first item and the timestamp of the second item may be upper-bounded by an adaptive (and/or dynamically adjusted) upper threshold and lower-bounded by an adaptive lower threshold.

The first section may be the entire first TSCI. The second section may be the entire second TSCI. The first time duration may be equal to the second time duration. A section of a time duration of a TSCI may be determined adaptively (and/or dynamically). A tentative section of the TSCI may be computed. A starting time and an ending time of a section (e.g. the tentative section, the section) may be determined. The section may be determined by removing a beginning portion and an ending portion of the tentative section. A beginning portion of a tentative section may be determined as follows. Iteratively, items of the tentative section with increasing timestamp may be considered as a current item, one item at a time.

In each iteration, at least one activity measure/index may be computed and/or considered. The at least one activity measure may be associated with at least one of: the current item associated with a current timestamp, past items of the tentative section with timestamps not larger than the current timestamp, and/or future items of the tentative section with timestamps not smaller than the current timestamp. The current item may be added to the beginning portion of the tentative section if at least one criterion (e.g. quality criterion, signal quality condition) associated with the at least one activity measure is satisfied.

The at least one criterion associated with the activity measure may comprise at least one of: (a) the activity measure is smaller than an adaptive (e.g. dynamically adjusted) upper threshold, (b) the activity measure is larger than an adaptive lower threshold, (c) the activity measure is smaller than an adaptive upper threshold consecutively for at least a predetermined amount of consecutive timestamps, (d) the activity measure is larger than an adaptive lower threshold consecutively for at least another predetermined amount of consecutive timestamps, (e) the activity measure is smaller than an adaptive upper threshold consecutively for at least a predetermined percentage of the predetermined amount of consecutive timestamps, (f) the activity measure is larger than an adaptive lower threshold consecutively for at least another predetermined percentage of the another predetermined amount of consecutive timestamps, (g) another activity measure associated with another timestamp associated with the current timestamp is smaller than another adaptive upper threshold and larger than another adaptive lower threshold, (h) at least one activity measure associated with at least one respective timestamp associated with the current timestamp is smaller than respective upper threshold and larger than respective lower threshold, (i) percentage of timestamps with associated activity measure smaller than respective upper threshold and larger than respective lower threshold in a set of timestamps associated with the current timestamp exceeds a threshold, and (j) another criterion (e.g. a quality criterion, signal quality condition).

An activity measure/index associated with an item at time $T1$ may comprise at least one of: (1) a first function of the item at time $T1$ and an item at time $T1-D1$, wherein $D1$ is a pre-determined positive quantity (e.g. a constant time offset), (2) a second function of the item at time $T1$ and an item at time $T1+D1$, (3) a third function of the item at time $T1$ and an item at time $T2$, wherein $T2$ is a pre-determined quantity (e.g. a fixed initial reference time; $T2$ may be changed (e.g. adjusted, varied, modified) over time; $T2$ may be updated periodically; $T2$ may be the beginning of a time period and $T1$ may be a sliding time in the time period), and (4) a fourth function of the item at time $T1$ and another item.

At least one of: the first function, the second function, the third function, and/or the fourth function may be a function (e.g. $F(X, Y, ...)$) with at least two arguments: $X$ and $Y$. The two arguments may be scalars. The function (e.g. $F$) may be a function of at least one of: $X$, $Y$, $(X-Y)$, $(Y-X)$, $abs(X-Y)$, $X^a$, $Y^b$, $abs(X^a - Y^b)$, $(X-Y)^a$, $(X/Y)$, $(X+a)/(Y+b)$, $(X^a/Y^b)$, and $((X/Y)^a-b)$, wherein $a$ and $b$ are may be some predetermined quantities. For example, the function may simply be $abs(X-Y)$, or $(X-Y)^2$, $(X-Y)^4$. The function may be a robust function. For example, the function may be $(X-Y)^2$ when $abs(X-Y)$ is less than a threshold $T$, and $(X-Y)+a$ when $abs(X-Y)$ is larger than $T$. Alternatively, the function may be a constant when $abs(X-Y)$ is larger than $T$. The function may also be bounded by a slowly increasing function when $abs(X-y)$ is larger than $T$, so that outliers cannot severely affect the result. Another example of the function may be $(abs(X/Y)-a)$, where $a=1$. In this way, if $X=Y$ (i.e. no change or no activity), the function will give a value of 0. If $X$ is larger than $Y$, $(X/Y)$ will be larger than 1 (assuming $X$ and $Y$ are positive) and the function will be positive. And if $X$ is less than $Y$, $(X/Y)$ will be smaller than 1 and the function will be negative. In another example, both arguments $X$ and $Y$ may be n-tuples such that $X=(x\_1, x\_2, ..., x\_n)$ and $Y=(y\_1, y\_2, ..., y\_n)$. The function may be a function of at least one of: $x\_i$, $y\_i$, $(x\_i - y\_i)$, $(y\_i - x\_i)$, $abs(x\_i - y\_i)$, $x\_i ^a$, $y\_i ^b$, $abs(x\_i ^a-y\_i ^b)$, $(x\_i - y\_i)^a$, $(x\_i/y\_i)$, $(x\_i+a)/(y\_i +b)$, $(x\_i ^a/ y\_i ^b)$, and $((x\_i / y\_i)^a-b)$, wherein $i$ is a component index of the n-tuple $X$ and $Y$, and $1 <=i<=n$, e.g. component index of $x\_1$ is $i=1$, component index of $x\_2$ is $i=2$. The function may comprise a component-by-component summation of another function of at least one of the following: $x\_i$, $y\_i$, $(x\_i - y\_i)$, $(y\_i - x\_i)$, $abs(x\_i - y\_i)$, $x\_i ^a$, $y\_i ^b$, $abs(x\_i ^a - y\_i ^b)$, $(x\_i - y\_i)^a$, $(x\_i/y\_i)$, $(x\_i+a)/(y\_i +b)$, $(x\_i ^a/ y\_i ^b)$, and $((x\_i / y\_i)^a-b)$, wherein $i$ is the component index of the n-tuple $X$ and $Y$. For example, the function may be in a form of $sum\_{i=1}^n (abs(x\_i/y\_i)-1)/n$, or $sum\_{i=1}^n w\_i*(abs(x\_i/y\_i)-1)$, where $w\_i$ is some weight for component $i$.

The map may be computed using dynamic time warping (DTW). The DTW may comprise a constraint on at least one of: the map, the items of the first TSCI, the items of the second TSCI, the first time duration, the second time duration, the first section, and/or the second section. Suppose in the map, the i^{th} domain item is mapped to the j^{th} range item. The constraint may be on admissible combination of i and j (constraint on relationship between i and j). Mismatch cost between a first section of a first time duration of a first TSCI and a second section of a second time duration of a second TSCI may be computed.

The first section and the second section may be aligned such that a map comprising more than one links may be established between first items of the first TSCI and second items of the second TSCI. With each link, one of the first items with a first timestamp may be associated with one of the second items with a second timestamp. A mismatch cost between the aligned first section and the aligned second section may be computed. The mismatch cost may comprise a function of: an item-wise cost between a first item and a second item associated by a particular link of the map, and a link-wise cost associated with the particular link of the map.

The aligned first section and the aligned second section may be represented respectively as a first vector and a second vector of same vector length. The mismatch cost may comprise at least one of: an inner product, inner-product-like quantity, quantity based on correlation, correlation indicator, quantity based on covariance, discriminating score, distance, Euclidean distance, absolute distance, Lk distance (e.g. L1, L2, ... ), weighted distance, distance-like quantity and/or another similarity value, between the first vector and the second vector. The mismatch cost may be normalized by the respective vector length.

A parameter derived from the mismatch cost between the first section of the first time duration of the first TSCI and the second section of the second time duration of the second TSCI may be modeled with a statistical distribution. At least one of: a scale parameter, location parameter and/or another parameter, of the statistical distribution may be estimated.

The first section of the first time duration of the first TSCI may be a sliding section of the first TSCI. The second section of the second time duration of the second TSCI may be a sliding section of the second TSCI.

A first sliding window may be applied to the first TSCI and a corresponding second sliding window may be applied to the second TSCI. The first sliding window of the first TSCI and the corresponding second sliding window of the second TSCI may be aligned.

Mismatch cost between the aligned first sliding window of the first TSCI and the corresponding aligned second sliding window of the second TSCI may be computed. The current event may be associated with at least one of: the known event, the unknown event and/or the another event, based on the mismatch cost.

The classifier may be applied to at least one of: each first section of the first time duration of the first TSCI, and/or each second section of the second time duration of the second TSCI, to obtain at least one tentative classification results. Each tentative classification result may be associated with a respective first section and a respective second section.

The current event may be associated with at least one of: the known event, the unknown event, a class/category/group/ grouping/list/ set of unknown events, and/or the another event, based on the mismatch cost. The current event may be associated with at least one of: the known event, the unknown event and/or the another event, based on a largest number of tentative classification results in more than one sections of the first TSCI and corresponding more than sections of the second TSCI. For example, the current event may be associated with a particular known event if the mismatch cost points to the particular known event for N consecutive times (e.g. N=10). In another example, the current event may be associated with a particular known event if the percentage of mismatch cost within the immediate past N consecutive N pointing to the particular known event exceeds a certain threshold (e.g. >80%).

In another example, the current event may be associated with a known event that achieves smallest mismatch cost for the most times within a time period. The current event may be associated with a known event that achieves smallest overall mismatch cost, which is a weighted average of at least one mismatch cost associated with the at least one first sections. The current event may be associated with a particular known event that achieves smallest of another overall cost. The current event may be associated with the "unknown event" if none of the known events achieve mismatch cost lower than a first threshold T1 in a sufficient percentage of the at least one first section. The current event may also be associated with the "unknown event" if none of the events achieve an overall mismatch cost lower than a second threshold T2. The current event may be associated with at least one of: the known event, the unknown event and/or the another event, based on the mismatch cost and additional mismatch cost associated with at least one additional section of the first TSCI and at least one additional section of the second TSCI. The known events may comprise at least one of: a door closed event, door open event, window closed event, window open event, multi-state event, on-state event, off-state event, intermediate state event, continuous state event, discrete state event, human-present event, human-absent event, sign-of-life-present event, and/or a sign-of-life-absent event.

A projection for each CI may be trained using a dimension reduction method based on the training TSCI. The dimension reduction method may comprise at least one of: principal component analysis (PCA), PCA with different kernel, independent component analysis (ICA), Fisher linear discriminant, vector quantization, supervised learning, unsupervised learning, self-organizing maps, auto-encoder, neural network, deep neural network, and/or another method. The projection may be applied to at least one of: the training TSCI associated with the at least one event, and/or the current TSCI, for the classifier.

The classifier of the at least one event may be trained based on the projection and the training TSCI associated with the at least one event. The at least one current TSCI may be classified/categorized based on the projection and the current TSCI. The projection may be re-trained using at least one of: the dimension reduction method, and another dimension reduction method, based on at least one of: the training TSCI, at least one current TSCI before retraining the projection, and/or additional training TSCI. The another dimension reduction method may comprise at least one of: principal component analysis (PCA), PCA with different kernels, independent component analysis (ICA), Fisher linear discriminant, vector quantization, supervised learning, unsupervised learning, self-organizing maps, auto-encoder, neural network, deep neural network, and/or yet another method. The classifier of the at least one event may be re-trained based on at least one of: the re-trained projection, the training TSCI associated with the at least one events, and/or at least one current TSCI. The at least one current TSCI may be classified based on: the re-trained projection, the re-trained classifier, and/or the current TSCI.

Each CI may comprise a vector of complex values. Each complex value may be preprocessed to give the magnitude of the complex value. Each CI may be preprocessed to give a vector of non-negative real numbers comprising the magnitude of corresponding complex values. Each training TSCI may be weighted in the training of the projection. The projection may comprise more than one projected components. The projection may comprise at least one most significant projected component. The projection may comprise at least one projected component that may be beneficial for the classifier.

Channel/channel information/venue/spatial-temporal info/motion/object

The channel information (CI) may be associated with/may comprise signal strength, signal amplitude, signal phase, spectral power measurement, modem parameters (e.g. used in relation to modulation/ demodulation in digital communication systems such as WiFi, 4G/LTE), dynamic beamforming information (including feedback or steering matrices generated by wireless communication devices, according to a standardized process, e.g., IEEE 802.11, or another standard), transfer function components, radio state (e.g. used in digital communication systems to decode digital data, baseband processing state, RF processing state, etc.), measurable variables, sensed data, coarse-grained/ fine-grained information of a layer (e.g. physical layer, data link layer, MAC layer, etc.), digital setting, gain setting, RF filter setting, RF front end switch setting, DC offset setting, DC correction setting, IQ compensation setting, effect(s) on the wireless signal by the environment (e.g. venue) during propagation, transformation of an input signal (the wireless signal transmitted by the Type 1 device) to an output signal (the wireless signal received by the Type 2 device), a stable behavior of the environment, a state profile, wireless channel measurements, received signal strength indicator (RSSI), channel state information (CSI), channel impulse response (CIR), channel frequency response (CFR), characteristics of frequency components (e.g. subcarriers) in a bandwidth, channel characteristics, channel filter response, timestamp, auxiliary information, data, meta data, user data, account data, access data, security data, session data, status data, supervisory data, household data, identity (ID), identifier, device data, network data, neighborhood data, environment data, real-time data, sensor data, stored data, encrypted data, compressed data, protected data, and/or another channel information. Each CI may be associated with a time stamp, and/or an arrival time. A CSI can be used to equalize/undo/ minimize/reduce the multipath channel effect (of the transmission channel) to demodulate a signal similar to the one transmitted by the transmitter through the multipath channel. The CI may be associated with information associated with a frequency band, frequency signature, frequency phase, frequency amplitude, frequency trend, frequency characteristics, frequency-like characteristics, time domain element, frequency domain element, time-frequency domain element, orthogonal decomposition characteristics, and/or non-orthogonal decomposition characteristics of the signal through the channel. The TSCI may be a stream of wireless signals (e.g. CI).

The CI may be preprocessed, processed, postprocessed, stored (e.g. in local memory, portable/mobile memory, removable memory, storage network, cloud memory, in a volatile manner, in a non-volatile manner), retrieved, transmitted and/or received. One or more modem parameters and/or radio state parameters may be held constant. The modem parameters may be applied to a radio subsystem. The modem parameters may represent a radio state. A motion detection signal (e.g. baseband signal, and/or packet decoded/demodulated from the baseband signal, etc.) may be obtained by processing (e.g. down-converting) the first wireless signal (e.g. RF/WiFi/LTE/SG signal) by the radio subsystem using the radio state represented by the stored modem parameters. The modem parameters/radio state may be updated (e.g. using previous modem parameters or previous radio state). Both the previous and updated modem parameters/radio states may be applied in the radio subsystem in the digital communication system. Both the previous and updated modem parameters/radio states may be compared/ analyzed/ processed/ monitored in the task.

The channel information may also be modem parameters (e.g. stored or freshly computed) used to process the wireless signal. The wireless signal may comprise a plurality of probe signals. The same modem parameters may be used to process more than one probe signals. The same modem parameters may also be used to process more than one wireless signals. The modem parameters may comprise parameters that indicate settings or an overall configuration for the operation of a radio subsystem or a baseband subsystem of a wireless sensor device (or both). The modem parameters may include one or more of: a gain setting, an RF filter setting, an RF front end switch setting, a DC offset setting, or an IQ compensation setting for a radio subsystem, or a digital DC correction setting, a digital gain setting, and/or a digital filtering setting (e.g. for a baseband subsystem). The CI may also be associated with information associated with a time period, time signature, timestamp, time amplitude, time phase, time trend, and/or time characteristics of the signal. The CI may be associated with information associated with a time-frequency partition, signature, amplitude, phase, trend, and/or characteristics of the signal. The CI may be associated with a decomposition of the signal. The CI may be associated with information associated with a direction, angle of arrival (AoA), angle of a directional antenna, and/or a phase of the signal through the channel. The CI may be associated with attenuation patterns of the signal through the channel. Each CI may be associated with a Type 1 device and a Type 2 device. Each CI may be associated with an antenna of the Type 1 device and an antenna of the Type 2 device.

The CI may be obtained from a communication hardware (e.g. of Type 2 device, or Type 1 device) that is capable of providing the CI. The communication hardware may be a WiFi-capable chip/IC (integrated circuit), chip compliant with a 802.11 or 802.16 or another wireless/radio standard, next generation WiFi-capable chip, LTE-capable chip, 5G-capable chip, 6G/7G/8G-capable chip, Bluetooth-enabled chip, NFC (near field communication)-enabled chip, BLE (Bluetooth low power)-enabled chip, UWB chip, another communication chip (e.g. Zigbee, WiMax, mesh network), etc. The communication hardware computes the CI and stores the CI in a buffer memory and make the CI available for extraction. The CI may comprise data and/or at least one matrices related to channel state information (CSI). The at least one matrices may be used for channel equalization, and/or beam forming, etc. The channel may be associated with a venue. The attenuation may be due to signal propagation in the venue, signal propagating/reflection/ refraction/ diffraction through/at/around air (e.g. air of venue), refraction medium/reflection surface such as wall, doors, furniture, obstacles and/or barriers, etc. The attenuation may be due to reflection at surfaces and obstacles (e.g. reflection surface, obstacle) such as floor, ceiling, furniture, fixtures, objects, people, pets, etc. Each CI may be associated with a timestamp. Each CI may comprise N1 components (e.g. N1 frequency domain components in CFR, N1 time domain components in CIR, or N1 decomposition components). Each component may be associated with a component index. Each component may be a real, imaginary, or complex quantity, magnitude, phase, flag, and/or set. Each CI may comprise a vector or matrix of complex numbers, a set of mixed quantities, and/or a multi-dimensional collection of at least one complex numbers.

Components of a TSCI associated with a particular component index may form a respective component time series associated with the respective index. A TSCI may be divided into N1 component time series. Each respective component time series is associated with a respective component index. The characteristics/STI of the motion of the object may be monitored based on the component time series. In one example, one or more ranges of CI components (e.g. one range being from component 11 to component 23, a second range being from component 44 to component 50, and a third range having only one component) may be selected based on some criteria/cost function/signal quality metric (e.g. based on signal-to-noise ratio, and/or interference level) for further processing.

A component-wise characteristic of a component-feature time series of a TSCI may be computed. The component-wise characteristics may be a scalar (e.g. energy) or a function with a domain and a range (e.g. an autocorrelation function, transform, inverse transform). The characteristics/STI of the motion of the object may be monitored based on the component-wise characteristics. A total characteristics (e.g. aggregate characteristics) of the TSCI may be computed based on the component-wise characteristics of each component time series of the TSCI. The total characteristics may be a weighted average of the component-wise characteristics. The characteristics/STI of the motion of the object may be monitored based on the total characteristics. An aggregate quantity may be a weighted average of individual quantities.

The Type 1 device and Type 2 device may support WiFi, WiMax, 3G/beyond 3G, 4G/beyond 4G, LTE, LTE-A, 5G, 6G, 7G, Bluetooth, NFC, BLE, Zigbee, UWB, UMTS, 3GPP, GSM, EDGE, TDMA, FDMA, CDMA, WCDMA, TD-SCDMA, mesh network, proprietary wireless system, IEEE 802.11 standard, 802.15 standard, 802.16 standard, 3GPP standard, and/or another wireless system.

A common wireless system and/or a common wireless channel may be shared by the Type 1 transceiver and/or the at least one Type 2 transceiver. The at least one Type 2 transceiver may transmit respective signal contemporaneously (or: asynchronously, synchronously, sporadically, continuously, repeatedly, concurrently, simultaneously and/or temporarily) using the common wireless system and/or the common wireless channel. The Type 1 transceiver may transmit a signal to the at least one Type 2 transceiver using the common wireless system and/or the common wireless channel.

Each Type 1 device and Type 2 device may have at least one transmitting/receiving antenna. Each CI may be associated with one of the transmitting antenna of the Type 1 device and one of the receiving antenna of the Type 2 device. Each pair of a transmitting antenna and a receiving antenna may be associated with a link, a path, a communication path, signal hardware path, etc. For example, if the Type 1 device has M (e.g. 3) transmitting antennas, and the Type 2 device has N (e.g. 2) receiving antennas, there may be MxN (e.g. 3x2=6) links or paths. Each link or path may be associated with a TSCI.

The at least one TSCI may correspond to various antenna pairs between the Type 1 device and the Type 2 device. The Type 1 device may have at least one antenna. The Type 2 device may also have at least one antenna. Each TSCI may be associated with an antenna of the Type 1 device and an antenna of the Type 2 device. Averaging or weighted averaging over antenna links may be performed. The averaging or weighted averaging may be over the at least one TSCI. The averaging may optionally be performed on a subset of the at least one TSCI corresponding to a subset of the antenna pairs.

Timestamps of CI of a portion of a TSCI may be irregular and may be corrected so that corrected timestamps of time-corrected CI may be uniformly spaced in time. In the case of multiple Type 1 devices and/or multiple Type 2 devices, the corrected timestamp may be with respect to the same or different clock. An original timestamp associated with each of the CI may be determined. The original timestamp may not be uniformly spaced in time. Original timestamps of all CI of the particular portion of the particular TSCI in the current sliding time window may be corrected so that corrected timestamps of time-corrected CI may be uniformly spaced in time.

The characteristics and/or STI (e.g. motion information) may comprise: location, location coordinate, change in location, position (e.g. initial position, new position), position on map, height, horizontal location, vertical location, distance, displacement, speed, acceleration, rotational speed, rotational acceleration, direction, angle of motion, azimuth, direction of motion, rotation, path, deformation, transformation, shrinking, expanding, gait, gait cycle, head motion, repeated motion, periodic motion, pseudo-periodic motion, impulsive motion, sudden motion, fall-down motion, transient motion, behavior, transient behavior, period of motion, frequency of motion, time trend, temporal profile, temporal characteristics, occurrence, change, temporal change, change of CI, change in frequency, change in timing, change of gait cycle, timing, starting time, initiating time, ending time, duration, history of motion, motion type, motion classification, frequency, frequency spectrum, frequency characteristics, presence, absence, proximity, approaching, receding, identity/identifier of the object, composition of the object, head motion rate, head motion direction, mouth-related rate, eye- related rate, breathing rate, heart rate, tidal volume, depth of breath, inhale time, exhale time, inhale time to exhale time ratio, airflow rate, heart heat-to-beat interval, heart rate variability, hand motion rate, hand motion direction, leg motion, body motion, walking rate, hand motion rate, positional characteristics, characteristics associated with movement (e.g. change in position/location) of the object, tool motion, machine motion, complex motion, and/or combination of multiple motions, event, signal statistics, signal dynamics, anomaly, motion statistics, motion parameter, indication of motion detection, motion magnitude, motion phase, similarity score, distance score, Euclidean distance, weighted distance, $L\_1$ norm, $L\_2$ norm, $L\_k$ norm for $k>2$, statistical distance, correlation, correlation indicator, auto-correlation, covariance, auto-covariance, cross-covariance, inner product, outer product, motion signal transformation, motion feature, presence of motion, absence of motion, motion localization, motion identification, motion recognition, presence of object, absence of object, entrance of object, exit of object, a change of object, motion cycle, motion count, gait cycle, motion rhythm, deformation motion, gesture, handwriting, head motion, mouth motion, heart motion internal organ motion, motion trend, size, length, area, volume, capacity, shape, form, tag, starting/initiating location, ending location, starting/initiating quantity, ending quantity, event, fall-down event, security event, accident event, home event, office event, factory event, warehouse event, manufacturing event, assembly line event, maintenance event, car-related event, navigation event, tracking event, door event, door-open event, door-close event, window event, window-open event, window-close event, repeatable event, one-time event, consumed quantity, unconsumed quantity, state, physical state, health state, well- being state, emotional state, mental state, another event, analytics, output responses, and/or another information. The characteristics and/or STI may be computed/monitored based on a feature computed from a CI or a TSCI (e.g. feature computation/extraction). A static segment or profile (and/or a dynamic segment/profile) may be identified /computed/analyzed/ monitored/ extracted/ obtained/ marked/ presented/ indicated/ highlighted/ stored/ communicated based on an analysis of the feature. The analysis may comprise a motion detection/movement assessment/presence detection. Computational workload may be shared among the Type 1 device, the Type 2 device and another processor.

The Type 1 device and/or Type 2 device may be a local device. The local device may be: a smart phone, smart device, TV, sound bar, set-top box, access point, router, repeater, wireless signal repeater/extender, remote control, speaker, fan, refrigerator, microwave, oven, coffee machine, hot water pot, utensil, table, chair, light, lamp, door lock, camera, microphone, motion sensor, security device, fire hydrant, garage door, switch, power adapter, computer, dongle, computer peripheral, electronic pad, sofa, tile, accessory, home device, vehicle device, office device, building device, manufacturing device, watch, glasses, clock, television, oven, air-conditioner, accessory, utility, appliance, smart machine, smart vehicle, internet-of-thing (IoT) device, internet-enabled device, computer, portable computer, tablet, smart house, smart office, smart building, smart parking lot, smart system, and/or another device.

Each Type 1 device may be associated with a respective identifier (e.g. ID). Each Type 2 device may also be associated with a respective identify (ID). The ID may comprise: numeral, combination of text and numbers, name, password, account, account ID, web link, web address, index to some information, and/or another ID. The ID may be assigned. The ID may be assigned by hardware (e.g. hardwired, via dongle and/or other hardware), software and/or firmware. The ID may be stored (e.g. in database, in memory, in server (e.g. hub device), in the cloud, stored locally, stored remotely, stored permanently, stored temporarily) and may be retrieved. The ID may be associated with at least one record, account, user, household, address, phone number, social security number, customer number, another ID, another identifier, timestamp, and/or collection of data. The ID and/or part of the ID of a Type 1 device may be made available to a Type 2 device. The ID may be used for registration, initialization, communication, identification, verification, detection, recognition, authentication, access control, cloud access, networking, social networking, logging, recording, cataloging, classification, tagging, association, pairing, transaction, electronic transaction, and/or intellectual property control, by the Type 1 device and/or the Type 2 device.

The object may be person, user, subject, passenger, child, older person, baby, sleeping baby, baby in vehicle, patient, worker, high-value worker, expert, specialist, waiter, customer in mall, traveler in airport/ train station/ bus terminal/ shipping terminals, staff/worker/customer service personnel in factory/ mall/ supermarket/ office/ workplace, serviceman in sewage/air ventilation system/lift well, lifts in lift wells, elevator, inmate, people to be tracked/ monitored, animal, plant, living object, pet, dog, cat, smart phone, phone accessory, computer, tablet, portable computer, dongle, computing accessory, networked devices, WiFi devices, IoT devices, smart watch, smart glasses, smart devices, speaker, keys, smart key, wallet, purse, handbag, backpack, goods, cargo, luggage, equipment, motor, machine, air conditioner, fan, air conditioning equipment, light fixture, moveable light, television, camera, audio and/or video equipment, stationary, surveillance equipment, parts, signage, tool, cart, ticket, parking ticket, toll ticket, airplane ticket, credit card, plastic card, access card, food packaging, utensil, table, chair, cleaning equipment/tool, vehicle, car, cars in parking facilities, merchandise in warehouse/ store/ supermarket/ distribution center, boat, bicycle, airplane, drone, remote control car/plane/ boat, robot, manufacturing device, assembly line, material/unfinished part/robot/wagon/ transports on factory floor, object to be tracked in airport/shopping mart/supermarket, non-object, absence of an object, presence of an object, object with form, object with changing form, object with no form, mass of fluid, mass of liquid, mass of gas/smoke, fire, flame, electromagnetic (EM) source, EM medium, and/or another object.

The object itself may be communicatively coupled with some network, such as WiFi, MiFi, 3G/ 4G/ LTE/ 5G/ 6G/ 7G, Bluetooth, NFC, BLE, WiMax, Zigbee, UMTS, 3GPP, GSM, EDGE, TDMA, FDMA, CDMA, WCDMA, TD-SCDMA, mesh network, adhoc network, and/or other network. The object itself may be bulky with AC power supply, but is moved during installation, cleaning, maintenance, renovation, etc. It may also be installed in moveable platform such as lift, pad, movable, platform, elevator, conveyor belt, robot, drone, forklift, car, boat, vehicle, etc. The object may have multiple parts, each part with different movement (e.g. change in position/location). For example, the object may be a person walking forward. While walking, his left hand and right hand may move in different direction, with different instantaneous speed, acceleration, motion, etc.

The wireless transmitter (e.g. Type 1 device), the wireless receiver (e.g. Type 2 device), another wireless transmitter and/or another wireless receiver may move with the object and/or another object (e.g. in prior movement, current movement and/or future movement. They may be communicatively coupled to one or more nearby device. They may transmit TSCI and/or information associated with the TSCI to the nearby device, and/or each other. They may be with the nearby device. The wireless transmitter and/or the wireless receiver may be part of a small (e.g. coin-size, cigarette box size, or even smaller), light-weight portable device. The portable device may be wirelessly coupled with a nearby device.

The nearby device may be smart phone, iPhone, Android phone, smart device, smart appliance, smart vehicle, smart gadget, smart TV, smart refrigerator, smart speaker, smart watch, smart glasses, smart pad, iPad, computer, wearable computer, notebook computer, gateway. The nearby device may be connected to a cloud server, local server (e.g. hub device) and/or other server via internet, wired internet connection and/or wireless internet connection. The nearby device may be portable. The portable device, the nearby device, a local server (e.g. hub device) and/or a cloud server may share the computation and/or storage for a task (e.g. obtain TSCI, determine characteristics/STI of the object associated with the movement (e.g. change in position/location) of the object, computation of time series of power (e.g. signal strength) information, determining/computing the particular function, searching for local extremum, classification, identifying particular value of time offset, de-noising, processing, simplification, cleaning, wireless smart sensing task, extract CI from signal, switching, segmentation, estimate trajectory/path/track, process the map, processing trajectory/path/track based on environment models/constraints/limitations, correction, corrective adjustment, adjustment, map-based (or model-based) correction, detecting error, checking for boundary hitting, thresholding) and information (e.g. TSCI). The nearby device may/ may not move with the object. The nearby device may be portable/ not portable/ moveable/ non-moveable. The nearby device may use battery power, solar power, AC power and/or other power source. The nearby device may have replaceable/non-replaceable battery, and/or rechargeable/non-rechargeable battery. The nearby device may be similar to the object. The nearby device may have identical (and/or similar) hardware and/or software to the object. The nearby device may be a smart device, network enabled device, device with connection to WiFi/ 3G/ 4G/ 5G/ 6G/ Zigbee/ Bluetooth/ NFC/ UMTS/ 3GPP/ GSM/ EDGE/ TDMA/ FDMA/ CDMA/ WCDMA/ TD-SCDMA/ adhoc network/ other network, smart speaker, smart watch, smart clock, smart appliance, smart machine, smart equipment, smart tool, smart vehicle, internet-of-thing (IoT) device, internet-enabled device, computer, portable computer, tablet, and another device. The nearby device and/or at least one processor associated with the wireless receiver, the wireless transmitter, the another wireless receiver, the another wireless transmitter and/or a cloud server (in the cloud) may determine the initial STI of the object. Two or more of them may determine the initial spatial-temporal info jointly. Two or more of them may share intermediate information in the determination of the initial STI (e.g. initial position).

In one example, the wireless transmitter (e.g. Type 1 device, or Tracker Bot) may move with the object. The wireless transmitter may send the signal to the wireless receiver (e.g. Type 2 device, or Origin Register) or determining the initial STI (e.g. initial position) of the object. The wireless transmitter may also send the signal and/or another signal to another wireless receiver (e.g. another Type 2 device, or another Origin Register) for the monitoring of the motion (spatial-temporal info) of the object. The wireless receiver may also receive the signal and/or another signal from the wireless transmitter and/or the another wireless transmitter for monitoring the motion of the object. The location of the wireless receiver and/or the another wireless receiver may be known. In another example, the wireless receiver (e.g. Type 2 device, or Tracker Bot) may move with the object. The wireless receiver may receive the signal transmitted from the wireless transmitter (e.g. Type 1 device, or Origin Register) for determining the initial spatial-temporal info (e.g. initial position) of the object. The wireless receiver may also receive the signal and/or another signal from another wireless transmitter (e.g. another Type 1 device, or another Origin Register) for the monitoring of the current motion (e.g. spatial-temporal info) of the object. The wireless transmitter may also transmit the signal and/or another signal to the wireless receiver and/or the another wireless receiver (e.g. another Type 2 device, or another Tracker Bot) for monitoring the motion of the object. The location of the wireless transmitter and/or the another wireless transmitter may be known.

The venue may be a space such as a sensing area, room, house, office, property, workplace, hallway, walkway, lift, lift well, escalator, elevator, sewage system, air ventilations system, staircase, gathering area, duct, air duct, pipe, tube, enclosed space, enclosed structure, semi-enclosed structure, enclosed area, area with at least one wall, plant, machine, engine, structure with wood, structure with glass, structure with metal, structure with walls, structure with doors, structure with gaps, structure with reflection surface, structure with fluid, building, roof top, store, factory, assembly line, hotel room, museum, classroom, school, university, government building, warehouse, garage, mall, airport, train station, bus terminal, hub, transportation hub, shipping terminal, government facility, public facility, school, university, entertainment facility, recreational facility, hospital, pediatric/neonatal wards, seniors home, elderly care facility, geriatric facility, community center, stadium, playground, park, field, sports facility, swimming facility, track and/or field, basketball court, tennis court, soccer stadium, baseball stadium, gymnasium, hall, garage, shopping mart, mall, supermarket, manufacturing facility, parking facility, construction site, mining facility, transportation facility, highway, road, valley, forest, wood, terrain, landscape, den, patio, land, path, amusement park, urban area, rural area, suburban area, metropolitan area, garden, square, plaza, music hall, downtown facility, over-air facility, semi-open facility, closed area, train platform, train station, distribution center, warehouse, store, distribution center, storage facility, underground facility, space (e.g. above ground, outer-space) facility, floating facility, cavern, tunnel facility, indoor facility, open-air facility, outdoor facility with some walls/ doors/ reflective barriers, open facility, semi-open facility, car, truck, bus, van, container, ship/boat, submersible, train, tram, airplane, vehicle, mobile home, cave, tunnel, pipe, channel, metropolitan area, downtown area with relatively tall buildings, valley, well, duct, pathway, gas line, oil line, water pipe, network of interconnecting pathways/alleys/roads/tubes/cavities/ caves/pipe-like structure/air space/fluid space, human body, animal body, body cavity, organ, bone, teeth, soft tissue, hard tissue, rigid tissue, non-rigid tissue, blood/body fluid vessel, windpipe, air duct, den, etc. The venue may be indoor space, outdoor space, The venue may include both the inside and outside of the space. For example, the venue may include both the inside of a building and the outside of the building. For example, the venue can be a building that has one floor or multiple floors, and a portion of the building can be underground. The shape of the building can be, e.g., round, square, rectangular, triangle, or irregular-shaped. These are merely examples. The disclosure can be used to detect events in other types of venue or spaces.

The wireless transmitter (e.g. Type 1 device) and/or the wireless receiver (e.g. Type 2 device) may be embedded in a portable device (e.g. a module, or a device with the module) that may move with the object (e.g. in prior movement and/or current movement). The portable device may be communicatively coupled with the object using a wired connection (e.g. through USB, microUSB, Firewire, HDMI, serial port, parallel port, and other connectors) and/or a connection (e.g. Bluetooth, Bluetooth Low Energy (BLE), WiFi, LTE, NFC, ZigBee). The portable device may be a lightweight device. The portable may be powered by battery, rechargeable battery and/or AC power. The portable device may be very small (e.g. at sub-millimeter scale and/or sub-centimeter scale), and/or small (e.g. coin-size, card-size, pocket-size, or larger). The portable device may be large, sizable, and/or bulky (e.g. heavy machinery to be installed). The portable device may be a WiFi hotspot, access point, mobile WiFi (MiFi), dongle with USB/micro USB/ Firewire/ other connector, smartphone, portable computer, computer, tablet, smart device, internet-of-thing (IoT) device, WiFi-enabled device, LTE-enabled device, a smart watch, smart glass, smart mirror, smart antenna, smart battery, smart light, smart pen, smart ring, smart door, smart window, smart clock, small battery, smart wallet, smart belt, smart handbag, smart clothing/garment, smart ornament, smart packaging, smart paper/ book/ magazine/ poster/ printed matter/ signage/ display/ lighted system/ lighting system, smart key/ tool, smart bracelet/ chain/ necklace/ wearable/ accessory, smart pad/ cushion, smart tile/ block/ brick/ building material other material, smart garbage can/ waste container, smart food carriage/ storage, smart ball/ racket, smart chair/ sofa/ bed, smart shoe/ footwear/ carpet/ mat/ shoe rack, smart glove/ hand wear/ ring/ hand ware, smart hat/ headwear/ makeup/ sticker/ tattoo, smart mirror, smart toy, smart pill, smart utensil, smart bottle/food container, smart tool, smart device, IoT device, WiFi enabled device, network enabled device, 3G/4G/5G/6G enabled device, UMTS devices, 3GPP devices, GSM devices, EDGE devices, TDMA devices, FDMA devices, CDMA devices, WCDMA devices, TD-SCDMA devices, embeddable device, implantable device, air conditioner, refrigerator, heater, furnace, furniture, oven, cooking device, television/ set-top box (STB)/ DVD player/ audio player/ video player/ remote control, hi-fi, audio device, speaker, lamp/ light, wall, door, window, roof, roof tile/ shingle/ structure/ attic structure/ device/ feature/ installation/ fixtures, lawn mower/ garden tools/ yard tools/ mechanics tools/ garage tools/, garbage can/ container, 20-ft/40-ft container, storage container, factory/ manufacturing/ production device, repair tools, fluid container, machine, machinery to be installed, vehicle, cart, wagon, warehouse vehicle, car, bicycle, motorcycle, boat, vessel, airplane, basket/ box/ bag/ bucket/ container, smart plate/ cup/ bowl/ pot/ mat/ utensils/ kitchen tools/ kitchen devices/ kitchen accessories/ cabinets/ tables/ chairs/ tiles/ lights/ water pipes/ taps/ gas range/ oven/ dishwashing machine/ etc. The portable device may have a battery that may be replaceable, irreplaceable, rechargeable, and/or non-rechargeable. The portable device may be wirelessly charged. The portable device may be a smart payment card. The portable device may be a payment card used in parking lots, highways, entertainment parks, or other venues/facilities that need payment. The portable device may have an identity (ID)/identifier as described above.

An event may be monitored based on the TSCI. The event may be an object related event, such as fall-down of the object (e.g. an person and/or a sick person), rotation, hesitation, pause, impact (e.g. a person hitting a sandbag, door, window, bed, chair, table, desk, cabinet, box, another person, animal, bird, fly, table, chair, ball, bowling ball, tennis ball, football, soccer ball, baseball, basketball, volley ball), two-body action (e.g. a person letting go a balloon, catching a fish, molding a clay, writing a paper, person typing on a computer), car moving in a garage, person carrying a smart phone and walking around an airport/mall/government building/office/etc., autonomous moveable object/machine moving around (e.g. vacuum cleaner, utility vehicle, car, drone, self-driving car).

The task or the wireless smart sensing task may comprise: object detection, presence detection, proximity detection, object recognition, activity recognition, object verification, object counting, daily activity monitoring, well-being monitoring, vital sign monitoring, health condition monitoring, baby monitoring, elderly monitoring, sleep monitoring, sleep stage monitoring, walking monitoring, exercise monitoring, tool detection, tool recognition, tool verification, patient detection, patient monitoring, patient verification, machine detection, machine recognition, machine verification, human detection, human recognition, human verification, baby detection, baby recognition, baby verification, human breathing detection, human breathing recognition, human breathing estimation, human breathing verification, human heart beat detection, human heart beat recognition, human heart beat estimation, human heart beat verification, fall-down detection, fall-down recognition, fall-down estimation, fall-down verification, emotion detection, emotion recognition, emotion estimation, emotion verification, motion detection, motion degree estimation, motion recognition, motion estimation, motion verification, periodic motion detection, periodic motion recognition, periodic motion estimation, periodic motion verification, repeated motion detection, repeated motion recognition, repeated motion estimation, repeated motion verification, stationary motion detection, stationary motion recognition, stationary motion estimation, stationary motion verification, cyclo-stationary motion detection, cyclo-stationary motion recognition, cyclo-stationary motion estimation, cyclo-stationary motion verification, transient motion detection, transient motion recognition, transient motion estimation, transient motion verification, trend detection, trend recognition, trend estimation, trend verification, breathing detection, breathing recognition, breathing estimation, breathing estimation, human biometrics detection, human biometric recognition, human biometrics estimation, human biometrics verification, environment informatics detection, environment informatics recognition, environment informatics estimation, environment informatics verification, gait detection, gait recognition, gait estimation, gait verification, gesture detection, gesture recognition, gesture estimation, gesture verification, machine learning, supervised learning, unsupervised learning, semi-supervised learning, clustering, feature extraction, featuring training, principal component analysis, eigen-decomposition, frequency decomposition, time decomposition, time-frequency decomposition, functional decomposition, other decomposition, training, discriminative training, supervised training, unsupervised training, semi-supervised training, neural network, sudden motion detection, fall-down detection, danger detection, life-threat detection, regular motion detection, stationary motion detection, cyclo-stationary motion detection, intrusion detection, suspicious motion detection, security, safety monitoring, navigation, guidance, map-based processing, map-based correction, model-based processing/correction, irregularity detection, locationing, room sensing, tracking, multiple object tracking, indoor tracking, indoor position, indoor navigation, energy management, power transfer, wireless power transfer, object counting, car tracking in parking garage, activating a device/system (e.g. security system, access system, alarm, siren, speaker, television, entertaining system, camera, heater/air-conditioning (HVAC) system, ventilation system, lighting system, gaming system, coffee machine, cooking device, cleaning device, housekeeping device), geometry estimation, augmented reality, wireless communication, data communication, signal broadcasting, networking, coordination, administration, encryption, protection, cloud computing, other processing and/or other task. The task may be performed by the Type 1 device, the Type 2 device, another Type 1 device, another Type 2 device, a nearby device, a local server (e.g. hub device), edge server, a cloud server, and/or another device. The task may be based on TSCI between any pair of Type 1 device and Type 2 device. A Type 2 device may be a Type 1 device, and vice versa. A Type 2 device may play/perform the role (e.g. functionality) of Type 1 device temporarily, continuously, sporadically, simultaneously, and/or contemporaneously, and vice versa. A first part of the task may comprise at least one of: preprocessing, processing, signal conditioning, signal processing, post-processing, processing sporadically/ continuously/ simultaneously/ contemporaneously/ dynamically/ adaptive/ on-demand/ as-needed, calibrating, denoising, feature extraction, coding, encryption, transformation, mapping, motion detection, motion estimation, motion change detection, motion pattern detection, motion pattern estimation, motion pattern recognition, vital sign detection, vital sign estimation, vital sign recognition, periodic motion detection, periodic motion estimation, repeated motion detection/estimation, breathing rate detection, breathing rate estimation, breathing pattern detection, breathing pattern estimation, breathing pattern recognition, heart beat detection, heart beat estimation, heart pattern detection, heart pattern estimation, heart pattern recognition, gesture detection, gesture estimation, gesture recognition, speed detection, speed estimation, object locationing, object tracking, navigation, acceleration estimation, acceleration detection, fall-down detection, change detection, intruder (and/or illegal action) detection, baby detection, baby monitoring, patient monitoring, object recognition, wireless power transfer, and/or wireless charging.

A second part of the task may comprise at least one of: a smart home task, smart office task, smart building task, smart factory task (e.g. manufacturing using a machine or an assembly line), smart internet-of-thing (IoT) task, smart system task, smart home operation, smart office operation, smart building operation, smart manufacturing operation (e.g. moving supplies/parts/raw material to a machine/an assembly line), IoT operation, smart system operation, turning on a light, turning off the light, controlling the light in at least one of: a room, region, and/or the venue, playing a sound clip, playing the sound clip in at least one of: the room, the region, and/or the venue, playing the sound clip of at least one of: a welcome, greeting, farewell, first message, and/or a second message associated with the first part of the task, turning on an appliance, turning off the appliance, controlling the appliance in at least one of: the room, the region, and/or the venue, turning on an electrical system, turning off the electrical system, controlling the electrical system in at least one of: the room, the region, and/or the venue, turning on a security system, turning off the security system, controlling the security system in at least one of: the room, the region, and/or the venue, turning on a mechanical system, turning off a mechanical system, controlling the mechanical system in at least one of: the room, the region, and/or the venue, and/or controlling at least one of: an air conditioning system, heating system, ventilation system, lighting system, heating device, stove, entertainment system, door, fence, window, garage, computer system, networked device, networked system, home appliance, office equipment, lighting device, robot (e.g. robotic arm), smart vehicle, smart machine, assembly line, smart device, internet-of-thing (IoT) device, smart home device, and/or a smart office device.

The task may include: detect a user returning home, detect a user leaving home, detect a user moving from one room to another, detect/control/lock/unlock/open/ close/partially open a window/door/garage door/blind/curtain/panel/solar panel/sun shade, detect a pet, detect/monitor a user doing something (e.g. sleeping on sofa, sleeping in bedroom, running on treadmill, cooking, sitting on sofa, watching TV, eating in kitchen, eating in dining room, going upstairs/downstairs, going outside/coming back, in the rest room), monitor/detect location of a user/pet, do something (e.g. send a message, notify/report to someone) automatically upon detection, do something for the user automatically upon detecting the user, turn on/off/dim a light, turn on/off music/radio/home entertainment system, turn on/off/adjust/control TV/HiFi/set-top-box (STB)/ home entertainment system/smart speaker/smart device, turn on/off/adjust air conditioning system, turn on/off/adjust ventilation system, turn on/off/adjust heating system, adjust/control curtains/light shades, turn on/off/wake a computer, turn on/off/pre-heat/control coffee machine/hot water pot, turn on/off/control/preheat cooker/oven/microwave oven/another cooking device, check/adjust temperature, check weather forecast, check telephone message box, check mail, do a system check, control/adjust a system, check/control/arm/disarm security system/baby monitor, check/control refrigerator, give a report (e.g. through a speaker such as Google home, Amazon Echo, on a display/screen, via a webpage/email/messaging system/notification system).

For example, when a user arrives home in his car, the task may be to, automatically, detect the user or his car approaching, open the garage door upon detection, turn on the driveway/garage light as the user approaches the garage, turn on air conditioner/ heater/ fan, etc. As the user enters the house, the task may be to, automatically, turn on the entrance light, turn off driveway/garage light, play a greeting message to welcome the user, turn on the music, turn on the radio and tuning to the user's favorite radio news channel, open the curtain/blind, monitor the user's mood, adjust the lighting and sound environment according to the user's mood or the current/imminent event (e.g. do romantic lighting and music because the user is scheduled to eat dinner with girlfriend in 1 hour) on the user's daily calendar, warm the food in microwave that the user prepared in the morning, do a diagnostic check of all systems in the house, check weather forecast for tomorrow's work, check news of interest to the user, check user's calendar and to-do list and play reminder, check telephone answer system/messaging system/email and give a verbal report using dialog system/speech synthesis, remind (e.g. using audible tool such as speakers/HiFi/ speech synthesis/sound/voice/ music/song/sound field/ background sound field/ dialog system, using visual tool such as TV/entertainment system/ computer/ notebook/smart pad/display/light/color/brightness/patterns/symbols, using haptic tool/virtual reality tool/gesture/ tool, using a smart device/appliance/material/furniture/fixture, using web tool/server/ hub device/cloud server/fog server/edge server/home network/mesh network, using messaging tool/notification tool/communication tool/scheduling tool/email, using user interface/GUI, using scent/smell/ fragrance/taste, using neural tool/nervous system tool, using a combination) the user of his mother's birthday and to call her, prepare a report, and give the report (e.g. using a tool for reminding as discussed above). The task may turn on the air conditioner/heater/ventilation system in advance, or adjust temperature setting of smart thermostat in advance, etc. As the user moves from the entrance to the living room, the task may be to turn on the living room light, open the living room curtain, open the window, turn off the entrance light behind the user, turn on the TV and set-top box, set TV to the user's favorite channel, adjust an appliance according to the user's preference and conditions/states (e.g. adjust lighting and choose/play music to build a romantic atmosphere), etc.

Another example may be: When the user wakes up in the morning, the task may be to detect the user moving around in the bedroom, open the blind/curtain, open the window, turn off the alarm clock, adjust indoor temperature from night-time temperature profile to day-time temperature profile, turn on the bedroom light, turn on the restroom light as the user approaches the restroom, check radio or streaming channel and play morning news, turn on the coffee machine and preheat the water, turn off security system, etc. When the user walks from bedroom to kitchen, the task may be to turn on the kitchen and hallway lights, turn off the bedroom and restroom lights, move the music/message/reminder from the bedroom to the kitchen, turn on the kitchen TV, change TV to morning news channel, lower the kitchen blind and open the kitchen window to bring in fresh air, unlock backdoor for the user to check the backyard, adjust temperature setting for the kitchen, etc. Another example may be: When the user leaves home for work, the task may be to detect the user leaving, play a farewell and/or have-a-good-day message, open/close garage door, turn on/off garage light and driveway light, turn off/dim lights to save energy (just in case the user forgets), close/lock all windows/doors (just in case the user forgets), turn off appliance (especially stove, oven, microwave oven), turn on/arm the home security system to guard the home against any intruder, adjust air conditioning/heating/ventilation systems to "away-from-home" profile to save energy, send alerts/reports/updates to the user's smart phone, etc.

A motion may comprise at least one of: a no-motion, resting motion, non-moving motion, movement, change in position/location, deterministic motion, transient motion, fall-down motion, repeating motion, periodic motion, pseudo-periodic motion, periodic/repeated motion associated with breathing, periodic/repeated motion associated with heartbeat, periodic/repeated motion associated with living object, periodic/repeated motion associated with machine, periodic/repeated motion associated with man-made object, periodic/repeated motion associated with nature, complex motion with transient element and periodic element, repetitive motion, non-deterministic motion, probabilistic motion, chaotic motion, random motion, complex motion with non-deterministic element and deterministic element, stationary random motion, pseudo-stationary random motion, cyclo-stationary random motion, non-stationary random motion, stationary random motion with periodic autocorrelation function (ACF), random motion with periodic ACF for period of time, random motion that is pseudo-stationary for a period of time, random motion of which an instantaneous ACF has a pseudo-periodic/repeating element for a period of time, machine motion, mechanical motion, vehicle motion, drone motion, air-related motion, wind-related motion, weather-related motion, water-related motion, fluid-related motion, ground-related motion, change in electro-magnetic characteristics, sub-surface motion, seismic motion, plant motion, animal motion, human motion, normal motion, abnormal motion, dangerous motion, warning motion, suspicious motion, rain, fire, flood, tsunami, explosion, collision, imminent collision, human body motion, head motion, facial motion, eye motion, mouth motion, tongue motion, neck motion, finger motion, hand motion, arm motion, shoulder motion, body motion, chest motion, abdominal motion, hip motion, leg motion, foot motion, body joint motion, knee motion, elbow motion, upper body motion, lower body motion, skin motion, below-skin motion, subcutaneous tissue motion, blood vessel motion, intravenous motion, organ motion, heart motion, lung motion, stomach motion, intestine motion, bowel motion, eating motion, breathing motion, facial expression, eye expression, mouth expression, talking motion, singing motion, eating motion, gesture, hand gesture, arm gesture, keystroke, typing stroke, user-interface gesture, man-machine interaction, gait, dancing movement, coordinated movement, and/or coordinated body movement.

The heterogeneous IC of the Type 1 device and/or any Type 2 receiver may comprise low-noise amplifier (LNA), power amplifier, transmit-receive switch, media access controller, baseband radio, 2.4 GHz radio, 3.65 GHz radio, 4.9 GHz radio, 5 GHz radio, 5.9GHz radio, below 6GHz radio, below 60 GHz radio and/or another radio. The heterogeneous IC may comprise a processor, a memory communicatively coupled with the processor, and a set of instructions stored in the memory to be executed by the processor. The IC and/or any processor may comprise at least one of: general purpose processor, special purpose processor, microprocessor, multi-processor, multi-core processor, parallel processor, CISC processor, RISC processor, microcontroller, central processing unit (CPU), graphical processor unit (GPU), digital signal processor (DSP), application specific integrated circuit (ASIC), field programmable gate array (FPGA), embedded processor (e.g. ARM), logic circuit, other programmable logic device, discrete logic, and/or a combination. The heterogeneous IC may support broadband network, wireless network, mobile network, mesh network, cellular network, wireless local area network (WLAN), wide area network (WAN), and metropolitan area network (MAN), WLAN standard, WiFi, LTE, LTE-A, LTE-U, 802.11 standard, 802.11a, 802.11b, 802.11g, 802.11n, 802.11ac, 802.11ad, 802.11af, 802.11ah, 802.11ax, 802.11ay, mesh network standard, 802.15 standard, 802.16 standard, cellular network standard, 3G, 3.5G, 4G, beyond 4G, 4.5G, 5G, 6G, 7G, 8G, 9G, UMTS, 3GPP, GSM, EDGE, TDMA, FDMA, CDMA, WCDMA, TD-SCDMA, Bluetooth, Bluetooth Low-Energy (BLE), NFC, Zigbee, WiMax, and/or another wireless network protocol.

The processor may comprise general purpose processor, special purpose processor, microprocessor, microcontroller, embedded processor, digital signal processor, central processing unit (CPU), graphical processing unit (GPU), multi-processor, multi-core processor, and/or processor with graphics capability, and/or a combination. The memory may be volatile, non-volatile, random access memory (RAM), Read Only Memory (ROM), Electrically Programmable ROM (EPROM), Electrically Erasable Programmable ROM (EEPROM), hard disk, flash memory, CD-ROM, DVD-ROM, magnetic storage, optical storage, organic storage, storage system, storage network, network storage, cloud storage, edge storage, local storage, external storage, internal storage, or other form of non-transitory storage medium known in the art. The set of instructions (machine executable code) corresponding to the method steps may be embodied directly in hardware, in software, in firmware, or in combinations thereof. The set of instructions may be embedded, pre-loaded, loaded upon boot up, loaded on the fly, loaded on demand, pre-installed, installed, and/or downloaded.

The presentation may be a presentation in an audio-visual way (e.g. using combination of visual, graphics, text, symbols, color, shades, video, animation, sound, speech, audio, etc.), graphical way (e.g. using GUI, animation, video), textual way (e.g. webpage with text, message, animated text), symbolic way (e.g. emoticon, signs, hand gesture), or mechanical way (e.g. vibration, actuator movement, haptics, etc.).

Basic computation

Computational workload associated with the method is shared among the processor, the Type 1 heterogeneous wireless device, the Type 2 heterogeneous wireless device, a local server (e.g. hub device), a cloud server, and another processor.

An operation, pre-processing, processing and/or postprocessing may be applied to data (e.g. TSCI, autocorrelation, features of TSCI). An operation may be preprocessing, processing and/or postprocessing. The preprocessing, processing and/or postprocessing may be an operation. An operation may comprise preprocessing, processing, post-processing, scaling, computing a confidence factor, computing a line-of-sight (LOS) quantity, computing a non-LOS (NLOS) quantity, a quantity comprising LOS and NLOS, computing a single link (e.g. path, communication path, link between a transmitting antenna and a receiving antenna) quantity, computing a quantity comprising multiple links, computing a function of the operands, filtering, linear filtering, nonlinear filtering, folding, grouping, energy computation, lowpass filtering, bandpass filtering, highpass filtering, median filtering, rank filtering, quartile filtering, percentile filtering, mode filtering, finite impulse response (FIR) filtering, infinite impulse response (IIR) filtering, moving average (MA) filtering, autoregressive (AR) filtering, autoregressive moving averaging (ARMA) filtering, selective filtering, adaptive filtering, interpolation, decimation, subsampling, upsampling, resampling, time correction, time base correction, phase correction, magnitude correction, phase cleaning, magnitude cleaning, matched filtering, enhancement, restoration, denoising, smoothing, signal conditioning, enhancement, restoration, spectral analysis, linear transform, nonlinear transform, inverse transform, frequency transform, inverse frequency transform, Fourier transform (FT), discrete time FT (DTFT), discrete FT (DFT), fast FT (FFT), wavelet transform, Laplace transform, Hilbert transform, Hadamard transform, trigonometric transform, sine transform, cosine transform, DCT, power-of-2 transform, sparse transform, graph-based transform, graph signal processing, fast transform, a transform combined with zero padding, cyclic padding, padding, zero padding, feature extraction, decomposition, projection, orthogonal projection, non-orthogonal projection, over-complete projection, eigen-decomposition, singular value decomposition (SVD), principle component analysis (PCA), independent component analysis (ICA), grouping, sorting, thresholding, soft thresholding, hard thresholding, clipping, soft clipping, first derivative, second order derivative, high order derivative, convolution, multiplication, division, addition, subtraction, integration, maximization, minimization, least mean square error, recursive least square, constrained least square, batch least square, least absolute error, least mean square deviation, least absolute deviation, local maximization, local minimization, optimization of a cost function, neural network, recognition, labeling, training, clustering, machine learning, supervised learning, unsupervised learning, semi-supervised learning, comparison with another TSCI, similarity score computation, quantization, vector quantization, matching pursuit, compression, encryption, coding, storing, transmitting, normalization, temporal normalization, frequency domain normalization, classification, clustering, labeling, tagging, learning, detection, estimation, learning network, mapping, remapping, expansion, storing, retrieving, transmitting, receiving, representing, merging, combining, splitting, tracking, monitoring, matched filtering, Kalman filtering, particle filter, intrapolation, extrapolation, histogram estimation, importance sampling, Monte Carlo sampling, compressive sensing, representing, merging, combining, splitting, scrambling, error protection, forward error correction, doing nothing, time varying processing, conditioning averaging, weighted averaging, arithmetic mean, geometric mean, harmonic mean, averaging over selected frequency, averaging over antenna links, logical operation, permutation, combination, sorting, AND, OR, XOR, union, intersection, vector addition, vector subtraction, vector multiplication, vector division, inverse, norm, distance, and/or another operation. The operation may be the preprocessing, processing, and/or post-processing. Operations may be applied jointly on multiple time series or functions.

The function (e.g. function of operands) may comprise: scalar function, vector function, discrete function, continuous function, polynomial function, characteristics, feature, magnitude, phase, exponential function, logarithmic function, trigonometric function, transcendental function, logical function, linear function, algebraic function, nonlinear function, piecewise linear function, real function, complex function, vector-valued function, inverse function, derivative of function, integration of function, circular function, function of another function, one-to-one function, one-to-many function, many-to-one function, many-to-many function, zero crossing, absolute function, indicator function, mean, mode, median, range, statistics, histogram, variance, standard deviation, measure of variation, spread, dispersion, deviation, divergence, range, interquartile range, total variation, absolute deviation, total deviation, arithmetic mean, geometric mean, harmonic mean, trimmed mean, percentile, square, cube, root, power, sine, cosine, tangent, cotangent, secant, cosecant, elliptical function, parabolic function, hyperbolic function, game function, zeta function, absolute value, thresholding, limiting function, floor function, rounding function, sign function, quantization, piecewise constant function, composite function, function of function, time function processed with an operation (e.g. filtering), probabilistic function, stochastic function, random function, ergodic function, stationary function, deterministic function, periodic function, repeated function, transformation, frequency transform, inverse frequency transform, discrete time transform, Laplace transform, Hilbert transform, sine transform, cosine transform, triangular transform, wavelet transform, integer transform, power-of-2 transform, sparse transform, projection, decomposition, principle component analysis (PCA), independent component analysis (ICA), neural network, feature extraction, moving function, function of moving window of neighboring items of time series, filtering function, convolution, mean function, histogram, variance/standard deviation function, statistical function, short-time transform, discrete transform, discrete Fourier transform, discrete cosine transform, discrete sine transform, Hadamard transform, eigen-decomposition, eigenvalue, singular value decomposition (SVD), singular value, orthogonal decomposition, matching pursuit, sparse transform, sparse approximation, any decomposition, graph-based processing, graph-based transform, graph signal processing, classification, identifying a class/group/category, labeling, learning, machine learning, detection, estimation, feature extraction, learning network, feature extraction, denoising, signal enhancement, coding, encryption, mapping, remapping, vector quantization, lowpass filtering, highpass filtering, bandpass filtering, matched filtering, Kalman filtering, preprocessing, postprocessing, particle filter, FIR filtering, IIR filtering, autoregressive (AR) filtering, adaptive filtering, first order derivative, high order derivative, integration, zero crossing, smoothing, median filtering, mode filtering, sampling, random sampling, resampling function, downsampling, down-converting, upsampling, up-converting, interpolation, extrapolation, importance sampling, Monte Carlo sampling, compressive sensing, statistics, short term statistics, long term statistics, autocorrelation function, cross correlation, moment generating function, time averaging, weighted averaging, special function, Bessel function, error function, complementary error function, Beta function, Gamma function, integral function, Gaussian function, Poisson function, etc.

Machine learning, training, discriminative training, deep learning, neural network, continuous time processing, distributed computing, distributed storage, acceleration using GPU/DSP/coprocessor/multicore/multiprocessing may be applied to a step (or each step) of this disclosure.

A frequency transform may include Fourier transform, Laplace transform, Hadamard transform, Hilbert transform, sine transform, cosine transform, triangular transform, wavelet transform, integer transform, power-of-2 transform, combined zero padding and transform, Fourier transform with zero padding, and/or another transform. Fast versions and/or approximated versions of the transform may be performed. The transform may be performed using floating point, and/or fixed point arithmetic.

An inverse frequency transform may include inverse Fourier transform, inverse Laplace transform, inverse Hadamard transform, inverse Hilbert transform, inverse sine transform, inverse cosine transform, inverse triangular transform, inverse wavelet transform, inverse integer transform, inverse power-of-2 transform, combined zero padding and transform, inverse Fourier transform with zero padding, and/or another transform. Fast versions and/or approximated versions of the transform may be performed. The transform may be performed using floating point, and/or fixed point arithmetic.

A quantity/feature from a TSCI may be computed. The quantity may comprise statistic of at least one of: motion, location, map coordinate, height, speed, acceleration, movement angle, rotation, size, volume, time trend, pattern, one-time pattern, repeating pattern, evolving pattern, time pattern, mutually excluding patterns, related/correlated patterns, cause-and-effect, correlation, short-term/long-term correlation, tendency, inclination, statistics, typical behavior, atypical behavior, time trend, time profile, periodic motion, repeated motion, repetition, tendency, change, abrupt change, gradual change, frequency, transient, breathing, gait, action, event, suspicious event, dangerous event, alarming event, warning, belief, proximity, collision, power, signal, signal power, signal strength, signal intensity, received signal strength indicator (RSSI), signal amplitude, signal phase, signal frequency component, signal frequency band component, channel state information (CSI), map, time, frequency, time-frequency, decomposition, orthogonal decomposition, non-orthogonal decomposition, tracking, breathing, heart beat, statistical parameters, cardiopulmonary statistics/analytics (e.g. output responses), daily activity statistics/analytics, chronic disease statistics/analytics, medical statistics/analytics, an early (or instantaneous or contemporaneous or delayed) indication/suggestion/sign/indicator/verifier/ detection/symptom of a disease/condition/ situation, biometric, baby, patient, machine, device, temperature, vehicle, parking lot, venue, lift, elevator, spatial, road, fluid flow, home, room, office, house, building, warehouse, storage, system, ventilation, fan, pipe, duct, people, human, car, boat, truck, airplane, drone, downtown, crowd, impulsive event, cyclo-stationary, environment, vibration, material, surface, 3-dimensional, 2-dimensional, local, global, presence, and/or another measurable quantity/variable.

Sliding window/algorithm

Sliding time window may have time varying window width. It may be smaller at the beginning to enable fast acquisition and may increase over time to a steady-state size. The steady-state size may be related to the frequency, repeated motion, transient motion, and/or STI to be monitored. Even in steady state, the window size may be adaptively (and/or dynamically) changed (e.g. adjusted, varied, modified) based on battery life, power consumption, available computing power, change in amount of targets, the nature of motion to be monitored, etc.

The time shift between two sliding time windows at adjacent time instance may be constant/variable/locally adaptive/dynamically adjusted over time. When shorter time shift is used, the update of any monitoring may be more frequent which may be used for fast changing situations, object motions, and/or objects. Longer time shift may be used for slower situations, object motions, and/or objects.

The window width/size and/or time shift may be changed (e.g. adjusted, varied, modified) upon a user request/choice. The time shift may be changed automatically (e.g. as controlled by processor/ computer/server/hub device/cloud server) and/or adaptively (and/or dynamically).

At least one characteristics (e.g. characteristic value, or characteristic point) of a function (e.g. auto-correlation function, auto-covariance function, cross-correlation function, cross-covariance function, power spectral density, time function, frequency domain function, frequency transform) may be determined (e.g. by an object tracking server, the processor, the Type 1 heterogeneous device, the Type 2 heterogeneous device, and/or another device). The at least one characteristics of the function may include: a maximum, minimum, extremum, local maximum, local minimum, local extremum, local extremum with positive time offset, first local extremum with positive time offset, n^th local extremum with positive time offset, local extremum with negative time offset, first local extremum with negative time offset, n^th local extremum with negative time offset, constrained maximum, constrained minimum, constrained extremum, significant maximum, significant minimum, significant extremum, slope, derivative, higher order derivative, maximum slope, minimum slope, local maximum slope, local maximum slope with positive time offset, local minimum slope, constrained maximum slope, constrained minimum slope, maximum higher order derivative, minimum higher order derivative, constrained higher order derivative, zero-crossing, zero crossing with positive time offset, n^th zero crossing with positive time offset, zero crossing with negative time offset, n^th zero crossing with negative time offset, constrained zero-crossing, zero-crossing of slope, zero-crossing of higher order derivative, and/or another characteristics. At least one argument of the function associated with the at least one characteristics of the function may be identified. Some quantity (e.g. spatial-temporal information of the object) may be determined based on the at least one argument of the function.

A characteristics (e.g. characteristics of motion of an object in the venue) may comprise at least one of: an instantaneous characteristics, short-term characteristics, repetitive characteristics, recurring characteristics, history, incremental characteristics, changing characteristics, deviational characteristics, phase, magnitude, degree, time characteristics, frequency characteristics, time-frequency characteristics, decomposition characteristics, orthogonal decomposition characteristics, non-orthogonal decomposition characteristics, deterministic characteristics, probabilistic characteristics, stochastic characteristics, autocorrelation function (ACF), mean, variance, standard deviation, measure of variation, spread, dispersion, deviation, divergence, range, interquartile range, total variation, absolute deviation, total deviation, statistics, duration, timing, trend, periodic characteristics, repetition characteristics, long-term characteristics, historical characteristics, average characteristics, current characteristics, past characteristics, future characteristics, predicted characteristics, location, distance, height, speed, direction, velocity, acceleration, change of the acceleration, angle, angular speed, angular velocity, angular acceleration of the object, change of the angular acceleration, orientation of the object, angular of rotation, deformation of the object, shape of the object, change of shape of the object, change of size of the object, change of structure of the object, and/or change of characteristics of the object.

At least one local maximum and at least one local minimum of the function may be identified. At least one local signal-to-noise-ratio-like (SNR-like) parameter may be computed for each pair of adjacent local maximum and local minimum. The SNR-like parameter may be a function (e.g. linear, log, exponential function, monotonic function) of a fraction of a quantity (e.g. power, magnitude) of the local maximum over the same quantity of the local minimum. It may also be the function of a difference between the quantity of the local maximum and the same quantity of the local minimum. Significant local peaks may be identified or selected. Each significant local peak may be a local maximum with SNR-like parameter greater than a threshold T1 and/or a local maximum with amplitude greater than a threshold T2. The at least one local minimum and the at least one local minimum in the frequency domain may be identified/computed using a persistence-based approach.

A set of selected significant local peaks may be selected from the set of identified significant local peaks based on a selection criterion (e.g. a quality criterion, a signal quality condition). The characteristics/STI of the object may be computed based on the set of selected significant local peaks and frequency values associated with the set of selected significant local peaks. In one example, the selection criterion may always correspond to select the strongest peaks in a range. While the strongest peaks may be selected, the unselected peaks may still be significant (rather strong).

Unselected significant peaks may be stored and/or monitored as "reserved" peaks for use in future selection in future sliding time windows. As an example, there may be a particular peak (at a particular frequency) appearing consistently over time. Initially, it may be significant but not selected (as other peaks may be stronger). But in later time, the peak may become stronger and more dominant and may be selected. When it became "selected", it may be back-traced in time and made "selected" in the earlier time when it was significant but not selected. In such case, the back-traced peak may replace a previously selected peak in an early time. The replaced peak may be the relatively weakest, or a peak that appear in isolation in time (i.e. appearing only briefly in time).

In another example, the selection criterion may not correspond to select the strongest peaks in the range. Instead, it may consider not only the "strength" of the peak, but the "trace" of the peak - peaks that may have happened in the past, especially those peaks that have been identified for a long time.

For example, if a finite state machine (FSM) is used, it may select the peak(s) based on the state of the FSM. Decision thresholds may be computed adaptively (and/or dynamically) based on the state of the FSM.

A similarity score and/or component similarity score may be computed (e.g. by a server (e.g. hub device), the processor, the Type 1 device, the Type 2 device, a local server, a cloud server, and/or another device) based on a pair of temporally adjacent CI of a TSCI. The pair may come from the same sliding window or two different sliding windows. The similarity score may also be based on a pair of, temporally adjacent or not so adjacent, CI from two different TSCI. The similarity score and/or component similar score may be/comprise: time reversal resonating strength (TRRS), correlation, cross-correlation, auto-correlation, correlation indicator, covariance, cross-covariance, auto-covariance, inner product of two vectors, distance score, norm, metric, quality metric, signal quality condition, statistical characteristics, discrimination score, neural network, deep learning network, machine learning, training, discrimination, weighted averaging, preprocessing, denoising, signal conditioning, filtering, time correction, timing compensation, phase offset compensation, transformation, component-wise operation, feature extraction, finite state machine, and/or another score. The characteristics and/or STI may be determined/computed based on the similarity score.

Any threshold may be pre-determined, adaptively (and/or dynamically) determined and/or determined by a finite state machine. The adaptive determination may be based on time, space, location, antenna, path, link, state, battery life, remaining battery life, available power, available computational resources, available network bandwidth, etc.

A threshold to be applied to a test statistics to differentiate two events (or two conditions, or two situations, or two states), A and B, may be determined. Data (e.g. CI, channel state information (CSI), power parameter) may be collected under A and/or under B in a training situation. The test statistics may be computed based on the data. Distributions of the test statistics under A may be compared with distributions of the test statistics under B (reference distribution), and the threshold may be chosen according to some criteria. The criteria may comprise: maximum likelihood (ML), maximum aposterior probability (MAP), discriminative training, minimum Type 1 error for a given Type 2 error, minimum Type 2 error for a given Type 1 error, and/or other criteria (e.g. a quality criterion, signal quality condition). The threshold may be adjusted to achieve different sensitivity to the A, B and/or another event/condition/situation/state. The threshold adjustment may be automatic, semi-automatic and/or manual. The threshold adjustment may be applied once, sometimes, often, periodically, repeatedly, occasionally, sporadically, and/or on demand. The threshold adjustment may be adaptive (and/or dynamically adjusted). The threshold adjustment may depend on the object, object movement/location/ direction/action, object characteristics/ STI/size/ property/trait/habit/behavior, the venue, feature/ fixture/ furniture/barrier/ material/machine/living thing/thing/object/boundary/ surface/ medium that is in/at/of the venue, map, constraint of the map (or environmental model), the event/state/ situation/condition, time, timing, duration, current state, past history, user, and/or a personal preference, etc.

A stopping criterion (or skipping or bypassing or blocking or pausing or passing or rejecting criterion) of an iterative algorithm may be that change of a current parameter (e.g. offset value) in the updating in an iteration is less than a threshold. The threshold may be 0.5, 1, 1.5, 2, or another number. The threshold may be adaptive (and/or dynamically adjusted). It may change as the iteration progresses. For the offset value, the adaptive threshold may be determined based on the task, particular value of the first time, the current time offset value, the regression window, the regression analysis, the regression function, the regression error, the convexity of the regression function, and/or an iteration number.

The local extremum may be determined as the corresponding extremum of the regression function in the regression window. The local extremum may be determined based on a set of time offset values in the regression window and a set of associated regression function values. Each of the set of associated regression function values associated with the set of time offset values may be within a range from the corresponding extremum of the regression function in the regression window.

The searching for a local extremum may comprise robust search, minimization, maximization, optimization, statistical optimization, dual optimization, constraint optimization, convex optimization, global optimization, local optimization an energy minimization, linear regression, quadratic regression, higher order regression, linear programming, nonlinear programming, stochastic programming, combinatorial optimization, constraint programming, constraint satisfaction, calculus of variations, optimal control, dynamic programming, mathematical programming, multi-objective optimization, multi-modal optimization, disjunctive programming, space mapping, infinite-dimensional optimization, heuristics, metaheuristics, convex programming, semidefinite programming, conic programming, cone programming, integer programming, quadratic programming, fractional programming, numerical analysis, simplex algorithm, iterative method, gradient descent, subgradient method, coordinate descent, conjugate gradient method, Newton's algorithm, sequential quadratic programming, interior point method, ellipsoid method, reduced gradient method, quasi-Newton method, simultaneous perturbation stochastic approximation, interpolation method, pattern search method, line search, non-differentiable optimization, genetic algorithm, evolutionary algorithm, dynamic relaxation, hill climbing, particle swarm optimization, gravitation search algorithm, simulated annealing, memetic algorithm, differential evolution, dynamic relaxation, stochastic tunneling, Tabu search, reactive search optimization, curve fitting, least square, simulation based optimization, variational calculus, and/or variant. The search for local extremum may be associated with an objective function, loss function, cost function, utility function, fitness function, energy function, and/or an energy function.

Regression may be performed using regression function to fit sampled data (e.g. CI, feature of CI, component of CI) or another function (e.g. autocorrelation function) in a regression window. In at least one iteration, a length of the regression window and/or a location of the regression window may change. The regression function may be linear function, quadratic function, cubic function, polynomial function, and/or another function.

The regression analysis may minimize at least one of: error, aggregate error, component error, error in projection domain, error in selected axes, error in selected orthogonal axes, absolute error, square error, absolute deviation, square deviation, higher order error (e.g. third order, fourth order), robust error (e.g. square error for smaller error magnitude and absolute error for larger error magnitude, or first kind of error for smaller error magnitude and second kind of error for larger error magnitude), another error, weighted sum (or weighted mean) of absolute/square error (e.g. for wireless transmitter with multiple antennas and wireless receiver with multiple antennas, each pair of transmitter antenna and receiver antenna form a link), mean absolute error, mean square error, mean absolute deviation, and/or mean square deviation. Error associated with different links may have different weights. One possibility is that some links and/or some components with larger noise or lower signal quality metric may have smaller or bigger weight.), weighted sum of square error, weighted sum of higher order error, weighted sum of robust error, weighted sum of the another error, absolute cost, square cost, higher order cost, robust cost, another cost, weighted sum of absolute cost, weighted sum of square cost, weighted sum of higher order cost, weighted sum of robust cost, and/or weighted sum of another cost.

The regression error determined may be an absolute error, square error, higher order error, robust error, yet another error, weighted sum of absolute error, weighted sum of square error, weighted sum of higher order error, weighted sum of robust error, and/or weighted sum of the yet another error.

The time offset associated with maximum regression error (or minimum regression error) of the regression function with respect to the particular function in the regression window may become the updated current time offset in the iteration.

A local extremum may be searched based on a quantity comprising a difference of two different errors (e.g. a difference between absolute error and square error). Each of the two different errors may comprise an absolute error, square error, higher order error, robust error, another error, weighted sum of absolute error, weighted sum of square error, weighted sum of higher order error, weighted sum of robust error, and/or weighted sum of the another error.

The quantity may be compared with a reference data or a reference distribution, such as an F-distribution, central F-distribution, another statistical distribution, threshold, threshold associated with probability/histogram, threshold associated with probability/histogram of finding false peak, threshold associated with the F-distribution, threshold associated the central F-distribution, and/or threshold associated with the another statistical distribution.

The regression window may be determined based on at least one of: the movement (e.g. change in position/location) of the object, quantity associated with the object, the at least one characteristics and/or STI of the object associated with the movement of the object, estimated location of the local extremum, noise characteristics, estimated noise characteristics, signal quality metric, F-distribution, central F-distribution, another statistical distribution, threshold, preset threshold, threshold associated with probability/histogram, threshold associated with desired probability, threshold associated with probability of finding false peak, threshold associated with the F-distribution, threshold associated the central F-distribution, threshold associated with the another statistical distribution, condition that quantity at the window center is largest within the regression window, condition that the quantity at the window center is largest within the regression window, condition that there is only one of the local extremum of the particular function for the particular value of the first time in the regression window, another regression window, and/or another condition.

The width of the regression window may be determined based on the particular local extremum to be searched. The local extremum may comprise first local maximum, second local maximum, higher order local maximum, first local maximum with positive time offset value, second local maximum with positive time offset value, higher local maximum with positive time offset value, first local maximum with negative time offset value, second local maximum with negative time offset value, higher local maximum with negative time offset value, first local minimum, second local minimum, higher local minimum, first local minimum with positive time offset value, second local minimum with positive time offset value, higher local minimum with positive time offset value, first local minimum with negative time offset value, second local minimum with negative time offset value, higher local minimum with negative time offset value, first local extremum, second local extremum, higher local extremum, first local extremum with positive time offset value, second local extremum with positive time offset value, higher local extremum with positive time offset value, first local extremum with negative time offset value, second local extremum with negative time offset value, and/or higher local extremum with negative time offset value.

A current parameter (e.g. time offset value) may be initialized based on a target value, target profile, trend, past trend, current trend, target speed, speed profile, target speed profile, past speed trend, the motion or movement (e.g. change in position/location) of the object, at least one characteristics and/or STI of the object associated with the movement of object, positional quantity of the object, initial speed of the object associated with the movement of the object, predefined value, initial width of the regression window, time duration, value based on carrier frequency of the signal, value based on subcarrier frequency of the signal, bandwidth of the signal, amount of antennas associated with the channel, noise characteristics, signal h metric, and/or an adaptive (and/or dynamically adjusted) value. The current time offset may be at the center, on the left side, on the right side, and/or at another fixed relative location, of the regression window.

In the presentation, information may be displayed with a map (or environmental model) of the venue. The information may comprise: location, zone, region, area, coverage area, corrected location, approximate location, location with respect to (w.r.t.) a map of the venue, location w.r.t. a segmentation of the venue, direction, path, path w.r.t. the map and/or the segmentation, trace (e.g. location within a time window such as the past 5 seconds, or past 10 seconds; the time window duration may be adjusted adaptively (and/or dynamically); the time window duration may be adaptively (and/or dynamically) adjusted w.r.t. speed, acceleration, etc.), history of a path, approximate regions/zones along a path, history/ summary of past locations, history of past locations of interest, frequently-visited areas, customer traffic, crowd distribution, crowd behavior, crowd control information, speed, acceleration, motion statistics, breathing rate, heart rate, presence/absence of motion, presence/absence of people or pets or object, presence/absence of vital sign, gesture, gesture control (control of devices using gesture), location-based gesture control, information of a location-based operation, identity (ID) or identifier of the respect object (e.g. pet, person, self-guided machine/device, vehicle, drone, car, boat, bicycle, self-guided vehicle, machine with fan, air-conditioner, TV, machine with movable part), identification of a user (e.g. person), information of the user, location/speed/acceleration/direction/motion/gesture/gesture control/ motion trace of the user, ID or identifier of the user, activity of the user, state of the user, sleeping/resting characteristics of the user, emotional state of the user, vital sign of the user, environment information of the venue, weather information of the venue, earthquake, explosion, storm, rain, fire, temperature, collision, impact, vibration, event, door-open event, door-close event, window-open event, window-close event, fall-down event, burning event, freezing event, water-related event, wind-related event, air-movement event, accident event, pseudo-periodic event (e.g. running on treadmill, jumping up and down, skipping rope, somersault, etc.), repeated event, crowd event, vehicle event, gesture of the user (e.g. hand gesture, arm gesture, foot gesture, leg gesture, body gesture, head gesture, face gesture, mouth gesture, eye gesture, etc.).

The location may be 2-dimensional (e.g. with 2D coordinates), 3-dimensional (e.g. with 3D coordinates). The location may be relative (e.g. w.r.t. a map or environmental model) or relational (e.g. halfway between point A and point B, around a comer, up the stairs, on top of table, at the ceiling, on the floor, on a sofa, close to point A, a distance R from point A, within a radius of R from point A, etc.). The location may be expressed in rectangular coordinate, polar coordinate, and/or another representation.

The information (e.g. location) may be marked with at least one symbol. The symbol may be time varying. The symbol may be flashing and/or pulsating with or without changing color/intensity. The size may change over time. The orientation of the symbol may change over time. The symbol may be a number that reflects an instantaneous quantity (e.g. vital sign/ breathing rate/heart rate/gesture/state/status/action/motion of a user, temperature, network traffic, network connectivity, status of a device/machine, remaining power of a device, status of the device, etc.). The rate of change, the size, the orientation, the color, the intensity and/or the symbol may reflect the respective motion. The information may be presented visually and/or described verbally (e.g. using pre-recorded voice, or voice synthesis). The information may be described in text. The information may also be presented in a mechanical way (e.g. an animated gadget, a movement of a movable part).

The user-interface (UI) device may be a smart phone (e.g. iPhone, Android phone), tablet (e.g. iPad), laptop (e.g. notebook computer), personal computer (PC), device with graphical user interface (GUI), smart speaker, device with voice/audio/speaker capability, virtual reality (VR) device, augmented reality (AR) device, smart car, display in the car, voice assistant, voice assistant in a car, etc.

The map (or environmental model) may be 2-dimensional, 3-dimensional and/or higher-dimensional. (e.g. a time varying 2D/3D map/environmental model) Walls, windows, doors, entrances, exits, forbidden areas may be marked on the map or the model. The map may comprise floor plan of a facility. The map or model may have one or more layers (overlays). The map/model may be a maintenance map/model comprising water pipes, gas pipes, wiring, cabling, air ducts, crawl-space, ceiling layout, and/or underground layout. The venue may be segmented/subdivided/zoned/grouped into multiple zones/ regions/geographic regions/ sectors/ sections/ territories/ districts/ precincts/ localities/ neighborhoods/ areas/ stretches/expanse such as bedroom, living room, storage room, walkway, kitchen, dining room, foyer, garage, first floor, second floor, rest room, offices, conference room, reception area, various office areas, various warehouse regions, various facility areas, etc. The segments/regions/areas may be presented in a map/model. Different regions may be color-coded. Different regions may be presented with a characteristic (e.g. color, brightness, color intensity, texture, animation, flashing, flashing rate, etc.). Logical segmentation of the venue may be done using the at least one heterogeneous Type 2 device, or a server (e.g. hub device), or a cloud server, etc.

Here is an example of the disclosed system, apparatus, and method. Stephen and his family want to install the disclosed wireless motion detection system to detect motion in their 2000 sqft two-storey town house in Seattle, Washington. Because his house has two storeys, Stephen decided to use one Type 2 device (named A) and two Type 1 devices (named B and C) in the ground floor. His ground floor has predominantly three rooms: kitchen, dining room and living room arranged in a straight line, with the dining room in the middle. The kitchen and the living rooms are on opposite end of the house. He put the Type 2 device (A) in the dining room, and put one Type 1 device (B) in the kitchen and the other Type 1 device (C) in the living room. With this placement of the devices, he is practically partitioning the ground floor into 3 zones (dining room, living room and kitchen) using the motion detection system. When motion is detected by the AB pair and the AC pair, the system would analyze the motion information and associate the motion with one of the 3 zones.

When Stephen and his family go out on weekends (e.g. to go for a camp during a long weekend), Stephen would use a mobile phone app (e.g. Android phone app or iPhone app) to turn on the motion detection system. When the system detects motion, a warning signal is sent to Stephen (e.g. an SMS text message, an email, a push message to the mobile phone app, etc.). If Stephen pays a monthly fee (e.g. $10/month), a service company (e.g. security company) will receive the warning signal through wired network (e.g. broadband) or wireless network (e.g. home WiFi, LTE, 3G, 2.5G, etc.) and perform a security procedure for Stephen (e.g. call him to verify any problem, send someone to check on the house, contact the police on behalf of Stephen, etc.). Stephen loves his aging mother and cares about her well-being when she is alone in the house. When the mother is alone in the house while the rest of the family is out (e.g. go to work, or shopping, or go on vacation), Stephen would turn on the motion detection system using his mobile app to ensure the mother is ok. He then uses the mobile app to monitor his mother's movement in the house. When Stephen uses the mobile app to see that the mother is moving around the house among the 3 regions, according to her daily routine, Stephen knows that his mother is doing ok. Stephen is thankful that the motion detection system can help him monitor his mother's well-being while he is away from the house.

On a typical day, the mother would wake up at around 7 AM. She would cook her breakfast in the kitchen for about 20 minutes. Then she would eat the breakfast in the dining room for about 30 minutes. Then she would do her daily exercise in the living room, before sitting down on the sofa in the living room to watch her favorite TV show. The motion detection system enables Stephen to see the timing of the movement in each of the 3 regions of the house. When the motion agrees with the daily routine, Stephen knows roughly that the mother should be doing fine. But when the motion pattern appears abnormal (e.g. there is no motion until 10 AM, or she stayed in the kitchen for too long, or she remains motionless for too long, etc.), Stephen suspects something is wrong and would call the mother to check on her. Stephen may even get someone (e.g. a family member, a neighbor, a paid personnel, a friend, a social worker, a service provider) to check on his mother.

At some time, Stephen feels like repositioning the Type 2 device. He simply unplugs the device from the original AC power plug and plug it into another AC power plug. He is happy that the wireless motion detection system is plug-and-play and the repositioning does not affect the operation of the system. Upon powering up, it works right away.

Sometime later, Stephen is convinced that our wireless motion detection system can really detect motion with very high accuracy and very low alarm, and he really can use the mobile app to monitor the motion in the ground floor. He decides to install a similar setup (i.e. one Type 2 device and two Type 1 devices) in the second floor to monitor the bedrooms in the second floor. Once again, he finds that the system set up is extremely easy as he simply needs to plug the Type 2 device and the Type 1 devices into the AC power plug in the second floor. No special installation is needed. And he can use the same mobile app to monitor motion in the ground floor and the second floor. Each Type 2 device in the ground floor/second floor can interact with all the Type 1 devices in both the ground floor and the second floor. Stephen is happy to see that, as he doubles his investment in the Type 1 and Type 2 devices, he has more than double the capability of the combined systems.

According to various embodiments, each CI (CI) may comprise at least one of: channel state information (CSI), frequency domain CSI, frequency representation of CSI, frequency domain CSI associated with at least one sub-band, time domain CSI, CSI in domain, channel response, estimated channel response, channel impulse response (CIR), channel frequency response (CFR), channel characteristics, channel filter response, CSI of the wireless multipath channel, information of the wireless multipath channel, timestamp, auxiliary information, data, meta data, user data, account data, access data, security data, session data, status data, supervisory data, household data, identity (ID), identifier, device data, network data, neighborhood data, environment data, real-time data, sensor data, stored data, encrypted data, compressed data, protected data, and/or another CI. In one embodiment, the disclosed system has hardware components (e.g. wireless transmitter/receiver with antenna, analog circuitry, power supply, processor, memory) and corresponding software components. According to various embodiments of the present teaching, the disclosed system includes Bot (referred to as a Type 1 device) and Origin (referred to as a Type 2 device) for vital sign detection and monitoring. Each device comprises a transceiver, a processor and a memory.

The disclosed system can be applied in many cases. In one example, the Type 1 device (transmitter) may be a small WiFi-enabled device resting on the table. It may also be a WiFi-enabled television (TV), set-top box (STB), a smart speaker (e.g. Amazon echo), a smart refrigerator, a smart microwave oven, a mesh network router, a mesh network satellite, a smart phone, a computer, a tablet, a smart plug, etc. In one example, the Type 2 (receiver) may be a WiFi-enabled device resting on the table. It may also be a WiFi-enabled television (TV), set-top box (STB), a smart speaker (e.g. Amazon echo), a smart refrigerator, a smart microwave oven, a mesh network router, a mesh network satellite, a smart phone, a computer, a tablet, a smart plug, etc. The Type 1 device and Type 2 devices may be placed in/near a conference room to count people. The Type 1 device and Type 2 devices may be in a well-being monitoring system for older adults to monitor their daily activities and any sign of symptoms (e.g. dementia, Alzheimer's disease). The Type 1 device and Type 2 device may be used in baby monitors to monitor the vital signs (breathing) of a living baby. The Type 1 device and Type 2 devices may be placed in bedrooms to monitor quality of sleep and any sleep apnea. The Type 1 device and Type 2 devices may be placed in cars to monitor well-being of passengers and driver, detect any sleeping of driver and detect any babies left in a car. The Type 1 device and Type 2 devices may be used in logistics to prevent human trafficking by monitoring any human hidden in trucks and containers. The Type 1 device and Type 2 devices may be deployed by emergency service at disaster area to search for trapped victims in debris. The Type 1 device and Type 2 devices may be deployed in an area to detect breathing of any intruders. There are numerous applications of wireless breathing monitoring without wearables.

Hardware modules may be constructed to contain the Type 1 transceiver and/or the Type 2 transceiver. The hardware modules may be sold to/used by variable brands to design, build and sell final commercial products. Products using the disclosed system and/or method may be home/office security products, sleep monitoring products, WiFi products, mesh products, TV, STB, entertainment system, HiFi, speaker, home appliance, lamps, stoves, oven, microwave oven, table, chair, bed, shelves, tools, utensils, torches, vacuum cleaner, smoke detector, sofa, piano, fan, door, window, door/window handle, locks, smoke detectors, car accessories, computing devices, office devices, air conditioner, heater, pipes, connectors, surveillance camera, access point, computing devices, mobile devices, LTE devices, 3G/4G/5G/6G devices, UMTS devices, 3GPP devices, GSM devices, EDGE devices, TDMA devices, FDMA devices, CDMA devices, WCDMA devices, TD-SCDMA devices, gaming devices, eyeglasses, glass panels, VR goggles, necklace, watch, waist band, belt, wallet, pen, hat, wearables, implantable device, tags, parking tickets, smart phones, etc.

The summary may comprise: analytics, output response, selected time window, subsampling, transform, and/or projection. The presenting may comprise presenting at least one of: monthly/weekly/daily view, simplified/detailed view, cross-sectional view, small/large form-factor view, color-coded view, comparative view, summary view, animation, web view, voice announcement, and another presentation related to the periodic/repetition characteristics of the repeating motion.

A Type 1/Type 2 device may be an antenna, a device with antenna, a device with a housing (e.g. for radio, antenna, data/signal processing unit, wireless IC, circuits), device that has interface to attach/connect to/link antenna, device that is interfaced to/attached to/connected to/linked to another device/system/computer/phone/network/data aggregator, device with a user interface(UI)/graphical UI/display, device with wireless transceiver, device with wireless transmitter, device with wireless receiver, internet-of-thing (IoT) device, device with wireless network, device with both wired networking and wireless networking capability, device with wireless integrated circuit (IC), Wi-Fi device, device with Wi-Fi chip (e.g. 802.11a/b/g/n/ac/ax standard compliant), Wi-Fi access point (AP), Wi-Fi client, Wi-Fi router, Wi-Fi repeater, Wi-Fi hub, Wi-Fi mesh network router/hub/AP, wireless mesh network router, adhoc network device, wireless mesh network device, mobile device (e.g. 2G/2.5G/3G/3.5G/4G/LTE/ 5G/6G/7G, UMTS, 3GPP, GSM, EDGE, TDMA, FDMA, CDMA, WCDMA, TD-SCDMA), cellular device, base station, mobile network base station, mobile network hub, mobile network compatible device, LTE device, device with LTE module, mobile module (e.g. circuit board with mobile-enabling chip (IC) such as Wi-Fi chip, LTE chip, BLE chip), Wi-Fi chip (IC), LTE chip, BLE chip, device with mobile module, smart phone, companion device (e.g. dongle, attachment, plugin) for smart phones, dedicated device, plug-in device, AC-powered device, battery-powered device, device with processor/memory/set of instructions, smart device/gadget/items: clock, stationary, pen, user-interface, paper, mat, camera, television (TV), set-top-box, microphone, speaker, refrigerator, oven, machine, phone, wallet, furniture, door, window, ceiling, floor, wall, table, chair, bed, nightstand, air-conditioner, heater, pipe, duct, cable, carpet, decoration, gadget, USB device, plug, dongle, lamp/fight, tile, ornament, bottle, vehicle, car, AGV, drone, robot, laptop, tablet, computer, harddisk, network card, instrument, racket, ball, shoe, wearable, clothing, glasses, hat, necklace, food, pill, small device that moves in the body of creature (e.g. in blood vessels, in lymph fluid, digestive system), and/or another device. The Type 1 device and/or Type 2 device may be communicatively coupled with: the internet, another device with access to internet (e.g. smart phone), cloud server (e.g. hub device), edge server, local server, and/or storage. The Type 1 device and/or the Type 2 device may operate with local control, can be controlled by another device via a wired/wireless connection, can operate automatically, or can be controlled by a central system that is remote (e.g. away from home).

In one embodiment, a Type B device may be a transceiver that may perform as both Origin (a Type 2 device, a Rx device) and Bot (a Type 1 device, a Tx device), i.e., a Type B device may be both Type 1 (Tx) and Type 2 (Rx) devices (e.g. simultaneously or alternately), for example, mesh devices, a mesh router, etc. In one embodiment, a Type A device may be a transceiver that may only function as Bot (a Tx device), i.e., Type 1 device only or Tx only, e.g., simple IoT devices. It may have the capability of Origin (Type 2 device, Rx device), but somehow it is functioning only as Bot in the embodiment. All the Type A and Type B devices form a tree structure. The root may be a Type B device with network (e.g. internet) access. For example, it may be connected to broadband service through a wired connection (e.g. Ethernet, cable modem, ADSL/HDSL modem) connection or a wireless connection (e.g. LTE, 3G/4G/5G, WiFi, Bluetooth, microwave link, satellite link, etc.). In one embodiment, all the Type A devices are leaf node. Each Type B device may be the root node, non-leaf node, or leaf node.

Type 1 device (transmitter, or Tx) and Type 2 device (receiver, or Rx) may be on same device (e.g. RF chip/IC) or simply the same device. The devices may operate at high frequency band, such as 28GHz, 60GHz, 77GHz, etc. The RF chip may have dedicated Tx antennas (e.g. 32 antennas) and dedicated Rx antennas (e.g. another 32 antennas).

One Tx antenna may transmit a wireless signal (e.g. a series of probe signal, perhaps at 100Hz). Alternatively, all Tx antennas may be used to transmit the wireless signal with beamforming (in Tx), such that the wireless signal is focused in certain direction (e.g. for energy efficiency or boosting the signal to noise ratio in that direction, or low power operation when "scanning" that direction, or low power operation if object is known to be in that direction).

The wireless signal hits an object (e.g. a living human lying on a bed 4 feet away from the Tx/Rx antennas, with breathing and heart beat) in a venue (e.g. a room). The object motion (e.g. lung movement according to breathing rate, or blood-vessel movement according to heart beat) may impact/modulate the wireless signal. All Rx antennas may be used to receive the wireless signal.

Beamforming (in Rx and/or Tx) may be applied (digitally) to "scan" different directions. Many directions can be scanned or monitored simultaneously. With beamforming, "sectors" (e.g. directions, orientations, bearings, zones, regions, segments) may be defined related to the Type 2 device (e.g. relative to center location of antenna array). For each probe signal (e.g. a pulse, an ACK, a control packet, etc.), a channel information or CI (e.g. channel impulse response/CIR, CSI, CFR) is obtained/computed for each sector (e.g. from the RF chip). In breathing detection, one may collect CIR in a sliding window (e.g. 30 sec, and with 100Hz sounding/probing rate, one may have 3000 CIR over 30 sec).

The CIR may have many taps (e.g. N1 components/taps). Each tap may be associated with a time lag, or a time-of-flight (tof, e.g. time to hit the human 4 feet away and back). When a person is breathing in a certain direction at a certain distance (e.g. 4ft), one may search for the CIR in the "certain direction". Then one may search for the tap corresponding to the "certain distance". Then one may compute the breathing rate and heart rate from that tap of that CIR.

One may consider each tap in the sliding window (e.g. 30 second window of "component time series") as a time function (e.g. a "tap function", the "component time series"). One may examine each tap function in search of a strong periodic behavior (e.g. corresponds to breathing, perhaps in the range of 10bpm to 40bpm).

The Type 1 device and/or the Type 2 device may have external connections/links and/or internal connections/links. The external connections (e.g. connection 1110) may be associated with 2G/2.5G/3G/3.5G/4G/LTE/ 5G/6G/7G/NBIoT, UWB, WiMax, Zigbee, 802.16 etc. The internal connections (e.g., 1114A and 1114B, 1116, 1118, 1120) may be associated with WiFi, an IEEE 802.11 standard, 802.11a/b/g/n/ac/ad/af/ag/ah/ai/aj/aq/ax/ay, Bluetooth, Bluetooth 1.0/1.1/1.2/2.0/2.1/3.0/4.0/4.1/ 4.2/5, BLE, mesh network, an IEEE 802.16/1/1a/1b/2/2a/a/b/c/d/e/f/g/h/i/j/k/l/m/n/o/p/ standard.

The Type 1 device and/or Type 2 device may be powered by battery (e.g. AA battery, AAA battery, coin cell battery, button cell battery, miniature battery, bank of batteries, power bank, car battery, hybrid battery, vehicle battery, container battery, non-rechargeable battery, rechargeable battery, NiCd battery, NiMH battery, Lithium ion battery, Zinc carbon battery, Zinc chloride battery, lead acid battery, alkaline battery, battery with wireless charger, smart battery, solar battery, boat battery, plane battery, other battery, temporary energy storage device, capacitor, fly wheel).

Any device may be powered by DC or direct current (e.g. from battery as described above, power generator, power convertor, solar panel, rectifier, DC-DC converter, with various voltages such as 1.2V, 1.5V, 3V, 5V, 6V, 9V, 12V, 24V, 40V, 42V, 48V, 110V, 220V, 380V, etc.) and may thus have a DC connector or a connector with at least one pin for DC power.

Any device may be powered by AC or alternating current (e.g. wall socket in a home, transformer, invertor, shorepower, with various voltages such as 100V, 110V, 120V, 100-127V, 200V, 220V, 230V, 240V, 220-240V, 100-240V, 250V, 380V, 50Hz, 60Hz, etc.) and thus may have an AC connector or a connector with at least one pin for AC power.

The Type 1 device and/or the Type 2 device may be positioned (e.g. installed, placed, moved to) in the venue or outside the venue.

For example, in a vehicle (e.g. a car, truck, lorry, bus, special vehicle, tractor, digger, excavator, teleporter, bulldozer, crane, forklift, electric trolley, AGV, emergency vehicle, freight, wagon, trailer, container, boat, ferry, ship, submersible, airplane, air-ship, lift, mono-rail, train, tram, rail-vehicle, railcar, etc.), the Type 1 device and/or Type 2 device may be an embedded device embedded in the vehicle, or an add-on device (e.g. aftermarket device) plugged into a port in the vehicle (e.g. OBD port/socket, USB port/socket, accessory port/socket, 12V auxiliary power outlet, and/or 12V cigarette lighter port/socket).

For example, one device (e.g. Type 2 device) may be plugged into 12V cigarette lighter/accessory port or OBD port or the USB port (e.g. of a car/truck/vehicle) while the other device (e.g. Type 1 device) may be plugged into 12V cigarette lighter/accessory port or the OBD port or the USB port. The OBD port and/or USB port can provide power, signaling and/or network (of the car/truck/vehicle). The two devices may jointly monitor the passengers including children/babies in the car. They may be used to count the passengers, recognize the driver, detect presence of passenger in a particular seat/position in the vehicle.

In another example, one device may be plugged into 12V cigarette lighter/accessory port or OBD port or the USB port of a car/truck/vehicle while the other device may be plugged into 12V cigarette lighter/accessory port or OBD port or the USB port of another car/truck/vehicle.

In another example, there may be many devices of the same type A (e.g. Type 1 or Type 2) in many heterogeneous vehicles/portable devices/smart gadgets (e.g. automated guided vehicle/AGV, shopping/luggage/moving cart, parking ticket, golf cart, bicycle, smart phone, tablet, camera, recording device, smart watch, roller skate, shoes, jackets, goggle, hat, eye-wear, wearable, Segway, scooter, luggage tag, cleaning machine, vacuum cleaner, pet tag/collar/wearable/implant), each device either plugged into 12V accessory port/OBD port/USB port of a vehicle or embedded in a vehicle. There may be one or more device of the other type B (e.g. B is Type 1 if A is Type 2, or B is Type 2 if A is Type 1) installed at locations such as gas stations, street lamp post, street corners, tunnels, multi-storey parking facility, scattered locations to cover a big area such as factory/ stadium/ train station/ shopping mall/construction site. The Type A device may be located, tracked or monitored based on the TSCI.

The area/venue may have no local connectivity, e.g., broadband services, WiFi, etc. The Type 1 and/or Type 2 device may be portable. The Type 1 and/or Type 2 device may support plug and play.

Pairwise wireless links may be established between many pairs of devices, forming the tree structure. In each pair (and the associated link), a device (second device) may be a non-leaf (Type B). The other device (first device) may be a leaf (Type A or Type B) or non-leaf (Type B). In the link, the first device functions as a hot (Type 1 device or a Tx device) to send a wireless signal (e.g. probe signal) through the wireless multipath channel to the second device. The second device may function as an Origin (Type 2 device or Rx device) to receive the wireless signal, obtain the TSCI and compute a "linkwise analytics" based on the TSCI.

Speech enhancement and separation have been a long-standing problem, despite recent advances using a single microphone. Although microphones perform well in constrained settings, their performance for speech separation decreases in noisy conditions. The present teaching discloses RadioSES, an audio-radio speech enhancement and separation system that overcomes inherent problems in audio-only systems. By fusing a complementary radio modality, RadioSES can estimate the number of speakers, solve source association problem, separate, and enhance noisy mixture speeches, and improve both intelligibility and perceptual quality. The system can perform millimeter wave sensing to detect and localize speakers and introduce an audio-radio deep learning framework to fuse the separate radio features with the mixed audio features. Extensive experiments using commercial off-the-shelf devices show that RadioSES outperforms a variety of state-of-the-art baselines, with consistent performance gains in different environmental settings. Compared with the audiovisual methods, RadioSES provides similar improvements, along with the benefits of lower computational complexity and being less privacy concerning.

The disclosed RadioSES system addresses the SES problem by jointly leveraging millimeter-wave (mmWave) sensing as an orthogonal radio modality. Compared to cameras, radio devices have lower power, can operate in dark, through-wall settings and are less privacy-invasive. The radio reflections from speakers can not only allow separation of multiple speakers but also capture articulatory motions for SES. The reasons to select mmWave radios are two-fold: On the one hand, more and more smart devices now include an mmWave radar and a microphone, such as Google Soli phone and Nest Hub, Amazon Alexa, etc. and mmWave sensing promises to be more ubiquitous in the future. On the other hand, mmWave sensing has enabled many applications related to motion and vibration, such as heart rate monitoring, measuring machinery and object vibration, or extracting vocal folds vibration. In particular, it has been used to estimate pitch and detect voice activity, reconstruct speech to some extent, as well as enhance speech recognition for a single speaker. Yet no existing work has explored utilizing both modalities for joint SES tasks.

With this motivation, an audio-radio speech enhancement and separation system, RadioSES, is developed to solve the aforementioned problems and improve the overall performance. Building an audio-radio SES system faces multiple challenges. First, in order to solve the number of sources problem, a robust and efficient source detection and tracking method is needed, as the performance of a system can decrease significantly in the event of miss detection. Second, radio signals are usually prone to environmental effects, and their performance can decrease considerably when tested at a new location. Returned signals from the objects are not only affected by vibration, but also from motion, with motion usually being the stronger effect. Third, different from the rich literature in audiovisual deep learning methods, radio modality has not been explored in the context of SES. Designing a suitable and efficient deep learning model for practical applications is non-trivial. Last, deep learning systems require extensive data collection and robust training methods, which is especially challenging for radio signals.

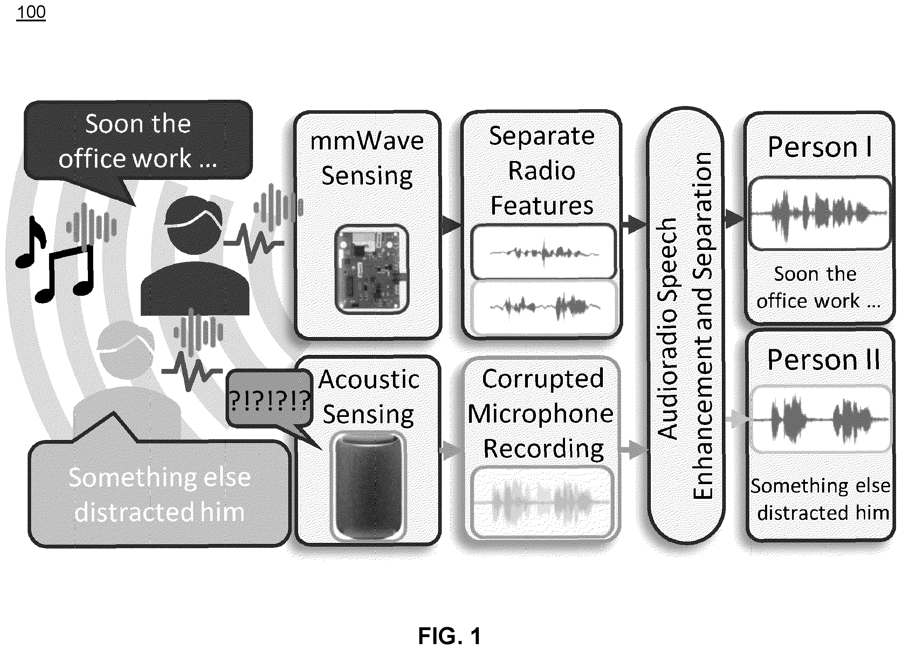

The disclosed RadioSES system can overcome these challenges. As illustrated in FIG. 1, the RadioSES system 100 can detect, localize, and estimate the number of sources in an environment and improve SES performance even in unseen/challenging conditions. To achieve robust detection and localization, the system can use a computationally efficient pipeline of signal processing that can extract the radio features for speakers separately. In addition, the system can use an audio-radio deep learning framework that takes both audio signals and radio signals as the inputs and outputs separated and enhanced speeches for each of the speakers. Following recent advances in monaural SES, a deep learning module, called RadioSESNet, utilizes adaptive encoders, instead of relying on classical Short-Term Fourier Transform (STFT) representation. The RadioSES system further introduces a variety of techniques learned from audiovisual SES to improve robustness and generalizability of RadioSESNet to unseen environments and users.

In some embodiments, one can evaluate RadioSES using a commercial off-the-shelf (COTS) mmWave radar using synthetic and real-world data. In some embodiments, to boost data collection for training, one can build a data collection platform, and capture 5700 sentences from 19 users. In some embodiments, test results show that the radio modality can complement audio and bring similar improvements to that of video modality while not imposing visual privacy issues. One can extensively test RadioSES in different number of mixtures and a variety of environmental settings. When compared to the state-of-the art audio-only method (e.g., DPRNN-TasNet), RadioSES can bring around 3 dB improvements for separating noisy mixtures, along with benefits of estimating the number of sources and associating output streams. The improvements are not only in terms of SDR, but also of intelligibility and perceptual quality. In some embodiments, the test results indicate that audio-radio methods have a tremendous potential for SES tasks, as they enable a low-complexity, effective, privacy-preserving alternative to audio-only or vision-based methods. As such, RadioSES explores an important step in this direction and will inspire follow-up research.

The present teaching discloses RadioSES, a novel audio-radio system that jointly leverages mmWave radio and audio signals for simultaneous speech enhancement and separation. The present teaching introduces an audio-radio deep learning framework that fuses audio signals and radio signals for multi-modal speech separation and enhancement. The present teaching builds an extensive audio-radio dataset and compares RadioSES's performance in various conditions with state-of-the-art methods. In some examples, RadioSES achieves 3 to 6 dB SiSDR improvements in separating two and three person mixtures, respectively.

In some embodiments, RadioSES requires a device with mmWave sensing capabilities, and a microphone. For example, a monaural microphone records ambient sound, and a mmWave radar is expected to output separate streams for each sound source, where speech signals are investigated. While it is possible to place radar in a separate location, one can assume the radar and microphone are co-located. In some embodiments, one can expect the speaking objects to be in front of the radar. In addition, although radars can sense in NLOS conditions, one can investigate LOS only in some embodiments. For example, the application scenarios of RadioSES can be one or more persons speaking in front of a computer, smart hub, or a phone, with LOS.

In some embodiments, having speaking persons in the field-of-view (FoV), RadioSES detects near stationary bodies and uses the output to estimate and associate sources with the extracted sound signals. Unlike microphone arrays, using mmWave sensing enables to capture individual data streams not only from different azimuth angles, but also from varying distances. After these tasks, an efficient multimodal deep learning module may be used to estimate the clean speech(es), which can be used as clean speech or passed through a speech-to-text engine to convert into commands.

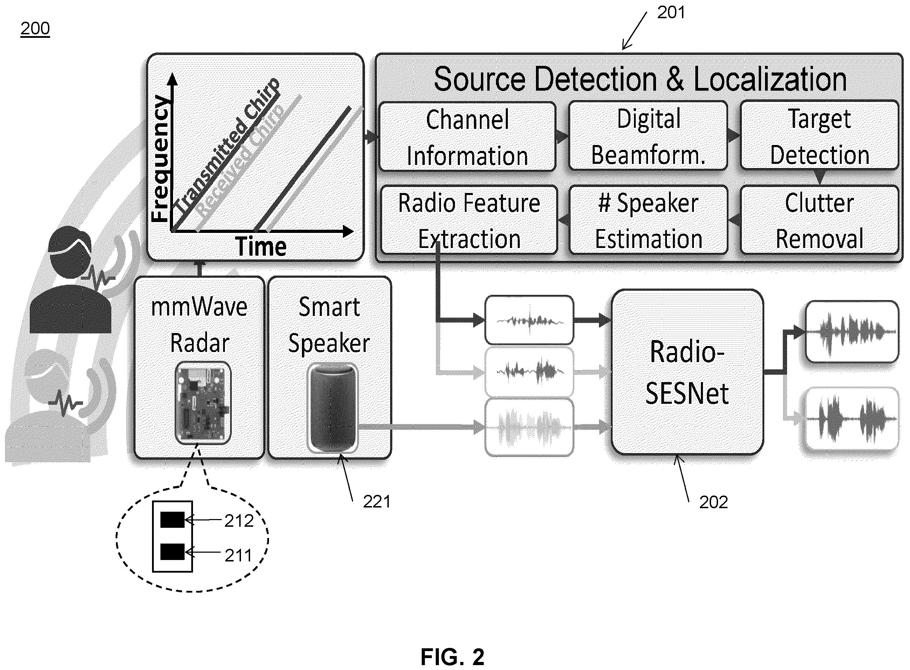

As shown in FIG. 2, the RadioSES system 200 includes: an mmWave radar, a smart speaker 211, a first block 201 for source detection and localization, and a second block 202 for deep learning module, named RadioSESNet.

In some embodiments, as shown in FIG. 2, the mmWave radar can include a device with a transmitter (Tx) antenna array 211 and a receiver (Rx) antenna array 212. In some embodiments, each of the transmitter (Tx) and receiver (Rx) arrays has multiple antennas. To sense sound in the environment, the Tx 211 can transmit mmWave signals, which may be received by different Rx antennas 212 sequentially after reflected by sounding or vibrating sources in a venue and other objects in the same venue. In some embodiments, the Tx 211 is a Bot as described above; and the Rx 212 is an Origin as described above. While the Tx 211 and the Rx 212 are physically coupled to each other in FIG. 2, they may be separated in different devices in other embodiments. In some embodiments, the device including the Tx 211 and the Rx 212 serves as the mmWave radar. In other embodiments, the mmWave radar also includes or is coupled to a processor to process the received radar signal at the Rx 212. In various embodiments, the processor may be physically coupled to the Tx 211, the Rx 212, both, or neither.

As shown in FIG. 2, the goal of the radio feature extraction module is to output individual radio streams from sources in the environment. To achieve that, the system can adopt a variety of methods in an efficient pipeline to detect and locate targets. Unlike existing works, RadioSES does not rely on a spectrogram-based metric to localize people in the environment, but utilizes classical, efficient methods to extract the corresponding range-azimuth bins.

In some embodiments, at the channel information module in FIG. 2, RadioSES can work with any type of radar that can report a channel impulse response (CIR), e.g. a frequency modulated continuous wave (FMCW) radar. When using an FMCW radar, extracting the CIR includes applying an operation called range-FFT. As mmWave devices usually have multiple antennas, one can define the CIR at the m-th antenna $h_m(\tau)$ as:

$$h_m(\tau) = \sum_{r=0}^{R-1} \alpha_{m,r}\, \delta(\tau - \tau_r) + \epsilon(\tau),$$

where R is the number of the CIR range bins, $\delta(\cdot)$ is the Delta function representing the presence of an object at the corresponding location, $\alpha_{m,r}$ and $\tau_r$ denote the complex amplitude and the propagation delay of the r-th range bin, and $\epsilon$ denotes the additive noise, respectively. Here, the range resolution $\Delta R$ can be inferred from the time resolution, $\Delta\tau$, which is inversely proportional to bandwidth (corresponding to 4.26cm for the disclosed device). Therefore, a separate stream from very close targets can be extracted. The CIR is captured repeatedly during sensing, and is time dependent. To simplify CIR equation, one can denote the CIR from m-th antenna, at r-th range bin, at time index t as $h_{m,r}(t)$. As such, $h_{m,r}(t)$ is quantized with respect to time, range bin, and antenna index.

In some embodiments, at the digital beamforming module in FIG. 2, using the individual received streams from each antenna, RadioSES extracts range-azimuth information with classical beamforming. Range-azimuth CIR may be denoted by $h_{r,\theta}(t)$, where $\theta$ represents the azimuth angle. In some examples, the virtual antenna array elements are placed $d = \lambda/2$ apart, where $\lambda$ is the wavelength, and $h_{r,\theta}(t)$ can be given as:

$$h_{r,\theta}(t) = \mathbf{s}^H(\theta)\mathbf{h_{m,r}(t)} + \epsilon(t),$$

where $s^H(\theta)$ is the steering vector for angle $\theta$, and $\epsilon$ is the additive noise. The coefficients of the steering vector are:

$$s_m(\theta) = \exp\left(-j2\pi\frac{d\sin\theta}{\lambda}\right),$$

and the channel vector is $h_{m,r}(t) = [h_{1,r}(t), h_{2,r}(t), \ldots h_{M,r}(t)]$, with M being the total number of antenna elements.

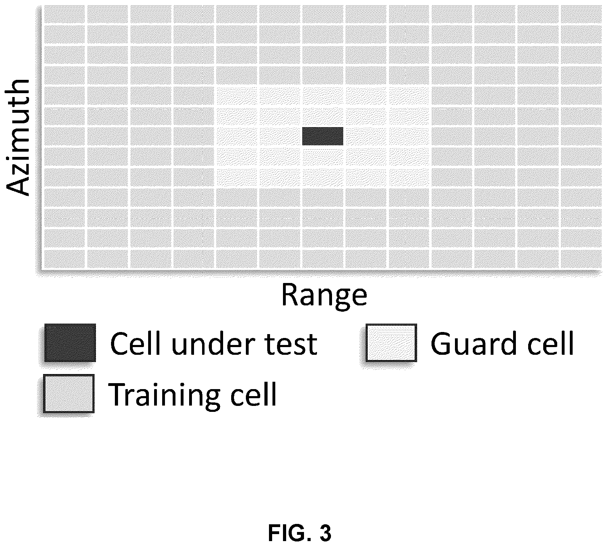

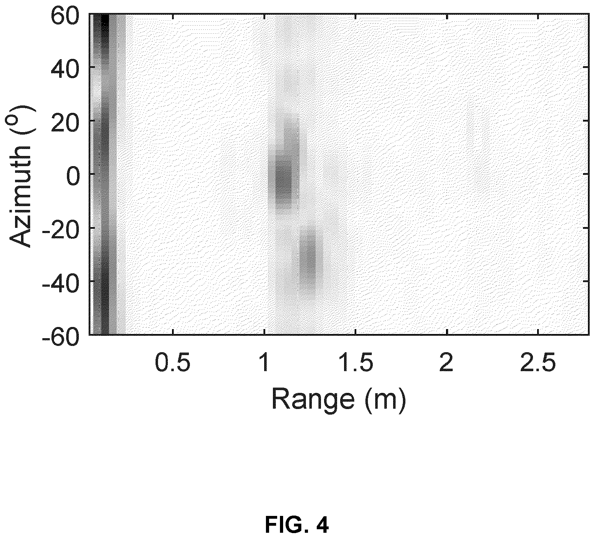

In some embodiments, at the target detection module in FIG. 2, to detect human bodies in the environment, RadioSES first extracts the reflecting objects in the environment. As suggested by the CIR equation, the presence of objects creates strong returned signals, whereas when there is no object, returned signals only include noise. For target detection, one can utilize a classical approach in the radar literature, constant false alarm rate (CFAR) detector, which adaptively estimates the background noise for different bins and thresholds each range-azimuth bin accordingly. In some embodiments, the 2D CFAR window shown in FIG. 3 is denoted with C, and CFAR threshold is denoted with $\gamma$. This window may be applied to the magnitude of the range-azimuth plane, and the corresponding range-azimuth plane is shown in FIG. 4. Therefore, the CFAR detection rule on the range-azimuth plane is given as:

$$B_{r,\theta}^{\text{CFAR}}(t) = \mathbb{1}\{(C \star |h_{r,\theta}|)(t) > \gamma(|h_{r,\theta}(t)|)\},$$

where $\star$ and $\mathbb{1}\{\cdot\}$

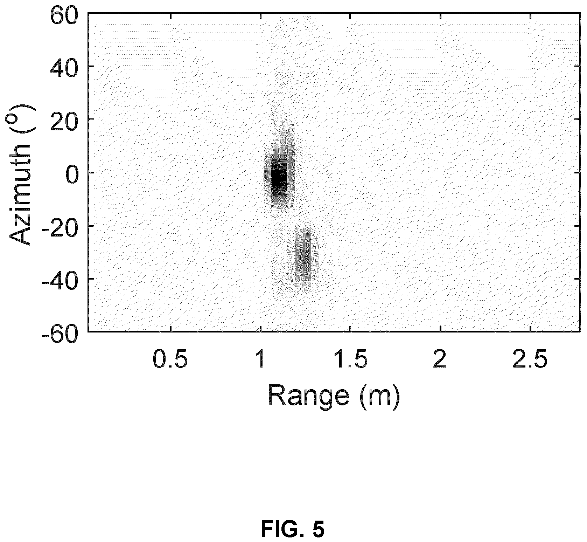

In some embodiments, at the clutter removal module in FIG. 2, previous module extracts a binary map with bins with reflecting objects, which can include static objects. On the other hand, even when a person is stationary, the radar signal still captures a variation at the person's location, due to inherent body motion from breathing and heart rate, a phenomenon used extensively in mmWave based person detection. Therefore, to remove the static objects and detect human bodies, the system can extract the variance at each range-azimuth bin, and use a threshold to identify static objects. One can denote the variance of $h_{r,\theta}(t)$ with $V_{r,\theta}(t)$, where an example can be seen in FIG. 5. Therefore, human detector output is $B_{r,\theta}^{\text{stat}} \triangleq \mathbb{1}\{V_{r,\theta}(t) > H^{\text{stat}}(r, \theta)\}$. Furthermore, bodies with excessive motion can also be filtered using a similar approach, and the system can reject those by:

$$B_{r,\theta}^{mov} \triangleq \mathbb{1}\{V_{r,\theta}(t) < H^{mov}(r,\theta)\},$$

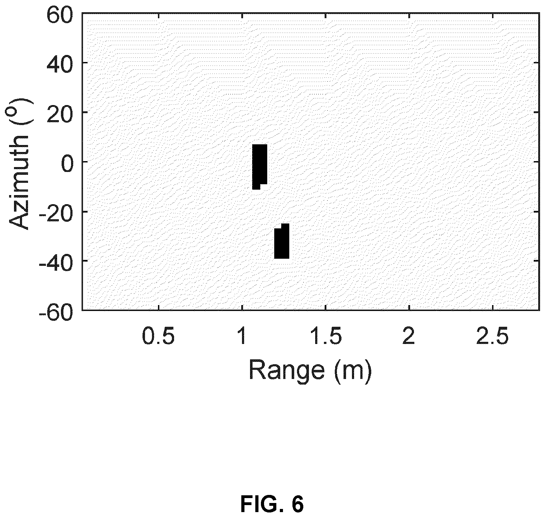

where $H^{stat}(r,\theta) \triangleq \frac{\eta^{stat}\cos(\theta)}{(1+r\Delta R)^2}$, $H^{mov}(r,\theta) \triangleq \frac{\eta^{mov}\cos(\theta)}{(1+r\Delta R)^2}$, $\eta^{stat}$ and $\eta^{mov}$ are empirically found thresholds. The minimum and maximum variances are defined with respect to $(r, \theta)$, in order to accommodate changing reflection energy with respect to angle and distance. The resulting binary detection map, $B_{r,\theta}(t)$ is found by extracting intersection of all binary maps, i.e. $B_{r,\theta}(t) = \{B_{r,\theta}^{CFAR} \cap B_{r,\theta}^{stat} \cap B_{r,\theta}^{mov}\}(t)$, as shown in FIG. 6.

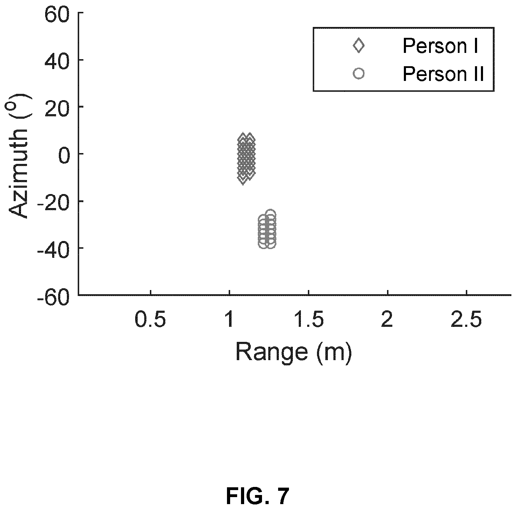

In some embodiments, at the number of speaker estimation module in FIG. 2, each bin of binary detection map, $B_{r,\theta}(t)$ spans $(\Delta R, \Delta\theta)$ distance in 2D space. Considering the high range and angular resolution, a human body can span multiple bins in $B(r, \theta)$. To estimate the number of people, RadioSES clusters binary detection maps using a non-parametric clustering method, DBSCAN. The parameters for DBSCAN are set empirically, and an example clustering is shown in FIG. 7. Furthermore, since the number of people estimation and center extraction is done repeatedly for a window of size W, there is a need to match the locations of bodies at different time indices. The system can use Munkres' algorithm to continuously track the location of users.

In some embodiments, at the radio feature extraction module in FIG. 2, having extracted the number of persons and the corresponding range-azimuth bins, RadioSES extracts the complex radar signals from each person's center directly, following some raw-data based approaches. As there are many range-azimuth bins associated with the same person, RadioSES extracts the median bin for testing, whereas multiple nearby bins are used for training, which helps to boost dataset size and mitigate overfitting. In some examples, output dimensionality of the radar signals is $2 \times 1000$ at 16 bits for a 1-second stream, which is lower than the microphone and typical video streams.

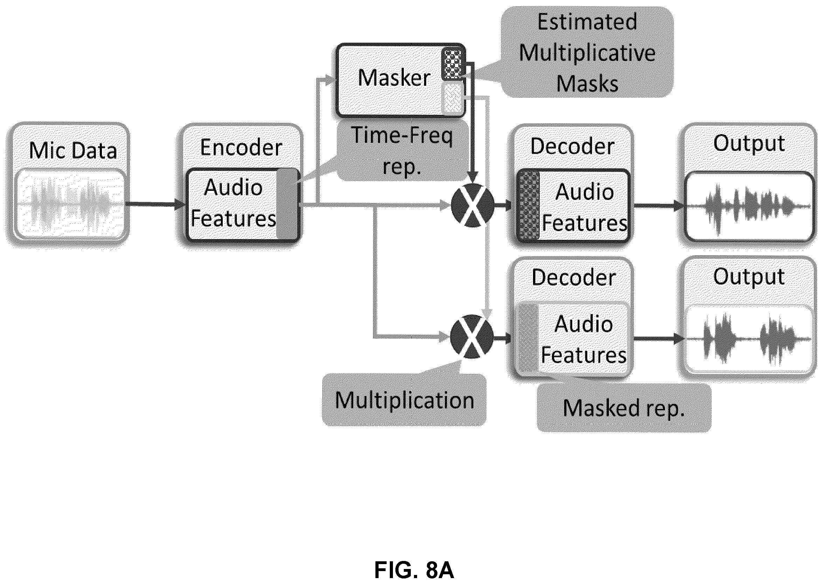

Usually, an SES model follows the architecture in FIG. 8A, with an encoder, masker, and a decoder block. Input encoding is multiplied with an estimated mask, which uses a decoder to reconstruct the time-domain signal. STFT may be used as the encoder, with the ideal binary mask being the training objective. The performance can be increased by using more optimal masks; but these still suffer from the fact that STFT-based encoding is not necessarily optimal for speech separation. Methods that replace STFT with adaptive encoders are found to be more optimal.

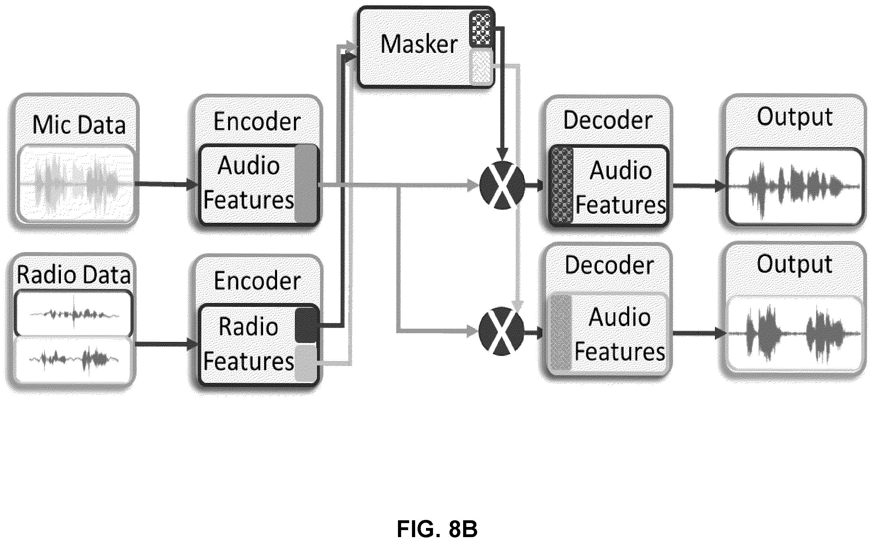

In some embodiments, the disclosed RadioSES uses the structure in FIG. 8B to realize the RadioSESNet module 202 in FIG. 2, which introduces radio modality. Radio streams are encoded, and concatenated with the audio stream to estimate the masks. However, this involves a few design choices as follows. Unlike audio signals, radio signals are complex-valued. Both real and imaginary parts of the radio signals change with respect to the motion and vibration. If a spectrogram representation is used as an input, it may not be optimal for neural network, and it usually involves in throwing away some signal content by only extracting amplitude, or half of the spectrogram (e.g. only positive Doppler shifts). Using either the real or imaginary part of the signal or combining both parts optimally with a linear projection also loses important signal content. Based on this, RadioSES may use adaptive front-end for radio streams.

To make RadioSES work with raw radio inputs, the system can apply random rotation in IQ plane. For example, the system can apply a high-pass filter on returned signals to reduce the effect of body motion. The high pass filter is used by the RadioSESNet module 202 in FIG. 2 to run with raw radar inputs. In some examples, one can select the cutoff frequency of the high pass filter at 90 Hz in order not to filter vocal folds harmonics. Afterward, the radio signals are encoded with an adaptive encoder.

After the encoder, the system can process audio and radio streams separately with individual blocks to exploit long-term dependencies within each modality. To that end, the system processes each modality through an efficient dual-path RNN block (DPRNN). DPRNN blocks do not suffer from limited context, which is a main issue with fully convolutional models. Afterward, the system can combine two modalities via resizing and concatenation on the feature dimension. These models are further processed with DPRNN blocks and 1D decoders before outputs.

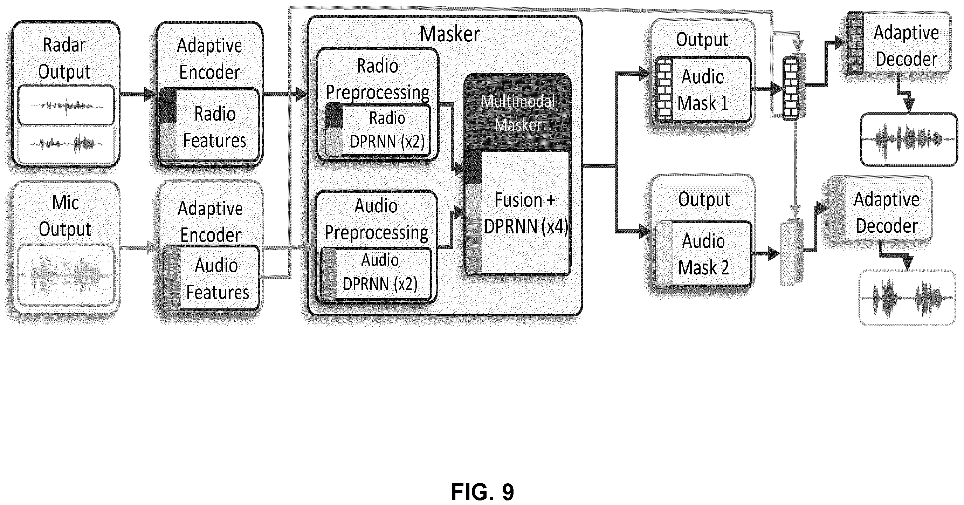

An exemplary design of RadioSESNet is shown in FIG. 9. In some examples, the audio encoder of RadioSESNet includes a 1D convolutional layer, with kernel size 16, and number of kernels 256, followed by ReLU nonlinearity and layer normalization. The radio channel of the RadioSESNet uses another 1D convolutional layer, nonlinearity, and normalization, with the same parameters, except that the number of filters being 64, due to the lower sampling rate. Stride size is set to 1/2 of the kernel width, resulting in 50% overlap between convolutional blocks. After the first layer, a second 1D convolution reduces the dimensionality to 64 for audio, and 16 for radio. Each radio stream uses the same encoder block to create an STFT-like representation. One can denote the distorted input audio with $\tilde{a}$, and radio streams with $r_i$, where $i$ denotes the $i^{th}$ radio stream. Output of the audio and radio encoders are represented with $X_\star \in \mathcal{R}^{N_\star \times L_\star}$, with $\star \in (a, r)$, for audio and radio stream, where one can drop the index $i$ for simplicity. Here, $N_\star$ represents the number of features, and $L_\star$ represents the number of time samples of encoded representation.

Both encoded modalities are combined to estimate the masks for each source, as illustrated in the masker of FIG. 9. Each modality passes through individual DPRNN blocks, then fused by vector concatenation, and passes through four more DPRNN blocks before estimating the mask with a 2D convolutional layer, which matches the output with the expected mask number and size.

Table 1: Parameters for the Masker Layer for 2-Mix:

| Audio | $N_a$ 64 | $K_a$ 128 | $S_a$ 48 |
|---|---|---|---|
| Radio | $N_r$ 16 | $K_r$ 16 | $S_r$ 48 |
| Concatenation | $N_c$ 96 | $K_c$ 128 | $K_c$ 48 |

When there are two people speaking at the same time in the venue, there are two radar outputs at the input of FIG. 9. The two radar outputs (e.g. of speaker 1 and of speaker 2) would go through the same adaptive encoder. Alternatively, they can be encoded differently. All the radio DPRNN can be the same for all radio signals and speakers. But the radio DPRNN can be different for different speakers in alternative embodiments.

In other embodiments, the structure in FIG. 9 can be generalized to 3, 4, 5 or more people. In such cases, there will be more radio stream.

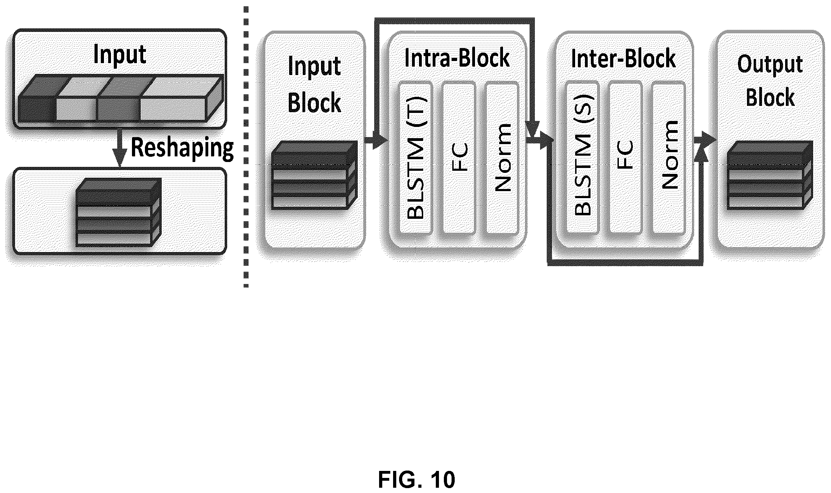

In some embodiments, for processing the encoded data, the system can use DPRNN blocks, where an example DPRNN workflow is presented in FIG. 10. DPRNN processing may include reshaping the input data to a 3D representation, through means of extracting overlapping blocks, and concatenating through another dimension, and applying two consecutive RNN layers to different dimensions of the input block. The output of the reshaping operation can be represented as $\hat{X}_a \in \mathcal{R}^{N_a \times K_a \times S_a}$, with $K_a$ and $S_a$ denoting the block length and number of blocks. The input, output representations $X_r$, $\hat{X}_r$. and dimensionalities $N_r$, $L_r$, $K_r$ and $S_r$ are defined similarly for radio channel, and given in Table 1, whereas the flow for a single DPRNN processing is given in FIG. 10 as well.

In some embodiments, after a suitable reshaping operation, the input blocks are fed to an RNN module, which is operated along the S dimension of the 3D input, followed by a fully connected layer, and layer normalization. After a skip connection in between, a similar operation is repeated through K dimension to capture larger distance relationships between blocks. Each RNN block has depth 1, and fully connected layers are used to match the input size to the output size, which enables to repeat multiple DPRNN blocks without any size mismatches.

In some embodiments, at the output of the masker, a number of masks equal to the number of people are estimated, which is then used to decode the signal to extract time domain audio signals. DPRNN blocks are converted back to a representation similar to the one at the input, by an overlap-add method. The signal is fed through the decoder, which applies a transposed convolution operation. The output is a single channel representation, with the same dimensionality and the same number of filters in the encoder to preserve symmetry, and it is also adaptive.

In some embodiments, in order to train RadioSESNet, the system can use scale-invariant signal-to-distortion (SiSDR) as the loss function between the time-domain signals, which is given by:

$$\mathbf{SiSDR}(\mathbf{a}, \hat{\mathbf{a}}) = 10\log_{10}\left(\frac{\left\|\frac{\hat{\mathbf{a}}^T \mathbf{a}}{\|\mathbf{a}\|^2}\mathbf{a}\right\|}{\left\|\frac{\hat{\mathbf{a}}^T \mathbf{a}}{\|\mathbf{a}\|^2}\mathbf{a} - \hat{\mathbf{a}}\right\|}\right),$$

where a and â denote the target and the estimated sound signals. Use of SiSDR prevents scaling effects to dominate the error calculation, as the amplitude of extracted speech is not of interest. The SiSDR loss has been combined with $L_2$ norm regularization on the weights, where the decay factor is set to $1e^{-6}$. Since a separate model for different numbers of users has been trained, RadioSES switches to the appropriate model by estimating the number of sources.

Complexity and causality are particularly considered in the design.

In some embodiments, RadioSESNet has a compact design, with only 2.1M parameters. Among these, radio stream occupies 320k parameters, which could easily be fit on a small device. Forward pass of a 3-second input with RadioSESNet takes 4ms on a modern GPU with batch processing, which is only 0.4ms slower than the corresponding audio-only method.

In some embodiments, RadioSESNet uses unidirectional LSTMs in the recurrent layers of inter-block processing, whereas intra-blocks rely on BLSTMs which requires having the complete block in S dimension. Therefore, RadioSESNet can work in a causal fashion, with roughly 150ms delay. RadioSES is thus already close to real-time processing.

For experiment and implementation of the disclosed RadioSES system, one can build a data collection platform to obtain large-scale data to train, validate, and evaluate RadioSES. As extracting clean and non-reverberant ground truth samples are important, one can reduce the echo in the room by sound-absorbing pads. In some embodiments, the system can collect clean audio data with a Blue Snowball iCE microphone, sampled at 48 kHz, radar data using a Texas Instruments (TI) IWR1443 mmWave radar, and video data using the front-facing camera of an iPhone 11 Pro. The radar is set to operate with a bandwidth of 3.52 GHz at a sampling rate of 1000 Hz. The system can align the radio signal and audio signal in the time domain using the correlation of their energy. Video data, captured at 1080p and 30 fps, is also collected, although the accompanying audio files are used for training.

In some embodiments, 19 users including native speakers and speakers with different accents are instructed to read phonetically rich sentences from the TIMIT corpus. The users come from a diverse background, where there are 5 native English speakers, along with 9 Chinese, 2 Indian, 2 Turkish, 1 Korean accents. One can remove sentences that are shorter than 25 characters in the dataset. Since the size of TIMIT corpus is limited, 200 common and 100 unique sentences are read by each participant. In total, 2100 different sentences and 5762 unique words are read by participants. The sentences are presented in mixed order, and the dataset includes a lot of pauses, and filler words, in contrast to publicly available datasets, which usually include professional speakers. During data collection, users sit approximately 40cm away from the radio device and read each material at a normal speaking volume while not moving excessively.

In some embodiments, to generate the noisy and mixture sound signals, the system can follow the recipe used in LibriMix with the noise files from WHAM dataset. One can randomly select 13 users for training, and 4 users (2 male, 2 female) for evaluation. Validation set includes remaining two users, and unused speech of the users in the training set. After downsampling all audio files to 8kHz, the system can create synthetic mixtures based on the shortest of the combined files, with a minimum duration constraint of 3-seconds. Each user's recordings are repeated ten times on average, which results in 25,826 utterances ($\approx$30 hours). The gain factors are found by normalizing the loudness of speech and noise signals, and creating noisy mixtures in [-5, 5] dB signal-to-noise rate. The system may create two evaluation sets: i) mixtures from seen users, but unheard sentences, ii) mixtures from unseen users. This helps to explain dependency on seen/unseen users in RadioSES, as different users' radio signals can be different, not only due to their speaking, but also due to their body motion and physical characteristics.

In some embodiments, a multimodal system can fail easily and focus to use a single modality, which is known as mode failure. To prevent this and to further improve robustness, the dataset creation procedure includes the following. First, same-speaker mixtures: the dataset includes same-speaker mixtures, in order to prevent mode failure, which is shown to be effective in the audiovisual domain. Second, multi-microphone mixtures: as the data collection procedure includes two microphones, one can randomly select one when generating each mixture. The evaluation may be done with the better microphone, but this also boosts dataset size multiple folds without collecting more data. Third, clean and noisy mixtures: unlike the LibriMix dataset, one can create both noisy and clean mixtures of multiple speakers and use them to train a single model. Therefore, RadioSES uses a single model, whether an environment is clean or noisy.

In some embodiments, one can implement data collection and raw data processing modules of RadioSES in MATLAB, whereas the deep learning model is implemented in PyTorch, with the help of Asteroid library to follow standard training and evaluation protocols in monoaural SES, and to borrow implementations of existing methods, such as ConvTasNet or DPRNNTasNet. In some embodiments, one can train RadioSESNet and DPRNNTasNet for 60 epochs, using a starting learning rate of $1e^{-3}$, which is halved when the validation loss did not improve for 5 consecutive epochs. Furthermore, the learning rate is scaled by 0.98 every two epochs. An early stopping criterion is set to 15 epochs. To accelerate training, one can use mixed-precision training. Thanks to the low complexity design of RadioSESNet, a single epoch takes roughly 10 minutes to train, with a batch size of 24, using a single NVIDIA RTX 2080S GPU.

As discussed previously, although microphone signals mostly correspond to speech signals, radar signals can be affected by motion, vibration, and environmental factors. Furthermore, it is usually not straightforward to make a multimodal system work easily. To improve the robustness of radio signals, one can implement the following. First, capturing multiple snapshots: since the radio signals from the multiple range-azimuth bins of the same person can change, one can record multiple range-azimuth data in the dataset. In each epoch, one can randomly select a range-azimuth bin for training among 8 candidates, whereas validation and testing use the median bin. This boosts the dataset size significantly without relying on synthetic methods and enables to use a wider range of bins, instead of searching for the most optimal bin. Second, input distortions: the input radio streams are distorted in different ways. These include introducing random rotation, adding noise at different variance levels, replacing some part of the radio signal with zeros (to imitate data loss), or removing some radio signals completely to reduce mode failure.

In some embodiments, one can report the following metrics to evaluate performance of RadioSES: (a) SiSDR: Scale-invariant signal-to-noise ratio, which is an indicator of signal levels, with a normalization factor to prevent scaling of the signals to increase metric unfairly; (b) SIR: Signal-to-interference ratio, which measures the leakage from one person to another when there are multiple speakers, and only reported for SS tasks; (c) STOI: Short time intelligibility metric, correlates with the word error rate, reported from 0 to 1; (d) PESQ: Perceptual evaluation of the sound quality, measured from 0 to 5. Since measuring human perception requires user studies, PESQ is used as an alternative, when user studies are not feasible.

Table 2: Results for enhancing single speaker speech

| Evaluation | Seen | | | Unseen | | |
|---|---|---|---|---|---|---|
| Model | SiSDR | STOI | PESQ | SiSDR | STOI | PESQ |
| Input | 3.9 | 0.74 | 1.55 | 3.8 | 0.70 | 1.54 |
| WaveVoiceNet | 0.6 | 0.60 | 1.28 | 0.7 | 0.62 | 1.27 |
| ConvTasNet | 14.5 | 0.90 | 2.67 | 13.6 | 0.87 | 2.55 |
| SudoRMRF | 14.0 | 0.88 | 2.32 | 12.2 | 0.84 | 2.04 |
| DPRNNTasNet | 14.2 | 0.89 | 2.62 | 13.0 | 0.86 | 2.46 |
| RadioSES | 14.5 | 0.90 | 2.68 | 13.3 | 0.87 | 2.52 |

Baseline Methods: one can include several radio-only and audio-only methods in the literature for a variety of tasks. First, as a radio-only method, one can implement WaveVoiceNet in WaveEar. This approach uses the radio modality alone to (re)construct sound signals from vocal folds vibration, and assumes no available microphones. It reconstructs magnitude of audio spectrograms and uses Griffin-Lim based phase reconstruction. One can use oracle phase of the clean audio signal instead, which poses an upper limit on its performance.

One can compare performance of RadioSES with other audio-only baselines, to illustrate gains from radio modality, and sustained performance of RadioSES. One can include ConvTasNet, one of the first adaptive-encoder based systems that outperformed STFT-based masks. Second, one can include DPRNNTasNet, which is the audio-only baseline of RadioSES. DPRNNTasNet has shown to outperform ConvTasNet significantly, and can be considered as the state-of-the art. Third, one can use SudoRMRF, which simplifies DPRNNTasNet by replacing the RNN blocks with downsampling and upsampling blocks and is shown to achieve similar performance. Last, one cannot compare with UltraSE, as it uses ultrasound modality, and different speakers and noise dataset. Due to changes in datasets and different sampling rate (16 kHz), it is not possible to copy their results and draw a direct comparison. On the other hand, UltraSE performs similar to ConvTasNet in 2-person mixtures, which has been included as a benchmark in the study.

In speech enhancement, RadioSES brings improvements to the audio-only baseline methods, as shown in Table 2. Since the background signals are statistically different than speech signals, one can see relatively small improvements. This observation is consistent with audiovisual methods (e.g. 0.1 dB improvement), and shows that RadioSES learns to exploit the radio information. On the other hand, results from WaveVoiceNet suggest that, radio modality is not sufficient to (re)construct less-noisy audio, and may not be feasible within the experimental setting. This can be attributed to differences in the hardware, the phonetically rich diverse dataset (5762 unique words), and users. As the results are poor, there is no need to investigate WaveVoiceNet further in the experiments. ConvTasNet performs slightly better, but one can note that, the implementation uses a pretrained ConvTasNet on a much larger dataset. In addition, ConvTasNet is non-causal, and requires 1.5s look-ahead. Despite these drawbacks, RadioSES achieves similar performance as ConvTasNet.

The speech-separation results with RadioSES, along with the previously mentioned baselines are presented in Table 3. For both separating single and noisy speech tasks, RadioSES outperforms a variety of state-of-the-art methods in audio-only domain, including DPRNNTasNet. The DPRNNTasNet implementation achieves 13.5 SiSDR in 2-person clean mixtures, which is close to the reported value in the LibriMix dataset, 16.0. Significant improvements with respect to SIR ratio can be observed in both clean and noisy cases, which can indicate the usefulness of radio channel for separating the mixtures. Furthermore, even though there is more variety in radio inputs (e.g. radio channel inputs are not only affected by the sound, but also by ambient motion and physical characteristics), RadioSES can still generalize better to unseen users, where the basic DPRNNTasNet suffers. RadioSES not only improves signal metrics, but also intelligibility and the perceptual quality metrics (PESQ). The difference between the audio-only baseline becomes larger, especially when the input mixtures are corrupted with noise and when there are multiple people. To that end, one can also train RadioSES with three people mixtures. As shown in Table 4, the improvements from RadioSES are even greater for 3-person mixtures, as radio helps to extract individual streams from each user. Since the performance gains from RadioSES increases with more users, one can expect it to work well for 4 or more users.

Table 3: Evaluation in 2-Person Mixtures (SS)

| | | 2-person mix (clean) | | | | 2-person mix (noisy) | | | |
|---|---|---|---|---|---|---|---|---|---|
| | Model | SiSDR | SIR | STOI | PESQ | SiSDR | SIR | STOI | PESQ |
| Seen | Input | 0.2 | -0.4 | 0.71 | 1.71 | -1.7 | 0.3 | 0.61 | 1.37 |
| | ConvTasNet | 11.3 | 18.5 | 0.87 | 2.53 | 6.1 | 16.8 | 0.77 | 1.78 |
| | SudoRMRF | 10.9 | 15.4 | 0.84 | 2.60 | 4.7 | 16.4 | 0.68 | 1.77 |
| | DPRNN | 13.5 | 21.5 | 0.91 | 2.63 | 8.9 | 20.3 | 0.81 | 1.96 |
| | RadioSES | 15.4 | 23.6 | 0.94 | 2.83 | 10.9 | 23.3 | 0.85 | 2.10 |
| Unseen | Input | 0.0 | 0.53 | 0.70 | 1.62 | -1.8 | 0.30 | 0.60 | 1.39 |
| | ConvTasNet | 9.5 | 16.0 | 0.84 | 2.38 | 5.2 | 15.0 | 0.72 | 1.67 |
| | SudoRMRF | 6.2 | 11.5 | 0.76 | 2.13 | 1.0 | 13.0 | 0.60 | 1.39 |
| | DPRNN | 10.8 | 18.1 | 0.86 | 2.38 | 8.9 | 17.3 | 0.75 | 1.83 |
| | RadioSES | 14.5 | 22.3 | 0.92 | 2.70 | 10.3 | 22.5 | 0.83 | 2.05 |

Table 4: Evaluation in 3-Person Mixtures (SS)

| | | 3-person mix (clean) | | | | 3-person mix (noisy) | | | |
|---|---|---|---|---|---|---|---|---|---|
| | Model | SiSDR | SIR | STOI | PESQ | SiSDR | SIR | STOI | PESQ |
| Seen | Input | -3.2 | -2.8 | 0.60 | 1.37 | -4.2 | -2.8 | 0.55 | 1.30 |
| | DPRNN | 7.2 | 14.0 | 0.81 | 1.95 | 4.9 | 15.7 | 0.74 | 1.68 |
| | RadioSES | 11.6 | 19.4 | 0.88 | 2.31 | 9.3 | 19.2 | 0.83 | 1.96 |
| Unseen | Input | -3.2 | -2.8 | 0.58 | 1.37 | -4.2 | -2.8 | 0.54 | 1.31 |
| | DPRNN | 4.2 | 10.2 | 0.73 | 1.72 | 2.6 | 12.5 | 0.66 | 1.55 |
| | RadioSES | 10.7 | 18.2 | 0.86 | 2.21 | 8.6 | 18.2 | 0.81 | 1.90 |

Table 5: Performance with respect to multiple experiments of sources

| Exp | Distance | | | | | | Orientation | | | | | | | | Head Orientation | | | | | |
|---|---|---|---|---|---|---|---|---|---|---|---|---|---|---|---|---|---|---|---|---|
| Case | 50 cm | | 75 cm | | 100 cm | | 0° | | 15° | | 30° | | 45° | | 0° | | 15° | | 30° | |
| Metric | AO | AR | AO | AR | AO | AR | AO | AR | AO | AR | AO | AR | AO | AR | AO | AR | AO | AR | AO | AR |
| SiSDR | 6.3 | 10.9 | 3.8 | 8.6 | 2.3 | 4.3 | 3.8 | 8.6 | 3.6 | 7.8 | 4.4 | 8.3 | 4.2 | 8.2 | 6.3 | 10.9 | 5.6 | 9.8 | 5.4 | 9.3 |
| SIR | 12.5 | 18.3 | 9.9 | 15.6 | 8.7 | 9.8 | 9.9 | 15.6 | 9.6 | 14.8 | 10.6 | 15.1 | 10.2 | 15.6 | 12.5 | 18.3 | 11.7 | 16.8 | 11.5 | 16.3 |
| STOI | 0.83 | 0.93 | 0.79 | 0.90 | 0.74 | 0.81 | 0.79 | 0.90 | 0.78 | 0.89 | 0.79 | 0.89 | 0.78 | 0.88 | 0.83 | 0.93 | 0.80 | 0.90 | 0.79 | 0.89 |
| PESO | 2.17 | 2.61 | 1.97 | 2.42 | 1.79 | 2.00 | 1.97 | 2.42 | 1.91 | 2.32 | 2.00 | 2.33 | 2.02 | 2.37 | 2.16 | 2.61 | 2.11 | 2.46 | 2.10 | 2.43 |

EP 4 478 088 A2

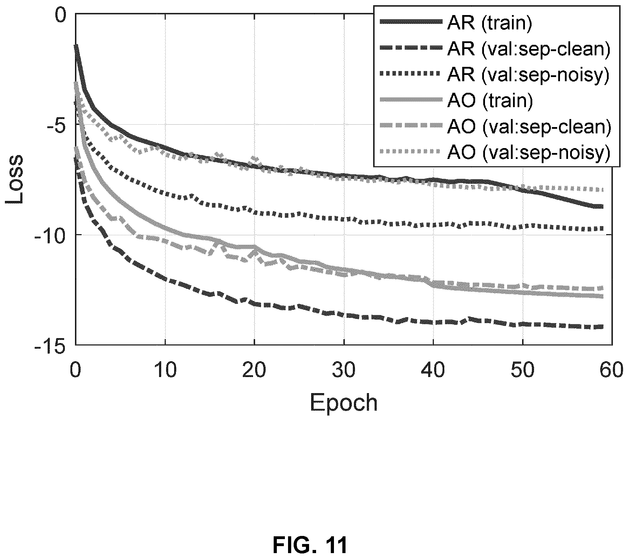

As mentioned previously, introducing another modality has many benefits, such as guiding the loss function at the beginning of training to solve permutation problem and estimating the number of sources. To that end, in FIG. 11, one can compare the loss values on training and validation sets. As shown in FIG. 11, the audio-radio system has a much steeper learning curve at the beginning, along with a better convergence point.

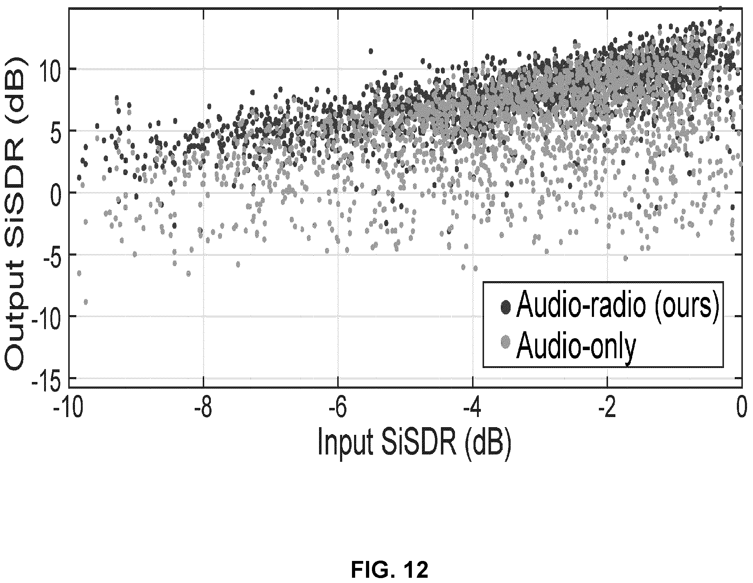

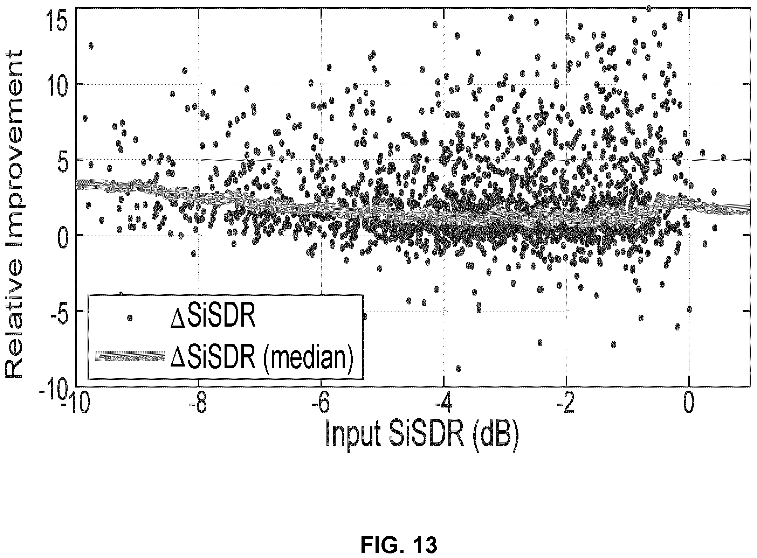

Furthermore, in FIG. 12, one can compare the output SiSDR of RadioSES with its audio-only baseline. As shown in FIG. 12, the disclosed RadioSES method is superior to the audio-only baseline, and the performance gains are consistent through different input SiSDR levels. To investigate the consistency of audio-radio system over audio, one can plot the differential gain in terms of SiSDR as in FIG. 13 from the radio channel. To characterize the incorrect associations, one can check the amount of samples with $\Delta (DB_i) < -3$ is 1.03%, indicating correct physical association of sources for 98.97% of the time.

In some embodiments, one can further evaluate the performance of RadioSES in varying settings, conducted in a different location than the original data collection location. Since it is difficult to simulate the extracted radio signals from different environmental scenarios, one can collect data at a variety of settings. For example, to test the effect of distance, one can collect multiple user data at different distances, (e.g. 75cm), and create mixtures from that location. One can normalize input data streams to the same loudness levels for a fair comparison, although minor differences between each setting are inevitable. In order to show improvements, one can present each settings' performance along with the audio-only baseline, and show how RadioSES preserves a better performance in those settings. For presentation, FIG. 11 refers RadioSES as the audio-radio (AR) method, whereas baseline DPRNNTasNet is noted as audio-only (AO) method. As shown in FIG. 11, RadioSES mostly outperforms audio-only baseline with 4dB improvement in the dataset, which includes unseen and same-speaker mixtures. This evaluation is done with clean mixtures for consistency, although one can observe similar gains in noisy mixtures as well.

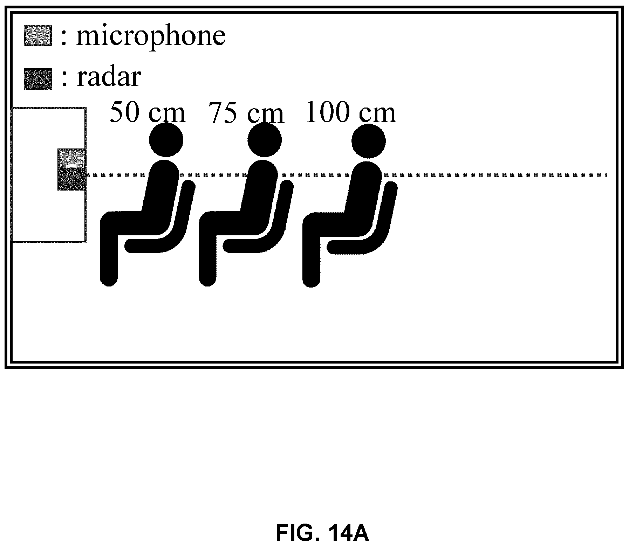

First, one can evaluate the effect of distance on the signal separation tasks, as illustrated in FIG. 14A. As shown in Table 5, RadioSES can work robustly until the speakers are 1m away from the device, and preserve the gains compared to the audio-only baseline. The performance for both cases decrease, which is due to training dataset being captured from a short distance only. As the distance increases, the received audio signals change due to the room impulse response and microphone nonlinearity, which is a phenomenon used for coarse source distance estimation with microphones recently. In some examples, the performance gains from radio channel does not decrease much from 0.5m and 1m, and the main bottleneck for lower performance is the variety of audio data. A high-performance system can be built by capturing more diverse audio data.

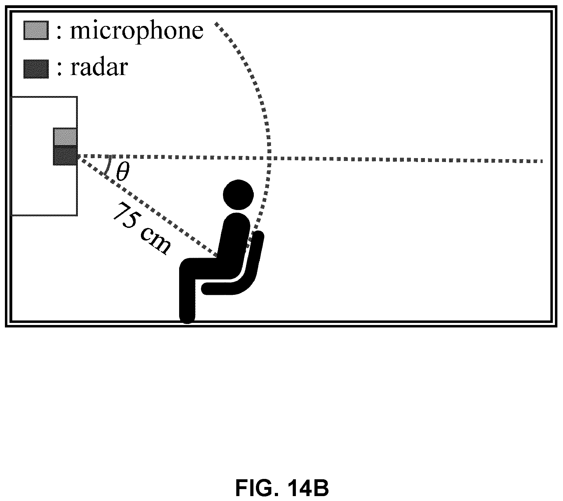

Second, the users are asked to sit 0.75m away from the device, and change their orientation to explore the practical area of sensing, as illustrated in FIG. 14B. The RadioSES can work until 45∘, without any performance decrease, as presented in orientation columns of Table 5. The gains from the audio-radio system are consistent (e.g. ~4dB in SiSDR) through each setting, showing the effectiveness in modeling of the radio stream. Furthermore, this observation is consistent with that of distance, as a different deviation angle from the microphone does not create any distance-based nonlinearity, although it reduces the radio-reflection SNR.

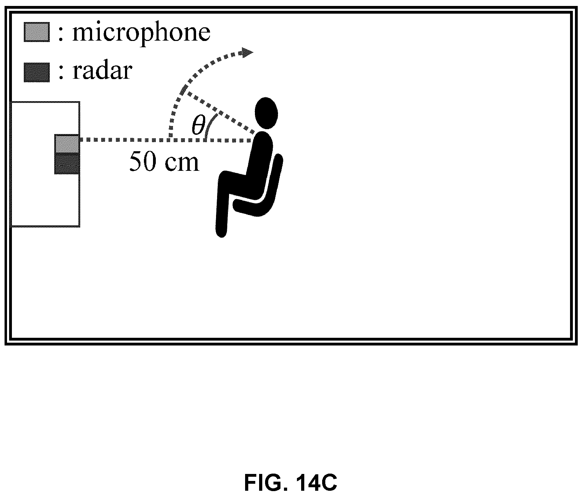

Third, the users are asked to sit at 0.5m, and rotate their heads from 0 degrees to 15 and 30 degrees, as shown in FIG. 14C. For example, if a user sits in front of a laptop or monitor, the user would naturally swing head to see different content on the screen, and 30 degrees of head rotation at 0.5m enables to see the entire area of a big screen. Furthermore, if RadioSES is using lip motion, instead of vocal folds vibration, the results are expected to deteriorate quickly. The results are presented in the head orientation column of Table 5, which indicates that RadioSES is robust to changes in head orientation, even though the training procedure does not include explicit head-rotation data.

Fourth, the users are asked to perform a variety of distortions. For example, the users are asked to perform motions in front of the radar while speaking. To have the experiments controlled, the users are asked to move their heads up and down, left-to-right and back-and-forth naturally, as it can happen during speech. Next, data are collected with users wearing a mask, which plays a role as an occlusion. As shown in Table 6, RadioSES is not affected by the head motion. Furthermore, unlike certain visual enhancement methods which lose their advantage with occlusions, RadioSES is robust against wearing a mask, and can preserve the improvements compared to the audio-only method. This is due to the fact that vocal folds vibration are extracted from the body and throat, not from the face.

Table 6: Effect of Motion Distortion

| Exp | Motion Interference | | | | | | Occlusion | |
|---|---|---|---|---|---|---|---|---|
| Case | Back-forth | | Left-right | | Up-down | | Face Mask | |
| Metric | AO | AR | AO | AR | AO | AR | AO | AR |
| SiSDR | 6.2 | 10.5 | 5.7 | 10.3 | 5.6 | 10.4 | 5.4 | 10.5 |
| SIR | 12.3 | 17.8 | 11.6 | 17.6 | 11.6 | 17.6 | 11.6 | 17.2 |
| STOI | 0.81 | 0.91 | 0.81 | 0.91 | 0.80 | 0.91 | 0.82 | 0.92 |

(continued)

| Exp | Motion Interference | | | | | | Occlusion | |
|---|---|---|---|---|---|---|---|---|
| Case | Back-forth | | Left-right | | Up-down | | Face Mask | |
| Metric | AO | AR | AO | AR | AO | AR | AO | AR |
| PESO | 2.14 | 2.53 | 2.09 | 2.53 | 2.12 | 2.56 | 2.07 | 2.51 |

Table 7: In the Wild Experiment Results

| Case | Speech Enhancement | | | Speech Separation | | |
|---|---|---|---|---|---|---|
| Metric | Clean | AR | Noisy | Clean | AO | AR |
| WER | 14 | 45 | 63 | 20 | 61 | 55 |
| CER | 8 | 32 | 54 | 11 | 50 | 40 |

In an exemplary experiment, multiple users are asked to sit within the same room, to test speech enhancement and separation in the wild. A user is asked to read Rainbow and Arthur passages, while background noises are played from a pair of speakers. Since this experiment does not have the ground truth clean signals, one can only evaluate the performance in terms of word-error-rate, and character-error-rate. To have a fair comparison, the users are asked to read the same material in another quiet environment to capture the performance in that setting. One can use Google's speech-to-text engine without any model adaptation to construct transcripts. As the speakers are not native speakers, and the RadioSES is implemented with telephone-quality speech (8 kHz), overall error-rate is higher. On the other hand, as presented in Table 7, RadioSES can enhance and separate multi-person mixtures and outperform the audio-only baseline for speech separation.

In other exemplary experiments, one can corrupt input signals by adding noise and zero-padding, which helps to gain insight to the performance changes when people are further away, or when there is package loss in the system. These experiments are done with the first 3-seconds of the audio streams, as longer audio streams already require some zero-padding or overlapping block processing. One can add white Gaussian noise to obtain radar data at varying SNRs from 20 to -10 dB levels, and report the performance metrics in Table 8. At larger distance, radio signals are expected to be noisy, and this experiment explores until when the radio signals are still useful. RadioSES outperforms audio baseline, until a radio SNR of -5dB. When the radio signal has further noise, similar performance as the audio baseline is achieved. This experiment indicates that there is great potential for RadioSES at larger distances.

Table 8: Performance for noisy radio inputs

| SiSDR | ∞ | 20 dB | 10 dB | 5 dB | 0 dB | -5 dB | -10dB |
|---|---|---|---|---|---|---|---|
| AO | 7.7 | | | | | | |
| RadioSES | 11.2 | 9.1 | 8.81 | 8.72 | | 8.55 | 8.18 | 7.24 |

Table 9: Performance for partial radio inputs

| Metric | AO | AR(%100) | AR(%66) | AR(%50) | AR(%33) | AR(%16) |
|---|---|---|---|---|---|---|
| SiSDR | 7.7 | 11.2 | 9.3 | 8.6 | 7.6 | 7.0 |
| SIR | 18.2 | 21.0 | 20.4 | 19.2 | 17.9 | 17.1 |
| STOI | 0.74 | 0.81 | 0.80 | 0.79 | 0.77 | 0.75 |
| PESO | 1.92 | 2.20 | 2.13 | 2.10 | 2.03 | 1.98 |

In another experiment, one can zero pad the radio streams to reduce the available radar stream duration and test input radio durations of 2s, 1.5s, 1s, and 0.5s. Such configurations can be used when there are power requirements or package loss in the radio stream. As shown in Table 9, RadioSES can still help with speech separation tasks and improve the performance, compared to the audio-only baseline, when there is at least 1s of signal (i.e., 33%), in terms of perceptual quality. RadioSES system performs better than the audio-only baseline with respect to all inputs after 1.5s of inputs. This indicates that for power-constrained settings, RadioSES can be operated with a duty-cycle less than 33%, and can still bring performance improvements, along with the aforementioned benefits of source association.

Although having speakers outside the FoV of the radar is not the key focus in RadioSES, one can explore the limits of RadioSES in such a mode of operation, by allowing one speaker to be outside the FoV. This setup requires using alternative approaches to estimate the number of speakers, as the radio-based methods will output fewer people. In practice, one may still use radio-based estimation by leveraging temporal information. One can zero pad a radio stream to simulate no information from the outside user, and understand whether RadioSES can benefit from having partial information. One can investigate a single person's missing case, but an extension to two missing people is also possible, with permutation-based methods. As shown in Table 10, RadioSES can still outperform the audio baseline with a large margin, and improve the performance, with missing people. There is not much performance decrease in 2-person noisy mixtures, when one person is outside. For 3-person mixtures, there is more decrease, but the gap between audio-only system is larger, and benefits of having the two other radio signals are clear.

In another experiment, one can train RadioSESNet without several blocks to understand the effect of each component. One can use clean 2-person mixtures for the ablation study. As shown in Table 11, one can remove i) Radio DPRNN blocks ii) Audio DPRNN blocks and iii) High-pass (HP) filter from the mask estimation. In the last case, audio stream is still used to encode the signal, in order not to change the main structure of RadioSES, but is not passed through any DPRNN blocks.

Table 10: Performance for partial detection of sources

| Case | 2-person (noisy) | | | 3-person (noisy) | | |
|---|---|---|---|---|---|---|
| Metric | AO | AR(1) | AR(2) | AO | AR(2) | AR(3) |
| SiSDR | 7.7 | 10.1 | 11.2 | 4.9 | 8.3 | 9.3 |
| SIR | 18.2 | 20.7 | 21.0 | 13.0 | 17.7 | 19.2 |
| STOI | 0.74 | 0.81 | 0.81 | 0.74 | 0.81 | 0.83 |
| PESO | 1.95 | 2.19 | 2.20 | 1.68 | 1.89 | 1.96 |

Table 11: Ablation Study: Radio modality and HP Filter are essential parts of RadioSESNet, whereas additional radio DPRNN blocks bring extra performance improvements.

| Model | SiSDR |
|---|---|
| RadioSESNet | 15.4 |
| w/o Radio DPRNN | 15.2 |
| w/o Any Radio | 13.5 |
| w/o Audio DPRNN | 4.8 |
| w/o HP filter | 0.1 |

In the present teaching, RadioSES is disclosed to improve robustness and performance of SES tasks using radio modality. While one can assume the vibration sources in the field-of-view of radio device to be from vocal folds only, radios can also measure vibration of other sources, such as guitars, or machinery. These vibration sources usually create some sound signature, and they can be used to estimate the sound from each source separately, as done using cameras.

Microphone arrays: in some embodiments, RadioSES uses a single microphone along with an mmWave sensing device. On the other hand, it is also possible for RadioSES to work with a microphone array, and radio modality can still bring further improvements to overall performance. Although beamforming in microphone arrays may indicate that radio modality is unnecessary, it can fail in noisy or reverberant environments. Since RadioSES senses the vibration of the source, it can estimate the direction of the sound for robust beam-steering or can extract the source vibration without any reverberation for further improvement.

Moving Speakers: in some embodiments, RadioSES is designed to track bodies with an inherent assumption that they do not move significantly. This is usually a common constraint in the relevant vital signs monitoring literature (breathing, heart rate), although some recent work started addressing motion for breathing. A more thorough system should support medium and high levels of source motion. To that end, coherent combining of multiple vital sign bins from person point clouds, or deep learning can be some interesting ideas to support multiple moving targets.

Sensing Distance: the experiments indicate that RadioSES can work robustly until the speakers are 1m away from the device, and preserve the gains compared to the audio-only baseline. The performance for both cases decreases, which is due to the training audio dataset being captured from a short distance. However, the performance improvements from RadioSES do not decrease much with the distance. During the experiments, raw signal SNR is still high at large distances (e.g. 2.5m) for people with low pitch (e.g. males). To support all users, one can limit the practical range to 1m, much larger than the range of using ultrasound. Although not much radar signature can be captured from these bodies when they are further away, they can still be robustly detected, (e.g. as in vital sign monitoring), and even the reduced number of high quality radio streams can still help to improve the performance. Moreover, a different hardware can capture vocal folds vibration from 7m, or at 50m. RadioSES can benefit from better hardware significantly, and a more practical system can be built.

Multipath Effects: In the experiments, one can consider cases with multiple sources in front of the radar, and training data assumes perfectly clean radio-streams for each person. However, in challenging conditions, wireless sensing-based systems can have strong multipath effect. Although in mmWave bands, the effect is not as detrimental as 2.4/5 GHz, it can still reduce the performance. This issue may not be in short-range experiments, but it can be a limiting factor for long-range indoor sensing.

In some embodiments, costs for the evaluation board and a single mmWave device can be low. The size of these devices can go as small as 6mm $\times$ 6mm to fit in a phone, and the power consumption can be as low as 1mW. Furthermore, RadioSES does not require to run at 100% duty cycle. Based on application, lower power consumption can be achieved. As there are already devices with continuous mmWave sensing capabilities, RadioSES is feasible to be integrated with smart devices.

The disclosed RadioSES is a joint audio-radio speech enhancement and separation system using mmWave sensing. It improves the performance of existing audio-only methods with the help of radio modality and achieves similar improvements as audiovisual systems, with further benefits in computation complexity and privacy. Furthermore, RadioSES can detect the number of sources in the environment, and associate outputs with the physical speaker locations, all being challenging problems in audio-only domain. Real-world experiments show that RadioSES outperforms the state-of-the-art methods considerably, demonstrating the great potential of audio-radio SES.

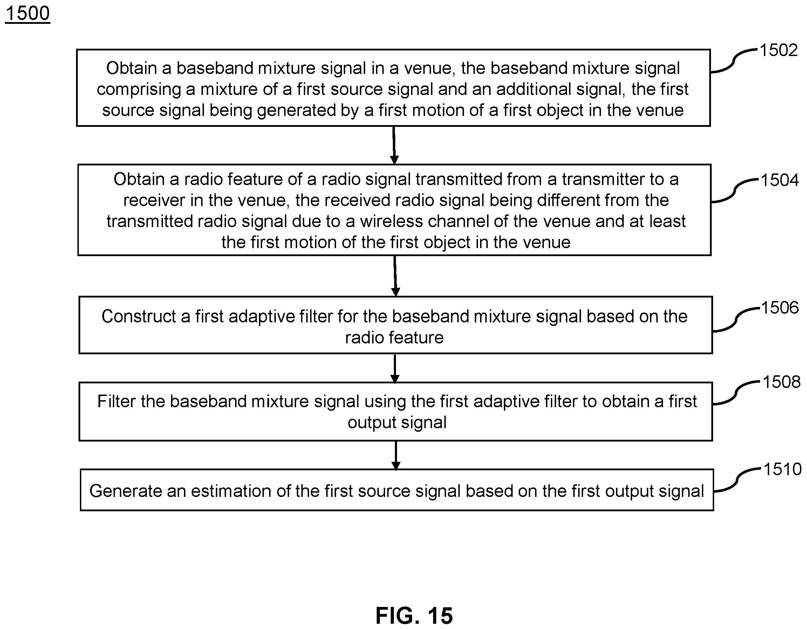

FIG. 15 illustrates a flow chart of an exemplary method 1500 for radio-assisted signal estimation, according to some embodiments of the present disclosure. In various embodiments, the method 1500 can be performed by the systems disclosed above. At operation 1502, a baseband mixture signal in a venue is obtained. The baseband mixture signal comprises a mixture of a first source signal and an additional signal. The first source signal is generated by a first motion of a first object in the venue. At operation 1504, a radio feature of a radio signal is obtained. The radio signal is transmitted from a transmitter to a receiver in the venue. The received radio signal differs from the transmitted radio signal due to a wireless channel of the venue and at least the first motion of the first object in the venue. At operation 1506, a first adaptive filter is constructed for the baseband mixture signal based on the radio feature. At operation 1508, the baseband mixture signal is filtered using the first adaptive filter to obtain a first output signal. At operation 1510, an estimation of the first source signal is generated based on the first output signal. The order of the operations in FIG. 15 may be changed according to various embodiments of the present teaching.

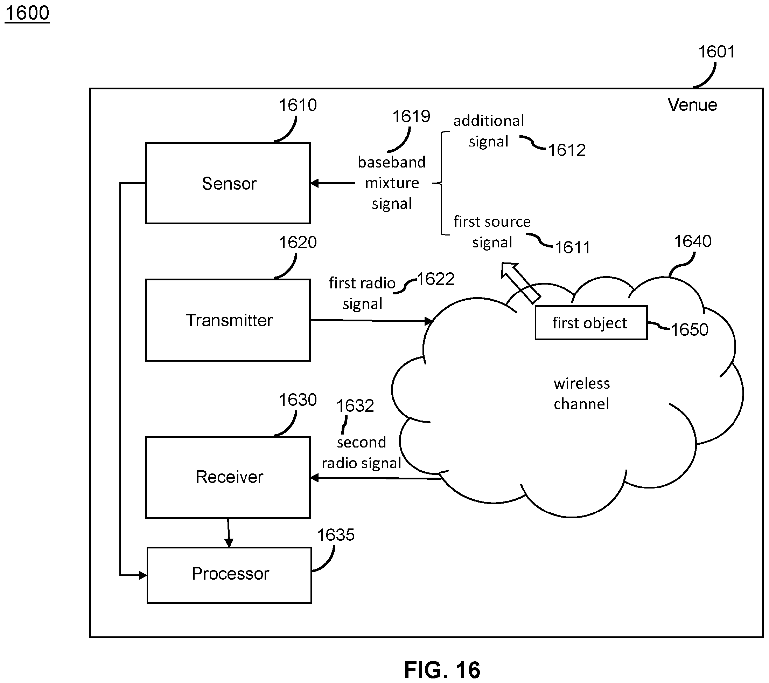

FIG. 16 illustrates a system 1600 for radio-assisted signal estimation in a venue 1601, according to some embodiments of the present disclosure. As shown in FIG. 16, the system 1600 includes a sensor 1610 configured to obtain a baseband mixture signal 1619 in the venue 1601. In some embodiments, the sensor 1610 may be a microphone (e.g. a microphone on a smart speaker) for acoustic sensing. In some embodiments, the baseband mixture signal 1619 comprises a mixture of a first source signal 1611 and an additional signal 1612. In some embodiments, the first source signal 1611 is generated by a first motion of a first object 1650 in the venue 1601.

As shown in FIG. 16, the system 1600 also includes a transmitter 1620 configured to transmit a first radio signal 1622 through a wireless channel 1640 of the venue 1601; and a receiver 1630 configured to receive a second radio signal 1632 through the wireless channel 1640. In some embodiments, the second radio signal 1632 differs from the first radio signal 1622 due to the wireless channel 1640 and at least the first motion of the first object 1650 in the venue 1601. In some embodiments, the transmitter 1620 may be a wireless transmitter or Bot as shown in FIG. 2. In some embodiments, the receiver 1630 may be a wireless receiver or Origin as shown in FIG. 2.

As shown in FIG. 16, the system 1600 also includes a processor 1635 configured for generating an estimation of the first source signal, based on the baseband mixture signal 1619 from the sensor 1610 and the second radio signal 1632 from the receiver 1630, e.g. following method disclosed in FIG. 15. In some embodiments, the processor 1635 may be a separate device from the receiver 1630. In other embodiments, the processor 1635 may be a device coupled to or integrated with the receiver 1630.

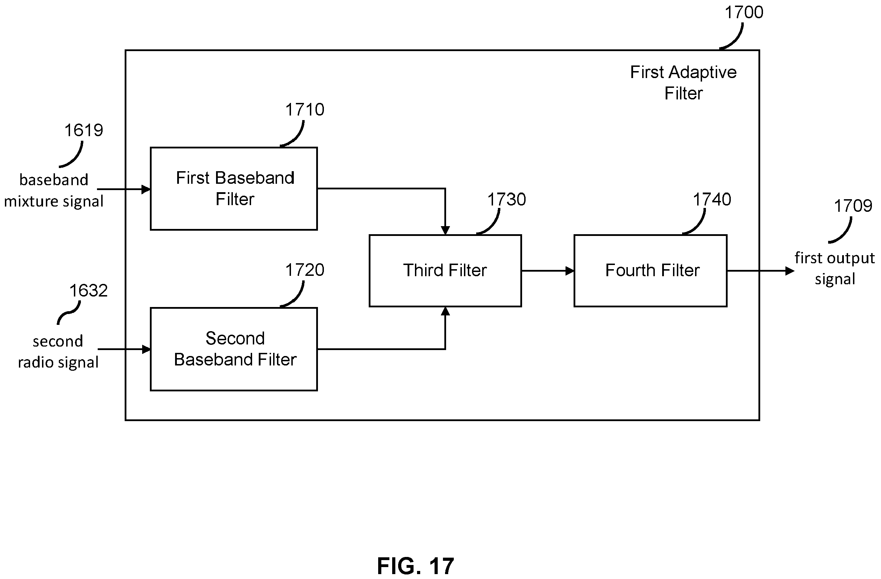

FIG. 17 illustrates a first adaptive filter 1700 in a system, e.g. the system 1600 in FIG. 16, for radio-assisted signal estimation, according to some embodiments of the present disclosure. In other embodiments, the first adaptive filter 1700 may be constructed by the processor 1635 for the baseband mixture signal 1619 based on a radio feature of the second radio signal 1632. The first adaptive filter 1700 may be used to filter the baseband mixture signal 1619 to obtain a first output signal 1709, such that the processor 1635 of the system can generate an estimation of the first source signal 1611 based on the first output signal 1709.

As shown in FIG. 17, the first adaptive filter 1700 includes a first baseband filter 1710, a second baseband filter 1720, a third filter 1730 and a fourth filter 1740. The first baseband filter 1710 may be constructed without using the radio feature of the second radio signal 1632. The second baseband filter 1720 may be constructed based on the radio feature of the second radio signal 1632.

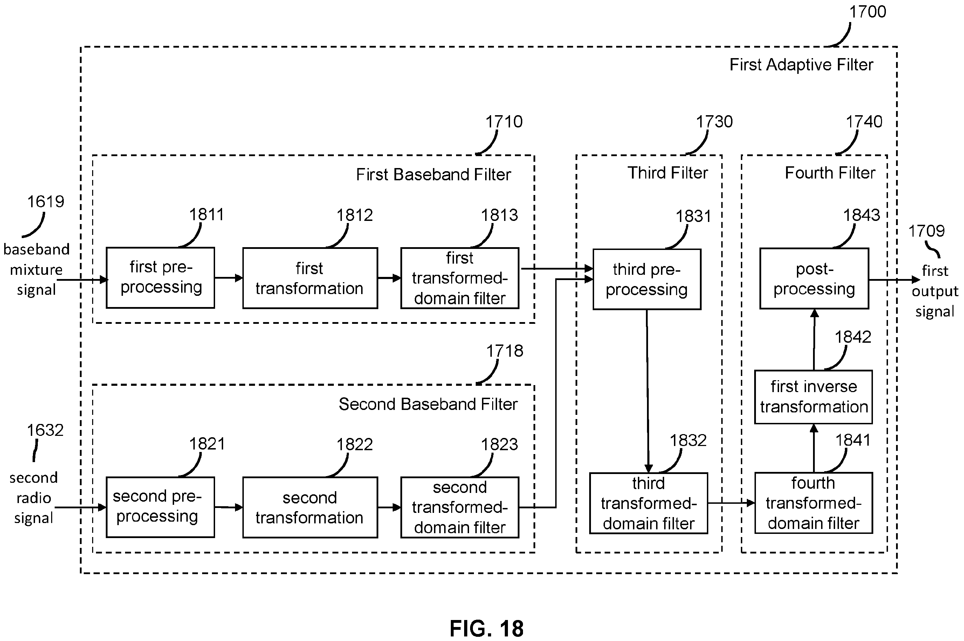

FIG. 18 illustrates a detailed diagram of the first adaptive filter 1700, according to some embodiments of the present disclosure. In this example, as shown in FIG. 18, the first baseband filter 1710 further includes: a first pre-processing module 1811 for processing the baseband mixture signal 1619 in a first signal domain, a first transformation module 1812 for transforming signal from the first signal domain to a first transformed domain, and a first transformed-domain filter 1813 to filter signal in the first transformed domain. In this example, as shown in FIG. 18, the second baseband filter 1720 further includes: a second pre-processing module 1821 for processing the second radio signal 1632 in a second signal domain, a second transformation module 1822 for transforming signal from the second signal domain to a second transformed domain, and a second transformed-domain filter 1823 to filter signal in the second transformed domain.

As shown in FIG. 18, the third filter 1730 in this example comprises: a third pre-processing module 1831 for processing outputs of the first baseband filter 1710 and the second baseband filter 1720, and a third transformed-domain filter 1832 for filtering signal in a third signal domain. As shown in FIG. 18, the fourth filter 1740 in this example comprises: a fourth transformed-domain filter 1841 to filter signal in the first transformed domain based on output of the third transformed-domain filter 1832, a first inverse transformation module 1842 to transform signal from the first transformed domain to the first signal domain, and a post-processing module 1843 to process signal in the first signal domain to generate the first output signal 1709, for estimation of the first source signal 1611.

In some embodiments, a wireless signal (e.g. mmWave, 28 GHz or 60GHz, or radar signal, or UWB signal) between a transmitter and a receiver may be used to assist in signal (e.g. speech) enhancement (e.g. denoising) and/or signal separation, based on channel information (e.g. channel impulse response/CIR, channel frequency response/CFR, and/or channel state information/CSI, RSSI, etc) obtained from the received wireless signal. The transmitter and the receiver may be co-located (e.g. on the same device, or on the same circuit board), or at different locations.

In some embodiments, the transmitter (Type1 device) and/or receiver (Type2 device) may each have an antenna array, distributed antennas. There may be multiple receivers each receiving the wireless signal from the transmitter. There may be multiple transmitters each transmitting a respectively wireless signal to the receiver. There may be multiple transmitters and multiple receivers, each transmitter transmitting a respectively wireless signal to one or more receivers.

In some embodiments, the device implementing the disclosed system may have a commodity wireless networking or communication chip/chipset which may operate in a radar mode. The radar mode may be enabled by attaching an extra antenna array to the chipset. It may use the chip/chipset to transmit the wireless signal using a transmitting radio, and to receive the reflected wireless signal using a receiving radio. The chip may transmit/receive simultaneously or contemporaneously. The chip may switch rapidly between transmit and receive to simulate or mimic "simultaneous" transmit/receive.

In some embodiments, the transmitters and receivers may be in a same venue (e.g. a home, a room, an office, a walkway, a common area, a facility). The transmitters may be physically next to, adjacent to, or at a distance from, the receivers. At least one object or "source" object (e.g. a person, two people or more than two people) may be present in the venue each generating a respective source signal (e.g. speech signal from each person, talking, singing, dialog, one-at-a-time speech, simultaneous two or more people talking). A mixture signal may be obtained (e.g. sound captured by microphone containing simultaneous dialog/singing of two people). The mixture signal may comprise a mixture (e.g. a sum, weighted sum, product, weighted product, etc.) of the signals from the at least one source. The source signal may be generated in the presence of background noise (e.g. two people speaking in a noisy environment, e.g. train station, airport, or a home/office; background noise may be crowd sound, mechanical sound, motor/engine sound, vacuum cleaner/fan/machine/refrigerator/heater/air conditioner).

In some embodiments, the goal of signal separation is to separate more than one source signals (e.g. sound signal) in/from the mixture signal. The goal of signal enhancement is to enhance the individual source signals (e.g. improve intelligibility, improve voice quality, reduce/remove noise).

In some embodiments, a method for radio-assisted signal estimation includes steps s1 to s5 as described below.

At step s1: obtain the mixture signal associated with a sensor (e.g. sound signal captured by a microphone) which comprises a mixture of at least one source signal associated with at least one object in the venue, each source signal from/associated with a respective object in the venue.

At step s2: transmit a wireless signal (e.g. mmWave signal or radar signal, or UWB signal) from Type1 device to Type2 device; obtain more than one time series of channel information (TSCI, with CI being/comprising one or more of CIR, CFR, or CSI, or RSSI, etc.) from received wireless signal, each CI associated with a respective transmitter antenna and a respective receiver antenna. The transmitter antennas and/or receiver antennas may be at known locations. Each CI (e.g. CIR) comprises more than one component, each component being associated with a propagation delay or a range or a range bin. Each component may be a complex number.

At step s3: apply digital beamforming on the TSCI to obtain more than one range-azimuth CIR, each CIR is associated with a range and an azimuth.

At step s4: generate at least one radio signal, CIR Tap(t), each associated with a respective object (speaker) in the venue by the following steps s4a to s4e. At step s4a, CFAR (constant false alarm rate) detector is used for target detection, e.g. target is detected when Tap of CIR > T1. At step s4b, for clutter removal, one may retain a CIP tap if T2 <Variance of CIR Tap (over time)<T3, where both T2 and T3 spatially varying w.r.t. {r, theta}. At step s4c, for estimation of number of object (e.g. people), non-parametric clustering (DBSCAN) may be used. At step s4d, continuous tracking of user locations {r, theta} may be performed. At step s4e, for radio feature extraction, CIR tap (a time function) at {r, theta} may be associated with user location {r, theta}, wherein median binning is performed.

At step s5: simultaneous separate and enhance the mixture signal based on a combination of SES and radio feature. The Basic SES may include: an encoder (STFT, or similar), a compute mask (filter), an apply mask (filter), and a decoder (ISTFT, or similar). The front end processing for radio feature (i.e. CIR tap (a time function) at {r, theta}) may include the following steps s5a to s5h. At step s5a, random rotation of CIR tap(t) in IQ plane may be optionally performed. At step s5b, high-pass filter is used to reduce effect of body motion (cutoff frequency at 90Hz in order not to filter vocal folds harmonics). At step s5c, an adaptive encoder (STFT-like) is constructed and used.

At step s5d, process audio and radio stream separately with individual blocks to exploit long-term dependency within each modality, where each modality may be processed through dual-path RNN block (DPRNN) - deep learning. After resizing, fuse audio and radio signals by vector concatenation. Then processing with four more DPRNN blocks may be applied before estimating the mask with a 2D convolutional layer. DPRNN processing may include reshaping the input data to a 3D representation, through means of extracting overlapping blocks, concatenating through another dimension, and applying two consecutive RNN layers to different dimensions of input block.

At step s5e, train a mask for each person based on the estimated number of people. At step s5f, apply the mask to audio, e.g. by applying mask1 to extract speaker1's speech and applying mask2 to extract speaker2's speech. At step s5g, a decoder (block-by-block) is applied. At step s5h, overlap and addition are performed.

The following numbered clauses provide implementation examples for sound sensing based on audio and radio signals.

Clause 1. A method/device/system/software of a radio-assisted signal processing system, comprising: obtaining a baseband mixture signal in a venue, wherein the baseband mixture signal comprises a mixture of a first source signal and another signal, wherein a source of the first source signal is a motion of an object in the venue; constructing a first adaptive filter for the baseband mixture signal based on a radio feature of a radio signal transmitted from a Type1 heterogeneous wireless device to a Type2 heterogeneous wireless device in the venue, wherein the received radio signal differs from the transmitted radio signal due to the motion of the object and a wireless multipath channel of the venue; filtering the baseband mixture signal using the first adaptive filter to obtain a first output signal which is an estimation of the first source signal.

In some embodiments, the total processing/filtering may comprise: (1) stage-1 filtering, (2) stage-2 filter and (3) stage-3 filtering. Referring to FIG. 9, stage-1 filter has two parts: one part (called "1a") for filtering the baseband mixture (e.g. sound) signal, and one part (called "1b") for filtering the "radar output" in FIG. 9.

(1a) The stage-1a filter corresponds to 3 bottom blocks for processing baseband mixture signal (e.g. sound) in FIG. 9: the "Mic output" block, the "Adaptive Encoder (Audio Feature)" block, and the "Audio Preprocessing (Audio DPRNN(x2))" block. The processing by stage-1a filter includes: preprocessing (e.g. nothing, filtering, downsampling); transformation (e.g. transform, convolution, projection) from time domain to transformed domain (e.g. STFT-like domain, frequency domain); and transformed domain processing (e.g. data reorganization or reshaping, Audio DPRNN(x2)).

(1b) The stage-1b filter corresponds to 3 top blocks for processing baseband radio-derived signal (e.g. radar output, signal derived from radio feature (e.g. CSI, CIR, CFR) of radio signal in claim 1) in FIG. 9: the "Radar output" block, the "Adaptive Encoder (Radio Feature)" block, and the "Radio Preprocessing (Radio DPRNN(x2))" block. The processing by stage-1b filter includes: preprocessing (e.g. random phase rotation, high-pass filter) in signal domain (e.g. time domain); transformation (e.g. transform, convolution, projection) from time domain to transformed domain (e.g. STFT-like domain, frequency domain); and transformed domain processing (e.g. data reorganization/reshaping, Radio DPRNN(x2)).

The stage-1a filter and the stage-1b filter have similar signal processing elements: namely, the time domain, the transformation, the transformed domain, and the transformed domain processing. The baseband radio-derived signal may comprise a tab of a CIR in a particular {range, azimuth} which correspond to the object. To derive the baseband radio-derived signal, object detection may be performed to compute the particular {range, azimuth}, by performing: beamforming in 2D (or 3D) CIR, CFAR detection (e.g. thresholding, C*h>T1), clutter removal (e.g. thresholding, T2>variance>T3), clustering, number of people estimation, center extraction, and/or radio feature extraction.

(2) The stage-2 filter corresponds to the right half of "Masker" block in FIG. 9: the "Multi-model Masker (Fusion+DPRNN(x4))". The processing by stage-2 filter includes: preprocessing (e.g. fusion of multi-modal data (e.g. sound data + radio data), fusion of output of stage-1a and stage-1b filters, data concatenation, transformed domain processing (e.g. data reorganization/reshaping, DPRNN(x4)), generation of transformed domain "target" filter (e.g. "Mask", "Audio Mask 1", "Audio Mask 2") for each of the source signals in the baseband mixture signal (e.g. Audio Mask 1 for first sound signal, Audio Mask 2 for second sound signal).

(3) The stage-3 filter corresponds to last three top blocks in FIG. 9 to generate the first output signal as an estimate of baseband source signal: the "Output (Audio Mask1)" block, the application of the mask (functions as a block, though not shown in block form in FIG. 9), and the "Adaptive Decoder" block. The processing by stage-3 filter includes: filtering the baseband mixture signal using the transformed domain "target" filter, inverse transform, overlap and add to reconstruct time domain output as an estimate of the baseband source signal.

Clause 2. The method/device/system/software of the radio-assisted signal processing system of clause 1, further comprising: constructing a first baseband stage-1 filter without using the radio feature of the radio signal; constructing a second baseband stage-1 filter based on the radio feature of the radio signal; constructing the first adaptive filter based on the first baseband stage-1 filter, the second baseband stage-1 filter, a stage-2 filter and a stage-3 filter.

Clause 3. The method/device/system/software of the radio-assisted signal processing system of clause 2, wherein the second baseband stage-1 filter comprises at least one signal processing element similar to that of the first baseband stage-1 filter.

Clause 4. The method/device/system/software of the radio-assisted signal processing system of clause 2 or 3, wherein the first baseband stage-1 filter comprises: a first pre-processing in a first signal domain, a first transformation from the first signal domain to a first transformed domain, a first transformed-domain filter in the first transformed domain; wherein the second baseband stage-1 filter comprises: a second pre-processing in a second signal domain, a second transformation from the second signal domain to a second transformed domain, a second transformed-domain filter in the second transformed domain; wherein the stage-2 filter comprises: a third pre-processing based on outputs of the stage-1 filters, a third transformed-domain filter in a third domain; wherein the stage-3 filter comprises: a fourth transformed-domain filter in the first transformed domain based on output of the third transformed-domain filter, a first inverse transformation from the first transformed domain to the first signal domain, a post-processing in the first signal domain.

Clause 5. The method/device/system/software of the radio-assisted signal processing system of clause 4, wherein at least one of the following pairs of signal processing elements of the first adaptive baseband filter and the second adaptive baseband filter are similar: the pair of the first signal domain and the second signal domain, the pair of the first transformed domain and the second transformed domain, the pair of the first transformation and the second transformation, and the pair of the first transformed-domain filter and the second transformed-domain filter.

Clause 6. The method/device/system/software of the radio-assisted signal processing system of clause 4 or 5, wherein at least one of the first pre-processing, the second pre-processing or the third pre-processing comprises at least one of: feature extraction, magnitude computation, phase computation, distance computation, variation computation, norm computation, quantization, vector quantization, histogram, decomposition, projection, orthogonal projection, over-complete projection, eigen-decomposition, singular value decomposition (SVD), principal component analysis (PCA), independent component analysis (ICA), compressive sensing, spectral analysis, transform, low-pass filter, band-pass filter, high-pass filter, linear filter, non-linear filter, finite impulse response (FIR) filter, infinite impulse response (IIR) filter, moving average (MA) filter, autoregressive (AR) filter, ARMA filter, adaptive filter, interpolation, decimation, resampling, subsampling, upsampling, folding, grouping, sorting, re-ordering, permutation, combination, thresholding, clipping, derivative, integration, maximization, minimization, feature extraction, mean filter, weighted mean, median filter, mode filter, rank filter, quartile filter, percentile filter, convolution, time correction, phase correction, magnitude correction, random rotation in IQ plane, random phase shift, normalization, phase cleaning, magnitude cleaning, matched filter, enhancement, restoration, denoising, smoothing, signal conditioning.

Clause 7. The method/device/system/software of the radio-assisted signal processing system of clauses 4 to 6, wherein at least one of the first signal domain or the second signal domain is a time domain; wherein at least one of the first transformed domain or the second transformed domain is a frequency-like domain. (time-frequency domain? Would this be better)

Clause 8. The method/device/system/software of the radio-assisted signal processing system of clause 4 to 7, wherein at least one of the first transformation or the second transformation comprises at least one of: a discrete time transform, adaptive transform, encoder, adaptive encoder, trigonometric transform, Fourier transform, sine transform, cosine transform, Hadamard transform, short-time transform, STFT, wavelet transform, fast transform, STFT-like transformation, eigen-decomposition, principal component analysis (PCA), independent component analysis (ICA), singular value decomposition (SVD), time decomposition, frequency decomposition, time-frequency decomposition, compressive sensing, graph-based transform, spectral analysis, matching pursuit, a projection, orthogonal projection, non-orthogonal projection, over-complete projection, a projection into the frequency-like domain, a number of projection filters each associated with a frequency, a number of kernels, a number of convolutional filters, or the number of convolutional filters followed by another number of convolutional filters.

Clause 9. The method/device/system/software of the radio-assisted signal processing system of clauses 4 to 8, wherein at least one of the first transformed-domain filter, the second transformed-domain filter, the third transformed-domain filter, or the fourth transformed-domain filter comprises at least one of: a linear filter, non-linear filter, finite impulse response filter, infinite impulse response filter, moving average filter, autoregressive filter, adaptive filter, interpolation, decimation, resampling, subsampling, upsampling, reshaping, concatenation, time-domain filtering, frequency domain filtering, layers of interconnected processing nodes with an input layer, processing layers and an output layer, fuzzy logic, radial basis function network, support vector machine, tensor product network, simulated reality, self-organizing map, genetic algorithm, evolutionary algorithm, generative adversarial network, parallel distributed processing, biologically inspired computing, learning network, training, clustering, machine learning, layer normalization, neural network (NN), multiple NN, artificial NN (ANN), feedforward NN, multi-layered perceptron (MLP), transformer based NN, attention based NN, convolutional NN, evolutionary NN, cellular NN, modular NN, recurrent Hopfield network, recurrent NN, RNN, dual path RNN, DPRNN, DPRNN(x2), DPRNN(x4), DPRNN(x8), time-delayed NN, NN with long short-term memory (LSTM), NN with bidirectional long short-term memory (BLSTM), NN with intra-block, NN with inter-block, fully-connected NN, NN with back propagation, deep neural network, or deep learning network.

Clause 10. The method/device/system/software of the radio-assisted signal processing system of clauses 4 to 9, wherein the first inverse transformation comprises at least one of: the inverse of the first transformation, a transposed convolution operation; wherein the post-processing comprises at least one of: concatenation, overlap-and-add (OLA), synchronized overlap-and-add (SOLA), overlap-and-save, overlap-and-discard, overlap-and-scrap.

Clause 11. The method/device/system/software of the radio-assisted signal processing system of clauses 4 to 10, further comprising: filtering the baseband mixture signal in the first signal domain using the first baseband stage-1 filter to generate a first intermediate signal in the first transformed domain; filtering a baseband radio-derived signal in the second signal domain using the second baseband stage-1 filter to generate a second intermediate signal in the second transformed domain, wherein the baseband radio-derived signal is derived from the radio signal based on the radio feature; filtering a combination of the first intermediate signal and the second intermediate signal using the stage-2 filter to construct the fourth transformed-domain filter of the stage-3 filter; filtering a transformed baseband mixture signal using the stage-3 filter to obtain the first output signal which is the estimation of the first source signal, wherein the transformed baseband mixture signal is obtained by preprocessing the baseband mixture signal using the first pre-processing followed by transforming from the first signal domain to the first transformed domain using the first transformation.

Clause 12. The method/device/system/software of the radio-assisted signal processing system of claims 1 to 11, further comprising: wherein the another signal comprises a mixture of a second source signal and yet another signal; constructing a second adaptive filter for the baseband mixture signal based on the radio feature of the radio signal; filtering the baseband mixture signal using the second adaptive filter to obtain a second output signal which is an estimation of the second source signal.

Clause 13. The method/device/system/software of the radio-assisted signal processing system of clause 12, further comprising: constructing the second adaptive filter based on the first baseband stage-1 filter, the second baseband stage-1 filter, another stage-2 filter and another stage-3 filter.

Clause 14. The method/device/system/software of the radio-assisted signal processing system of clause 13, further comprising: wherein the another stage-2 filter comprises: another third pre-processing based on outputs of the stage-1 filters, another third transformed-domain filter in the third domain; wherein the another stage-3 filter comprises: another fourth transformed-domain filter in the first transformed domain based on output of the another third transformed-domain filter, the first inverse transformation from the first transformed domain to the first signal domain, the post-processing in the first signal domain.

Clause 15. The method/device/system/software of the radio-assisted signal processing system of clauses 1 to14, further comprising: filtering another baseband radio-derived signal in the second signal domain using the second baseband stage-1 filter to generate another second intermediate signal in the second transformed domain, wherein the another baseband radio-derived signal is derived from the radio signal based on the radio feature; filtering a combination of the first intermediate signal, and the another second intermediate signal using the another stage-2 filter to construct the another fourth transformed-domain filter of the another stage-3 filter; filtering the transformed baseband mixture signal using the another stage-3 filter to obtain the second output signal which is the estimation of the second source signal.

Clause 16. The method/device/system/software of the radio-assisted signal processing system of clauses 1 to 15, further comprising: filtering a combination of the first intermediate signal, the second intermediate signal and the another second intermediate signal using the another stage-2 filter to construct the fourth transformed-domain filter of the stage-3 filter and the another fourth transformed-domain filter of the another stage-3 filter.

Clause 17. The method/device/system/software of the radio-assisted signal processing system of clauses 1 to 16, further comprising: obtaining the radio feature which is a number of time series of channel information (TSCI) of the wireless multipath channel based on the received radio signal using a processor, a memory and a set of instructions, wherein each TSCI is associated with a Tx antenna of the Type1 device and a Rx antenna of the Type2 device, wherein the radio signal comprises a series of sounding signals such that each channel information (CI) is associated with a corresponding sounding signal, wherein each CI comprises at least one of: channel state information (CSI), channel impulse response (CIR), channel frequency response (CFR), or received signal strength index (RSSI); deriving the baseband radio-derived signal from the radio signal based on the number of TSCI.

Clause 18. The method/device/system/software of the radio-assisted signal processing system of clause 1 to 17, further comprising: performing beamforming based on the number of TSCI; detecting a location of the object, wherein the location is associated with a range and a direction, determining a particular beamformed TSCI associated with the direction, determining a particular tab of each CI of the particular beamformed TSCI associated with the range, deriving the baseband radio-derived signal from the radio signal based on the particular tab of each CI of the particular beamformed TSCI.

Clause 19. The method/device/system/software of the radio-assisted signal processing system of clauses 1 to 18, further comprising: wherein the another signal comprises a mixture of a second source signal associated with another object in the venue and yet another signal; detecting another location of the another object, wherein the another location is associated with another range and/or another direction; determining another particular beamformed TSCI associated with the another direction; determining another particular tab of each CI of the another particular beamformed TSCI associated with the another range; deriving another baseband radio-derived signal from the radio signal based on the another particular tab of each CI of the another particular beamformed TSCI; constructing a second adaptive filter for the baseband mixture signal based on the another baseband radio-derived signal; filtering the baseband mixture signal using the second adaptive filter to obtain a second output signal which is an estimation of the second source signal.

Clause 20. The method/device/system/software of the radio-assisted signal processing system of clauses 1 to 19, further comprising: pre-processing the baseband mixture signal in a first signal domain using a first pre-processing; transforming the baseband mixture signal from the first signal domain to a first transformed domain to obtain a transformed baseband mixture signal using a first transformation; filtering the transformed baseband mixture signal in the first transformed domain to obtain a first intermediate signal using a first transformed-domain filter; pre-processing a baseband radio-derived signal in a second signal domain using a second pre-processing, wherein the baseband radio-derived signal is derived from the radio signal based on the radio feature; transforming the baseband radio-derived signal from the second signal domain to a second transformed domain to obtain a transformed baseband radio-derived signal using a second transformation; filtering the transformed baseband radio-derived signal in the second transformed domain to obtain a second intermediate signal using a second transformed-domain filter; pre-processing the transformed baseband mixture signal and the transformed baseband radio-derived signal to obtain a fused signal in a third transformed domain using a third pre-processing; filtering the fused signal in the third domain to obtain a fourth transformed-domain filter using a third transformed-domain filter; filtering the transformed baseband mixture signal in the first transformed domain to obtain a filtered transformed baseband mixture signal using the fourth transformed-domain filter; transforming the filtered transformed baseband mixture signal from the first transformed domain to the first signal domain using an inverse of the first transformation to obtain the first output signal which is the estimation of the first source signal; post-processing the first output signal.

Clause 21. The method/device/system/software of the radio-assisted signal processing system of clauses 1 to 20, wherein the first signal domain is a time domain associated with a first sampling rate; wherein the second signal domain is a time domain associated with a second sampling rate.

Clause 22. The method/device/system/software of the radio-assisted signal processing system of clauses 1 to 21, wherein: the radio signal is at least one of: a radio signal with a carrier frequency larger than 10GHz, a millimeter wave radio signal, a radio signal with a bandwidth larger than 200MHz, a WLAN signal, a WiFi signal, a wireless communication signal, an ultra-wide band (UWB) radio signal, a radar signal.

Clause 23. The method/device/system/software of the radio-assisted signal processing system of clauses 1 to 22, wherein: the first object is a first person, the first source signal comprises at least one of: a sound, a dialog signal, a speech signal, a singing sound, an activity sound, a musical sound, an instrument sound, a man-made sound, a machine sound, a mechanical sound, a playback sound, a speaker sound, a synthesized sound, an audio signal, a visual signal, a light intensity signal, an image, a video, an imaging, a baseband sound signal captured based on a microphone, an visual signal captured based on a camera sensor, an imaging signal captured based on an imaging sensor, or a baseband sensing signal obtained based on a sensor.

Clause 24. The method/device/system/software of the radio-assisted signal processing system of clauses 1 to 23, wherein: the another signal comprises at least one of: background noise, a mixture of multiple signals, household sound, mechanical sound, instrument sound, machine sound, vacuum cleaner sound, fan sound, heater sound, air conditioning sound, television sound, radio sound, audio sound, speaker sound, play-backed sound, musical sound, environment sound, air sound, wind sound, traffic sound, tree sound, window sound, door sound, human activity sound, cooking sound, work sound, play sound, tool sound, toy sound, human chattering, laughter, a baseband signal generated a second object, a baseband sound signal associated with a second motion of a second person.

Clause 25. The method/device/system/software of the radio-assisted signal processing system of clauses 1 to 24, further comprising: processing the first output signal for a task associated with the object.

Clause 26. The method/device/system/software of the radio-assisted signal processing system of clauses 1 to 25, wherein: the radio signal is obtained using the radio receiver of the Type2 device; the baseband mixture signal is obtained using a sensor of a different kind from the radio receiver.

Clause 27. The method/device/system/software of the radio-assisted signal processing system of clauses 1 to 26, wherein: the radio signal is obtained using a radio receiver of the Type2 device; the baseband mixture signal is obtained using a sensor which is not a radio receiver.

Clause 28. The method/device/system/software of the radio-assisted signal processing system of clauses 1 to 27, wherein: the radio signal is obtained using a radio receiver of the Type2 device; the baseband mixture signal is obtained using a sensor which does not comprise a radio component.

Clause 29. The method/device/system/software of the radio-assisted signal processing system of clauses 1 to 28, wherein: the baseband mixture signal is obtained using a baseband sensor; the radio signal is obtained using a sensor of a different kind from baseband sensor.

Clause 30. The method/device/system/software of the radio-assisted signal processing system of clauses 1 to 29, wherein: the baseband mixture signal is obtained using a baseband sensor; the radio signal is obtained using a sensor which is not a baseband sensor.

Clause 31. The method/device/system/software of the radio-assisted signal processing system of clause 1 to 30, wherein: the first adaptive filter comprises a multimodal fusion of the radio signal and the baseband mixture signal.

Radio Frequency (RF) based in-vehicle human sensing based on vital sign detection, location estimation, etc., has been extensively explored because of its superiority in preserving privacy and requiring no wearable sensor. However, to detect the subtle motion corresponding to vital signs such as the chest movement (4-12mm) and heartbeat displacement (0.2-0.5mm) and then identify the presence of a human, most of them rely on the millimeter wave (mmWave) signals, which is not readily available inside most vehicles nowadays. With the ubiquitous deployment of Wi-Fi in the Internet of Things, by reusing the predefined symbols in the preambles of the communication data packet without extra spectrum consumption, Wi-Fi sensing has emerged as an important component in the integrated sensing and communication (ISAC). Since a large number of vehicles already or are planning to have Wi-Fi equipment, the following question is being asked: Can we use Wi-Fi sensing to do child presence detection (CPD)? A practical CPD should ideally satisfy the following requirements.

Accurate: it should be sensitive enough to achieve near 100% detection rate as every miss detection may become catastrophic. Accompanied with the high sensitivity is a potentially escalated false alarm rate, yet it does not take much effort for parents/caregivers to turn off the false alarm alert while rest assured the child is better protected, if the false alarm rate is reasonably low. Responsive: it should be responsive to the presence of a child (if any) in two aspects. First, an ambient temperature of 22°C(73°F) can drive up the temperature in a car at 3.47°C(6.25°F) per 5 minutes and heat exhaustion can begins at 40°C and over 54°C often leads to heatstroke. In addition, parents/caregivers would like to receive alerts as early as possible before they walk too far away from the car. Large Coverage: it should be able to cover the entire interior of a car with no blind spot, including both on and under the seat, since a child may fall on the footwell areas when he/she is struggling. Calibration-free: it is expected to work robustly for different car models, children of different ages/genders/weights in all weather/temperature/ environments without calibration. Low-cost: installation of the CPD should require very low efforts, and ideally, it should reuse the current in-car Wi-Fi system with no additional hardware change.

Although in-vehicle Wi-Fi sensing has been extensively studied in occupancy level estimation, driver activity monitoring, emotion sensing, etc., the techniques disclosed therein cannot be directly applicable for CPD. Enabling CPD using commercial WiFi while satisfying all the aforementioned requirements entails several challenges as follows. First, although the existing works have shown the feasibility of using wireless signal to detect a motion of an adult and breathing rate estimation to detect a stationary adult, the size of a child is much smaller than an adult and his/her motion/breathing strength is much weaker as well. Thus, a child causes much weaker impact on the wireless signal than an adult, making it more challenging to be detected. The mmWave based methods are demonstrated to be able to capture both the activity motion (head/arm/torso movement) and breathing motion (chest movement of a stationary child) due to its short wavelength and larger bandwidth. However, the coverage of mmWave based methods is limited within the Field-of-View (FOV) with respect to corresponding mmWave radar. Second, it is non-trivial to achieve a fast response in CPD. Although existing motion detector can work in general motion sensing applications, most of them rely on a change detection of the channel profile, e.g., variance, phase difference etc. Since they do not leverage the reflection signal from all the dynamic scatters constructively, most of them require a long window of samples and thus causing a large detection delay.

To tackle these challenges, the present teaching discloses a wireless sensing system. The system can perform any of the following detections: target detection, motion target detection, stationary target detection, transition target detection, motion detection, human/tree motion detection, presence detection, child presence detection (CPD), in vehicle monitoring, in-vehicle CPD, vital sign monitoring, breathing detection, breathing monitoring, sleep monitoring, driver monitoring, driver behavior analysis, driver fatigue detection, inattentive driver detection, occupancy detection, people/passenger counting.

When the disclosed system is utilized for CPD based on wireless signal, e.g. Wi-Fi, one can call it WiCPD. WiCPD is the first-of-its-kind in-car child presence detection system using commodity Wi-Fi, which can cover the entire car with no blind spot. Based on a statistical electromagnetic (EM) model to account for the impact of motion to all the multipaths inside the car, a motion statistics metric indicating the ambient motion intensity, and a signal-to-noise-ratio boosting scheme using the motion statistics, a unified CPD framework is designed to include three target detector modules: a motion target detector to detect a child in motion/awake, a stationary target detector to detect a stationary/sleeping child, and a transition target detector to detect a sleeping child with sporadic motion who is missed by both the motion and stationary target detectors. One can implement a real-time WiCPD system by using commercial Wi-Fi chipsets, deploy it over 20 different cars, and collect data for multiple children aging from 4 to 50 months. The results showed that WiCPD can achieve 100% detection rate within 8s when the child is awake/in motion and 96.56% detection rate within 20s for a static/sleeping child. Extensive experiments also demonstrated that WiCPD can be easily deployed in minutes without calibration and enjoys very low CPU and memory consumption, thus promising a practical candidate for CPD applications

In some embodiments, the disclosed system performs wireless sensing based on a statistical electromagnetic (EM) model, which calculates an autocorrelation function (ACF) of the channel state information (CSI) measurements comprising all the multipath components. Then, a motion statistics metric is elaborated to quantify the motion intensity of ambient motion, which can ensure that each dynamic scatterer, regardless of its location, contributes to the overall motion statistics constructively, while the dynamic scatterers in different locations may contribute to the CSI variation either constructively or destructively. As a result, the disclosed system's motion detection is more sensitive than most conventional variation-based methods.

In some embodiments, to detect a child accurately regardless of his status i.e., motion/awake, stationary/sleeping or in between (sleeping with occasional motion), three target detectors are designed: 1) a motion target detector to detect a child who is in motion/awake based on the motion statistics; 2) a stationary target detector to identify a stationary child who has very few motions such as when he/she is in sleeping. The system may utilize a Maximal Ratio Combining (MRC) scheme to improve the SNR of the ACF using the motion intensity in each subcarrier as the channel gain to extract the minute breathing pattern/chest movement of the child. The boosted ACF is then leveraged to estimate the child's breathing rate, followed by checking if a continuous breathing rate can be detected and the breathing rate should fall within a normal range of a child for stationary child detection; and 3) a naive Bayes classifier-based transition target detector to handle the case when the motion and stationary target detectors fail to detect a child in transition status. For example, a sleeping child may have minor motion such as subtle head rolling or arm motion. This kind of motion is too weak and short to be detected by the motion target detector. Meanwhile, it corrupts the continuity of the breathing rate estimation and is missed by the stationary target detector as well. This is the first time that such a transition status is considered in CPD design, which can contribute to about 5% improvement on the detection accuracy.

As WiCPD leverages the reflection signals from all the dynamic scatterers constructively, the motion target detector can detect motion within 2 consecutive CSI samples/measurements, corresponding to a shortest delay of 2 $\Delta t$ where $\Delta t = 1/F_s$ with $F_s$ denoting the sample frequency. On the other hand, the MRC scheme can greatly boost the SNR of the ACF than simply averaging over subcarriers and thus achieves 96.56% detection rate for a stationary child within 20 packets to detect an adult with 95% detection rate.

One can build a real-time prototype system of WiCPD using commercial NXP Wi-Fi chipsets, and conduct extensive experiments over 20 different cars to detect 5 children of different ages and genders, when the car is parked in various locations. One can perform long-term tests to evaluate the CPU and memory consumption of the real-time WiCPD system. The results showed that by only consuming 11% of a Dual-core ARM Cortex-A7 CPU up to 1GHz and 40MB Random Access Memory (RAM), WiCPD achieves greater than 96.5% detection accuracy with a responsive time less than 20s in detecting a child in vehicle regardless of his/her status.

WiCPD is the first-of-its-kind commercial WiFi-based CPD system with a high detection rate, fast responsive time, and large coverage. It can easily incorporate in the current and future in-car Wi-Fi system with almost zero installation cost as long as CSI is available. The present teaching disclosed a unified CPD framework including three target detector modules to detect a child in all possible status. WiCPD demonstrates $\geq$ 96.5% detection accuracy with $\leq$ 4.37% false alarm, while $\leq$ 8s are used to detect a child in motion and $\leq$ 20s are used to detect a stationary/sleeping child. Extensive experiments have been conducted with real babies of different ages/genders/weights under different weather/temperature/environments. Experiments demonstrated that WiCPD can achieve accurate, robust, and responsive detection with affordable CPU and memory consumption, making it a promising candidate for world-wide deployment.

In some embodiments, to measure CSI on commercial Wi-Fi, let X(t, f) and Y(t, f) denote the transmitted and received signal over a subcarrier with frequency f at time t. Then, the corresponding CSI can be estimated as $H(t, f) = \frac{Y(t,f)}{X(t,f)}$. Due to multipath effect, H(t, f) can be expressed as

$$H(t, f) \quad = s(t, f) + n(t, f) = \sum_{l=1}^{L} \alpha_l(t, f) e^{-j2\pi f \tau_l(t)} + n(t, f), \qquad (1)$$

where s(t, f) denotes the channel information composed of all the propagation paths and n(t, f) represents the additive white Gaussian noise (AWGN) with power density of $\sigma_n^2(f)$ at time t and frequency f. L is the number of paths, $\alpha_l$ and $\tau_l$ denote the complex gain and propagation delay of the l-th path, respectively.

In some embodiments, the present teaching discloses a statistical model of s(t, f) in (1) based on the superposition properties of EM fields. The statistical model, motion statistics and using MRC to boost ACF for better breathing rate estimation are utilized here to focus on exploring their performance/reliability for in-vehicle environment and CPD. The intuition/principle of the statistical model is that each scatter can be treated as a "virtual antenna" which transmits its received EM waves in all the directions. These EM waves will then add up together at the received antenna after bouncing off the in-car scatterers. Therefore, s(t, f) can be re-written as

$$s(t, f) = \sum_{k \in \Omega_s(t)} s_k(t, f) + \sum_{m \in \Omega_d(t)} s_m(t, f), \quad (2)$$

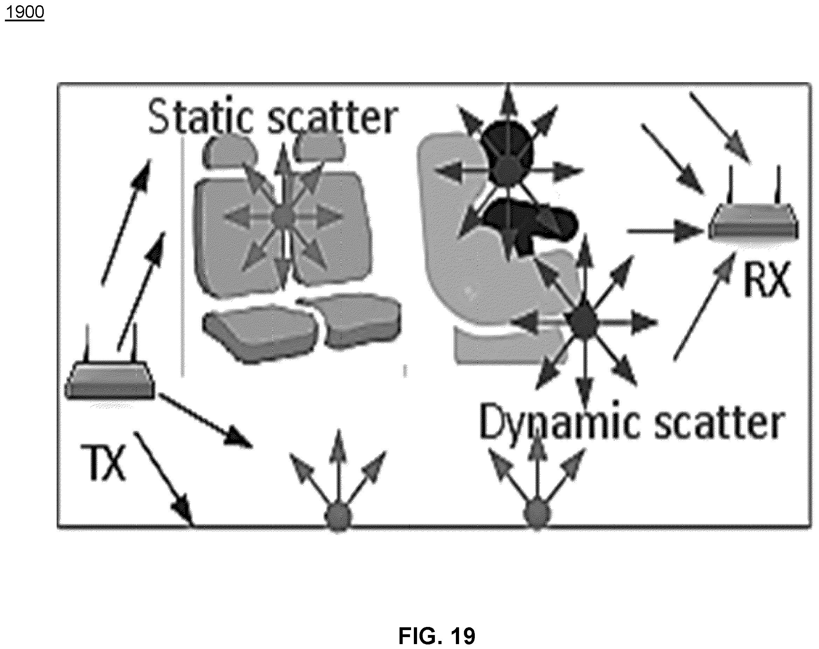

where $\Omega_s(t)$ and $\Omega_d(t)$ denote the set of static and dynamic scatterers, respectively. $s_k(t, f)$ and $s_m(t, f)$ represent the EM waves transmitted/reflected by the k-th static scatterer and the m-th dynamic scatterer, respectively. FIG. 19 illustrates an exemplary situation 100 of multipath propagation inside a car, including static and dynamic scatterers, according to some embodiments of the present disclosure.

In practice, within a very short period, it is reasonable to assume that $\Omega_s(t)$ and $s_k(t, f)$, $k \in \Omega_s(t)$ barely change. As a result, the contribution of all the static scatters can be approximated as a constant, i.e.,

$$s(t, f) \approx E_s(f) + \sum_{m \in \Omega_d(t)} s_m(t, f), \text{with} E_s(f) = \sum_{k \in \Omega_s(t)} s_k(t, f), \quad (3)$$

Given the channel reciprocity, EM waves traveling in both directions will undergo the same changes. Therefore, if the receiver (RX) were transmitting EM waves, the received EM waves at the m-th scatter/virtual antenna would be the same as $s_m(t, f)$. As a result, $s_m(t, f)$ can be expressed as

$$s_m(t, f) = \int_0^{2\pi} \int_0^{\pi} F_m(\Theta, f) \exp(-j\vec{k} \cdot \vec{v}_m t) \sin(\alpha) \, d\alpha \, d\beta, \quad (4)$$

where $\vec{v}_m$ denotes the motion speed of the m-th scatter. F(8) denotes the complex gain incoming from direction $\Theta = (\alpha, \beta)$, while $\alpha$ and $\beta$ stands for the elevation and azimuth angles, respectively. $\vec{k} = -k(\vec{x}\sin(\alpha)\cos(\beta) + \vec{y}\sin(\beta)\sin(\beta) + \vec{z}\cos(\alpha))$ and $k = \frac{2\pi f}{c}$ denote the free-space wave number with c being the speed of light.

In some embodiments, the design of WiCPD aims at enabling accurate and responsive in-car child presence detection using commercial Wi-Fi. In general, one can categorize a child in the following three different status and design corresponding detector modules. First, in a Motion status, a child who is awake has frequent/substantial motions such as swinging his/her arms/legs/torso, random body motions during his/her struggling to get out of the baby seat, etc. Usually, this kind of motion induces a large number of dynamic scatterers and can be detected by a motion target detector. Second, in a Stationary status, a sleeping child has negligible motion. A stationary target detector is designed to capture the continuous breathing rate of the child and thus identify his/her presence. Third, in a Transition status, a child is sleeping but with slight and intermittent motion such as occasionally moving his head during sleeping. Since this kind of motion only corresponds to the movement of a very small part of the child's body (i.e., a few dynamic scatterers), it cannot lead to a detectable change on the CSI and thus cannot be captured by the motion target detector. Yet, it will corrupt the minute breathing motion associated with the minute chest movement and fail the continuous breathing rate estimation. To handle this case, one can design a transition target detector.

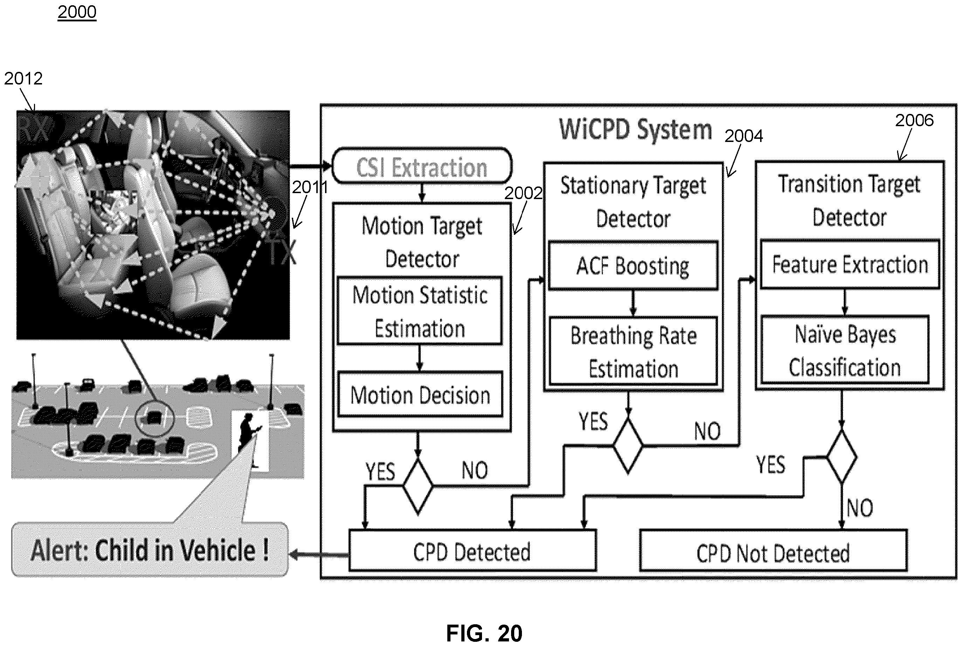

FIG. 20 depicts an overview of the WiCPD system 2000. The left side of FIG. 20 shows an illustration of the in-car environment where the dotted lines denote the multipath signal propagation inside the car. The receiver (RX) 2012 measures the CSI from the incoming packets transmitted by the transmitter (TX) 2011. The CSI measurements are first passed through a Hampel filter to remove outliers induced by practical distortions such as jitters of the phase-locked loops (PLLs). Afterwards, the CSIs are processed by the motion target detector 2002 to detect if there is a child in motion inside the vehicle. If the decision is YES, WiCPD reports a "child in vehicle". Otherwise, the stationary target detector 2004 is triggered to detect the presence of a stationary child. If neither the motion target detector 2002 nor the stationary target detector 2004 detects the presence of a child, the transition target detector 2006 will further confirm if the child is in a transition status, i.e., sleeping with slight/intermittent motion. WiCPD outputs "no child in vehicle" only when none of the three aforementioned detectors detects a child in vehicle.

In some embodiments, each of the transmitter (TX) 2011 and receiver (RX) 2012 has multiple antennas. In some embodiments, the TX 2011 is a Bot as described above; and the RX 2012 is an Origin as described above. In various embodiments, a processor may be physically coupled to the TX 2011, the RX 2012, both, or neither.

To detect a child in motion in the vehicle, the system can leverage the statistical ACF of the Wi-Fi CSI measurements and a motion statistics metric, which constructively utilizes the reflection signal from all the dynamic scatters to reflect the instantaneous ambient motion strength of surrounding targets in motion status.

To detect a stationary child, the system may first leverage the motion statistics on each subcarrier to select those subcarriers which are sensitive to motions since the breathing motion corresponds a child's chest movement is subtle and easily to be submerged by the noise. Then, the motion statistics on those selected subcarriers are utilized as weights to further boost the SNR of the breathing motion in a Maximal-ratio combining (MRC) manner. Afterwards, the breathing rate is estimated and a "child in vehicle" is detected only when a normal breathing rate is estimated and lasts for a certain duration since an instantaneous breathing rate may be corrupted by noise.

To detect a child in transition status, the system may harness the following three observations: 1) intermittent breathing rates can be estimated, even though not continuously; 2) the motion statics when a child is present is different from that in a real empty vehicle, even though it cannot be distinguished by using the motion target detection only; 3) the top k largest eigenvalues of the covariance matrix $R_H$ of the CSI can represent the multipath profile (more specifically, Angle of Arrival (AoA)) of the present target and can be explored as a feature to extract the CSI change on AoA caused by the intermittent slight motion of a child in transition status. Eventually, the motion statistics, breathing rate estimates and top k largest eigenvalues of $R_H$ form a feature vector, which is then fed into a native Bayes classifier to detect if there is a child in transition status of not.

To detect a child in motion, a link between the ACF of CSI and the motion of the surrounding dynamics scatterers/objects is established, a motion statistics is defined to quantify the intensity of surrounding motions, and a motion target detector is presented based on the motion statistics. To evaluate it in in-vehicle environments, ACF is calculated. Recalling (1), the ACF of the measured CSI is given by

$$\rho_H(\tau, f) = \frac{\text{cov}[H(t,f), H(t+\tau,f)]}{\sqrt{\sigma^2_{H(t,f)} \sigma^2_{H(t+1,f)}}} \quad (5)$$

where cov[AB] denotes the covariance between A and B. $\sigma^2_{H(t,f)}$ and $\sigma^2_{H(t_\tau,f)}$ denotes the variance of H(t, f) and H(t + τ, f), respectively. Substituting (1) and (2) into (5), one can have

$$\rho_H(\tau, f) = \frac{E_d^2(f)}{E_d^2(f) + \sigma_n^2(f)} \rho_s(\tau, f) + \frac{\sigma_n^2(f)}{E_d^2 + \sigma_n^2(f)} \delta(\tau), \quad (6)$$

where δ(·) is Dirac delta function. $E_d^2(f)$ is the variance of s(t, f) which measures the power reflected by all the dynamic scatterers. $\rho_s(\tau, f)$ can be written as

$$\rho_s(\tau, f) \approx \frac{1}{E_d^2(f)} \sum_{m \in \Omega_d} \sigma^2_{F_m}(f) \rho_{E_m}(\tau, f), \quad (7)$$

where $\rho_{E_m}(\tau, f) = \Sigma_{u \in \{x,y,z\}} \rho_{E_{m,u}}(\tau, f)$ represents the auto-correlation of the received EM field in {x, y, z} directions and $\sigma^2_{F_m}(f)$ denotes the reflection power of the mth dynamic scatter. It can be approved that $\rho_{E_m}(\tau, f)$ is a continuous function at τ = 0. As a result, in (7), if there are dynamic scatters, i.e., $\sigma^2_{F_m}(f) > 0$, one can have $\rho_s(\tau, f) \to 1$ when $\tau \to 0$. Substituting (7) into (6), one can have

$$\rho_H(\tau, f) = \frac{E_d^2(f)}{E_d^2(f) + \sigma_n^2(f)} > 0, \text{when} \tau \to 0. \quad (8)$$

Otherwise, if there is no dynamic scatterer, one can have $\sigma^2_{F_m}(f) = 0$ and $E_d^2(f) = 0$ and thus

$$\rho_H(\tau, f) = \frac{E_d^2(f)}{E_d^2(f) + \sigma_n^2(f)} = 0, \text{when} \tau \to 0. \quad (9)$$

As a result, $\lim_{\tau \to 0} \rho_H(\tau, f)$ can work as an indicator of the surrounding dynamic scatters/motion targets. More importantly, the scattering power of all the dynamic scatters are added in a constructive way in (7) and thus making it more sensitive to target motions.

In practice, $\lim_{\tau \to 0} \rho_H(\tau, f)$ can be approximated by $\lim_{\tau \to 0} \rho_H(\tau, f) \approx \rho_H(\frac{1}{F_s}, f)$ and one can average the $\lim_{\tau \to 0} \rho_H(\tau, f)$ over all the subcarriers to get a more reliable motion indicator, which is called motion statistics hereafter, i.e.,

$$\lim_{\tau \to 0} \rho_H(\tau, f) = \frac{1}{N_f} \sum_{i=1}^{N_f} \rho_H(\frac{1}{F_s}, f_i) \qquad (10)$$

where $F_s$ is the sample rate, $N_f$ denotes the number of subcarriers and $f_i$ representing the frequency of the ith subcarrier. To avoid the motion statistics outlier due to the instantaneous distortion/noise, one can use a 2s sliding window to compute the averaged motion statistics in the practical experiments/applications.

A natural question is whether the motion statistic is easily to be affected by the motion/dynamic targets outside the vehicle such as the passing cars and pedestrians. The motion statistics is robust against the motion outside of the vehicle because a closed vehicle can be viewed as a metal cavity which bounds most of the radio signals inside the car while shields the outside wireless/radio inferences.

Given the motion statistics, a principal of the motion target detector is that: a child in vehicle is detected when the motion statistics is larger than a threshold $\eta_0$ which is derived in the following.

When there is no motion in the car, according to (1) and (3), the CSI $H(t, f_i)$ includes only static scattered signal $E_s(f)$ and white noise $n(t, f)$, i.e., $H(t, f_i) = E_s(f) + n(t, f)$ where $E_s(f)$ can be assumed as a constant in an empty car. As a result, given a sufficient large number of samples $N_T$, $\rho_H(\frac{1}{F_s}, f_i)$ can be approximated as a Gaussian variable with mean $1/N_T$ and variance $1/N_T$, i.e., $\rho_H(\frac{1}{F_s}, f_i) \sim \mathcal{N}(1/N_T, 1/N_T)$. Therefore, the distribution of the motion statistic $\hat{\rho}_H(\tau)$ in an empty car can be approximated by

$$\hat{\rho}_H(\tau) \sim \mathcal{N}(\frac{1}{N_T}, \frac{1}{N_T N_f}). \qquad (11)$$

Given (11), one can derive the motion detection threshold $\eta_0$ with a predefined false alarm rate $p_F$, i.e.,

$$P(\hat{\rho}_H(\tau) > \eta_0) = p_F. \Rightarrow \eta_0 = Q^{-1}(p_F) * \frac{1}{\sqrt{N_T N_f}} + \frac{1}{N_T} \quad (12)$$

where $Q^{-1}(\cdot)$ is the inverse function of the Q-function with $Q(x) = \frac{1}{2\pi} \int_x^\infty \exp(-\frac{u^2}{2}) \, du$.

Estimating the breathing rate for a child can be more challenging than for an adult because the size of a child is much smaller than an adult and his/her motion/breathing strength is much weaker as well. As a result, the SNR of the breathing signal of a child is very low due to the slight motion of the chest movement. To tackle the issue, the system may first select the subcarriers with the top $N_s$ (default as 10) largest motion statistics, aiming at extracting the sucarriers which are most sensitive to the subtle chest/breathing motion. Then, a Maximal Ratio Combining (MRC) scheme may be leveraged to maximize the SNR of the ACF for breathing rate estimation.

Considering MRC techniques, the boosted ACF can be expressed as

$$\hat{\rho}_H^b(\tau) = \sum_{i=1}^{N_s} \omega(f_i) \rho_H(\tau, f_i). \qquad (13)$$

where $\omega(f_i)$ is the channel gain of the breathing strength on subcarrier $f_i$. Recalling (6), the channel gain of subcarrier $f_i$ in terms of ACF is $\frac{E_d^2(f)}{E_d^2(f) + \sigma_n^2(f)}$ which can be estimated by $\lim_{\tau \to 0} \rho_H(\tau, f_i)$ (see equations (7) - (9) for details). As a result, WiCPD takes $\lim_{\tau \to 0} \rho_H(\tau, f_i)$ as the optimal $\omega(f_i)$ and thus the ACF of the breathing signal can be boosted by

$$\hat{\rho}_H^b(\tau) = \sum_{i=1}^{N_f} \left[ \lim_{\tau \to 0} \rho_H(\tau = \frac{1}{F_s}, f_i) \right] \rho_H(\tau, f_i). \qquad (14)$$

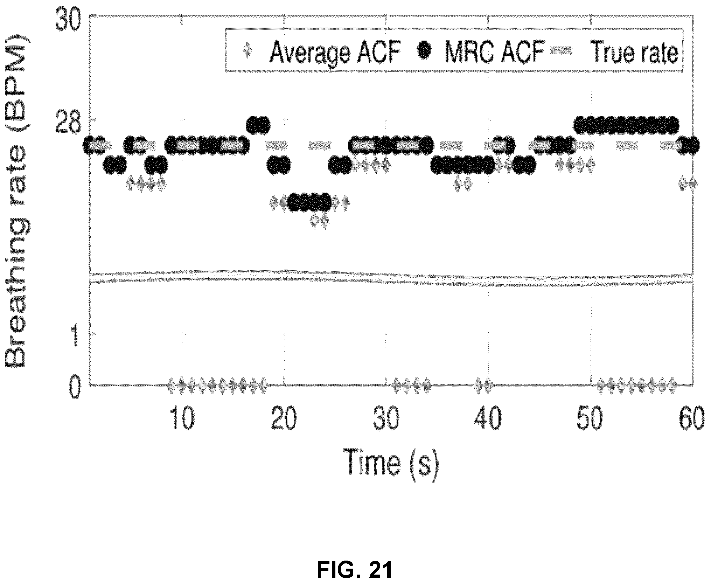

FIG. 21 shows an example when a baby doll is sleeping in the car with a true breathing rate of 27.5 BPM. The breathing rate estimated from the MRC boosted ACF is more accurate and continuous as shown in FIG. 21. One cannot maximize the breathing signal/motion directly because that the channel gain of breathing signal cannot be directly extracted from the CSI measurements. However, this problem can be circumvented by applying MRC on the ACF with the motion statistics of each subcarrier as the optimal weights.

Once one gets the boosted ACF $\hat{\rho}_H^b(\tau)$, the breathing rate of the child can be estimated by $f_B = 60/\hat{\tau}$(BPM) where $\hat{\tau}$ corresponds to the time lag of the first peak in $\hat{\rho}_H^b(\tau)$. Afterwards, the stationary target detector reports a "child in vehicle" if a normal child breathing rate is detected and continuously lasts for a certain duration.

If neither the motion target detector nor the stationary target detector detects "a child in vehicle", the transition target detector is triggered. A child in transition status can induce a certain level of motion statistics and intermittent breathing rate estimation, which exhibits a different pattern from a real empty vehicle, even though they cannot be detected by the motion target detector or the stationary target detector only. To detect the presence of a target in transition status, the system utilizes the fact that the slight/intermittent motion of a child can change the AoAs of partial of the multipath signals. Even though such a change cannot be used to estimate the AoAs of target directly, it is inherently embedded in the measured CSI and can be leveraged as a new feature. The system can extract the intermittent motion information using the top k largest eigenvalues of the covariance matrix $R_H$ of the CSI and construct a feature vector containing the motion statistic, breathing rate and the top k largest eigenvalues of $R_H$. All these features can be fused together in a Naive Bayes classifier.

To comprehensively evaluate WiCPD, one can build a real-time system using the commercial WiFi chipsets (e.g. a commercial NXP Wi-Fi chipset which is dual-band operating on both 2.4GHz and 5GHz) and conduct extensive experiments in various car models to validate the CPD detection performance using real babies and baby dolls. The Wi-Fi chipset contains two antennas with connector interfaces that can conveniently connect to the external PCB antennas or the on-car antennas. The RX receives packets transmitted from the TX and captures CSI, containing 58 subcarriers with a sample rate of 30 Hz, unless otherwise mentioned. Both the TX and RX have 2 omnidirectional PCB antennas. The system runs on the 5.805 GHz channel with a bandwidth of 40 MHz.

The data collection mainly involves three parts, including: 1) empty case over 20 different cars in different scenarios, 2) experiments for the Lifelike Ashley baby doll, and 3) experiments with real babies. As the cars are usually empty for most of the time, one can perform extensive evaluation of false alerts by gathering data from over 20 different cars. For the baby doll test, one can deploy WiCPD in 4 different family cars. For each car, the TX is first located in the center of the dash board and then in the glove box. RX is mounted in 4 different locations including 3 on the car liner next to top of rear car seat and 1 in the cup holder of the rear door. For each configuration, one can test 11 different locations of the baby doll including both the car seats and the footwell areas to explore all the possible locations when a child is stuck in a car. At each location, the baby doll is tested with 3 different postures: lying on the seat facing up, facing down and sitting on the seats. One can further test the case when the baby doll is secured in the car seat to mimic the real case when a child is restraint in a child seat. The experiments may be conducted over different days across 13 months in different environments including an outdoor parking lot next to a trade center, an underground garage of a shopping mall, street parking and a personal garage for family use. The in-car environment has normal changes during such a long time such as the staffs and corresponding displacements. The in-car environment is allowed to freely change without any restrictions during this time. WiCPD is a calibration free system in different real-world environments without any impractical assumptions/constraints.

One can further test the performance of WiCPD in detecting 5 real babies of different ages and genders as shown in Table 12. Overall, the experiments range from a 4-month infant to a 5-year old toddler with different heights and weights.

Table 12. Object baby of WiCPD experiment

| Age | Gender | Height | Weight |
|---|---|---|---|
| (Month) | | (inch) | (lbs) |
| 4 | Male | 25 | 16.07 |
| 6 | Female | - | - |
| 20 | Male | 32.9 | 24 |
| 36 | Male | - | - |
| 58 | Female | 44.4 | 43 |

Next, the motion statistic metric and transition target detector are evaluated independently to demonstrate the performance of WiCPD in terms of overall performance and the impact of the key parameters including sample rate, bandwidth, the number of antennas, etc.

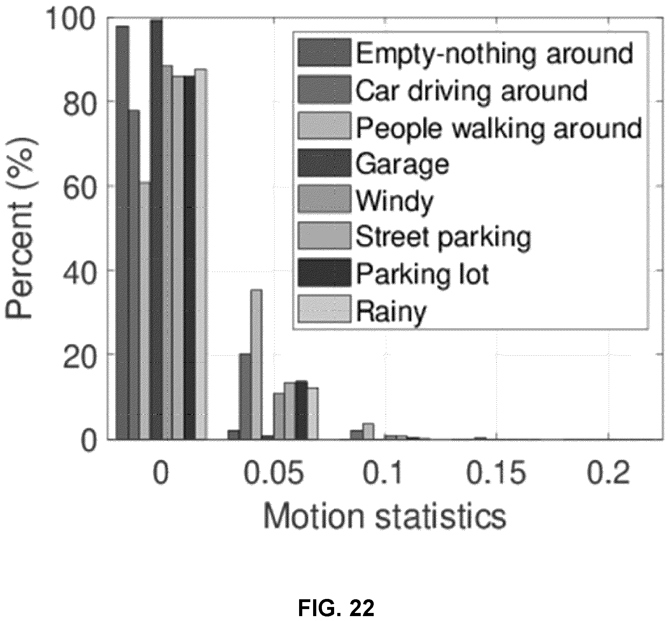

The motion statistics is very sensitive to the surrounding motions and its more distinguishable between empty and motion case than CSI variance. It is important to understand the influence of movements outside the side on the motion statistics. To verify, one can conduct empty data collection in 8 different scenarios, i.e., 1) an empty car in an outdoor parking lot with no motion target around, 2) there are cars driving around, for example passing through the adjacent parking space, 3) pedestrians walking around an empty car, 4) an empty car in the garage, 5) empty car in windy weather, 6) an empty car in street parking with cars passing by once in a while, 7) outdoor parking lot, and 8) in a rainy weather. As seen in FIG. 22, the motion statistics centers at "0" and has very similar distribution with that of a pure empty car without any moving target around. FIG. 22 shows that the motion statistic is resilient against the motion outside the car because a closed vehicle can be viewed as a metal cavity which shields the outside wireless/radio inferences well, thus promising a robust performance of the disclosed motion target detector.

One can also study how the transition target detector can help on the CPD detection. To test the performance of the transition detector independently, one can choose the segments of the data when there is a real sleeping child in the vehicle but he/she is not detected by the motion target detector or the stationary target detector. In some examples, there are about 6.5% percent of the time during which a sleeping child is in transition status. One may exclude the data from the babydoll because the baby doll can exhibit better breathing periodicity than that of a real baby. As a result, the detection rate for baby doll is almost 100% and thus it lacks the information of a real child in transition status. To train the Naive Bayes classifier, the transition data and the empty data are mixed together while the feature vector is composed of the motion statistics, breathing rates and the top several largest eigenvalues of the covariance matrix of the CSI measurements, with a window length of 5s. The total data set is divided into 2 equal parts, i.e., 50% for training and another 50% for test. The performance of the transition target detector is shown in Table 13. As seen, the transition target detector can achieve an about 87.3% True Positive Rate (TP, a.k.a. detection rate) and 12.7% False Negative Rate (FN, a.k.a. missing detection rate) detection rate for a child in transition status and contributes to about 5.5% detection rate improvement in the overall WiCPD system.

Table 13. Performance of the transition target detector

|  | Transition target detector | | CPD without transition detector | | 3*WiCPD | |
|---|---|---|---|---|---|---|
|  | TP | FN | TP | FN | TP | FN |
| Empty | 94.3% | 5.7% | 90.2% | 9.8% | 97.1% | 2.9% |
| CPD | 87.3% | 12.7% | 3.1% | 6.9% | 98.6% | 1.4% |

To evaluate the overall performance of WiCPD, three key metrics including responsive time, detection rate and false alarm rate are demonstrated since they are the key requirements to detect/rescue a child left alone in the vehicle timely. The performance of detecting a child in transition status is not evaluated independently because the transition status is usually merged with the sleeping/stationary status. Hereafter, "Sleeping" refers to a stationary child in sleeping while "Awake" means the child is awake and more likely to create motions.

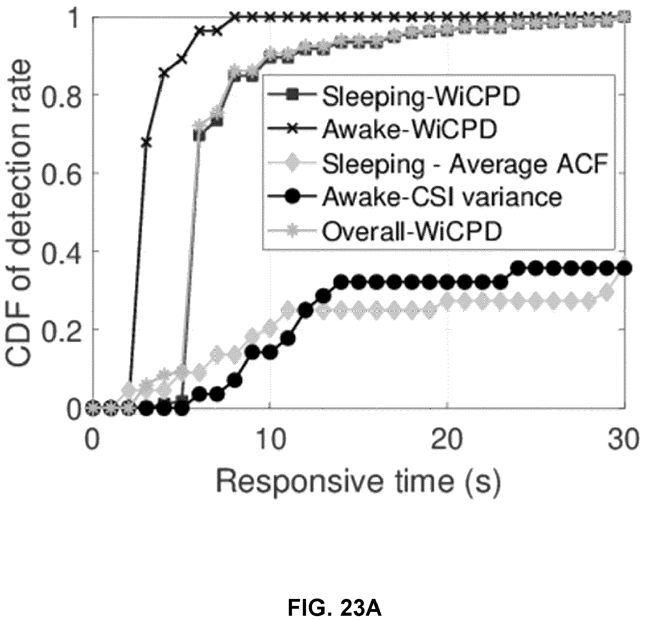

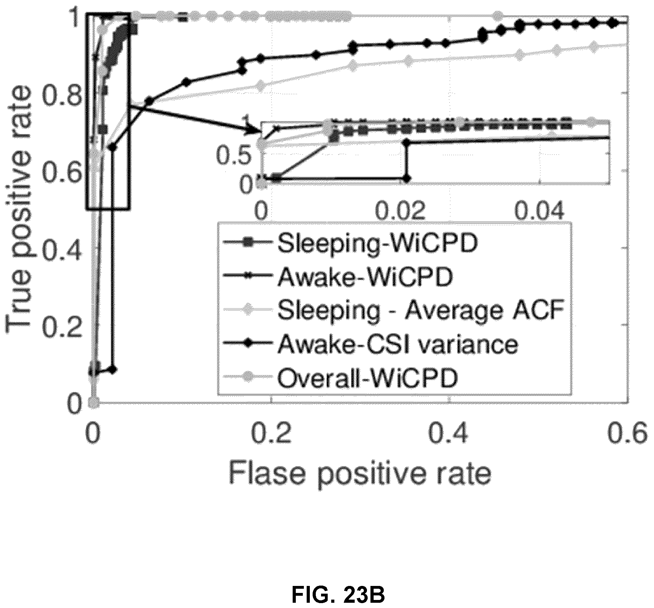

FIGS. 23A-23B show that WiCPD achieves 100% detection rate with less than 8s responsive time for an awake child in motion with normal activities such as struggling to get out of the car. Besides, WiCPD shows 96.56% detection rate within 20s for a sleeping child. FIG. 23B shows the Receiver's Operating Characteristic Curve (ROC) of WiCPD, indicating 1.04% and 4.37% false alarm rate for an awake and sleeping child respectively, with the detection rate $\geq 99.6\%$.

For comparison, one can also implement the benchmark methods using CSI variance to detect motion and the averaged CSI over subcarriers to estimate the breathing rate. As seen in FIGS. 23A-23B, WiCPD outperforms the benchmark methods mainly because: 1) it leverages a motion statistic based on a statistical EM model considering all the multipath components and thus harvests better sensitivity and robustness; 2) WiCPD utilizes the motion statistics as channel gain to first select those subcarriers which are sensitive to breathing motion and then combine them in an MRC way. As a result, WiCPD can greatly boost the SNR of the breathing motion embedded in the ACF and achieves faster and better estimation of breathing rate; 3) a Naive Bayes classifier based transition target detector is utilized to further detect the missing cases of the motion target detector and stationary target detector.

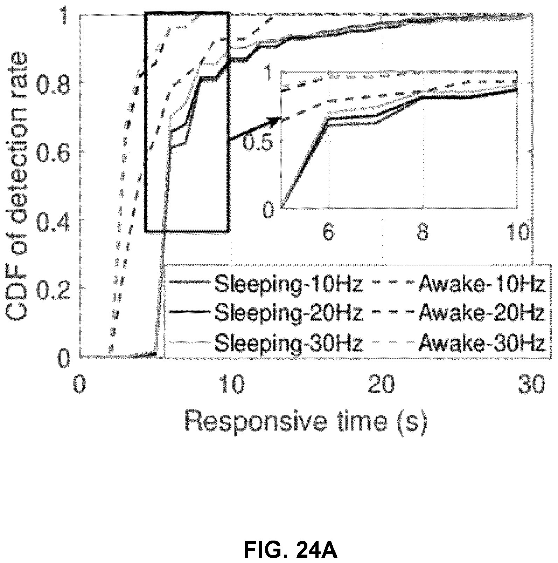

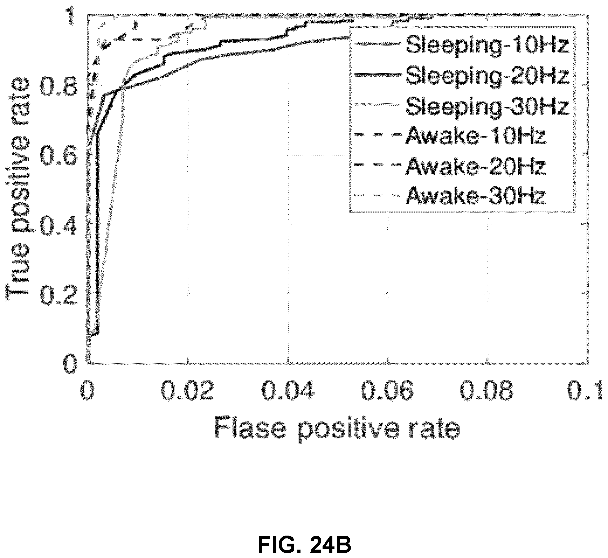

A higher sample rate $F_s$ can provide WiCPD with better motion statistic and breathing estimations, thus improving the overall performance. However, in practice, a higher sample rate will increase the overhead of the hardware system and may cause interference to the surrounding Wi-Fi network. As a result, one can evaluate the performance with different sample rates, which can guide the practical settings. FIG. 24A shows that WiCPD takes 13s, 8s, 8s response time to achieve 100% detection accuracy for the detection of an awake child, corresponding to the sample rate of 10Hz, 20Hz, 30Hz. Additionally, it achieves $\geq$ 96.18% detection rate with a responsive time of 20s for all the 10Hz, 20Hz, 30Hz cases in detecting a static child. Moreover, FIG. 24B shows that the false alarm rate is reduced from 2.03% to 0.625% and 6.89% to 2.36% for awake and sleeping child respectively, when the sample rate is increased from 10Hz to 30Hz.

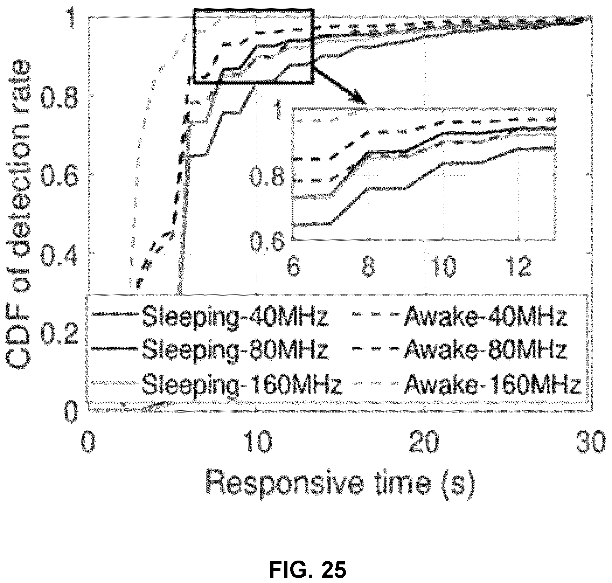

One can also study the impact of the effective bandwidth attributed by antennas and bandwidth together. Specifically, the effective bandwidth $N_e$ is defined as $N_e = N_s B$ where $N_s = N_{TX} N_{RX}$ denoting the spatial links between TX and RX with $N_{TX}$ and $N_{RX}$ representing the number of TX and RX. B is the bandwidth of the Wi-Fi system which is 40MHz for 5GHz channel and 20MHz for 2.4GHz channel in WiCPD system. FIG. 25 shows that when setting the responsive time as 8s, WiCPD achieves 85.46%, 92.86% and 100% detection rate with the effective bandwidth increased from 40MHz to 160MHz for the detecting an awake child. In the presence of a sleeping child, the detection rate increases from 75.62% to 86.68% when $N_e$ goes from 40MHz to 160MHz, corresponding to a responsive time of 8s as well.

To be a world-wide CPD system, it is important to evaluate its robustness in different environments such as in different cars, children of different ages and genders. As a result, one can evaluate the detection rate of WiCPD in the following aspects: 1) different car models, 2) different children, 3) different postures of the children, 4) different commercial antennas operating on different central frequencies and bands. It turns out that WiCPD achieves larger than 96.3% detection rate with marginal differences less than 2.47% among different cars. The slight differences in performance are mainly because different cars own different materials, structures and sizes. Different size will cause different propagation path lengths/losses of the wireless signal and thus inducing differences on the received energy $E_d^2(f)$ bounced off the dynamic scatterers. On the other hand, cars of different materials/structures have different impacts on reflecting the in-car signal and shielding the out-car signal as well.

As the children suffer from being left alone in a car can age from newborns to 6 year old, one can evaluate the performance of WiCPD in detection children over different ages and genders. As shown in Table 12, five children aging from 4 months to 4 year and 10 month old were tested with the permissions from their parents. It turns out that WiCPD can successfully detect different children with at least 97.25% detection rate. The detection rate among different children slightly deviates with a maximum of 1.01%, which shows great capability of WiCPD to detect child presence regardless of ages and genders.

One can also study the impact of the postures of a child, using e.g. a baby doll, different from the existing works which use adults to mimic child for posture control convenience. The reason is that adults have larger body size and stronger chest movement than that of the babies. As a result, the received energy $E_d^2(f)$ (see Eq. (6)) reflected from a baby and an adult is quite different. The face up, face down and sit on postures correspond to the data collected by a baby doll while the carseat is captured from a real baby who is secured in car seat by law. It turns out that WiCPD achieves larger than 96.97% for all the postures and thus facilitates the deployment of WiCPD in practical applications.

One can also evaluate the detection performance of WiCPD over different commercial antennas operating in both 2.4GHz and 5GHz bands, which is to examine its potential to integrate with different cars equipped with different antennas. It turns out that WiCPD achieves up to 98.13% and 98.78% by using antenna #1 and #2 centered on 5GHz, receptively. For both of the two antennas, 2.4GHz degrades the detection rate of about 4%. The main reason is that 2.4GHz Wi-Fi system runs on 20MHz bandwidth while 5GHz Wi-Fi system operates on 40MHz bandwidth. As a result, 5GHz has larger effective bandwidth and thus outperforms 2.4GHz Wi-Fi system. Moreover, WiCPD is promising to improve its performance by harvesting more effective bandwidth with the increment of antennas and bandwidth in the future.

While WiCPD focuses on the child presence detection, the statistical modeling accounting for all the multipath components inspires new opportunities for Wi-Fi sensing-based in-car applications. First, a direct extension can be in-car monitoring including vital sign monitoring based on the estimated breathing rate, driver's behavior analysis such as fatigue and inattentive driving behavior detection, which can expedite the popular Advanced Driver-assistance Systems (ADAS) research. Nevertheless, monitoring a driver's behavior is more challenging due to the vibrations during driving while WiCPD targets at a parked vehicle. It is possible to detect/compensate/suppress the unwanted motions such as by detrending techniques. Second, if one can estimate the breathing rates for both the driver and passengers during driving, it can be prior information to further reduce the responsive time of WiCPD. Third, occupancy detection (a.k.a. in car passenger counting) may be enabled using Wi-Fi sensing since the received CSI can be regarded as the superposition of the breathing signals coming from different individuals, if any. Some decomposition techniques such as Variational Mode Decomposition (VMD) and Multivariate Variational Mode Decomposition (MVMD) can be applied to estimate the mode of the signal and thus indicating the number of people in a car.

The present teaching discloses the design, implementation and evaluation of WiCPD, a novel child presence detection system using CSI measurements extracted from commercial Wi-Fi chipsets. One can leverage a statistical EM theoretical modeling to account for the impact of a target to all the multipath propagation and design three detector modules to enable WiCPD regardless of the child's status including motion, stationary and transition in between. One can implement the system using commercial Wi-Fi chipsets and deploy it in different cars to detect different children of different ages and genders. Extensive results show that WiCPD can achieve $\geq$ 96.5% accuracy with a responsive time less than 20s. The real-time tests show that WiCPD runs with affordable computational overhead, making it a promising candidate for world-wide CPD applications.

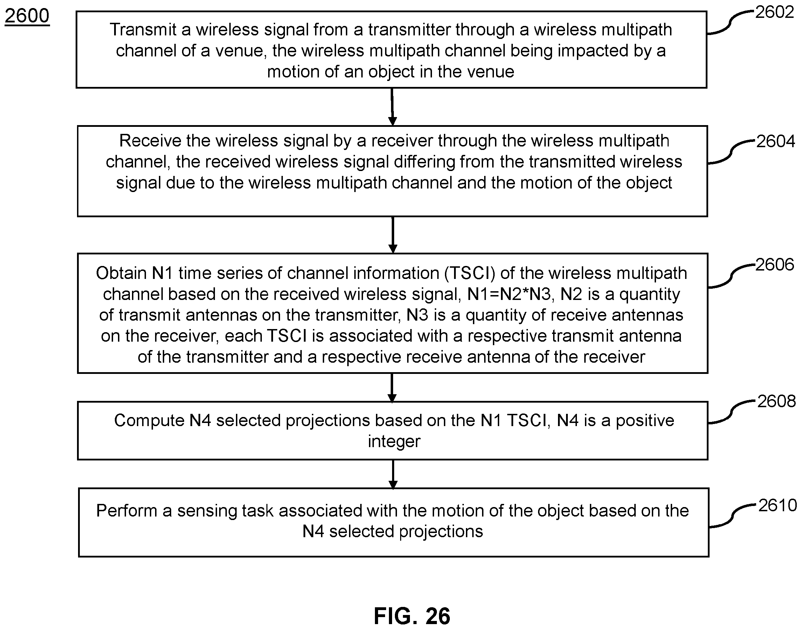

FIG. 26 illustrates a flow chart of an exemplary method 2600 for wireless sensing, according to some embodiments of the present disclosure. In various embodiments, the method 2600 can be performed by the systems disclosed above. At operation 2602, a wireless signal is transmitted from a transmitter through a wireless multipath channel of a venue. The wireless multipath channel is impacted by a motion of an object in the venue. At operation 2604, the wireless signal is received by a receiver through the wireless multipath channel. The received wireless signal differs from the transmitted wireless signal due to the wireless multipath channel and the motion of the object. At operation 2606, N1 time series of channel information (TSCI) of the wireless multipath channel are obtained based on the received wireless signal. N1=N2*N3, N2 is a quantity of transmit antennas on the transmitter, N3 is a quantity of receive antennas on the receiver, each TSCI is associated with a respective transmit antenna of the transmitter and a respective receive antenna of the receiver. At operation 2608, N4 selected projections are computed based on the N1 TSCI, where N4 is a positive integer. At operation 2610, a sensing task associated with the motion of the object is performed based on the N4 selected projections. The order of the operations in FIG. 26 may be changed according to various embodiments of the present teaching.

In some embodiments, the present teaching discloses a wireless sensing system performing a wireless sensing task to monitor a motion of an object in a venue based on (a) sensing measurements of a wireless multipath channel in the venue and (b) selected projections (e.g. N4 largest eigenvalues selected from a distribution of eigenvalues) computed based on the sensing measurement.

The wireless sensing task may comprise target detection, motion target detection, stationary target detection, transition target detection, motion detection, human/tree motion detection, presence detection, child presence detection (CPD), in vehicle monitoring, in-vehicle CPD, vital sign monitoring, breathing detection, breathing monitoring, sleep monitoring, driver monitoring, driver behavior analysis, driver fatigue detection, inattentive driver detection, occupancy detection, people/passenger counting, etc. The venue may be a car, vehicle, home, room, office, facility, closed facility, open facility, semi-open facility, etc. The sensing measurements may be channel information (CI), TSCI, channel state info (CSI), channel impulse response (CIR), channel frequency response (CFR), results of a sensing measurement procedure (e.g. based on a protocol such as 802.11, 802.11bf), etc.

A Type1 heterogeneous wireless device (wireless transmitter) may transmit a series of wireless sounding signals to a Type2 heterogeneous wireless device (wireless receiver). The Type1 device may have M1 antennas. The Type2 device may have M2 antennas. The Type2 device may obtain a number (M=M1*M2) of time series of channel information (CI, e.g. CSI, CFR, CIR, etc.) based on the received wireless sounding signals, each CI based on a respective received sounding signal. Each TSCI may be associated with a link (which may be the link between a transmit antenna of the Type1 device and a receiver antenna of the Type2 device). There may be M links. Each CI may have N components (e.g. N subcarriers for CFR). Each component (CI-component) may be a complex number.

The sounding signal may be transmitted at a sounding frequency of F1 (e.g. 0.01/0.1/1/10/100/1000 Hz) such that the TSCI may be obtained at F1 samples per second. The number of TSCI may be preprocessed (e.g. denoised, phase cleaning, time base correction). The covariance matrix in step 1 may be computed based on a sliding window (with a certain width, e.g. 0.01/0.1/1/10/100 second) of the CSI/preprocessed CSI. The covariance matrix in step 1 may be computed at a reduced frequency (e.g. 0.001/0.01/0.1/1 * F1).

In some embodiments, a transition target detection algorithm may include the following steps. In step 1, compute a matrix (e.g. covariance matrix) of CI (e.g. CSI, CFR, CIR). If each CI has N components (for 1 link), the covariance matrix may be of size N*N. If there are M links (M pairs of Tx-Rx antennas), the covariance matrix may be of size MN*MN. In step 2, compute projections (e.g. eigenvalue) of the matrix (eigenvalues may be real numbers, may be non-negative). In step 3, keep top K largest projections (e.g. eigenvalues). In step 4, combine the K largest projections (e.g. eigenvalues) for L samples of CI to get a feature vector with KL projections (e.g. eigenvalues). In step 5, use the feature vector for training during training phase; and use the feature vector for classification/detection during operation phase.

In some embodiments, the system may have multiple stages of a detection task (e.g. the detection may be detection of a target, presence detection, detection of the presence of a person, child presence detection in a vehicle). Each stage may perform the detection based on a respective algorithm. If the target is detected in any stage, the next stage(s) may be skipped/not performed. If the target is not detected in one stage, the next stage(s) of detection may be performed. The stages may be selected/performed, or not selected/performed. When performed, the stages may be in any order. In an example, the order may be motion target detection followed by stationary target detection followed by transition target detection. In a second example, only one of the motion target detection, stationary target detection or the transition target detection may be performed (alone). In a third example, the order may be stationary target detection followed by transition target detection, or vice versa. In a fourth example, the order may be motion target detection followed by transition target detection, or vice versa. In a fifth example the order may be motion target detection followed by stationary target detection, or vice versa. And so on.

One stage may be motion target detection. The motion target detection may seek to detect motion due to a target/an object (e.g. a person, a child). A first motion statistic may be computed based on the number of TSCI. The first motion statistic may be computed based on one (or more) pair of temporally adjacent CI. The first motion statistics may comprise any of: a correlation, covariance, product, dot product of the pair of CSI. The first motion statistics may be compared with a first threshold. The target may be detected if the first motion statistics is greater than the threshold. The first threshold may be a first predefined quantity or computed adaptively based on the TSCI.

One stage may be stationary target detection. The stationary target detection may seek to detect a periodic characteristics (e.g. related to breathing of a person/child) of the TSCI (due to the target). A second motion statistics may be computed based on the number of TSCI. The second motion statistics may be computed based on an auto-correlation function (ACF) of the TSCI. A first maximum/peak of the ACF may be computed. A time lag associated with the first maximum/peak of the ACF may be computed. The second motion statistics may be computed based on the time lag and/or the first maximum/peak value of the ACF. The second motion statistics may be an estimate of a periodic characteristics (e.g. frequency, period). The periodic characteristics may be detected if the second motion statistics is within an acceptable range and/or the ACF has another satisfactory behavior (e.g. magnitude of first maximum/peak greater than a threshold). The target may be detected if the periodic characteristics is detected for a sustained period of time (e.g. 1/10/100 seconds, or an adaptive time duration computed based on past/present behavior).

One stage may be transition target detection. The transition target detection may seek to detect a target (e.g. a person/child) in transition, with little detectable motion (e.g. during sleeping) and with periodic characteristics interrupted (e.g. breathing detection interrupted by body motions). A feature vector may be constructed as explained in step 4 above. The target is detected in the classification/detection in the operation phase (using a classifier/detector trained using the feature vector constructed based on training TSCI in the training phase).

In some embodiments, there are N1 links (i.e. N1 pairs of Tx antenna and Rx antenna). A projection is a scalar (e.g. complex number, real number). A projection may be a linear projection of a vector on a particular basis vector (e.g. eigenvalue). Typically a N-tuple vector is a vector in a N-dimensional space span by a set of N basis vectors (or more than N over-complete basis vectors). The N basis vectors are orthogonal and have unity magnitude. So the vector has N projections, each onto a respective basis vector. Some of the N projections are selected based on some criterion (e.g. largest magnitude), and thus are called "selected projections". For example, a linear projection of a vector x on a particular basis vector y may be computed as a dot product of the vectors x and y. In mathematics, a vector space (e.g. N-dimensional vector space) is span by a set of "basis vectors". There can be many possible set of basis vectors. So a first representation of a vector w.r.t. a first set of basis vectors (e.g. I_1, I_2, ..., I_n) can be changed to a second representation w.r.t. a second set of basis vectors (e.g. basis vectors of and/or associated with any of: Fourier Transform, Sine Transform, Cosine Transform, Hadamard Transform, Slant Transform, any trigonometric transform, any linear transform, orthogonal transform, non-orthogonal transform, over-complete projection, eigenvalue decomposition, eigen-vector space, singular value decomposition (SVD), principal component analysis, any linear decomposition). Mathematically, the second representation can be computed by applying a linear transformation to the first representation, or in equation form, $y=Ax$, wherein x is a N-tuple vector which is the first representation, y is a N-tuple vector which is the second representation, and A is a matrix of size NxN. A projection may also be a nonlinear projection of a vector. For example, the magnitude of a vector is a nonlinear projection. Other examples include a polynomial/nonlinear function of the elements of the vector, or a composition of linear projection with a nonlinear operation.

The following numbered clauses provide examples for wireless sensing.

Clause A1. A method/device/system/software of a wireless sensing system, comprising: transmitting a wireless signal from a Type1 heterogeneous wireless device of the wireless sensing system through a wireless multipath channel of a venue, wherein the wireless multipath channel is impacted by a motion of an object in the venue; receiving the wireless signal by a Type2 heterogeneous wireless device of the system through the wireless multipath channel, wherein the received wireless signal differs from the transmitted wireless signal due to the wireless multipath channel of the venue and the motion of the object; obtaining N1 time series of channel information (TSCI) of the wireless multipath channel based on the received wireless signal using a processor, a memory and a set of instructions, wherein the Type1 device comprises N2 antennas and the Type2 device comprises N3 antennas such that N1=N2*N3, wherein each TSCI is associated with a respective antenna of the Type1 device and a respective antenna of the Type2 device; computing N4 selected projections based on the N1 TSCI; performing a sensing task associated with the motion of the object based on the N4 selected projections.

For classification of motion (e.g. human/tree motion) or detection of motion (e.g. presence detection, CPD), need to train a classifier or a detector based on the N4 selected projections. A detector is a simple classifier.

Clause A2. The method/device/system/software of the wireless sensing system of clause A1, comprising: training a classifier based on the N4 selected projections computed based on the N1 TSCI obtained in a training phase.

Use the trained classifier based on the N4 selected projections.

Clause A3. The method/device/system/software of the wireless sensing system of clauses A1 or A2, comprising: classifying the motion of the object based on the classifier in an operating phase based on the N4 selected projections.

Special case: the classification is the detection of presence of object (child).

Clause A4. The method/device/system/software of the wireless sensing system of clauses A1 to A3, comprising: detecting a presence of the object based on the classifier in an operating phase based on the N4 selected projections.

Multi-stage presence detection. Detect active motion of object (i.e. relatively large motion when object is active) in "motion target detection" procedure. Detect small periodic motion of object (i.e. breathing when object is not active) in "stationary target detection" procedure. Detect transitional motion of object (i.e. breathing+small body motion when object is not active) in "transition target detection" procedure.

Clause A5. The method/device/system/software of the wireless sensing system of clauses A1 to A4, comprising: in the operating phase, performing a number of presence detection procedures sequentially; if the presence of the object is detected in any presence detection procedure, all subsequent presence detection procedures are skipped; in one of the presence detection procedures, detecting the presence of the object by detecting transitional motion of the object based on the classifier based on the N4 selected projections, in another one of the presence detection procedures, detecting the presence of the object by detecting a motion of the object based on a first motion statistics computed based on a pair of CI from the N1 TSCI; in yet another one of the presence detection procedures, detecting the presence of the object by detecting a periodic motion of the object for a sustained period of time based on a second motion statistics computed based on an auto-correlation function (ACF) the N1 TSCI.

Case 1. Simple case. Select N4 projections from one matrix (one time stamp). Case 2. General case. Select N4 projections from N5 matrices (N5 time stamps). Case 1. Simple case. Select N4 eigenvalues associated with one time stamp. Compute a matrix (covariance matrix).

Clause A6. The method/device/system/software of the wireless sensing system of clause A1, comprising: computing a matrix based on the number of TSCI, wherein the matrix comprises at least one of: a covariance matrix, a correlation matrix, a Hermitian matrix, a symmetric matrix, a positive semi-definite matrix, a matrix of matrices, or an augmented matrix; performing the sensing task based on the matrix.

Compute all projections of the covariance matrix.

Clause A7. The method/device/system/software of the wireless sensing system of clauses A1 to A6, comprising: computing a plurality of projections of the matrix, wherein each projection is a scalar, being one of: an eigenvalue obtained from eigen-decomposition of the matrix, a singular value obtained from singular value decomposition (SVD) of the matrix, a principal component value obtained from principal component analysis (PCA) of the matrix, an independent component value obtained from independent component analysis of the matrix, or a value obtained from another decomposition of the matrix, wherein the another decomposition comprises at least one of: LU decomposition, LU reduction, block LU decomposition, rank factorization, Cholesky decomposition, QR decomposition, RRQR factorization, interpolative decomposition, Jordon decomposition, Schur decomposition, real Schur decomposition, QZ decomposition, Takagi's factorization, scale-invariant decomposition, polar decomposition, algebraic polar decomposition, Mostow's decomposition, Sinkhorn normal form, sectoral decomposition, Williamson's normal form, matrix square root; selecting the N4 selected projections from the plurality of projections.

Compute N4 from among all the projections of the covariance matrix based on magnitude.

Clause A8. The method/device/system/software of the wireless sensing system of clauses A1 to A7, comprising: selecting the N4 selected projections based on a magnitude of the projections.

Select N4 largest projections.

Clause A9. The method/device/system/software of the wireless sensing system of clauses A1 to A8, comprising: wherein the N4 selected projections are the N4 projections with the largest magnitude.

Compute N5 matrices (instead of one matrix)

Clause A10. The method/device/system/software of the wireless sensing system of clauses A1 to A1, comprising: computing N5 matrices based on the number of TSCI, wherein each matrix is associated with a respective time stamp, wherein each of the N5 matrices comprises at least one of: a covariance matrix, a correlation matrix, a Hermitian matrix, a symmetric matrix, a positive semi-definite matrix, a matrix of matrices, or an augmented matrix; performing the sensing task based on the N5 matrices.

Compute all projections of all matrices.

Clause A11. The method/device/system/software of the wireless sensing system of clauses A1 to A10, comprising: computing a plurality of projections of each of the N5 matrices; selecting the N4 selected projections from the plurality of projections of each of the N5 matrices.

Select N4 projections based on their magnitude.

Clause A12. The method/device/system/software of the wireless sensing system of clauses A1 to A11, comprising: selecting the N4 selected projections based on a magnitude of the projections.

Select N4 overall largest projections from among all the projections.

Clause A13. The method/device/system/software of the wireless sensing system of clauses A1 to A12, comprising: wherein the N4 selected projections are the N4 projections with the largest magnitude among all the projections of the N5 matrices.

Select N6 largest projections of each matrix. Combine them to form the N4 selected projections.

Clause A14. The method/device/system/software of the wireless sensing system of clauses A1 to A13, comprising: wherein the N4 selected projections comprise N6 largest projections of each of the N5 matrices, wherein N4=N6*N5.

Time stamps are evenly spaced in time.

Clause A15. The method/device/system/software of the wireless sensing system of clauses A1 to A14, comprising: wherein the N5 time stamps associated with the N5 matrices are evenly spaced in time.

Compute one matrix by forming a sampling vector and computing the covariance matrix. Case 1. Simple case. Form sampling vector based on CI at one time stamp. (no temporal/dynamic behavior of CI). Case 2. General case. Form sample vector based on CI at N8 time stamps (to capture temporal/ dynamic behavior of CI). Case 1. Form sampling vector based on CI at one common time stamp.

Clause A16. The method/device/system/software of the wireless sensing system of clauses A1 to A15, comprising: determining a sampling vector as a concatenation of N1 channel information (CI), each CI from a respective TSCI; computing the matrix as a covariance matrix of the sampling vector.

Estimate statistical covariance based on CI in a sliding time window.

Clause A17. The method/device/system/software of the wireless sensing system of clauses A1 to A16, comprising: computing the covariance matrix based on a sliding time window of the N1 TSCI.

For CI=CFR, each component may be a subcarrier of CFR. For CI=CIR, each component may be a tab of CIR.

Clause A18. The method/device/system/software of the wireless sensing system of clauses A1 to A17, comprising: wherein each CI comprises N7 components; wherein the sampling vector has N7*N1 elements; wherein the covariance matrix is of size $(N7*N1) \times (N7*N1)$.

A common time stamp.

Clause A19. The method/device/system/software of the wireless sensing system of clauses A1 to A18, comprising: wherein all the N1 CI of the sampling vector have a common time stamp.

Case 2. Form sample vector based on CI at N8 time stamps.

Clause A20. The method/device/system/software of the wireless sensing system of clauses A1 to A219, comprising: determining a sampling vector as a concatenation of N8 CI from each of the N1 TSCI such that the vector comprises (N8*N1) channel information (CI); computing the matrix as a covariance matrix of the sampling vector.

Clause A21. The method/device/system/software of the wireless sensing system of clauses A1 to A20, comprising: computing the covariance matrix based on a sliding time window of the N1 TSCI.

Clause A22. The method/device/system/software of the wireless sensing system of clauses A1 to A21, comprising: wherein each CI comprises N7 components; wherein the sampling vector has N7*N8*N1 elements; wherein the covariance matrix is of size $(N7*N8*N1) \times (N7*N8*N1)$.

All the N8 CI from all TSCI are sampled at the same N8 common time stamps. In other words, the first of the N8 CI from all TSCI are sampled at a first common time stamp. Similarly, the $i^{th}$ of the N8 CI from all TSCI are sampled at an $i^{th}$ common time stamp. The N8 common time stamps may be spaced evenly (as if they are associated with a sampling frequency/period). Alternatively, the N8 common time stamps may not be spaced evenly.

Clause A23. The method/device/system/software of the wireless sensing system of clauses A1 to A20, comprising: wherein N8 common time stamps are associated with the N8 CI from any of the N1 TSCI.

Clause A24. The method/device/system/software of the wireless sensing system of clauses A1 to A23, comprising: wherein N8 common time stamps are equally spaced in time.

The following numbered clauses provide other examples for wireless sensing.

Clause B1. A system for wireless sensing, comprising: a transmitter configured to transmit a wireless signal through a wireless multipath channel of a venue, wherein the wireless multipath channel is impacted by a motion of an object in the venue; a receiver configured to receive the wireless signal through the wireless multipath channel, wherein the received wireless signal differs from the transmitted wireless signal due to the wireless multipath channel and the motion of the object; and a processor configured for: obtaining N1 time series of channel information (TSCI) of the wireless multipath channel based on the received wireless signal, wherein N1=N2*N3, wherein N2 is a quantity of transmit antennas on the transmitter, wherein N3 is a quantity of receive antennas on the receiver, wherein each TSCI is associated with a respective transmit antenna of the transmitter and a respective receive antenna of the receiver, computing N4 selected projections based on the N1 TSCI, wherein N4 is a positive integer, and performing a sensing task associated with the motion of the object based on the N4 selected projections.

Clause B2. The system of Clause B1, wherein the processor is further configured for: training a classifier based on the N4 selected projections computed based on the N1 TSCI obtained in a training phase.

Clause B3. The system of Clauses B1 or B2, wherein the processor is further configured for: classifying the motion of the object based on the classifier in an operating phase based on the N4 selected projections.

Clause B4. The system of Clauses B1 to B3, wherein the processor is further configured for: detecting a presence of the object based on the classifier in the operating phase based on the N4 selected projections.

Clause B5. The system of Clauses B1 to B4, wherein the processor is further configured for: performing a number of presence detection procedures sequentially in the operating phase; and skipping all subsequent presence detection procedures when the presence of the object is detected in any presence detection procedure.

Clause B6. The system of Clauses B1 to B5, wherein the processor is further configured for: in a first one of the presence detection procedures, detecting the presence of the object by detecting a transitional motion of the object based on the classifier and the N4 selected projections; in a second one of the presence detection procedures, detecting the presence of the object by detecting a motion of the object based on a first motion statistics computed based on a pair of CI from the N1 TSCI; and in a third one of the presence detection procedures, detecting the presence of the object by detecting a periodic motion of the object for a sustained period of time based on a second motion statistics computed based on an auto-correlation function (ACF) of the N1 TSCI.

Clause B7. The system of Clauses B1 to B6, wherein the processor is further configured for: computing a matrix based on the N1 TSCI; and performing the sensing task based on the matrix.

Clause B8. The system of Clauses B1 to B7, wherein the processor is further configured for: computing a plurality of projections of the matrix, wherein each of the plurality of projections is a scalar being one of: an eigenvalue obtained from eigen-decomposition of the matrix, a singular value obtained from singular value decomposition (SVD) of the matrix, a principal component value obtained from principal component analysis (PCA) of the matrix, an independent component value obtained from independent component analysis of the matrix, or a value obtained from another decomposition of the matrix; and selecting the N4 selected projections from the plurality of projections.

Clause B9. The system of Clauses B1 to B8, wherein: the N4 selected projections are selected based on a magnitude of each of the plurality of projections.

Clause B10. The system of Clauses B1 to B9, wherein: the N4 selected projections are N4 projections having the largest magnitudes among the plurality of projections of the matrix.

Clause B11. The system of Clauses B1 to B10, wherein the processor is further configured for: determining a sampling vector as a concatenation of N1 channel information (CI), wherein each of the N1 CI comes from a respective TSCI of the N1 TSCI; and computing the matrix as a covariance matrix of the sampling vector.

Clause B12. The system of Clauses B1 to B11, wherein: the covariance matrix is computed based on a sliding time window of the N1 TSCI.

Clause B13. The system of Clauses B1 to B12, wherein: each of the N1 CI comprises N5 components, wherein N5 is a positive integer; the sampling vector has N5*N1 elements; and the covariance matrix is of size (N5*N1)×(N5*N1).

Clause B14. The system of Clause B11, wherein: all of the N1 CI of the sampling vector have a common time stamp.

Clause B15. The system of Clauses B1 to B13, wherein the processor is further configured for: determining a sampling vector as a concatenation of N6 channel information (CI) from each of the N1 TSCI such that the sampling vector comprises (N6*N1) CI, wherein N6 is a positive integer; and computing the matrix as a covariance matrix of the sampling vector.

Clause B16. The system of Clauses B1 to B15, wherein: the covariance matrix is computed based on a sliding time window of the N1 TSCI.

Clause B17. The system of Clauses B1 to B16, wherein: each of the N6 CI comprises N5' components, wherein N5' is a positive integer; the sampling vector has N5' *N6*N1 elements; and the covariance matrix is of size (N5' *N6*N1)×(N5' *N6*N1).

Clause B18. The system of Clauses B1 to B17, wherein: N6 common time stamps are associated with the N6 CI from any of the N1 TSCI.

Clause B19. The system of Clauses B1 to B18, wherein: the N6 common time stamps are equally spaced in time.

Clause B20. The system of Clauses B1 to B19, wherein the processor is further configured for: computing N7 matrices based on the N1 TSCI, wherein each of the N7 matrices is associated with a respective time stamp and comprises at least one of: a covariance matrix, a correlation matrix, a Hermitian matrix, a symmetric matrix, a positive semi-definite matrix, a matrix of matrices, or an augmented matrix; and performing the sensing task based on the N7 matrices, wherein N7 is an integer larger than one.

Clause B21. The system of Clauses B1 toB20, wherein the processor is further configured for: computing a plurality of projections based on each of the N7 matrices; and selecting the N4 selected projections from the plurality of projections.

Clause B22. The system of Clauses B1 to B21, wherein: the N4 selected projections are selected based on a magnitude of each of the plurality of projections.

Clause B23. The system of Clauses B1 to B22, wherein: the N4 selected projections are N4 projections having the largest magnitudes among all projections of the N7 matrices.

Clause B24. The system of Clauses B1 to B23, wherein: the N4 selected projections comprise N8 largest projections of each of the N7 matrices, wherein N8 is a positive integer; and N4 = N8*N7.

Clause B25. The system of Clauses B1 to B24, wherein: the N7 time stamps associated with the N7 matrices are evenly spaced in time.

Clause B26. A wireless device of a system for wireless sensing, comprising: a processor; a memory communicatively coupled to the processor; and a receiver communicatively coupled to the processor, wherein: an additional wireless device of the system is configured to transmit a wireless signal through a wireless multipath channel of a venue, the wireless multipath channel is impacted by a motion of an object in the venue, the receiver is configured to receive the wireless signal through the wireless multipath channel, the received wireless signal differs from the transmitted wireless signal due to the wireless multipath channel and the motion of the object, and the processor is configured for: obtaining N1 time series of channel information (TSCI) of the wireless multipath channel based on the received wireless signal, wherein N1=N2*N3, wherein N2 is a quantity of transmit antennas on the transmitter, wherein N3 is a quantity of receive antennas on the receiver, wherein each TSCI is associated with a respective transmit antenna of the transmitter and a respective receive antenna of the receiver, computing N4 selected projections based on the N1 TSCI, wherein N4 is a positive integer, and performing a sensing task associated with the motion of the object based on the N4 selected projections.

Clause B27. The wireless device of Clause B26, wherein the processor is further configured for: training a classifier based on the N4 selected projections computed based on the N1 TSCI obtained in a training phase; classifying the motion of the object based on the classifier in an operating phase based on the N4 selected projections; and detecting a presence of the object based on the classifier in the operating phase based on the N4 selected projections.

Clause B28. The wireless device of Clauses B26 or B27, wherein the processor is further configured for: performing a number of presence detection procedures sequentially in the operating phase; skipping all subsequent presence detection procedures when the presence of the object is detected in any presence detection procedure; in a first one of the presence detection procedures, detecting the presence of the object by detecting a transitional motion of the object based on the classifier and the N4 selected projections; in a second one of the presence detection procedures, detecting the presence of the object by detecting a motion of the object based on a first motion statistics computed based on a pair of CI from the N1 TSCI; and in a third one of the presence detection procedures, detecting the presence of the object by detecting a periodic motion of the object for a sustained period of time based on a second motion statistics computed based on an auto-correlation function (ACF) of the N1 TSCI.

Clause B29. A method for wireless sensing, comprising: transmitting a wireless signal from a transmitter through a wireless multipath channel of a venue, wherein the wireless multipath channel is impacted by a motion of an object in the venue; receiving the wireless signal by a receiver through the wireless multipath channel, wherein the received wireless signal differs from the transmitted wireless signal due to the wireless multipath channel and the motion of the object; obtaining N1 time series of channel information (TSCI) of the wireless multipath channel based on the received wireless signal, wherein N1=N2*N3, wherein N2 is a quantity of transmit antennas on the transmitter, wherein N3 is a quantity of receive antennas on the receiver, wherein each TSCI is associated with a respective transmit antenna of the transmitter and a respective receive antenna of the receiver; computing N4 selected projections based on the N1 TSCI, wherein N4 is a positive integer; and performing a sensing task associated with the motion of the object based on the N4 selected projections.

Clause B30. The method Clause B29, further comprising: training a classifier based on the N4 selected projections computed based on the N1 TSCI obtained in a training phase; classifying the motion of the object based on the classifier in an operating phase based on the N4 selected projections; and detecting a presence of the object based on the classifier in the operating phase based on the N4 selected projections.

In some embodiments, the present teaching discloses a wireless sensing system monitoring a motion of an object in a venue. The system may be performing one or more wireless sensing tasks, such as motion detection, presence detection, motion localization, breathing detection, sleep monitoring, fall-down detection, people recognition, gait detection, people counting, activity of daily living (ADL) monitoring, etc. In some embodiments, the present teaching discloses motion localization which may be a standalone wireless sensing task. It may also be a companion wireless sensing task performed in conjunction with another task (e.g. motion detection). For example, when motion is detected in the venue, the motion localization may be performed to detect that the motion is detected in the living room in the venue.

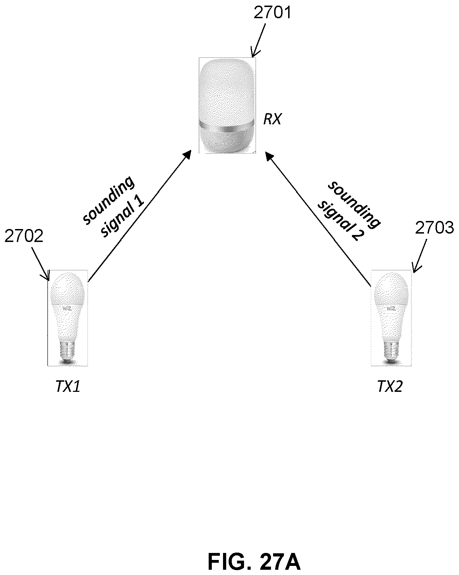

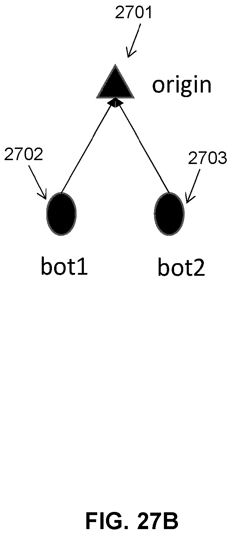

FIG. 27A and FIG. 27B illustrate an exemplary single-way structure for wireless sensing, according to some embodiments of the present disclosure. FIG. 27B is a diagram representation of devices in FIG. 27A. As shown in FIG. 27A and

FIG. 27B, a desk lamp 2701 may be a superbulb acting as an Origin (RX); and there are two Bots 2702, 2703, where each Bot (TX) may be a regular bulb. In some embodiments, each TX 2702, 2703 can broadcast a sounding signal with a specific CSI rate. That is, the sounding signal 1 transmitted by TX1 2702 and the sounding signal 2 transmitted by TX2 2703 may be associated with different CSI rates.

In some embodiments, WiFi carrier-sense multiple access (CSMA) is used to schedule the transmission for each TX. After the Origin 2701 receives CSI, it can calculate motion statistics (MS) for TX and determine if a bulb (TX1 or TX2) should be turned on or off.

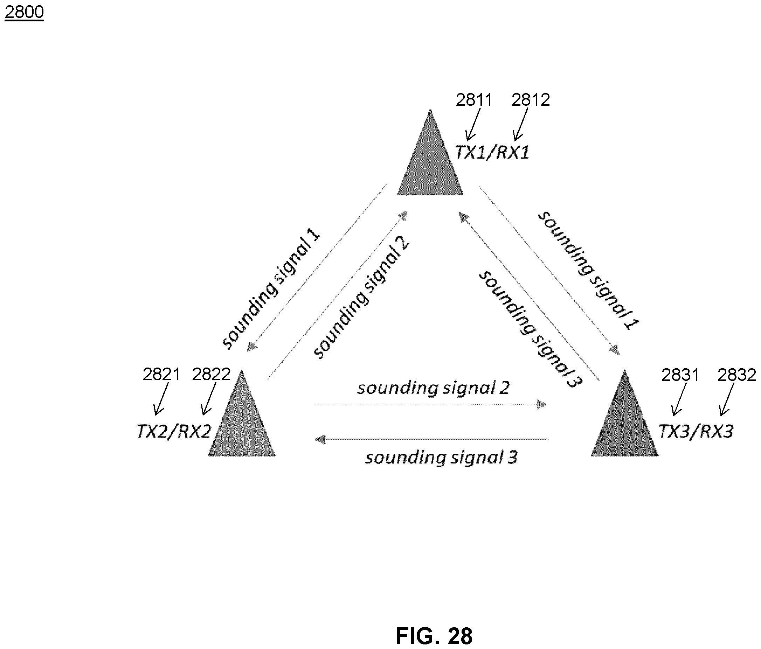

FIG. 28 illustrates an exemplary multi-way structure for wireless sensing, according to some embodiments of the present disclosure. In some embodiments, all devices in the sensing network of FIG. 28 are identical in terms of sensing. Each device can broadcast a sounding signal with a specific CSI rate and obtain CSI from other devices. WiFi CSMA may be used to schedule the transmission for each TX. Each device can calculate the sensing data (e.g. motion statistics) for the links between itself and other devices. In the diagram shown in FIG. 28, there are three locations 1, 2, 3. Accordingly, each location has a respective transmitter (TX) and a respective receiver (RX). For example, TX1 2811 is at location 1 and can broadcast a sounding signal 1 to locations 2 and 3; TX2 2821 is at location 2 and can broadcast a sounding signal 2 to locations 1 and 2; TX3 2831 is at location 3 and can broadcast a sounding signal 3 to locations 1 and 2. At receiver side, RX1 2812 is at location 1 and can receive sounding signals 2 and 3 from locations 2 and 3; RX2 2822 is at location 2 and can receive sounding signals 1 and 3 from locations 1 and 3; RX3 2832 is at location 3 and can receive sounding signals 1 and 2 from locations 1 and 2. Based on the wireless sounding signals, the system can have various motion statistics (ms): ms12, ms13, ms21, ms23, ms31, ms32, where msXY represents ms based on sounding signal transmitted from location X to location Y. In some embodiments, all sensing data (i.e. motion statistics) are sent back to a common node for further analysis to determine motion location. In some embodiments, the TX and the RX at a same location can be physically coupled to a same device, to form a transceiver. In other embodiments, the TX and the RX at a same location can be located at two separate devices.

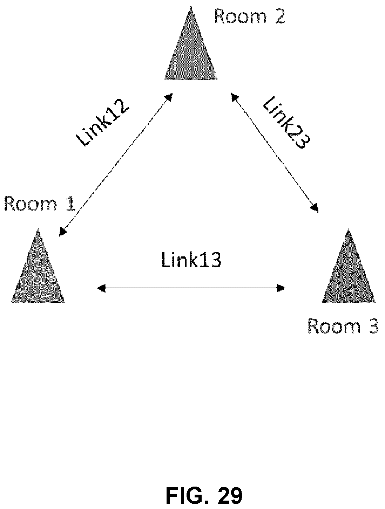

FIG. 29 illustrates an exemplary diagram showing a setup for multi-way sensing, e.g. the multi-way sensing as shown in FIG. 28. As shown in FIG. 29, the three locations 1, 2, 3 can be three rooms 1, 2, 3 of a same building. A link (device link or wireless link) is established between each pair of rooms. For example, a link12 is established between room 1 and room 2; a link23 is established between room 2 and room 3; a link13 is established between room 1 and room 3.

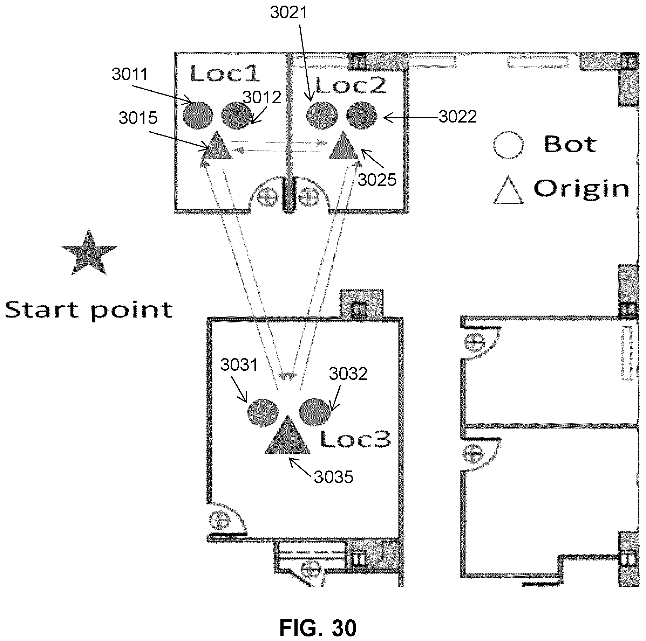

FIG. 30 illustrates an exemplary room setup for multi-way sensing, according to some embodiments of the present disclosure. As shown in FIG. 30, there are three rooms (Loci, Loc2, Loc3) deployed with sensing devices for wireless sensing. Each room has three devices, one Origin (receiver) and two Bots (transmitters). In other embodiments, the numbers of Origins and Bots may be different from FIG. 30 and can be any positive number. The multi-way sensing setup in FIG. 30 can be formed by integrating three sets of single-way sensing structures. For example, the Bot 3021 at Loc2, the Bot 3031 at Loc3, and the Origin 3015 at Loc1 may form a first set (Set 1) of single-way sensing structure; the Bot 3011 at Loc1, the Bot 3032 at Loc3, and the Origin 3025 at Loc2 may form a second set (Set 2) of single-way sensing structure; the Bot 3012 at Loc1, the Bot 3022 at Loc2, and the Origin 3035 at Loc3 may form a third set (Set 3) of single-way sensing structure. In some embodiments, when Bot and Origin at a same location are integrated to a same device, a transceiver, three devices are enough to perform the multi-way sensing as shown in FIG. 30.

In some embodiments, to perform a repetition test, a user or testing object may move from a start point to room Loc1, then back to the start point, then back to room Loc1 again. The user may then move back to the start point, then move to room Loc2, back to the start point, to room Loc2 again, then back to the start point. The user may then move from the start point to room Loc3, then back to the start point, then to room Loc3 and then back to the start point. The repetition test is to mimic a real-world case that a user may enter some room and then leave that room and return to a start point without entering any adjacent room. Ideally if a user enters a room LocX, the motion statistics sensed by bots in LocX will increase, and the motion near the Origin in LocX will also lead to an increase in the motion statistics of all the bots associated with that Origin.

In some embodiments, to perform a transition test, a user or testing object may move from the start point to room Loc1, then to room Loc2, then to room Loc3, and then moving back to the start point. The transition test is to mimic a real-world case that a user may enter one room after another. Ideally, if the user moves from one room LocX to another room LocY, the motion statistics of the bots in LocX will decrease while that of the bots in LocY will increase, indicating a transition is happening.

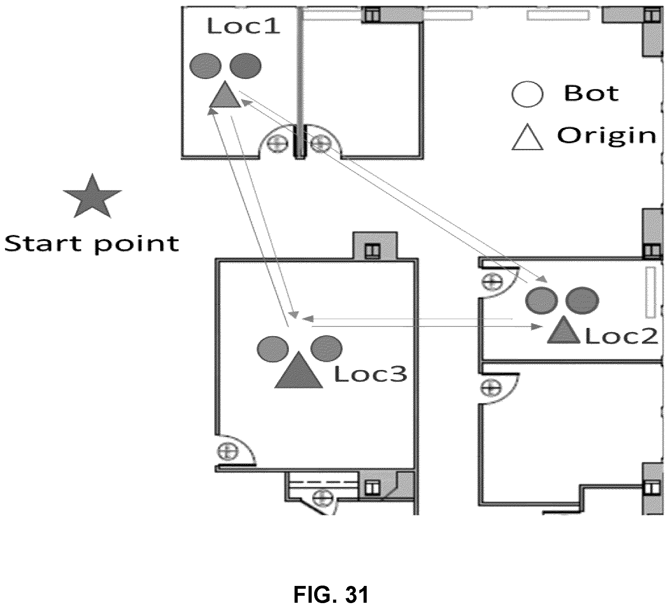

FIG. 31 illustrates another exemplary room setup for multi-way sensing, according to some embodiments of the present disclosure. As shown in FIG. 31, there are three rooms (Loci, Loc2, Loc3) deployed with sensing devices for wireless sensing. Each room has three devices, one Origin (receiver) and two Bots (transmitters). Again, repetition test and transition test may be performed according to the setup in FIG. 31 using multi-way sensing.

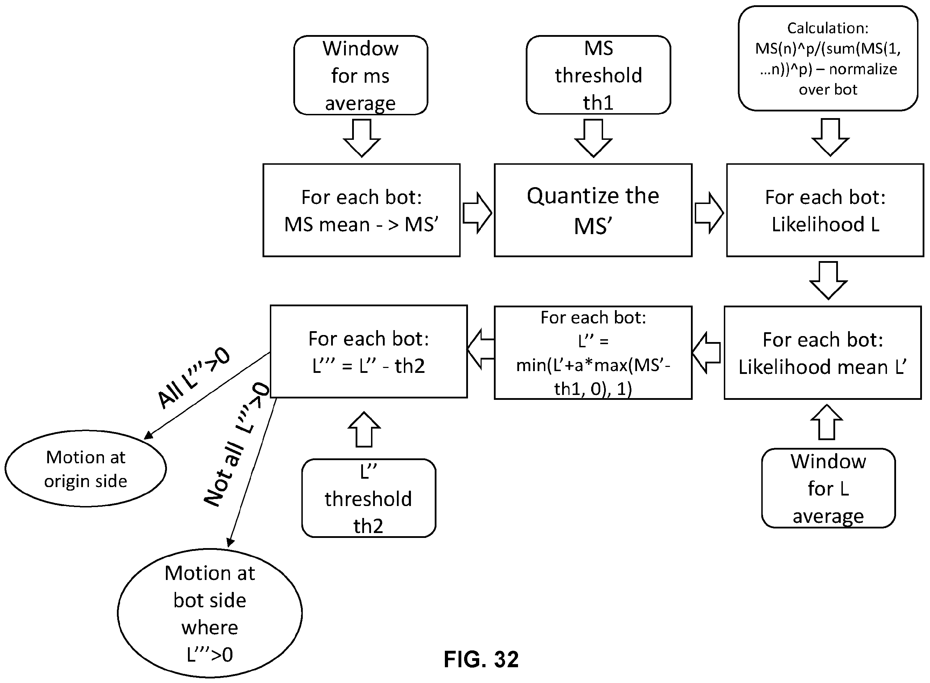

FIG. 32 illustrates an exemplary diagram showing an exemplary method for wireless sensing, according to some embodiments of the present disclosure. In some embodiments, as shown in FIG. 32, the system can calculate an average motion statistics (MS') for each bot, e.g. based on a first timing window; and then quantize the MS' based on MS threshold 1 (th1). The system can then compute a likelihood L for each bot based on the quantized MS'; and then calculate an average likelihood L' for each bot based on a second timing window. Then for each bot, the system may compute $L'' = \min(L' + a*\max(MS'-th1, 0), 1)$, and then compute $L''' = L'' - th2$, where th2 is a second threshold for L''. In some examples, all L''' are larger than 0, then the system can determine that a motion happened at the Origin side.

In other examples, not all L‴ are larger than 0, then the system can determine that a motion happened at the Bot side(s) where L‴ >0.

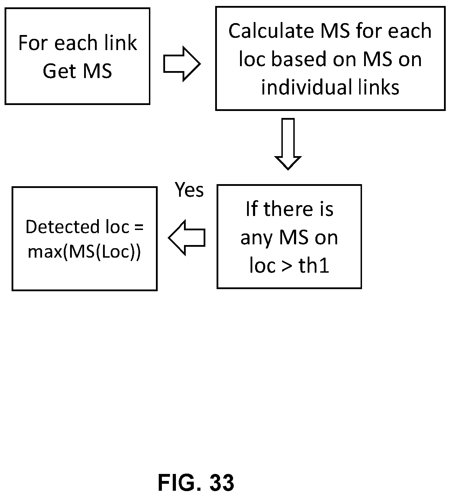

FIG. 33 illustrates an exemplary diagram showing an exemplary method for multi-way sensing, according to some embodiments of the present disclosure. An exemplary setup for the method shown in FIG. 33 is shown in FIG. 29, where a link is established between each pair of rooms 1, 2, 3, corresponding to locations loc1, loc2, loc3, respectively. As shown in FIG. 33, the system can obtain MS for each link. Then the system can calculate MS for each location based on MS on individual links. For example, ms(loc1) = ms(link12) + ms(link13) - ms(link23) = 0.5*(ms(1->2) + ms(2->1) + ms(1->3) + ms(3->1) - ms(2->3) - ms(3->2)); ms(loc2) = ms(link12) + ms(link23) - ms(link13) = 0.5*(ms(1->2) + ms(2->1) + ms(2->3) + ms(3->2) - ms(1->3) - ms(3->1)); ms(loc3) = ms(link13) + ms(link23) - ms(link12) = 0.5*(ms(1->3) + ms(3->1) + ms(2->3) + ms(3->2) - ms(1->2) - ms(2->1)). The links (link12, link23, link13) can be referred back to FIG. 29. The MS ms(X->Y) means an MS calculated based on a wireless signal transmitted from locX to locY.

When there is any MS on any location is larger than a first threshold (th1), a motion location (loc) is detected based on max(MS(Loc)), which is the location having maximum MS among all locations.

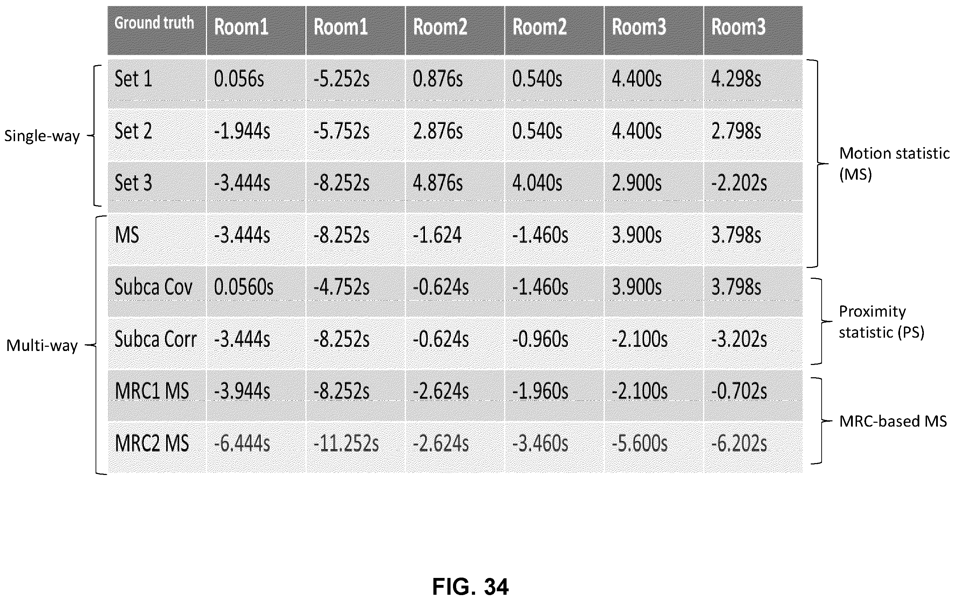

FIG. 34 illustrates an exemplary performance of response time for wireless sensing based on repetition test, according to some embodiments of the present disclosure. FIG. 34 shows MS for three sets of single-way structure and a multi-way structure, in different rooms. In addition, FIG. 34 shows proximity statistics (PS), e.g. an autocorrelation function (ACF) or autocovariance function of the CSI, at different rooms for multi-way structure. Further, FIG. 34 shows maximum ratio combining (MRC)-based MS at different rooms for multi-way structure.

In some embodiments, MRC is applied on motion statistics (not proximity statistics), as MRC selects subcarriers while proximity statistics relies on the continuity of the subcarriers. The MRC may be applied in two ways. MRC1: applying MRC on the link separately and average them to form a two-way link, e.g. applying MRC on loc1->loc2 and loc2->loc1, respectively and average them to form loc1<->loc2. MRC2: combining two links between two locations (e.g. loc1->loc2 and loc2->loc1) together and applying the MRC on all subcarriers, e.g. for each pair of Tx/Rx, there are 52 subcarriers and therefore, for loci <-> loc2, there are 104 subcarriers.

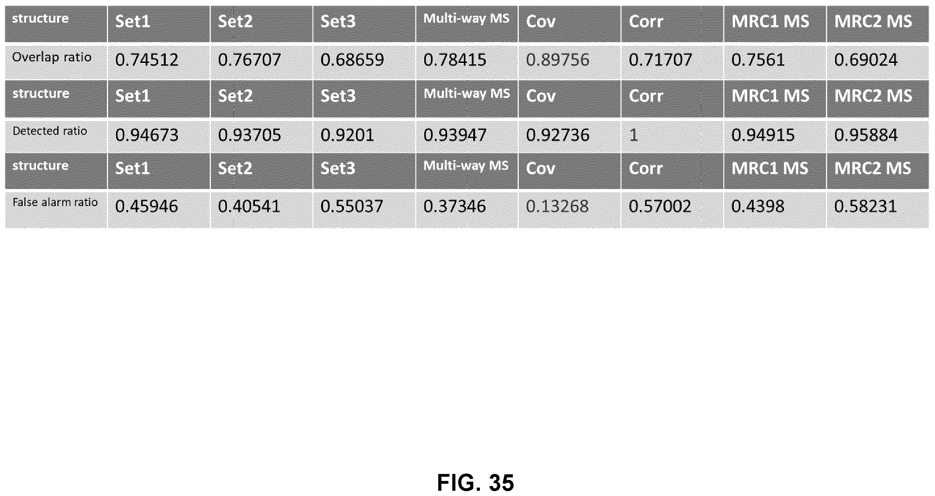

FIG. 35 illustrates an exemplary performance of various ratios for wireless sensing based on repetition test, according to some embodiments of the present disclosure. An overlap ratio is a ratio of the overlapped time with the ground truth. A detected ratio is a ratio of the correctly detected time to all positive time of ground truth. A false alarm ratio is a ratio of the wrongly detected time to all negative time of ground truth.

In some embodiments, another metric may be considered based on a ratio of dynamic signals, $X = \frac{|H_d|^2}{|H_d|^2 + |H_s|^2}$. To get the ratio of dynamic signals (x), the system can perform amplitude normalization and phase cleaning to get $H_d$ and $H_s$ first. When the moving object is closer, x is larger. Because window over time is not involved in the calculation, no window is applied.

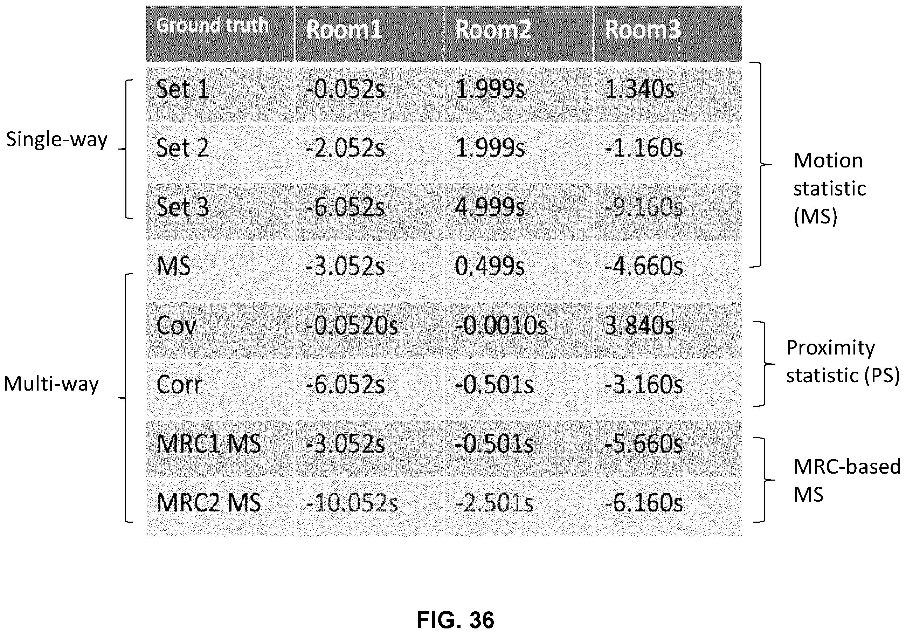

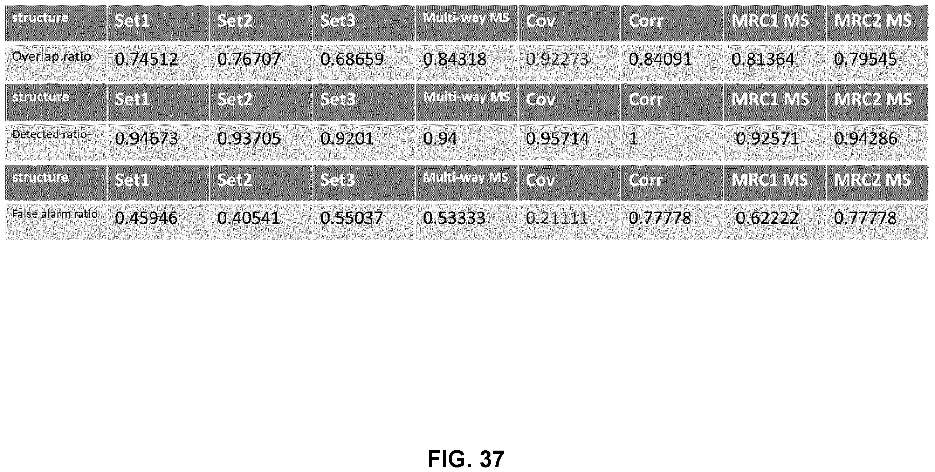

FIG. 36 illustrates an exemplary performance of response time for wireless sensing based on transition test, according to some embodiments of the present disclosure, with similar parameter definitions to FIG. 34. FIG. 37 illustrates an exemplary performance of various ratios for wireless sensing based on transition test, according to some embodiments of the present disclosure, with similar parameter definitions to in FIG. 35. In some embodiments, the system can put different weights to different evaluation metrics and get a final rank of the features. For example, consider detection delay (DD) (e.g. based on response time) and detection ratio (DR), if the DD is more important, then put 0.8 to the DD rank and 0.2 to the DR rank.

In some embodiments, in the system, a Type1 heterogeneous wireless device (wireless transmitter) may transmit a series of wireless sounding signals to a Type2 heterogeneous wireless device (wireless receiver). The Type1 device and the Type2 device form a device-link. The Type1 device may have M1 antennas. The Type2 device may have M2 antennas. The Type2 device may obtain a number (M3=M1*M2) of time series of channel information (CI, e.g. CSI, CFR, CIR, etc.) based on the received wireless sounding signals, each CI based on a respective received sounding signal. Each TSCI may be associated with an antenna-link (which may be the link between a transmit antenna of the Type1 device and a receive antenna of the Type2 device). There may be M antenna-links associated with the device-link. Each CI may have N components (e.g. N subcarriers for CFR or N taps for CIR). Each component (CI-component) may be a complex number.

Motion localization: The venue may be partitioned into a number of regions (e.g. living room, dining room, kitchen, bedroom 1, bedroom 2, bedroom 3, rest room 1, rest room 2, first floor, second floor, basement, garage, patio, deck, etc.). Motion localization is a wireless sensing task to determine, based on the TSCI, a location (i.e. one of the regions in the venue) in which the object motion is detected/associated with.

System setup: Zero, one or more than one Type1 heterogeneous wireless device (wireless transmitter, Tx, that sends wireless sounding signals to Type2 devices) or Type2 heterogeneous wireless device (wireless receiver, Rx, that receives wireless sounding signals from Type1 devices) may be present/installed in each of the regions. Each region may be associated with a device (Type1 or Type2) of the system.

A device (a sensing device of the system) may play the role of either or both the Type1 device and Type2 device. Between a pair of devices, wireless sounding signals may be sent (e.g. based on a protocol or standard such as 802.11, 802.11bf) either one-way (from Type1 device to Type2 device s.t. TSCI is obtained in the Type2 device) or two-way (i.e. from device A to device B and vice versa such that the resulting TSCI may be obtained in both devices).

Network configuration: In one case, most (or all) Type1 devices and/or Type2 devices may be non-AP devices associated/ connected to a wireless access point (AP) in a wireless network (infrastructure mode). The AP may be one of the Type1 or Type2 devices such that wireless sounding signals may be sent between AP and non-AP devices. Wireless sounding signals may also be sent between pairs of non-AP devices.

In another case, the Type1 and/or Type2 devices may be operating in non-infrastructure in an adhoc network/peer-to-peer network. Each device may function as Type1 device to transmit wireless sounding signals to neighboring associated/connected/linked devices or function as Type2 device to receive wireless sounding signals from the neighboring devices.

In some embodiments, each region in the venue is associated with a sensing device. The goal of motion localization is to find a location (region) associated with a detection of a target (e.g. detection of motion, detection of presence, detection of breathing, detection of fall-down, detection of sleeping, etc.).

In some embodiments, the present teaching discloses a basic algorithm to perform motion localization (to determine location of detected target).

In step 1 of the algorithm, for each device-link, compute a link-wise motion statistics (link-MS, or LMS). The link-MS may be a motion statistics (MS) for performing the detection of the target. For the device link, a large link-MS may suggest a larger likelihood/tendency that the target is detected. For simple target detection, if the system just wants to detect the target, all the LMS may be combined/fused/ aggregated to form an aggregate MS. The target may be detected if the aggregate MS is larger than a threshold. Here are a few forms of link-MS.

A first form of link-MS is TRRS with MRC. The link-MS may be a temporal correlation, temporal covariance, or dot product of two CI vectors. A CI vector comprises the components of CI (CI-components, e.g. components of CSI, subcarrier of CFR, taps of CIR) arranged in the form of a vector. The link-MS may be a TRRS (time reversal resonance strength). The two CIs may be two temporally adjacent CI. Component-wise temporal correlation, temporal covariance or the dot product may be computed. The link-MS may be a sum, weighted sum, average and/or weighted average of the component-wise values. Maximum ratio combining (MRC) may be applied, with each component weighted to compute the link-MS. The weight for a component may be based on a correlation or product of the component between two adjacent CI. The MRC may be applied in two ways: (1) for each antenna-link, a respective TSCI may be obtained. The MS may be computed for each antenna-link based on the respective TSCI. For each antenna link, the correlation, covariance, or dot product of two CI vectors may be computed with component-wise values weighted using MRC. Then all the correlation, covariance or dot products may be averaged (or weighted averaged). (2) All the antenna-links are considered together. All the component-wise values are considered together with MRC applied to all the component-wise values.

A second form of link-MS is likelihood. Let MS be the correlation, covariance, or dot product of two temporal adjacent CSI vectors. The MS may be averaged/smoothed over a sliding time window. The link-MS may be the smoothed MS. The link-MS may also be the MS gated with a threshold (e.g. being 1 if great than threshold and 0 (or -1) if less than threshold).

A third form of link-MS is a New metric. The link-MS may be a fraction of dynamic energy over the total energy. The total energy may comprise a dynamic component (dynamic energy) and a static component (static/stationary energy). The dynamic energy may be estimated as total energy minus an estimated static/stationary energy. The static/stationary energy may be estimated as a minimum energy over a long period of time, with some correction. The correction may be a scaling multiple or an additive offset or a combination. The dynamic/static energy estimate may be performed for each component of CSI. The component-wise dynamic/static energy estimates may be combined/aggregated (e.g. as a sum, weighted sum, average/arithmetic mean, weighted average, geometric mean, harmonic mean) to estimate the total dynamic/static energy. Maximum ratio combining (MRC) may be applied, with each component weighted to compute the total dynamic/static energy. The weight may be based on an estimated correlation between two adjacent CSI.

A fourth form of link-MS is intercomponent statistics. The link-MS may be an inter-component statistics. For example, correlation or covariance between any two components that are k index apart, i.e. the $i^{th}$ component and $(i+k)^{th}$ component, for all i. For example, inter-component correlation (k) may be sum_i [x(i)*x(i+k)]. Weighting may be applied such that the inter-component correlation (k) may be sum_i [w(i)* x(i)*x(i+k)]. The weight w(i) may be determined by MRC.

In step 2 of the algorithm, for each candidate location (candidate region), compute a respective location-wise motion statistics (loc-MS) based on ALL the link-MS. Here are some possible forms of loc-MS.

A first form of loc-MS is weighted sum. The loc-MS may be a weighted sum (linear combination) of all the link-MS, in which each link-MS may be scaled by a scalar multiplier (i.e. the weight may be a scalar multiplier).

A second form of loc-MS is weighted product. The loc-MS may also be a weighted product of all the link-MS, in which each link-MS may be raised to a power (i.e. the weight may be the power).

A third form of loc-MS is weighted sum of polynomial/power: The loc-MS may also be a weighted sum of a polynomial (e.g. x^p, or in general, f(x)=sum_i (a_i*x^i)) of each link-MS. Let ms(i) be the link-MS of i^{th} device-link. The loc-MS for i^{th} candidate location may be f(ms(i))/{sum_k f(ms(k))}. A special case is {ms(i)}^p/sum_k {ms(k)^p}. The loc-MS may be smoothed/weight-averaged over a sliding time window.

Weight determination based on neighborhood: For each device-link in a "neighborhood" of the candidate location, the weights of the associated link-MS in the loc-MS computation may be positive. For each device-link outside the "neighborhood" of the candidate location, the weights of the associated link-MS in the loc-MS computation may be negative. For example, the neighborhood may comprise all device-links "containing" the candidate location. A device-link may "contain" the candidate location if the sensing device associated with the candidate location is either the Type1 or Type2 device in the device link.

Weight determination based on distance: A "distance" may be defined between the candidate location and each device-link. The distance may be smaller when the device-link is "closer" to the candidate location. The distance may be larger when the device-link is farther away from the candidate location. Recall that the device-link connects/links two sensing devices, say A and B, together. The candidate location is associated with a device, say C. Let "distance A" may be a number (e.g. minimum number) of "hops" or device-links to be traversed before device A can reach device C wirelessly via device-links (e.g. in the adhoc network). Similarly, let "distance B" may be a number (e.g. minimum number) of "hops" or device-links to be traversed before device B can reach device C wirelessly via device-links. The distance between the candidate location and the device-link may be the smaller of distance A and distance B. A device-link with device C being one of the Type1 or Type2 devices may have a distance of zero.

Consider the "relative contribution" of two link-MS to the loc-MS of a particular candidate location. Their relative contribution may be their weights if the loc-MS is a linear combination (i.e. weighted sum) of all link-MS. The relative contribution may be their weights/powers if the loc-MS is a weighted product of all link-MS. The relative contribution of the link-MS whose associated device-link has a smaller distance (i.e. closer) to the candidate location may be larger than (e.g. more positive or less negative) than the relative contribution of the link-MS whose associated device-link has a larger distance to the candidate location.

In step 3 of the algorithm, target detection is performed. If any loc-MS is greater than a threshold, a target is detected. In step 4 of the algorithm, target location determination is performed. If the target is detected, the location of the target is computed as the candidate location associated the largest loc-MS. When there are multiple targets, for the remaining candidate locations, if any remaining loc-MS is greater than another threshold, a second target may be detected. The location of the second target may be computed as the remaining candidate location associated with the remaining largest loc-MS. The third, fourth, .. target may be detected in a similar manner.

Correction for heterogeneous device-links: As the device-links may be heterogeneous/different (e.g. each uses one of 20/40/80/160/320/640 MHz, or each with 1/2/3/4/6/8/10/12 antenna-pairs, some with sounding frequency being one of: 1/10/100/1000 Hz, etc.), a respective (e.g. tailored/adaptively determined) heterogeneous correction (e.g. a univariate correction, a multivariate correction, an additive offset, a scalar multiple, a linear or non-linear mapping/function, an adaptive non-linear function, filtering, frequency-based correction, temporal correction, or a combination) may be applied to each link-MS. The heterogeneous correction may or may not be integrated with the weighting in the loc-MS (i.e. the weights used in the weighted sum or weighted-products).

Missing link compensation: The wireless network may be an adhoc network. Let an ideal adhoc network be a fully connected network. In some situations, an actual adhoc network may be an ideal adhoc network. In more probable situations, an actual adhoc network may not be ideal, with some of the "ideal" device-links missing. Let a "missing link" be a device-link present in the ideal fully-connected network but missing in the actual adhoc network.

Recall that the weights for a link-MS for a loc-MS may be positive in a neighborhood and negative outside the neighborhood. To ensure that the loc-MS for different candidate locations may be compared properly for the determination of the location of the target, the missing links in the neighborhood may be compensated (missing link compensation) in one way and the missing links outside the neighborhood may be compensated in another way. One way to compensate a missing link may be to allocate its weight to the non-missing link of the same kind. For example, the weight for a missing link inside the neighborhood may be distributed (e.g. equally or unequally) among the non-missing links inside the neighborhood based on a strategy. The weight for a missing link outside the neighborhood may be distributed (e.g. equally or unequally) among the non-missing links outside the neighborhood based on another strategy. Alternatively, the weight for a missing link inside (or outside) the neighborhood may be distributed (e.g. equally or unequally based on a strategy) among the non-missing links outside and/or inside the neighborhood.

As the neighborhood for each candidate location is different. The collection of missing links inside (or outside) the neighborhood may be different. Thus the missing link compensation may be different for different candidate locations.

Two-way/multi-way sensing: For a device-link between two devices, say, device A and device B. Two sounding signals may be transmitted in both ways (from A to B, and from B to A), such that two TSCI may be obtained, one in device A and one in device B. The two TSCI (say, TSCI-1 and TSCI-2) may be averaged in the computation of link-MS associated with the device-link. If the sensing conditions/settings/ parameters of the two sounding signals are different. Two motion statistics, say, MS-1 and MS-2 may be computed, MS-1 based on TSCI-1 and MS-2 based on TSCI-2. The link-MS for this device-link may be a weighted average of MS-1 and MS-2. The weights may compensate, partially, for the difference between the two sounding signals.

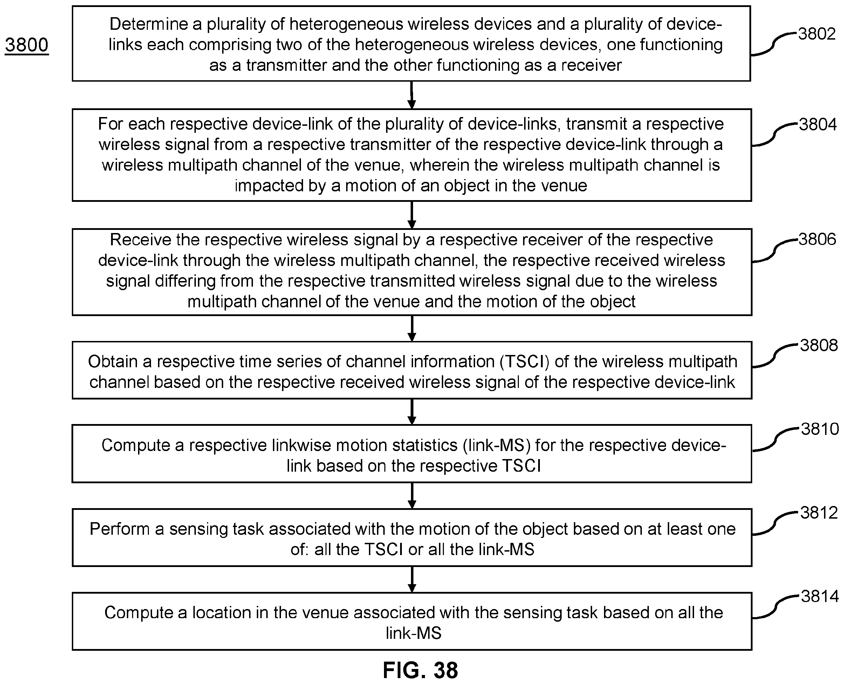

FIG. 38 illustrates a flow chart of an exemplary method 3800 for wireless sensing, according to some embodiments of the present disclosure. In various embodiments, the method 3800 can be performed by the systems disclosed above and herein. At operation 3802, a plurality of heterogeneous wireless devices are determined and a plurality of device-links each comprising two of the heterogeneous wireless devices are also determined. One of the two devices functions as a transmitter and the other one functions as a receiver. At operation 3804, for each respective device-link of the plurality of device-links, a respective wireless signal is transmitted from a respective transmitter of the respective device-link through a wireless multipath channel of the venue. The wireless multipath channel is impacted by a motion of an object in the venue. At operation 3806, the respective wireless signal is received by a respective receiver of the respective device-link through the wireless multipath channel. The respective received wireless signal differs from the respective transmitted wireless signal due to the wireless multipath channel of the venue and the motion of the object. At operation 3808, a respective time series of channel information (TSCI) of the wireless multipath channel is obtained based on the respective received wireless signal of the respective device-link. At operation 3810, a respective linkwise motion statistics (link-MS) is computed for the respective device-link based on the respective TSCI. At operation 3812, a sensing task associated with the motion of the object is performed based on at least one of: all the TSCI or all the link-MS. At operation 3814, a location in the venue associated with the sensing task is computed or determined based on all the link-MS. The order of the operations in FIG. 38 may be changed according to various embodiments of the present teaching.

In some embodiments, there may be more than one device-links (e.g. in a star network/configuration in infrastructure mode, or in an adhoc/peer-to-peer network in non-infrastructure mode). In each device-link, a device (Type1 device) sends a respective wireless signal to another device (Type2) so that TSCI is obtained in the another device. A device may be associated with more than one device-links. The device may function as Type1 device in one device-link and as Type2 device in another device-link. A link-MS may be computed for each device-link. A sensing task (e.g. breathing detection, motion estimation, fall down detection, gait detection, etc.) may be performed based on the more than one link-MS. A location associated with the sensing task may be computed based on the link-MS.

The following numbered clauses provide examples for wireless sensing.

Clause C1. A method/device/system/software of a wireless sensing system, comprising: determining a plurality of heterogeneous wireless devices of the wireless sensing system in a venue; determining a number of device-links, wherein each device-link comprises two of the heterogeneous wireless devices one functioning as a Type1 device (wireless transmitter) and the other one as a Type2 device (wireless receiver); transmitting a respective wireless signal from a respective Type1 device of each device-link through a wireless multipath channel of a venue, wherein the wireless multipath channel is impacted by a motion of an object in the venue; receiving the respective wireless signal by a respective Type2 device of the respective device-link through the wireless multipath channel, wherein the respective received wireless signal differs from the respective transmitted wireless signal due to the wireless multipath channel of the venue and the motion of the object; obtaining a respective time series of channel information (TSCI) of the wireless multipath channel based on the respective received wireless signal of the respective device-link using a respective processor, a respective memory and a respective set of instructions; computing a respective linkwise motion statistics (link-MS) for the respective device-link based on the respective TSCI; performing a sensing task associated with the motion of the object based on at least one of: all the TSCI or all the link-MS; computing a location in the venue associated with the sensing task based on all the link-MS.

Clause C2. The method/device/system/software of the wireless sensing system of clause C1, comprising: wherein the sensing task comprises at least one of: a detection of the motion of the object, a detection of a motion sequence of the object, a monitoring of the motion of the object, a classification of the motion of the object, a detection of a presence, an absence, an entrance or a departure of the object, a detection of a target motion of the object, a monitoring of a location, a speed or an acceleration of the object, a detection of a fall of the object, a detection of a periodic motion of the object, a detection of a breathing of the object, a detection of a heartbeat of the object, a monitoring of the breathing of the object, a detection of a sleep of the object, a detection of a sleep state of the object, a detection of a rapid-eye-motion (REM), non-REM (NREM), or awake state of the object, a monitoring of the sleep of the object, a detection of a speech, an utterance or a sound of the object, a monitoring of the speech, the utterance or the sound of the object, an enhancement of the speech, the utterance or the sound of the object, a detection of a gait of the object, a detection of a walking of the object, a detection of a gesture of the object, a detection of a handwriting of the object, a counting of the object, a detection of a user input of the object. Some possible link-MS. Different sensing task may require different link-MS.

Clause C3. The method/device/system/software of the wireless sensing system of clause C1 or C2, comprising: wherein the link-MS computed based on a respective TSCI comprises at least one of: time reversal resonating strength (TRRS), feature, magnitude, phase, power, mean, moving average, median, mode, statistical characteristics, variance, standard deviation, variation, derivative, slope, total variation, absolute variation, square variation, spread, dispersion, variability, deviation, divergence, range, skewness, kurtosis, likelihood, entropy, regularity, similarity, probability distribution function, moment generating function, correlation, cross correlation, auto-correlation, correlation indicator, correlation coefficient, component-wise correlation, a feature of autocorrelation function (ACF), covariance, cross covariance, auto-covariance, component-wise covariance, inner product of two vectors, outer product, dot product, projection, similarity score, distance score, Euclidean distance, absolute distance, graph distance, discrimination score, norm, metric, quality metric, signal quality condition, periodicity, repeatedness, impulsiveness, change, recurrence, period, time, duration, timing, time trend, rhythm, frequency, spectrum, total energy, static energy, temporal minimum of total energy, temporal minimum of total energy with a correction, dynamic energy, difference of total energy and static energy.

Clause C4. The method/device/system/software of the wireless sensing system of clauses C1 to C3, comprising: preprocessing the respective TSCI; smoothing the respective link-MS over time based on a smoothing filter.

Perform correction to a link-MS (e.g. add an offset of the link-MS, scale the link-MS by a multiplying factor, adjust the weight of the link-MS in the computation of loc-MS, etc.). It may be a correction to account for heterogeneous characteristics experienced in device-links (e.g. different bandwidth, different antenna characteristics, different gain setting, different hardware/ software/firmware, different wireless hardware/module/chip/IC, different interference exposure, different noise level, etc.).

Clause C5. The method/device/system/software of the wireless sensing system of clauses C1 to C4, comprising: applying a correction to a particular link-MS associated with a particular device-link based on a characteristics of the Type1 device, the Type2 device and the wireless signal associated with the particular device-link.

Clause C6. The method/device/system/software of the wireless sensing system of clauses C1 to C5, comprising: wherein the correction is at least one of: pre-determined, or adaptively determined.

A link-MS may be computed by aggregating (e.g. weighted sum, average, trimmed mean, root mean square, weighted product, etc.) multiple candidate link-MS. Each candidate link-MS may be computed based on a respective TSCI.

Clause C7. The method/device/system/software of the wireless sensing system of clauses C1 to C6, comprising: wherein at least one of: a particular Type1 device and a particular Type2 device, associated with a particular device-link comprises more than one antennas; obtaining more than one particular TSCI of the wireless multipath channel based on a particular received wireless signal of the particular device-link; computing more than one candidate link-MS based on the more than one respective particular TSCI, each candidate link-MS based on a respective particular TSCI; aggregating the more than one candidate link-MS to compute a particular link-MS associated with the particular device-link.

Each CI may have more than one components (e.g. sub-carriers in CFR, taps in CIR) Candidate/component link-MS may be computed based on the more than one components. One component/candidate link-MS may be computed based on one component, or two or more components. The component link-MS may be an inter-component statistics. E.g. correlation between two components (with component index difference of 1, 2, 3, ..., etc.). A link-MS may be computed by aggregating (e.g. weighted sum, average, trimmed mean, root mean square, weighted product, etc.) multiple component/candidate link-MS.

Clause C8. The method/device/system/software of the wireless sensing system of clauses C1 to C7, comprising: wherein each channel information (CI) of a particular TSCI associated with a particular device-link comprises more than one components; computing more than one candidate link-MS based on the more than one components of the CI of the particular TSCI; aggregating the more than one candidate link-MS to compute a particular link-MS for the particular device-link based on the particular TSCI.

Clause C9. The method/device/system/software of the wireless sensing system of clauses C1 to C8, comprising: obtaining more than one particular TSCI of the wireless multipath channel based on a particular received wireless signal of a particular device-link, wherein each channel information (CI) of each particular TSCI comprises more than one components; for each of the more than one particular TSCI: computing more than one respective component link-MS based on the more than one components of the CI of the respective particular TSCI, and aggregating the more than one respective component link-MS to compute a respective candidate link-MS for the particular device-link; aggregating the more than one candidate link-MS to compute a particular link-MS associated with the particular device-link.

When combining the component/candidate link-MS, MRC may be used.

Clause C10. The method/device/system/software of the wireless sensing system of clauses C1 to C9, comprising: aggregating the more than one candidate link-MS based on a maximum ratio combining (MRC).

Venue may be partitioned/divided into more than one regions. The regions may/may not be overlapping. The location may be an indication of which region the sensing task is detected.

Clause C11. The method/device/system/software of the wireless sensing system of clauses C1 to C10, comprising: partitioning the venue into a plurality of regions, wherein each region is a candidate location associated with the sensing task; associating each region with one of the heterogeneous wireless devices; computing the location associated with the sensing task as one of the plurality of candidate locations.

Compute location-wise MS (loc-MS) for each candidate location based on the link-MS.

Clause C12. The method/device/system/software of the wireless sensing system of clauses C1 to C11, comprising: computing a respective location-wise motion statistics (loc-MS) for each candidate location based on all the link-MS; computing the location based on all the loc-MS.

Compute location as the candidate location with largest loc-MS.

Clause C13. The method/device/system/software of the wireless sensing system of clauses C1 to C12, comprising: comparing a measure of the plurality of loc-MS; detecting a target associated with the sensing task if at least one loc-MS has a measure greater than a threshold.

Compute location as the candidate location with largest loc-MS.

Clause C14. The method/device/system/software of the wireless sensing system of clauses C1 to C13, comprising: computing the location of the target as a candidate location whose loc-MS has the measure being a maximum among the plurality of loc-MS.

Compute location as the candidate location with largest loc-MS.

Clause C15. The method/device/system/software of the wireless sensing system of clauses C1 to C14, comprising: removing the location of the target from the plurality of candidate locations; detecting a second target associated with the sensing task if at least one loc-MS associated with the remaining candidate locations has a measure greater than a second threshold; computing a second location of the second target as one of the remaining candidate location whose loc-MS has the measure being a maximum among the plurality of loc-MS.

Clause C16. The method/device/system/software of the wireless sensing system of clauses C1 to C15, comprising: wherein the loc-MS comprises at least one of: a sum, a weighted sum, a product, a weighted product, an average, a weighted average, a difference, a weighted difference, a linear combination, a mean, a truncated mean, a trimmed mean, an inter-quartile mean, a weighted mean, an arithmetic mean, a geometric mean, a harmonic mean, an arithmetic-geometric mean, an arithmetic-harmonic mean, a Cesaro mean, a Chisini mean, a contraharmonic mean, an elementary symmetric mean, a geometric-harmonic mean, a grand mean, a Heinz mean, a Heronian mean, an Identric mean, a Lehmer mean, a logarithmic mean, a moving average, a Neuman-Sandor mean, a quasi-arithmetic mean, a Renyi's entropy, a generalized f-mean, a spherical mean, a Stolarsky mean, a weighted arithmetic mean, a weighted geometric mean, a weighted harmonic mean, a median, a weighted median, a mode, a weighted mode, a weighted sum of a function, a weighted product of the function, a weighted average of the function, a weighted mean of the function, a weighted arithmetic mean of the function, a weighted geometric mean of the function, a weighted harmonic mean of the function, a root mean square, a quadratic mean, or a weighted root mean square, of all the link-MS;

Possible functions for the definitions of loc-MS.

Clause C17. The method/device/system/software of the wireless sensing system of clauses C1 to C16, comprising: wherein the function comprises at least one of: a linear function, a piecewise linear function, a nonlinear function, a recursive function, a quadratic function, a polynomial function, a rational function, an algebraic function, an elementary function, a logarithm function, a root function, an exponential function, a trigonometric function, a hyperbola function, an inverse function, a continuous function, a differentiable function, an analytic function, a factorial function, a thresholding function, an indicator function, a constant function, a projection function a composite function, a function of a function, a univariate function, a bivariate function, a multivariate function, a special function, a complementary function, an error function, a Bessel function, a gamma function, a series, a Taylor series, a Fourier series, a polynomial series, a hyper-geometric series, a distribution function, a cumulative distribution function, a normal distribution, a likelihood function, a sampling function, a quantization function, a monotonic function, a monotonic non-increasing function, or a monotonic non-decreasing function.

The loc-MS may be a weighted quantity (weighted sum, weighted product, etc.). Partition all device-links into two groups (e.g. one with positive weights, one with negative weights). Weights for Group 1 may be larger than weights for Group 2. Weights for Group 1 may all be equal. Weights for Group 2 may all be equal. For different candidate location, the partitioning may be different.

Clause C18. The method/device/system/software of the wireless sensing system of clauses C1 to C17, comprising: wherein the loc-MS comprises one of: a weighted sum of all the link-MS, a weighted sum of a function of each link-MS, a weighted product of all the link-MS, or a weighted product of a function of each link-MS; wherein, in the weighted sum, each link-MS or the function of each link-MS is scaled by a respective weight; wherein, in the weighted product, each link-MS or the function of each link-MS is raised to a respective weighted power; for a particular candidate location associated with a particular heterogeneous wireless device: partitioning all the device-links into a first group and a second group, and computing the loc-MS for the particular candidate location such that the weight for each link-MS associated with the first group in the weighted sum is greater than the weight for any link-MS associated with the second group.

Positive weight for Group 1. Negative weight for Group 2.

Clause C19. The method/device/system/software of the wireless sensing system of clauses C1 to C18, comprising: for the particular candidate location: computing the loc-MS for the particular candidate location with a positive weight for each link-MS associated with the first group and a negative weight for each link-MS associated with the second group.

Distance-1 device-links may be in Group 1. The other device-links may be in Group 2.

Clause C20. The method/device/system/software of the wireless sensing system of clauses C1 to C19, comprising: wherein the first group comprises any device-link of which one of the Type1 device or the Type2 device is the particular heterogeneous wireless device.

Distance-1 and Distance-2 device-links may be in Group 1. The other device-links may be in Group 2.

Clause C21. The method/device/system/software of the wireless sensing system of clauses C1 to C20, comprising: wherein the first group comprises any distance-1 device-link for the particular candidate location, which is a device-link of which one of the Type1 device and the Type2 device is the particular heterogeneous wireless device, and the other one of the Type1 device and the Type2 device is considered a distance-1 device for the particular candidate location; wherein the first group further comprises any distance-2 device-link for the particular candidate location, which is an additional device link of which one of the Type1 device and the Type2 device is a distance-1 device for the particular candidate location, and the other one of the Type1 device and the Type2 device is considered a distance-2 device for the particular candidate location.

Distance-1 devices may have larger weights than distance-2 devices. Distance-1 devices may be closer to the particular candidate location than the distance-2 devices.

Clause C22. The method/device/system/software of the wireless sensing system of clauses C1 to C21, comprising: wherein the weight for a distance-1 device-link is greater than or equal to the weight for a distance-2 device link.

Group 1 devices may have recursively more distance-k device-links. The other device-links may be in Group 2.

Clause C23. The method/device/system/software of the wireless sensing system of clauses C1 to C22, comprising: wherein the first group further recursively comprises any additional device-link of which one of the Type1 device and the Type2 device is a distance-k device for the particular candidate location, and the other one of the Type1 device and the Type2 device is considered a distance-(k+1) device for the particular candidate location.

Distance-k devices may have larger weights than distance-(k+1) devices. Distance-k devices may be closer to the particular candidate location than the distance-(k+1) devices.

Clause C24. The method/device/system/software of the wireless sensing system of clauses C1 to C23, comprising: wherein the weight for a distance-k device-link is greater than or equal to the weight for a distance-(k+1) device link.

The device-links may be partitioned into 3 groups: one group with positive weights, one group with negative weights, one group with zero weights.

Clause C25. The method/device/system/software of the wireless sensing system of clauses C1 to C24, comprising: for the particular candidate location: partitioning all the device-links into a first group, a second group, and a third group, computing the loc-MS for the particular candidate location such that: the weight for each link-MS associated with the first group in the weighted sum is greater than the weight for any link-MS associated with the second group and the third group, and the weight for each link-MS associated with the third group in the weighted sum is greater than the weight for any link-MS associated with the second group.

Clause C26. The method/device/system/software of the wireless sensing system of clauses C1 to C25, comprising: for the particular candidate location: computing the loc-MS for the particular candidate location with a positive weight for each link-MS associated with the first group, a negative weight for each link-MS associated with the second group, and a zero weight for each link-MS associated with the third group.

For a particular link with two-way sounding (wireless signal sent from A to B, and also from B to A), there may be two device-links. The weights for the two associated link-MS may/may not be identical in the computation of loc-MS. The two respective link-MS may be aggregated (e.g. average, weighted average, root mean square, geometric mean, weighted geometric mean) to avoid double counting.

Clause C27. The method/device/system/software of the wireless sensing system of clauses C1 to C26, comprising: wherein two device-links are associated with two particular heterogeneous wireless devices such that wireless signals are sent both ways, and TSCI are obtained at both devices; wherein the two link-MS associated with the two device-links have identical weights in the computation of the loc-MS for the particular candidate location.

The two respective link-MS may be replaced by an aggregate of the two link-MS (e.g. average, weighted average, root mean square, geometric mean, weighted geometric mean) to avoid double counting.

Clause C28. The method/device/system/software of the wireless sensing system of clauses C1 to C27, comprising: replacing the two link-MS by a single link-MS which is equal to an aggregation of the two link-MS in the computation of the loc-MS for the particular candidate location.

Clause C29. The method/device/system/software of the wireless sensing system of clauses C1 to C28, comprising: comparing a first collection of all the device-links in the system with a second collection of all possible device-links in a fully-connected configuration of the plurality of heterogeneous wireless devices; determining at least one missing device-link which is a device-link present in the second collection but absent in the first collection; applying a correction to the weights of the device-links in the first collection in the computation of the loc-MS, based on a hypothetical weight for each missing device-link.

Clause C30. The method/device/system/software of the wireless sensing system of clauses C1 to C29, comprising: partitioning the second collection of all possible device-links into an extended first group and an extended second group, wherein the first group is a subset of the extended first group and the second group is a subset of the extended second group; applying the correction associated with a first missing device-link in the extended first group by distributing the hypothetical weight of the first missing device-link to the device-links in the first group; applying the correction associated with a second missing device-link in the extended second group by distributing the hypothetical weight of the second missing device-link to the device-links in the second group.

In some embodiments, systems and methods are disclosed for monitoring activity of daily living (ADL) with wireless sensing. With wireless sensing, the system can detect a person's motion and the location of the motion; and based on such information, can infer his/her activity. In some embodiments, for a system with 1 Origin and N Bots, an exemplary algorithm including the following steps for monitoring activity of daily living is described as follows.

At Step 1: based on CSI time series of all Origin-Bot pairs, and each time instance t and each bot i, calculate the motion statistics $MS(t,i)$, micro motion statistics $MM(t,i)$ and breathing rates $BR(t,i)$.

At Step 2: perform motion and breathing detection based on values obtained from Step 1. As a person's motion can be strong or weak, or even so weak that only his breathing can be detected, multiple features may be considered. For example, from (macro) motion detection, one can sense relatively strong motion; from micro motion statistics, one can sense medium/low motion; and from breathing detection, one can infer the existence of a stationary person with little motion. The input of the algorithm may include: $MS(t,i)$, $MM(t,i)$, and $BR(t,i)$. The output may be the motion location and motion level, denoted as [Loc, Level]. Since motion near Origin can result in non-negative $MS(t,i)$ for more than one Bots, and there may be no motion, the vector of Loc or Level has a dimension of N+2. This step may include sub-steps S2a-S2c.

At Step S2a: if $MS(t,i)>=Th0$ for at least one hot i, then perform motion detection and localization. If there is one person in the monitored area, then the system may decide the person is close to hot i* or in the region associated with bot i*, if $MS(t,i*)$ is the largest among all $\{MS(t,j)\}$, j = 1, 2... N. If $MS(t,i)>=Th0$ holds for more than N/2 Bots, then the motion is close to the Origin. Besides motion location, the system can also define motion level as a function of the $MS(t,i)$, which can reflect the strength of the person's motion. For instance, strong/medium/low motion corresponds to MS in [0.7, 1], [0.45, 0.7), [0.2, 0.45], respectively.

At Step S2b: if $MS(t,i)<Th0$ for all the N Bots, then perform micro motion detection and localization. One way to define micro motion statistics $MM(t,i)$ is described in Appendix V about micro motion (MM). If $MM(t,i)>=Th1$, then micro motion is detected, meaning a person is close to hot i or in the region associated with hot i. MM also reflects the strength of a person's mild motion and motion level can be similarly defined as in step S2a, maybe with different threshold values.

At Step S2c: if $MM(t,i) <Th1$ for all the N Bots, meaning the monitored area is stationary with little motion, then perform breathing detection and localization. $BR(t,i)$ denotes the breathing rate estimates based on a breathing estimation method. If $BR(t,i)$ is within [BR_min,BR_max], which means human respiration rate range, then a person is detected in the region associated with Bot i. Similar to motion level, the system may define breathing level as the "heavy" or "light", which reflects the breathing strength or stationariness. Breathing level depends on the time ratio during which breathing can be detected in a time window. For example, if in a 10 second window, breathing is detected for more than 5 seconds, then the breathing level is "high"; otherwise "low". State machine based on heuristics or Markov chain modeling may be introduced to improve the robustness of the activity monitoring. For example, in a one-person case, it is highly unlikely that at t, $BR(t,i)$ is within [BR_min,BR_max], and at t+1, $BR(t+1,j)$ is within [BR_min,BR_max], and j is not equal to I, without motion detected in between t and t+1.

At Step 3: the outputs of Step 2 are the motion locations and levels, which can be denoted as (Loc, level) or (0, 0). If in each sample, the method outputs the detection results, due to hardware imperfection or dynamics of propagation, the outputs may be noisy and cannot reflect true continuous activity. A possible way to eliminate the non-continuous activity is to add activity location detection and level estimation to smooth the results. For example, out of every 30 second window, a state change on (Loc, Level) keeps for at least 5 consecutive seconds, then the system can treat it as a real change in the monitored area; otherwise, the state will not be changed.

To improve the accuracy, a state machine can be defined, and less-possible transitions can be filtered. For example, using the following notations: B: breathing, N: no signal, MM: micro motion, the following transitions between various states in two adjacent time slots are less likely to happen: (loc_i, B) -> (no_loc, N); (loc_i, B) -> (loc_j, B); (loc_i, B) -> (locj, MM); (loc_i, MM) -> (loc_j, MM); (loc_i, MM) -> (loc_j, B); (loc_i, M) -> (loc_j, B), where loc_i and loc_j denote location i and location j, respectively.

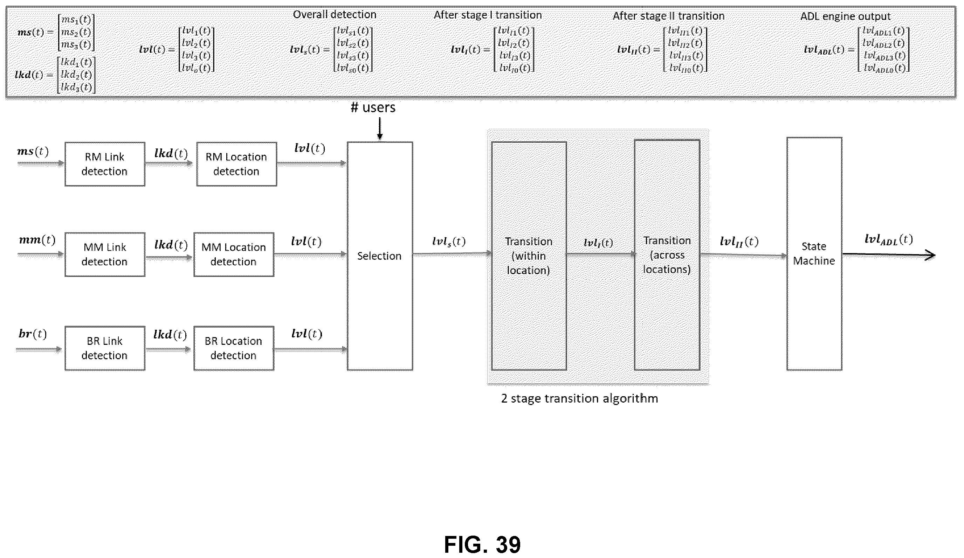

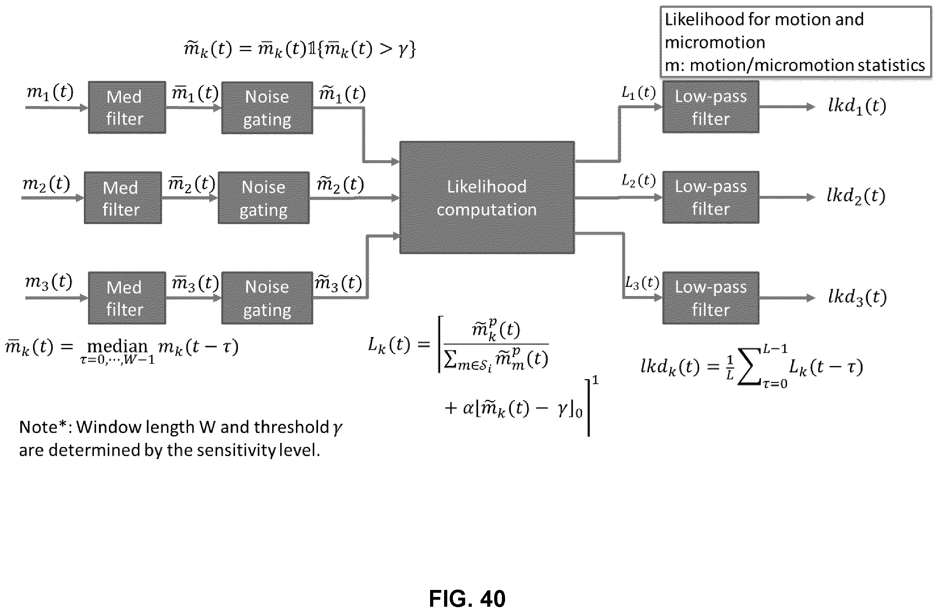

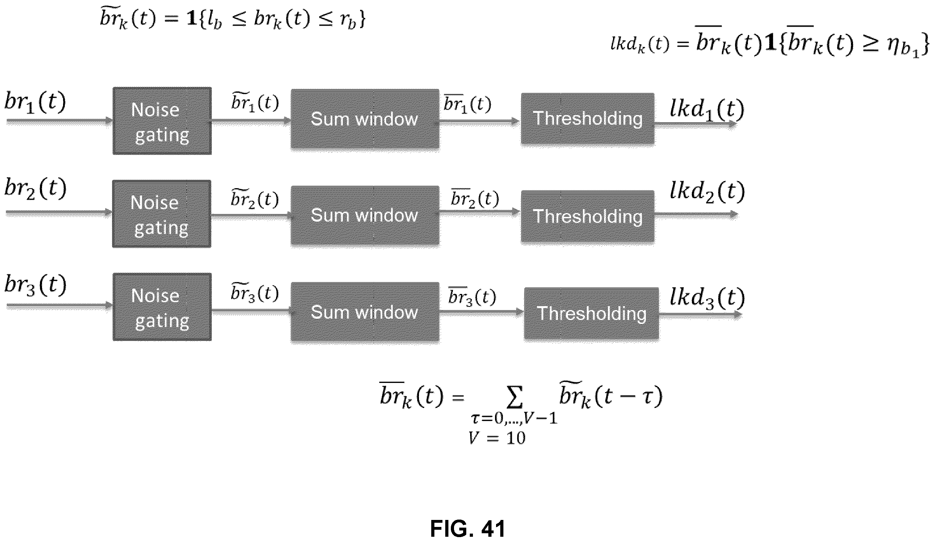

FIG. 39 illustrates an exemplary overview of an ADL (activity of daily living) fusion engine for wireless sensing, assuming there are 3 Bots and 1 Origin used for wireless sensing. FIGS. 40-41 illustrate exemplary diagrams for link detection of an ADL-based wireless sensing system, according to some embodiments of the present disclosure. FIG. 40 shows operation of regular motion (RM) and micro motion (MM) link detection. FIG. 41 shows operation of breathing (BR) link detection.

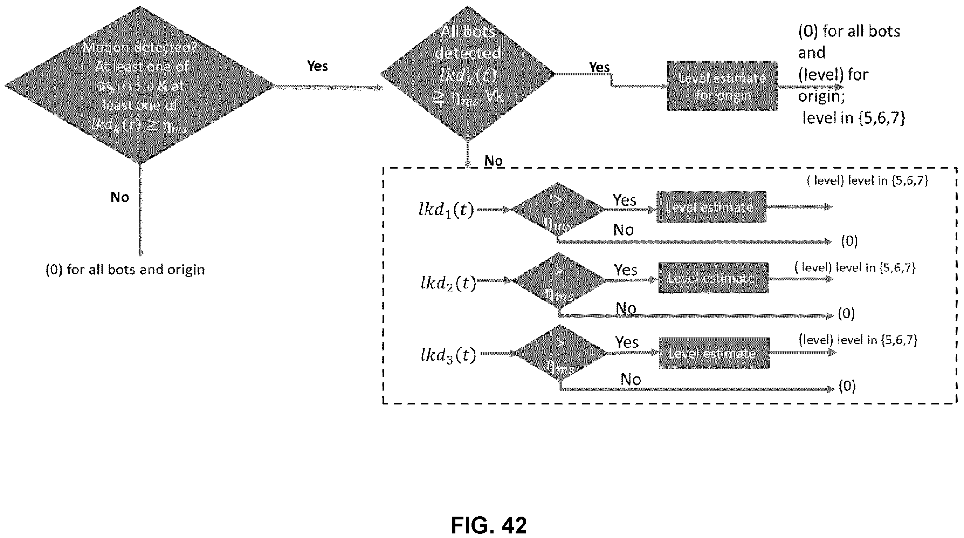

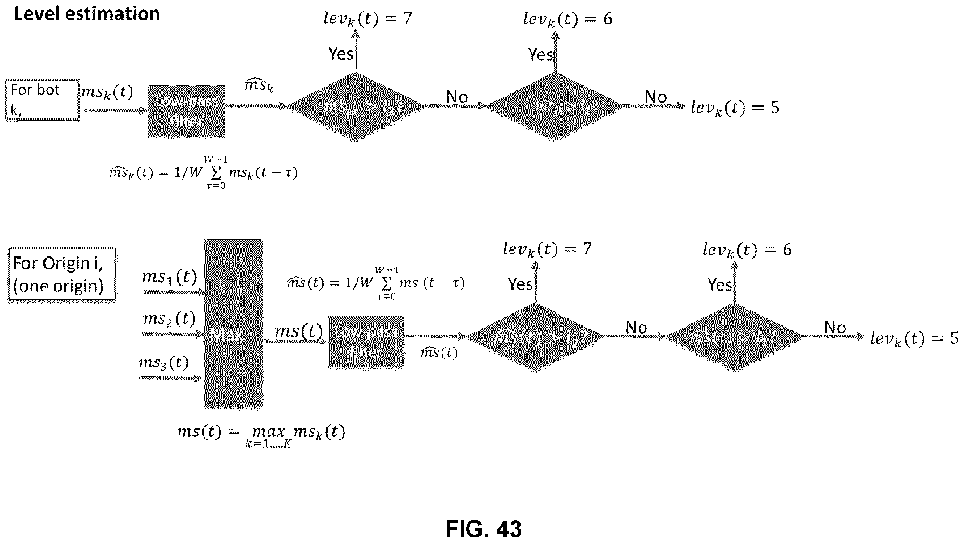

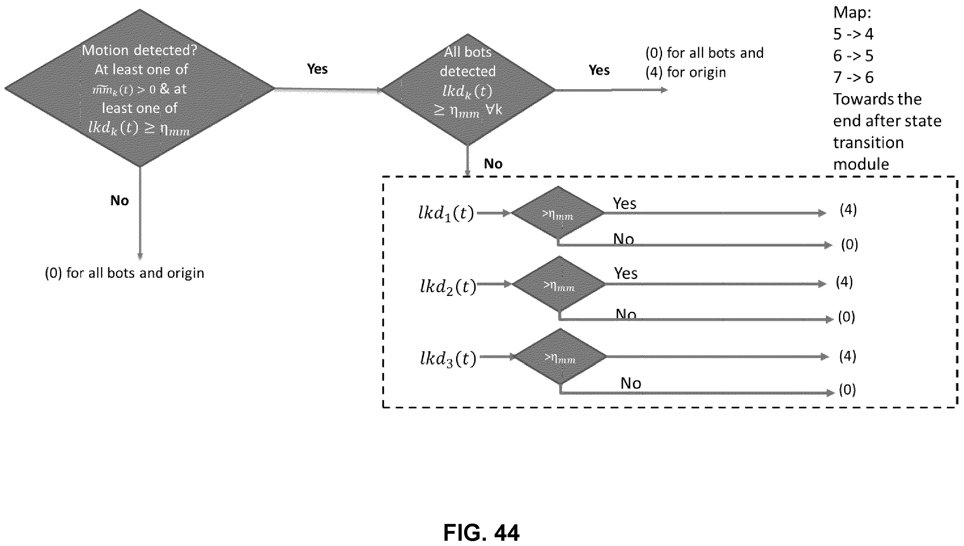

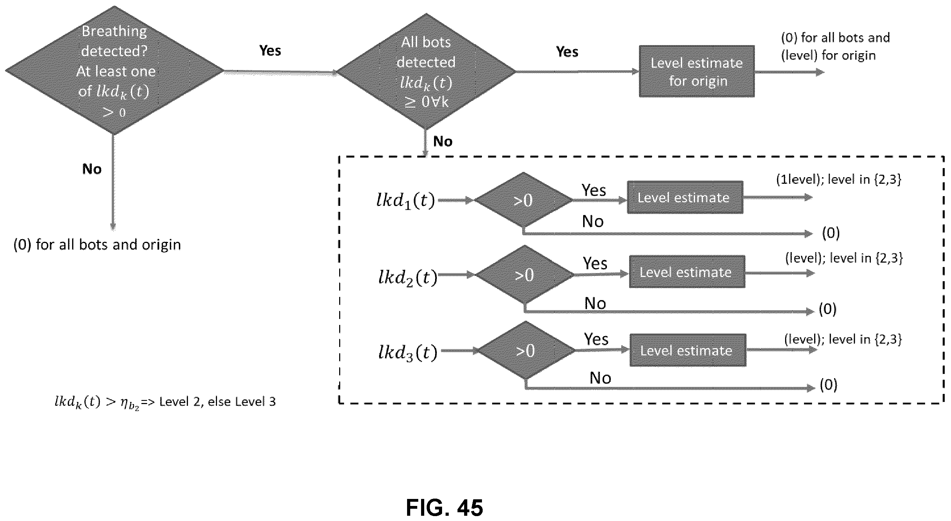

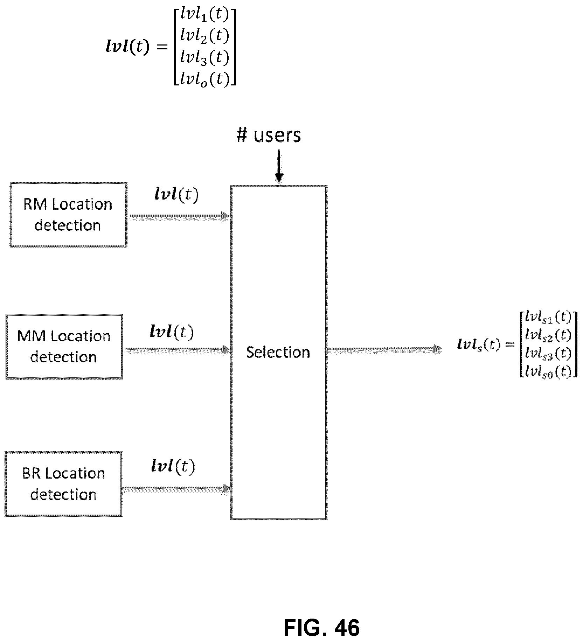

FIGS. 42-45 illustrate exemplary diagrams for location detection of an ADL-based wireless sensing system, according to some embodiments of the present disclosure. FIGS. 42-43 show operation of RM location detection. FIG. 44 shows operation of MM location detection. FIG. 45 shows operation of BR location detection. FIG. 46 illustrates an exemplary diagram for selection operation of an ADL-based wireless sensing system, according to some embodiments of the present disclosure.

In some embodiments, the present teaching discloses a wireless sensing system that computes a location of and/or a motion of an object in a venue based on TSCI captured in more than one device-links arranged in a star configuration. For example, the center device may be an AP in a WiFi network, or a base station in a mobile communication (e.g. 4G/5G/6G/7G/8G).

In some embodiments, N1+1 wireless devices may form a star configuration in the system, with N1 device-links. Each device-link links two devices wirelessly, with one being Type1 device (transmitter) and the other one being receiver. The device at the center of the star configuration (central device) may function as Type1 in some device-links and function as Type2 in other device-links.

For each of the N1 device-link, the Type1 device sends a wireless signal (sounding signal) to the Type2 device. A TSCI is obtained at the Type2 device. A link-MS may be computed based on the TSCI. The link-MS may be computed locally in the Type2 device, or non-locally in another, or remotely. The link-MS may be transmitted to another of the N1+1 device (e.g. central device), another device, a local server, or a cloud server. Or the TSCI may be reported to the Type1 device (e.g. central device, based on 11bf) and the link-MS may be computed non-locally in the Type1 device. A location of the motion of the object in the venue may be determined based on the N1 link-MS.

The following numbered clauses provide additional examples for wireless sensing.

Clause D1. A method/device/system/software of a wireless sensing system, comprising: configuring N1+1 heterogeneous wireless devices of the wireless sensing system in a venue to form N1 device-links in a star configuration, wherein each device-link comprises two of the devices linked wirelessly, one functioning as a Type1 device (wireless transmitter) and the other one as a Type2 device (wireless receiver), wherein one device is at the central position of the star configuration being in all the N device-links, while each of the remaining N1 devices is at non-central position of the star configuration being linked wirelessly to the central device in one of the N1 device-links, wherein N1>1; transmitting N1 wireless signals through a wireless multipath channel of the venue, with the respective wireless signal transmitted from a respective Type1 device of a respective device-link, wherein the wireless multipath channel is impacted by a motion of an object in the venue; receiving the N1 wireless signals through the wireless multipath channel, with the respective wireless signal received by a respective Type2 device of the respective device-link, wherein the respective received wireless signal differs from the respective transmitted wireless signal due to the wireless multipath channel of the venue and the motion of the object; obtaining N1 time series of channel information (TSCI) of the wireless multipath channel based on the N1 received wireless signals, with the respective TSCI based on the respective received wireless signal of the respective device-link using a respective processor, a respective memory and a respective set of instructions; computing N1 linkwise motion statistics (link-MS) associated with the N1 device-links based on the N1 TSCI, with the respective link-MS associated with the respective device-link computed based on the respective TSCI; computing a location associated with the object based on the N1 link-MS.

The venue may be partitioned into N1+1 regions based on the wireless devices. Each wireless device is associated with a region. The location of the motion of the object in the venue may be computed as any one of the N1+1 regions (which are called "candidate locations") based on the link-MS.

Clause D2. The method/device/system/software of the wireless sensing system of Clause D1, comprising: partitioning the venue into N1+1 regions, wherein each region is a candidate location associated with the object; associating the N1+1 regions with the N1+1 devices, each region with a respective device; computing the location as one of the N1+1 candidate locations based on the N1 link-MS.

Possible link-MS. The link-MS may contain one, or two, or three, or more of these. The link-MS may include 3 items: a motion statistics (TRRS, or a temporal correlation of CI (or a feature of CI), or inner product of two CI vectors (or two vectors of CI features), or a large motion statistics), a micro-motion statistics (a component-wise correlation of CI (or CI feature) aggregated using averaging or weighted averaging, possibly with MRC), a breathing statistics (computed based on a characteristic feature of autocorrelation function of CI). The characteristic feature may be a local maximum.

Clause D3. The method/device/system/software of the wireless sensing system of Clause D1 or D2, comprising: wherein each channel information (CI) of a respective TSCI comprises at least one component; wherein a set of link-MS comprises at least one of: motion statistics, large-motion statistics, micro-motion statistics, component-wise motion statistics, breathing statistics, time reversal resonating strength (TRRS), feature, magnitude, phase, power, mean, moving average, median, mode, statistical characteristics, variance, standard deviation, variation, derivative, slope, total variation, absolute variation, square variation, spread, dispersion, variability, deviation, divergence, range, skewness, kurtosis, likelihood, entropy, regularity, similarity, probability distribution function, moment generating function, correlation, cross correlation, auto-correlation, correlation indicator, correlation coefficient, component-wise correlation, a feature of auto-correlation function (ACF), covariance, cross covariance, auto-covariance, component-wise covariance, inner product of two vectors, outer product, dot product, projection, similarity score, distance score, Euclidean distance, absolute distance, graph distance, discrimination score, norm, metric, quality metric, signal quality condition, periodicity, repeatedness, impulsiveness, change, recurrence, period, time, duration, timing, time trend, rhythm, frequency, spectrum, total energy, static energy, temporal minimum of total energy, temporal minimum of total energy with a correction, dynamic energy, difference of total energy or static energy.

How to select the location as one of the N1+1 candidate locations. The location is selected as the central candidate location if a significant majority of the N1 link-MS are each satisfying a selection criterion (e.g. respective link-MS being greater than a second threshold). The significant majority may be expressed as a percentage greater than or equal to a first threshold (e.g. 100%, 90%, 80%, etc.). The location is selected as one of N1 non-central candidate locations if there is no significant majority of the N1 link-MS satisfying the selection criterion. The selected non-central candidate location may be the one whose link-MS is max among all link-MS.

Clause D4. The method/device/system/software of the wireless sensing system of Clauses D1 to D3, comprising: selecting the location as the central candidate location associated with the central device if: a percentage of all the N1 link-MS associated with all the N1 device-links satisfying a selection criterion is greater than or equal to a first threshold.

Clause D5. The method/device/system/software of the wireless sensing system of Clauses D1 to D4, comprising: wherein the first threshold is 100%.

Clause D6. The method/device/system/software of the wireless sensing system of Clauses D1 to D5, comprising: wherein the selection criterion associated with a device link is that the link-MS associated with the device link exceeds a second threshold.

Clause D7. The method/device/system/software of the wireless sensing system of Clauses D1 to D6, comprising: selecting the location as a particular one of the N1 non-central candidate locations associated with a particular non-central device if: the percentage of all the N1 link-MS associated with all the N1 device-links satisfying the selection criterion is less than the first threshold, and a particular link-MS associated with the particular non-central candidate location satisfies a qualify criterion and also satisfies the selection criterion to a maximum degree, and the particular link-MS satisfies a qualifying criterion.

Clause D8. The method/device/system/software of the wireless sensing system of Clauses D1 to D7, comprising: wherein the particular link-MS satisfies the selection criterion to the maximum degree if it is a maximum among all the N1 link-MS; wherein the qualifying criterion is that the particular link-MS is greater than a third threshold.

A numerical way to implement the rule-based selection in claims 4 and 7, by computing a single "motion score"/"level" and choosing the candidate location with highest motion score.

Clause D9. The method/device/system/software of the wireless sensing system of clauses D1 to D8, comprising: computing N1+1 motion scores associated with the N1+1 candidate locations based on the N1 link-MS; selecting the location as a particular candidate location associated with a maximum among the N1+1 motion scores.

How to compute the N1+1 motion scores for the N1+1 candidate locations? One can define at least one default value (e.g. 0) and a set of level values (e.g. {5, 6, 7} for MS, {4, 5, 6} for micro-motion statistics, {2, 3} for breathing) for the motion score. The default value may represent no detection of the object (or the motion of the object) in a candidate location. The level values may span a range of values to reflect a level/degree/significance of the link-MS (e.g. {5, 6, 7} for MS with 5 being smaller MS and 7 being larger MS. If none of link-MS satisfy a selection condition (e.g. link-MS> threshold) nor qualifying condition (e.g. link-MS>another threshold), all the motion scores may be set to default value (e.g. 0). If all link-MS satisfy the selection condition and the qualifying condition, then set motion score to zero for all N1 non-central candidate locations and set motion score to one of the level values for the central candidate location. For each candidate location, if motion score takes on a default value, it may be in IDLE (i.e. no motion) state. If the motion score takes on any value other than a default value, the candidate location may be in MOTION state.

Clause D10. The method/device/system/software of the wireless sensing system of Clauses D1 to D9, comprising: defining at least one default value and a set of level values for the motion scores, wherein the at least one default value represents an absence (i.e. no or null detection) of the motion of the object, wherein each of the level values of a motion score of a candidate location represents a detection level (or detection degree/ significant) of the motion of the object at a candidate location, wherein any default value is smaller than all the level values; if none of the N1 link-MS satisfies a selection criterion and none of the N1 link-MS satisfies a qualifying criterion, setting each of the N1+1 motion scores associated with all the candidate locations to a default value; else if all of the N1 link-MS satisfy the selection criterion and all of the N1 link-MS satisfy the qualifying criterion, setting each of the N1 motion scores associated with the N1 non-central locations to a default value, and setting the motion score associated with the central candidate location to a level value based on an aggregate of the N1 link-MS, wherein the level value is monotonic non-decreasing with respect to the aggregate; else setting each of the N1 motion scores associated with the N1 non-central locations to a respective level value based on the respective link-MS, wherein the respective level value is monotonic non-decreasing with respect to the respective link-MS, and setting the motion score associated with the central candidate location to be a default value; > Selection criterion when link-MS contains two items (e.g. motion statistics + micro motion statistics). The first item may be more important than the second item.

Clause D11. The method/device/system/software of the wireless sensing system of Clauses D1 to D10, comprising: computing N1 secondary linkwise motion statistics (second link-MS) associated with the N1 device-links based on the N1 TSCI, with the respective second link-MS associated with the respective device-link computed based on the respective TSCI; selecting the location as the central candidate location associated with the central device if: a second percentage of all the N1 second link-MS associated with all the N1 device-links satisfying a second selection criterion is greater than or equal to a fourth threshold.

Clause D12. The method/device/system/software of the wireless sensing system of Clauses D1 to D11, comprising: wherein the fourth threshold is 100%.

Clause D13. The method/device/system/software of the wireless sensing system of Clauses D1 to D12, comprising: wherein the second selection criterion associated with a device link is that the second link-MS associated with the device link exceeds a fifth threshold.

Clause D14. The method/device/system/software of the wireless sensing system of Clauses D1 to D13, comprising: selecting the location as a particular one of the N1 non-central candidate locations associated with a particular non-central device if: the percentage of all the N1 link-MS associated with all the N1 device-links satisfying the selection criterion is less than the first threshold, and the second percentage of all the N1 second link-MS associated with all the N1 device-links satisfying the second selection criterion is less than the fourth threshold, and one of the following two cases is true: (case 1) a particular link-MS associated with the particular non-central candidate location satisfies a qualifying criterion and also satisfies the selection criterion to a maximum degree, or (case 2) none of the N1 link-MS satisfies the qualifying criterion but a particular second link-MS associated with the particular non-central candidate location satisfies a second qualifying criterion and also satisfies the second selection criterion to a second maximum degree.

Clause D15. The method/device/system/software of the wireless sensing system of Clauses D1 to D14, comprising: wherein the particular link-MS satisfies the selection criterion to the maximum degree if it is a maximum among all the N1 link-MS; wherein the particular second link-MS satisfies the second selection criterion to the second maximum degree if it is a maximum among all the N1 second link-MS; wherein the qualifying criterion is that the particular link-MS is within a qualifying range; wherein the second qualifying criterion is that the particular second link-MS is within a second qualifying range.

There are both link-MS (e.g. motion statistics) and second link-MS (micro-motion statistics). Same default value (e.g. 0) to represent detection. Two sets (first set and second set) of level values for the motion score. First set (e.g. {5, 6, 7} for motion statistics) is more dominant than second set ({4, 5, 6} for micro-motion statistics). The default value may represent no detection of the object (or the motion of the object) in a candidate location. The level values may span a range of values to reflect a level/degree/significance of the link-MS (e.g. {5, 6, 7} for MS with 5 being smaller MS and 7 being larger MS. If none of link-MS satisfy a selection condition (e.g. link-MS> threshold) nor qualifying condition (e.g. link-MS>another threshold), all the motion scores may be set to default value (e.g. 0). If all link-MS satisfy the selection condition and the qualifying condition, then set motion score to zero for all N1 non-central candidate locations and set motion score to one of the level values for the central candidate location.

Clause D16. The method/device/system/software of the wireless sensing system of Clauses D1 to D15, comprising: computing N1 secondary linkwise motion statistics (second link-MS) associated with the N1 device-links based on the N1 TSCI, with the respective second link-MS associated with the respective device-link computed based on the respective TSCI; defining at least one default value, a first set of level values and a second set of level values for the motion scores, wherein the at least one default value represents an absence (i.e. no or null detection) of the motion of the object, wherein each level value in the first set represents a detection level (or detection degree/ significant) of the motion of the object based on a link-MS at a candidate location, wherein each level value in the second set represents a detection level (or detection degree/ significant) of the motion of the object based on the respective second link-MS at a candidate location, wherein any default value is smaller than all the level values, wherein each level value in the first set is greater than or equal to all level values in the second set; (note: first set is more "dominant" than the second set) if none of the N1 link-MS satisfies a selection criterion nor a qualifying criterion, and none of the N1 second link-MS satisfies a second selection criterion nor a second qualifying criterion, then (note: no detection) setting each of the N1+1 motion scores associated with all the candidate locations to a default value; else if all of the N1 link-MS satisfy the selection criterion and all of the N1 link-MS satisfy the qualifying criterion, then setting each of the N1 motion scores associated with the N1 non-central locations to a default value, and setting the motion score associated with the central candidate location to a level value in the first set based on an aggregate of the N1 link-MS, wherein the level value in the first set is monotonic non-decreasing with respect to the aggregate; else if all of the N1 second link-MS satisfy the second selection criterion and all of the N1 second link-MS satisfy the second qualifying criterion, then setting each of the N1 motion scores associated with the N1 non-central locations to a default value, and setting the motion score associated with the central candidate location to a level value in the second set based on a second aggregate of the N1 second link-MS, wherein the level value is monotonic non-decreasing with respect to the second aggregate; if the respective link-MS satisfies the selection criterion and the qualifying criterion, then setting the respective motion score to a level value in the first set based on the respective link-MS, wherein the respective level value is monotonic non-decreasing with respect to the respective link-MS; else if the respective second link-MS satisfies the second selection criterion and the second qualifying criterion, then setting the respective motion score to a level value in the second set based on the respective second link-MS, wherein the respective level value in the second set is monotonic non-decreasing with respect to the respective second link-MS; else setting the respective motion score to a default value.

For each candidate location, if motion score takes on a default value, it may be in IDLE (i.e. no motion) state. If the motion score takes on any value other than a default value, the candidate location may be in MOTION state. If the object motion is not detected at all the candidate locations such that all motion scores take on a default value, the system may be in IDLE state. If the object motion is detected at at least one candidate location, the system may be in MOTION state. At any moment, a per-location state called "current" state or per-location motion score called "current" motion score may be maintained like a state variable for each candidate location. The name "current" could have been "immediate past" or "latest". Alternatively a per-location state history or a per-location motion score history (e.g. N recent states or motion scores in N recent sampling instances) may be maintained for each candidate location. At the next moment, the newly computed motion score (called "next" motion score) and the implied state (called "next" state) may be unreliable due to noise or interference. Some smoothing/checking may be needed before the next state or next motion score is used to update the current motion score or current state. Some smoothing to suppress the noisy or interference effects. If the system is currently in IDLE state, but there has been a considerable/increasing sign of motion recently (e.g. consistent and/or considerable number of recent detection, such as percentage of detection >10% in recent 30 seconds, or percentage of detection>20% in recent 20 seconds) and the next motion score of a particular candidate location is not default value (i.e. object motion detected at the particular candidate location), then the next motion score may be considered trustworthy and may be used to update the "current" motion score of the particular candidate location. Otherwise, the next motion score may be considered not trustworthy and may be replaced by a default value before being used to update the "current" motion score of the particular candidate location. If the system is currently in MOTION state, but there has been signs of decreasing motion activity (e.g. consistent and/or considerably less number of recent detection, such as percentage of detection<50% in recent 30 seconds, or percentage of detection <30% in recent 20 seconds), then the next motion score of the candidate location (regardless what value it takes on) may be forced/changed to be a default value to indicate no object motion is detected at the candidate location.

Clause D17. The method/device/system/software of the wireless sensing system of Clauses D1 to D16, comprising: for each candidate location: in the case that the system is in a IDLE state: if (a) a first percentage of detection of the motion of the object by the system in a first time period is greater than a first threshold and (b) the motion score of the candidate location (the "next" motion score) is greater than the at least one default value, then updating a current motion score of the candidate location to be the motion score, else updating the current motion score of the candidate location to be a default value; in the case that the system is in a MOTION state: if a second percentage of detection of the motion of the object at the candidate location in a second time period is less than a second threshold, then updating the current motion score of the candidate location to be a default value, else updating the current motion score of the candidate location to be the motion score.

A "reliable" or trustworthy detection of object motion may be achieved if the percentage of detection of the object motion exceeds a threshold in a period of time (e.g. detection percentage>40% in 1 minute). If all the candidate locations do not have reliable detection at time t (suggesting no detected motion at time t)...

Clause D18. The method/device/system/software of the wireless sensing system of Clauses D1 to D17, comprising: wherein a candidate location has reliable detection at a time t if a percentage of detection of the motion of the object in an immediate past period of time exceeds a threshold; in the case that none of the candidate locations has reliable detection at time t: if at least one candidate location has reliable detection at least one time instance in a time window, then detecting the motion of the object at a particular candidate location with the largest motion score in the time window, setting the motion score of the particular candidate location at time t to be the largest motion score, setting the motion scores of all remaining candidate locations at time t to a default value; else the motion of the objected is not detected at time t, setting the motion score of each the candidate locations at time t to a default value; in the case that at least one candidate location has reliable detection at time t: sorting the candidate locations in a descending order of the motion scores in a time window; for each candidate location: if the candidate location has reliable detection at time t, then update the current motion score with the motion score; else if there is at least one detection in the immediate past time period, then update the current motion score with the motion score; else setting the current motion score to be a default value; detecting the motion of the object at a particular candidate location with the largest sorted motion score in the time window; setting the motion score of the particular candidate location at time t to be the largest motion score.

Clause D19. The method/device/system/software of the wireless sensing system of Clauses D1 to D18, comprising: wherein there are total of N2 objects in the venue; in the case that none of the candidate locations has reliable detection at time t: if at least N2 candidate locations have reliable detection at at least one time instance in the time window, then detecting the motion of the N2 objects at the N2 candidate locations with the N2 largest motion scores in the time window, setting the motion score of the N2 candidate location at time t to be the N2 largest motion scores, setting the motion scores of all remaining candidate locations at time t to a default value; In the case that at least one candidate location has reliable detection at time t: detecting the motion of the N2 objects at N2 candidate locations with the N2 largest sorted motion score in the time window; setting the motion score of the N2 candidate location at time t to be the largest motion score.

Possible (link-MS, second link-MS) pairs.

Clause D20. The method/device/system/software of the wireless sensing system of Clauses D1 to D119, comprising: wherein the (link-MS, second link-MS) pair comprises one of the following pairs: (large motion statistics, micro motion statistics), (RM, MM), (MS, MM), (correlation, component-wise correlation), (correlation, aggregate of component-wise correlation), (correlation of CI vectors, aggregate of correlation of CI components), (inner-product of CI vectors, aggregate of correlation of CI components with MRC), (TRRS, breathing statistics), (correlation of CI vectors, breathing rate), (inner product of CI vectors, breathing indicator), (correction of CI vectors, breathing detector), (micro motion statistics, breathing statistics).

Clause D21. The method/device/system/software of the wireless sensing system of Clauses D1 to D20, comprising: computing N1+1 tentative scores associated with the N1+1 candidate locations based on the N1 link-MS, each first tentative score taking on a value from a first range of values; computing N1+1 second tentative scores associated with the N1+1 candidate locations based on the N1 second link-MS, each second tentative score taking on a value from a second range of values; computing the N1+1 motion scores based on the N1+1 tentative scores and the N1+1 second tentative scores.

Clause D22. The method/device/system/software of the wireless sensing system of Clauses D1 to D21, comprising: computing N1 third linkwise motion statistics (third link-MS) associated with the N1 device-links based on the N1 TSCI, with the respective third link-MS associated with the respective device-link computed based on the respective TSCI; selecting the location as the central candidate location associated with the central device if: a third percentage of all the N1 third link-MS associated with all the N1 device-links satisfying a third selection criterion is greater than or equal to a seventh threshold.

Clause D23. The method/device/system/software of the wireless sensing system of Clauses D1 to D22, comprising: selecting the location as a particular one of the N1 non-central candidate locations associated with a particular non-central device if: the percentage of all the N1 link-MS associated with all the N1 device-links satisfying the selection criterion is less than the first threshold, and the second percentage of all the N1 second link-MS associated with all the N1 device-links satisfying the second selection criterion is less than the fourth threshold, and the third percentage of all the N1 third link-MS associated with all the N1 device-links satisfying the third selection criterion is less than the seventh threshold, and one of the following three cases is true: (case 1) a particular link-MS associated with the particular non-central candidate location satisfies a qualifying criterion and also satisfies the selection criterion to a maximum degree, or (case 2) none of the N1 link-MS satisfies the qualifying criterion but a particular second link-MS associated with the particular non-central candidate location satisfies the second qualifying criterion and also satisfies the second selection criterion to a second maximum degree, or (case 3) none of the N1 link-MS satisfies the qualifying criterion, and none of the N1 second link-MS satisfies the second qualifying criterion, but a particular third link-MS associated with the particular non-central candidate location satisfies the third qualifying criterion and also satisfies the third selection criterion to a third maximum degree.

Clause D24. The method/device/system/software of the wireless sensing system of Clauses D1 to D23, comprising: wherein the link-MS comprises a TRRS; wherein the second link-MS comprises a micro-motion statistics; wherein the third link-MS comprises a breathing statistics.

The following numbered clauses provide other examples for wireless sensing.

Clause E1. A method of a wireless sensing system, comprising: determining a plurality of heterogeneous wireless devices of the wireless sensing system in a venue; determining a plurality of device-links each of comprises two of the heterogeneous wireless devices, wherein one of the two heterogeneous wireless devices functions as a transmitter and the other one of the two heterogeneous wireless devices functions as a receiver; for each respective device-link of the plurality of device-links, transmitting a respective wireless signal from a respective transmitter of the respective device-link through a wireless multipath channel of the venue, wherein the wireless multipath channel is impacted by a motion of an object in the venue, receiving the respective wireless signal by a respective receiver of the respective device-link through the wireless multipath channel, wherein the respective received wireless signal differs from the respective transmitted wireless signal due to the wireless multipath channel of the venue and the motion of the object, obtaining a respective time series of channel information (TSCI) of the wireless multipath channel based on the respective received wireless signal of the respective device-link, computing a respective linkwise motion statistics (link-MS) for the respective device-link based on the respective TSCI; performing a sensing task associated with the motion of the object based on at least one of: all the TSCI or all the link-MS; and computing a location in the venue associated with the sensing task based on all the link-MS.

Clause E2. The method of Clause E1, wherein the respective link-MS comprises at least one of: time reversal resonating strength (TRRS), correlation, cross correlation, auto-correlation, inner product, or dot product.

Clause E3. The method of Clause E1 or E2, further comprising: preprocessing the respective TSCI; and smoothing the respective link-MS over time based on a smoothing filter.

Clause E4. The method of Clauses E1 to E3, further comprising: applying a correction to a particular link-MS associated with a particular device-link of the plurality of device-links based on a characteristics of the transmitter, the receiver, and the wireless signal associated with the particular device-link, wherein the correction is pre-determined or adaptively determined.

Clause E5. The method of Clauses E1 to E4, further comprising: obtaining multiple TSCI of the wireless multipath channel based on a first received wireless signal of a first device-link the plurality of device-links, wherein at least one of the transmitter or the receiver associated with the first device-link comprises multiple antennas; computing multiple first candidate link-MS based on the multiple TSCI, wherein each first candidate link-MS is computed based on a respective one of the multiple TSCI; and aggregating the multiple first candidate link-MS to compute a first link-MS associated with the first device-link, using a maximum ratio combining (MRC) scheme.

Clause E6. The method of Clauses E1 to E5, wherein: each channel information (CI) of a particular TSCI associated with a second device-link the plurality of device-links comprises multiple components; the method further comprises: computing multiple second candidate link-MS based on multiple components of each CI of the particular TSCI, and aggregating the multiple second candidate link-MS to compute a second link-MS for the second device-link based on the particular TSCI, using a maximum ratio combining (MRC) scheme.

Clause E7. The method of Clauses E1 to E6, further comprising: partitioning the venue into a plurality of regions, wherein each region is a candidate location associated with the sensing task; associating each region with one of the heterogeneous wireless devices; and computing the location associated with the sensing task as one of the plurality of candidate locations.

Clause E8. The method of Clauses E1 to E7, further comprising: computing a respective location-wise motion statistics (loc-MS) for each candidate location based on all the link-MS to obtain a plurality of loc-MS; and computing the location based on all of the plurality of loc-MS.

Clause E9. The method of Clauses E1 to E8, further comprising: computing a measurement value based on a measure for each of the plurality of loc-MS; and detecting a target associated with the sensing task when at least one of the plurality of loc-MS has a measurement value greater than a first threshold.

Clause E10. The method of Clauses E1 to E9, further comprising: computing the location of the target as a candidate location whose loc-MS has a maximum measurement value among the plurality of loc-MS.

Clause E11. The method of Clauses E1 to E10, further comprising: removing the location of the target from the plurality of candidate locations to obtain remaining candidate locations; detecting a second target associated with the sensing task when at least one loc-MS associated with the remaining candidate locations has a measurement value greater than a second threshold; and computing a second location of the second target as one of the remaining candidate locations whose loc-MS has a maximum measurement value among all loc-MS associated with the remaining candidate locations.

Clause E12. The method of Clauses E1 to E11, wherein each loc-MS comprises at least one of: a sum, a weighted sum, a product, a weighted product, an average, a median, a weighted sum of a function, or a weighted product of the function.

Clause E13. The method of Clauses E1 to E12, further comprising: for a particular candidate location associated with a particular heterogeneous wireless device: partitioning all of the plurality of device-links into a first group and a second group, and computing the loc-MS for the particular candidate location based on a weighted sum of all the link-MS or a weighted product of all the link-MS, such that a first weight for each link-MS associated with the first group is greater than a second weight for any link-MS associated with the second group.

Clause E14. The method of Clauses E1 to E13, further comprising: for the particular candidate location, computing the loc-MS for the particular candidate location with a positive weight for each link-MS associated with the first group and a negative weight for each link-MS associated with the second group.

Clause E15. The method of Clauses E1 to E14, wherein: the first group comprises any device-link of which one of the transmitter or the receiver is the particular heterogeneous wireless device.

Clause E16. The method of Clauses E1 to E15, wherein: the first group comprises any distance-1 device-link for the particular candidate location; a distance-1 device-link is a device-link of which one of the transmitter or the receiver is the particular heterogeneous wireless device, and the other one of the transmitter or the receiver is considered a distance-1 device for the particular candidate location; the first group further comprises any distance-2 device-link for the particular candidate location; and a distance-2 device-link is an additional device link of which one of the transmitter or the receiver is a distance-1 device for the particular candidate location, and the other one of the transmitter or the receiver is considered a distance-2 device for the particular candidate location.

Clause E17. The method of Clauses E1 to E16, wherein: a weight for a distance-1 device-link is greater than or equal to a weight for a distance-2 device link.

Clause E18. The method of Clauses E1 to E17, wherein: the first group further recursively comprises any additional device-link of which one of the transmitter or the receiver is a distance-k device for the particular candidate location, and the other one of the transmitter or the receiver is considered a distance-(k+1) device for the particular candidate location.

Clause E19. The method of Clauses E1 to E18, wherein: a weight for a distance-k device-link is greater than or equal to a weight for a distance-(k+1) device link.

Clause E20. The method of Clauses E1 to E19, wherein: two device-links are associated with two particular heterogeneous wireless devices such that wireless signals are sent in both directions, and TSCI are obtained at both of the two particular heterogeneous wireless devices; and the two link-MS associated with the two device-links have identical weights in the computation of the loc-MS for the particular candidate location.

Clause E21. The method of Clauses E1 to E20, further comprising: replacing the two link-MS by a single link-MS which is equal to an aggregation of the two link-MS in the computation of the loc-MS for the particular candidate location.

Clause E22. The method of Clauses E1 to E21, further comprising: comparing a first collection of all the device-links in the wireless sensing system with a second collection of all possible device-links in a fully-connected configuration of the plurality of heterogeneous wireless devices; determining at least one missing device-link which is a device-link present in the second collection but absent in the first collection; and applying a correction to the weights of the device-links in the first collection in the computation of the loc-MS, based on a hypothetical weight for each missing device-link.

Clause E23. A system for wireless sensing, comprising: a plurality of heterogeneous wireless devices forming a plurality of device-links in a venue, wherein each of the plurality of device-links comprises two of the heterogeneous wireless devices, wherein one of the two heterogeneous wireless devices functions as a transmitter and the other one of the two heterogeneous wireless devices functions as a receiver; and at least one processor, wherein for each respective device-link of the plurality of device-links: a respective transmitter of the respective device-link is configured to transmit a respective wireless signal through a wireless multipath channel of the venue, the wireless multipath channel is impacted by a motion of an object in the venue, a respective receiver of the respective device-link is configured to receive the respective wireless signal through the wireless multipath channel, the respective received wireless signal differs from the respective transmitted wireless signal due to the wireless multipath channel of the venue and the motion of the object, the at least one processor is configured to obtain a respective time series of channel information (TSCI) of the wireless multipath channel based on the respective received wireless signal of the respective device-link, and to compute a respective linkwise motion statistics (link-MS) for the respective device-link based on the respective TSCI, wherein the at least one processor is further configured for: performing a sensing task associated with the motion of the object based on at least one of: all the TSCI or all the link-MS, and computing a location in the venue associated with the sensing task based on all the link-MS.

The present teaching discloses a wireless sensing partner identification and qualification (ID&Q) system. In some embodiments, a Type2 device may be installed in a venue with many smart wireless devices (e.g. IoT devices, WiFi enabled device, WiFi Direct enabled device, WiFi P2P enabled device, 5G device, Zigbee device). Some of the smart devices may (potentially) serve as a Type1 device to send sounding wireless signals to the Type2 device in a wireless sensing network. One of the devices may probe/scan/discover/ identify/ locate/find/search for/request/ authenticate/associate with/negotiate/connect/pair/ register/ connect to some/all of the smart devices based on a protocol (e.g. 802.11bf) to configure them to serve as either Type1 devices, or Type2 devices, or both so as to jointly form a wireless sensing network/system. The connection between a Type1 device and a Type2 device may be a P2P (e.g. WiFi Direct) connection.

In some embodiments, the ID&Q system assists/enables the wireless sensing network/system to work interactively with a user to identify the smart devices (as Type1/Type2 devices or potential Type1/Type2 devices) and/or to enable the user or the wireless sensing system to configure the Type1/Type2 device based on the identification. The ID&Q system may instruct the user to get close to (or very close to) a target Type1 or Type2 device, do some specific user actions (e.g. move around, periodic motion, repeated motion, tap, tap N times, tap with pause, etc., which would give rise to recognizable pattern in sensing results of the target device but not in sensing results of the other devices), use the wireless sensing system to monitor the user actions, display/present wireless sensing results (e.g. motion statistics) from ALL the available Type1/Type2 devices (smart devices) in the wireless sensing system, allow the user to find/choose one or more PARTICULAR device(s) (among all the available devices) whose motion statistics "follow" the user actions, and allow the user to enter some identification (e.g. name) or some role or some configuration for the particular device(s).

If more than one Type1/Type2 devices have motion statistics "following" the user actions (perhaps to various extents), the user may mark all of them accordingly (perhaps for a specific sensing task of the wireless sensing system) - which may cause them to be associated/assigned to one or more of sensing tasks supported by the wireless sensing system. Individual motion statistics may be computed separately from each pair of Type1 and Type2 devices and then fused the individual motion statistics together to form a joint motion statistics. Or a jointly motion statistics may be computed based on all the devices.

The smart devices (e.g. candidate wireless devices to be named) may include multiple smart TVs at different locations in the venue, smart speakers, smart set-top-boxes (STBs), smart lightings, smart bulbs, smart refrigerator, smart appliances, smart furniture, smart fixtures, smart sockets, smart plugs, smart chargers, smart ornaments, smart clocks, smart watches, smart smoke detectors, smart door bell, smart cameras, smart thermostats, smart vacuum cleaners, computers, tablets, phones, routers, base stations, etc.

The Type2 device may be an Origin, a router, repeater/mesh router/mesh device, a base station, a 4G/5G mini/micro/nano/pico-cell base station, a Hex Command, a wireless client, a WiFi client, an IoT device, or one of the smart devices/appliance/machines. A smart device may function both as a Type1 device and as a Type2 device.

The venue may be home, office, building, warehouse, facility, structure, etc. The venue may comprise more than one zones/regions (e.g. bedroom 1, bedroom 2, bedroom 3, foyer, family room, living room, rest room 1, rest room 2, dining room, kitchen, garage, first floor, second floor, basement, staircase, attic, etc.).

There may be many wireless devices in the venue distributed among the more than one zones/regions, functioning as Type1/Type2 devices in a wireless sensing system. Some wireless devices (e.g. IoT devices, smart devices/appliance/machines, smart phones, computers, notebooks, tablets, routers, gateways, repeaters, base station, etc.) may be connected by wire (e.g. Ethernet, USB, firewire) to Internet (e.g. broadband service). Some wireless devices may be connected wirelessly to Internet (e.g. via WiFi, Bluetooth, 4G/5G/6G/7G/8G, UWB, etc.). For each zone/region, there may be zero, one or more wireless devices.

The wireless sensing system may have a number of (e.g. a list of) the wireless devices, each being (potentially) Type1/Type2 devices in the wireless sensing system. For example, the system may perform a sensing session setup based on a standard protocol (e.g. 802.11bf) and those devices may join the sensing session (or the sensing procedure). The system may somehow "discover" the wireless devices (e.g. a wireless device of the system may obtain the info of the number of wireless devices from or through a wireless access point (AP), or request the AP to discover them; or the system may control a wireless device to function as a sensing initiator to initiate a sensing the procedure and the number of wireless devices responds to join the sensing procedure as sensing responder).

Among the wireless devices, there may be a subset of them that are designed to work with each other in the system (e.g. they may be identical devices or compatible devices from a same source, or a number of cooperative sources). The user may want to configure them to establish a wireless sensing network. The user may choose a few additional wireless devices in the venue to join the sensing network.

A problem/challenge is that the wireless devices may appear with some cryptic names (e.g. "device_152971") in the wireless sensing system which is not user friendly and often unrecognizable by the user. The unrecognizable names may make it difficult for the user to set up the configurations and inter-connection of the wireless devices in the wireless sensing network/system. The user may need to know the identity of the wireless devices (e.g. which physical device is mapped to "device_152971") in order to onboard them to the wireless sensing network/system (e.g. add the devices to the network/system, configure them, assign wireless sensing tasks to them, specify interconnections among them (the interconnections or the sensing network configuration may be different for different tasks), etc.).

The user may have a wireless access point (AP, e.g. WiFi router, repeater, base station) or a non-AP wireless device (e.g. in infra-structure mode) or a wireless device in non-infrastructure mode (adhoc network setting) functioning as a sensing initiator, which may function as a Type1 or Type2 device or none or both in a wireless sensing system. The disclosed wireless ID&Q system may be part of (or may operate in cooperation with) the wireless sensing system. The purposes/usage/functionalities of the disclosed ID&Q system may include the following steps.

In step 1, the system may assist/allow a user to identify/label/tag/name a particular Type1 or Type2 device in the wireless sensing system in a particular zone/region in the venue by the following sub-steps.

In sub-step 1, the system may generate/present real-time prompts or instructions for users to perform certain user actions near the particular device (in the particular zone/region or in an immediate neighborhood of the particular device). For example, the user may choose a device in the venue (e.g. a smart speaker in bedroom 1, or a smart alarm clock in bedroom2, or a TV in family room) with an unknown/unidentified mapping to some mysterious/ unrecognizable name in the wireless sensing network/system, and the user may engage the disclosed ID&Q system to onboard/identify the device in the network/system, because a mysterious/ unrecognizable name such as "device_13950465" may not be user friendly and the user would otherwise have no idea what "device_13950465" in the wireless system is. In another example, the user may have installed some Type1/Type2 devices in various zones/regions in the venue. (For example, one device such as AP may be at a known location and may be used to pair with the other devices in the venue to perform wireless sensing.) The disclosed ID&Q system may prompt the user to proceed/go to a particular zone/region (e.g. bedroom room) to be monitored by the wireless sensing system and choose a particular Type1/Type2 device there. The system may prompt the user to get close to the particular device and do some user action in the neighborhood (e.g. move immediately around the device, tap the device, tap repeatedly, (tap +pause) repeatedly, tap N times, drawing motion, drawing circles) to be identified (e.g. named) interactively.

In sub-step 2, the system may perform wireless sensing (e.g. motion detection/monitoring/breathing monitoring/fall-down detection, etc.) using the wireless sensing system to monitor the user performing the user actions.

In sub-step 3, the system may present real-time feedback (e.g. visual feedback, graphical feedback, audio feedback, mechanical feedback, vibration, presentation, display, GUI, animation, figure, plot, meter, text, etc.) of wireless sensing results of a group of Type1/Type2 devices in response to the user actions, especially those that are close to each other in the same zone/region.

In step 2, the system may assist/allow a user to identify/label/tag/name the zone/region that the identified/labelled device is in.

In step 3, the system may configure the identified/labelled device based on its identity and its locations and its role in the wireless sensing (e.g. some, all, or none of the configuration parameters may be specified by the user, the rest may be chosen by the ID&Q system or the wireless sensing system). Then, the identified device may be renamed or relabeled or re-tag or re-identified.

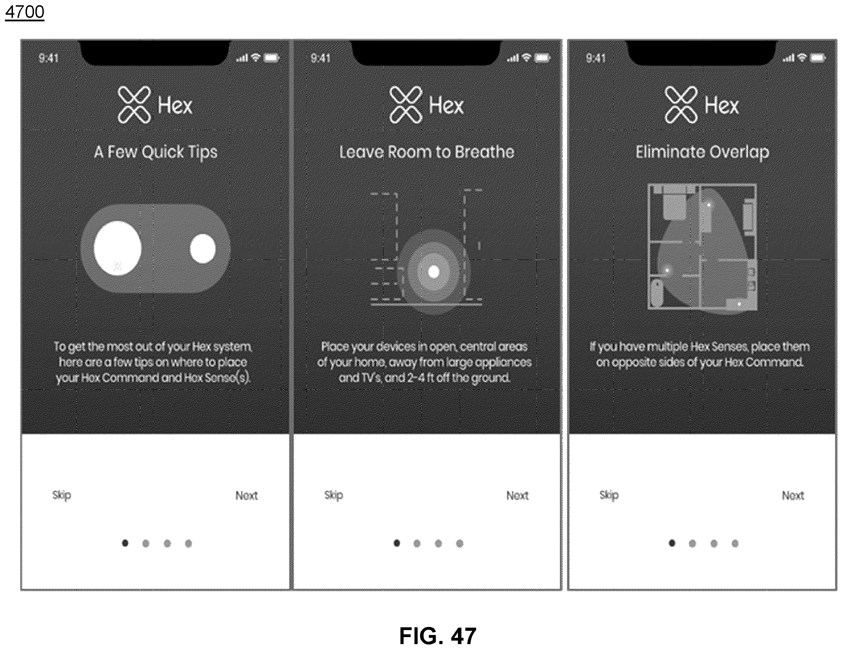

In some embodiments, user's friendly names of compatible devices do not appear friendly in router host names. Without device fingerprinting, app cannot present to user the friendly names to choose although user knows if they have good IoT devices for sensing. FIG. 47 illustrates exemplary images of a graphic user interface of an app for wireless sensing, according to some embodiments of the present disclosure. The Hex app in FIG. 47 is merely shown for illustration, and other app can also be used for implementing the present teaching.

In some embodiments, the present teaching discloses a method of using naming tool to help user name devices, based on the following steps.

In step (1), the app starts Bots onboarding. In step (2), the app makes Rest Application Programming Interface (RAPI) call to fetch List-1. In step (3), BCS applies filtering to get List-2c, which may include the following sub-steps. In sub-step (3.1), the app filters out Ethernet devices to get List-2a. In sub-step (3.2), the app filters out devices in incompatible list based on hostname patterns to get List-2b. In sub-step (3.3), the app filters in devices in compatible list based on hostname pattern to get List-2c. List-2c can be a big list. User may have many IoT devices in the compatible list. User may have other IoT devices that have the same hostname patterns with compatible devices.

In step (4), BCS sends List-2c mac addresses to container through SS using "Set User Selected Devices" API with parameter "csiScanning." In step (5), Init in container starts CSI scanning to get List-2e and build sounder.conf file, which may include the following sub-steps. In sub-step (5.1), the CSI scanner will capture CSI from List-2c devices to: filter out devices that do not provide CSI to get List-2d; and filter out devices which CSI loss is above a threshold to get List-2e. In sub-step (5.2), Init builds sounder.conf from List-2e.

In step (6), Master Origin (MO) returns List-2e to app on MO network. App can start the naming process. Without finger printing, one can have the following situations. In one situation, List-2e may contain devices not in compatible list because those devices have the same hostname patterns of devices in compatible list. For example, host name of Mi 9 smart phone is "unknown_xx:xx:xx:xx:xx:xx", the same with a 3$^{rd}$ generation Echo Dot and other devices in compatible list. In another situation, List-2e may not contain devices in compatible list because the devices may be powered off and thus cannot get CSI or the CSI loss is too much due to interference. In yet another situation, List-2e may contain a large number of devices more than what driver can support to capture CSI. Thus the naming should be processed on batches of 10 devices.

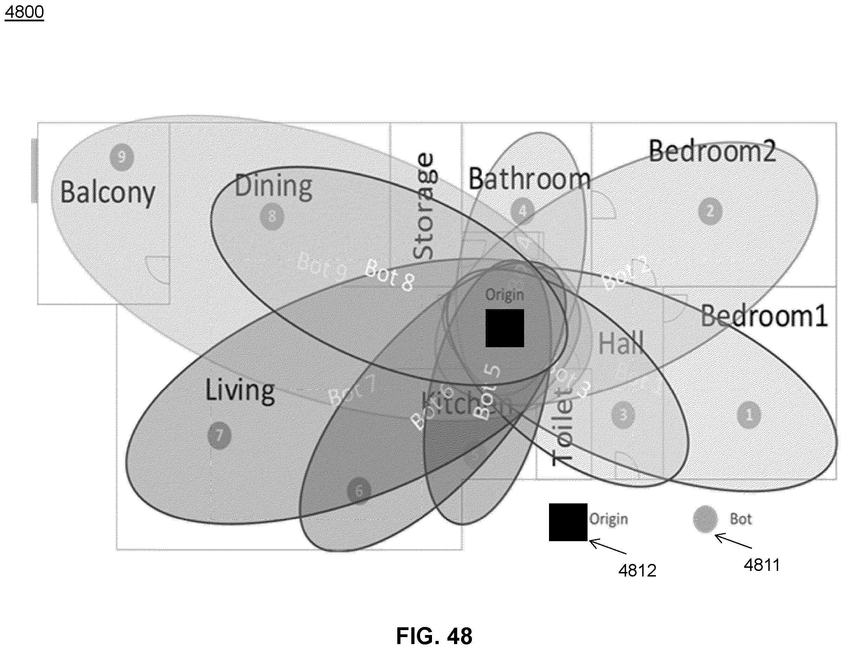

A method of using naming tool to help user to name devices, is disclosed in the following steps according to some embodiments. FIG. 48 illustrates an exemplary floor plan with devices deployed for wireless sensing, according to some embodiments of the present disclosure. As shown in FIG. 48, the motion coverage between each Bot 4811 (numbered 1-9) and the Origin 4812 is represented by an associated oval. The size of the oval is determined by "sensitivity levels." The higher the sensitivity level is, the larger the oval is. In some embodiments, the overlapped area might not be distinguished, and only the non-overlapped areas can be uniquely identified by the corresponding bots.

In step (1), to start naming process, the app instructs user to go into a room (e.g. one of the rooms shown in FIG. 48) that user wants to monitor and has a compatible device. In some embodiments, the compatible device is a Bot 4811. The app can instruct user how to select rooms to achieve good motion localization. In step (2), when user is in the room, the app asks user to start the naming.

In step (3), the app then starts engine with a list of first (up to) 10 devices in List-2e. The reason for up to 10 devices is that the driver can provide CSI for a max of 10 devices per interface and List-2e can have many devices. Each device may serve as a Bot 4811 in these embodiments.

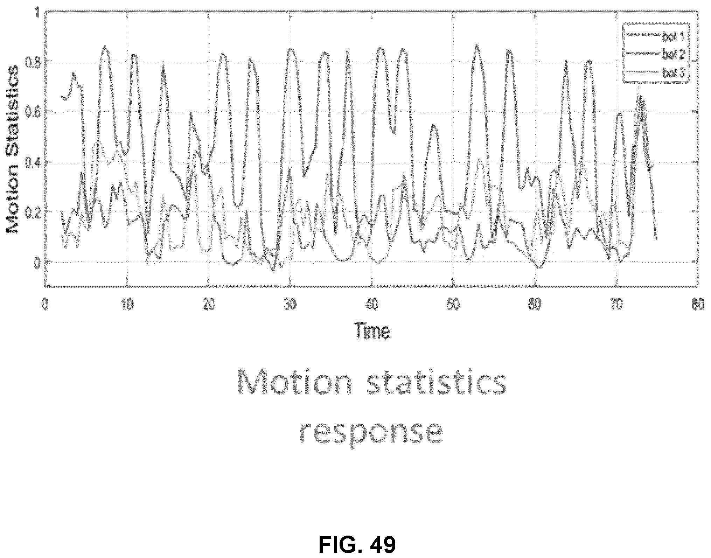

In step (4), when receiving motion statistics from engine, the app asks user to move around close to the device, and if possible, tap (or other local slow motion) repeatedly on the device without making other big body motion so not to affect the nearby IoT devices. FIG. 49 illustrates exemplary motion statistics response used for device identification for wireless sensing, according to some embodiments of the present disclosure. Motion statistics should follow user's action, which helps user to identify which device ID on app that responds to user action. Using observation to identify is better than using detection. Sometimes, user cannot be close to device and thus detection may not occur. However, user can still observe if their motion can cause motion statistics of the device to follow. In step (5), the user then taps on the device name/ID to enter the device friendly name and location name. It completes the naming for that room.

In step (6), the user is then instructed to go to another room. When in the room, user restarts the naming process for that room. In step (7), all rooms are identified. App has List-3 devices and is ready to start engine.

In step (8), if in the room (Step 4), user observes motion statistics not following their action, the device in the room is not included in the list of 10 devices that app runs engine on in Step (3). User then can start to check the next (up to) 10 devices.

In step (9), App stops the engine. In step (10), App then starts engine with the next (up to 10) devices in List-2e. In step (11), steps (4), (5), and (6) are repeated. In step (12), if List-2e is exhausted and user cannot name a device, the room is not covered. This is because the compatible device could be eliminated by CSI scanner.

At the end, all rooms are identified. App has List-3 devices. App can send List-3 mac addresses to container through SS using "Set User Selected Devices" API without having parameter "csiScanning." Init in container receives List-3 and build sounder.conf. MO returns List-3 devices in MO network. App starts engine with devices in List-3. Engine needs the right List-3 to parse MO network topology correctly and perform motion localization.

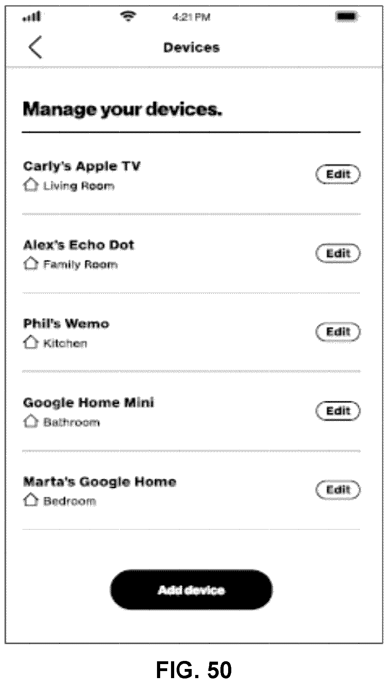

FIG. 50 illustrates an exemplary image of a graphic user interface of an app for adding devices for wireless sensing, according to some embodiments of the present disclosure. In some embodiments, adding a device requires the onboarding process with filtering List-1 to get List-2 and using naming tool to identify the device. The following steps describe an example of adding a device.

In step (1), BCS makes RAPI call to fetch List-1. In step (2), BCS applies filtering to get List-2c. In step (3), BCS sends List-2c mac addresses to container through SS using "Set User Selected Devices" API with parameter "csiScanning." In step (4), Init in container starts CSI scanning to get List-2e and build sounder.conf file. In step (5), MO returns List-2e to app on MO network. App can start the naming process. In step (6), to start naming process, app instructs user to go into a room that user wants to monitor and has the device. In step (7), when user is in the room, app asks user to start the naming. In step (8), App then starts engine with a list of up to 10 devices that are not in previous List-3. In step (9), when receiving motion statistics from engine, app asks user to move around close to the device, and if possible, tap repeatedly on the device. Motion statistics should follow user's action, which helps user to identify which device ID on app that responds to user action. In step (10), user then taps on the device name/ID to enter the device friendly name and location name. It completes the naming for that room, and an addition for the device. In step (11), App sends List-3 mac addresses including the existing devices and the newly added device to container through SS using "Set User Selected Devices" API without having parameter "csiScanning." Init in container receives List-3 and build sounder.conf. MO returns the new List-3 devices in MO network. App starts engine with devices in the new List-3. Engine needs the right List-3 to parse MO network topology correctly and perform motion localization.

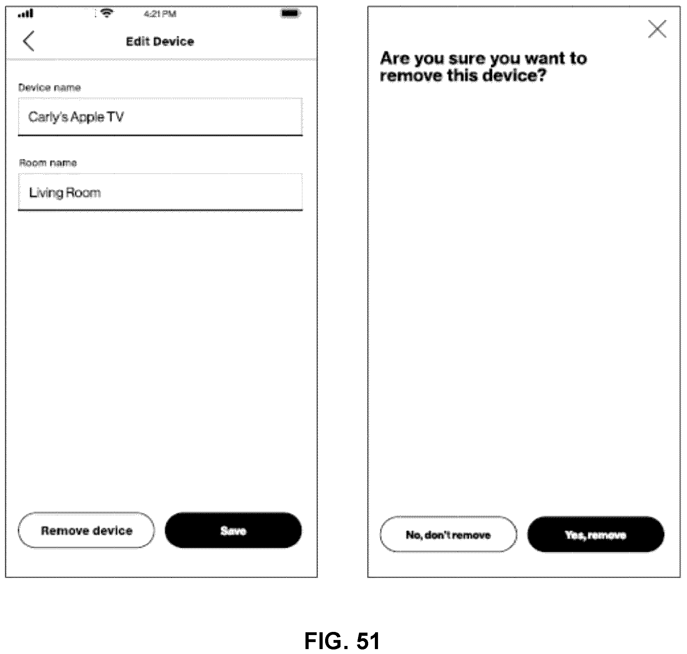

FIG. 51 illustrates exemplary images of a graphic user interface of an app for deleting a device for wireless sensing, according to some embodiments of the present disclosure. The following steps describe an example of deleting a device.

In step (1), the user goes to Settings -> Devices to remove a device. In step (2), when user clicks on "Yes, remove", app stops engine. In step (3), App sends new List-3 mac addresses (without the device mac address) to container through SS using "Set User Selected Devices" API without having parameter "csiScanning." Init in container receives List-3 and build sounder.conf. MO returns List-3 devices in MO network. App starts engine with devices in List-3.

In some embodiments, to identify co-located devices, one can perform a motion (e.g. three taps with fingertip) near each bot and analyze CSI patterns to distinguish touched device from other untouched one.

In some embodiments, the APP will add capability to a reference app to rename the WiFi-sensing-ready devices to a friendly name. Devices may be pre-paired and pre-registered to an account in the reference system. Once CSI services are enabled, motion intensity bars will appear to represent each of these devices. When user walking towards one of the device, its motion bar will increase. This will help user to locate the intended device. The system can investigate after locating the device, if the CSI can be turned ON/OFF, to help user to confirm the intended device. User now can rename the intended device to a friendly name.

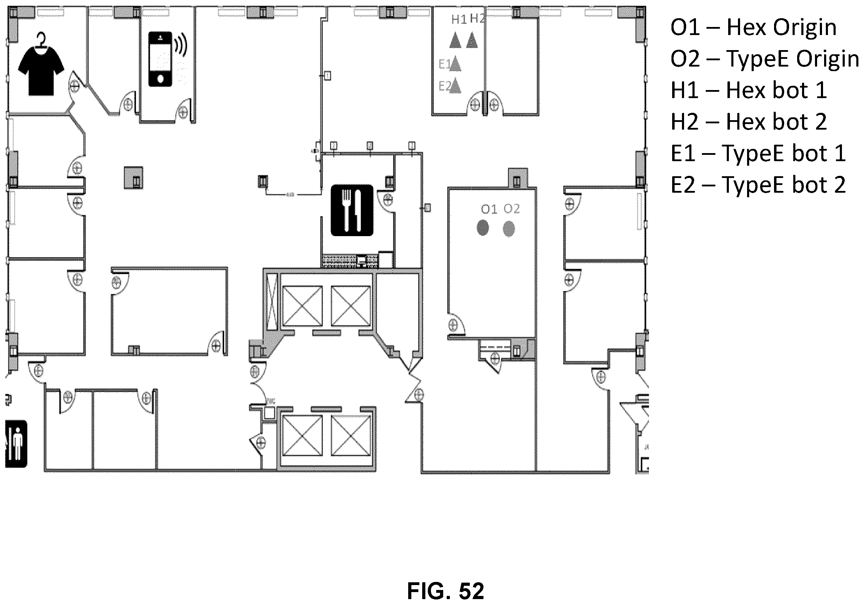

In some embodiments, the system can perform the disclosed method during off work hours and/or work hours. The user performs a motion (e.g. three taps with fingertip, or drawing round like motion) near each bot. The bots are placed close to each other. There are 2 TypeE bots and 2 Hex bots. FIG. 52 illustrates an exemplary floor plan for identifying devices used for wireless sensing, according to these embodiments. When the local motion the user performs is near a particular hot, the motion statistics of that particular hot will be higher than the motion statistics of the remaining bots.

One can analyze motion statistic for each bot for different motions. If the motion statistic is higher than motion threshold, max motion statistic is used to identify the device.

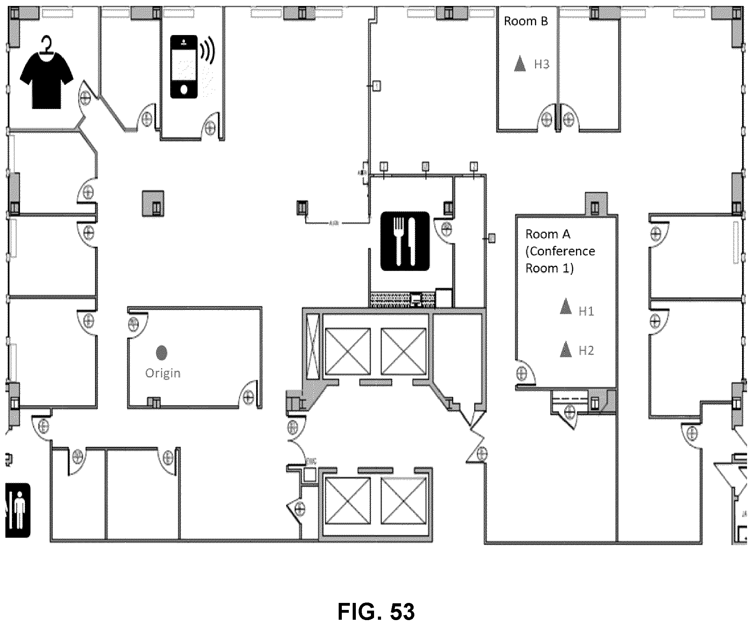

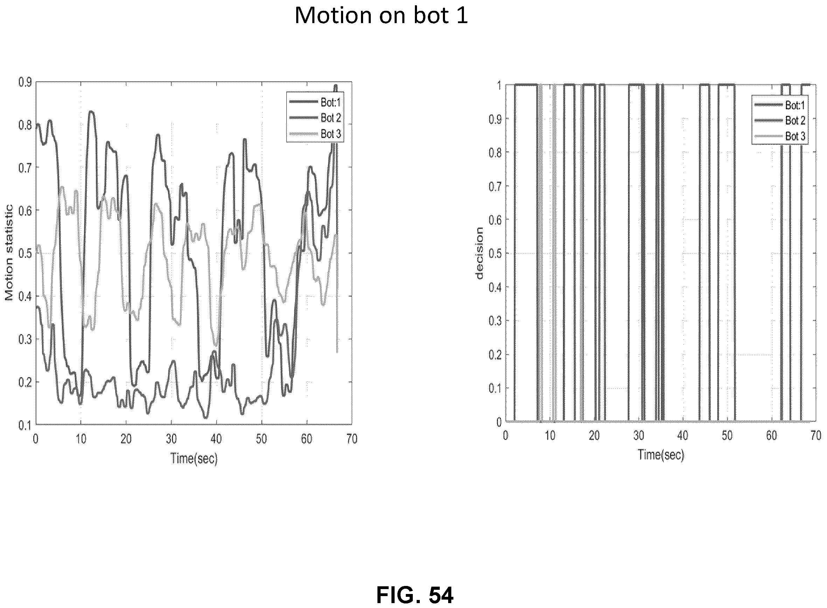

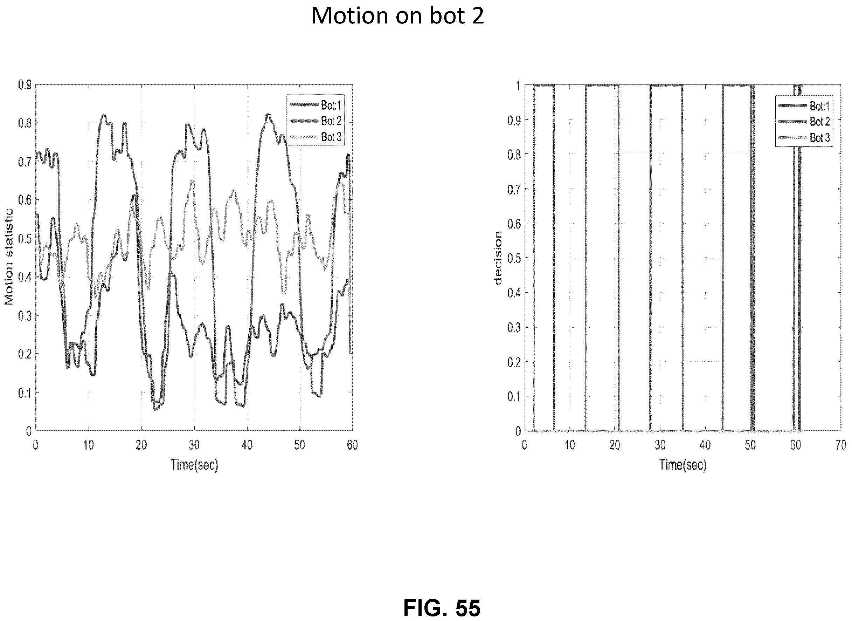

In other embodiments, the system can perform the disclosed method during off work hours. Origin is placed farther away from bots. FIG. 53 illustrates a different exemplary floor plan for identifying devices used for wireless sensing, according to these embodiments. Two bots, bot 1 (H1), bot 2 (H2), are placed in room A (conference room 1) and bot 3 (H3) is placed in room B. The user B is walking in the room B near to hot 3 and the user A performs drawing motion near bot 1/2. FIG. 54 illustrates exemplary motion statistics and decision made for identifying bot 1 used for wireless sensing, according to these embodiments. FIG. 55 illustrates exemplary motion statistics and decision made for identifying bot 2 used for wireless sensing, according to these embodiments.

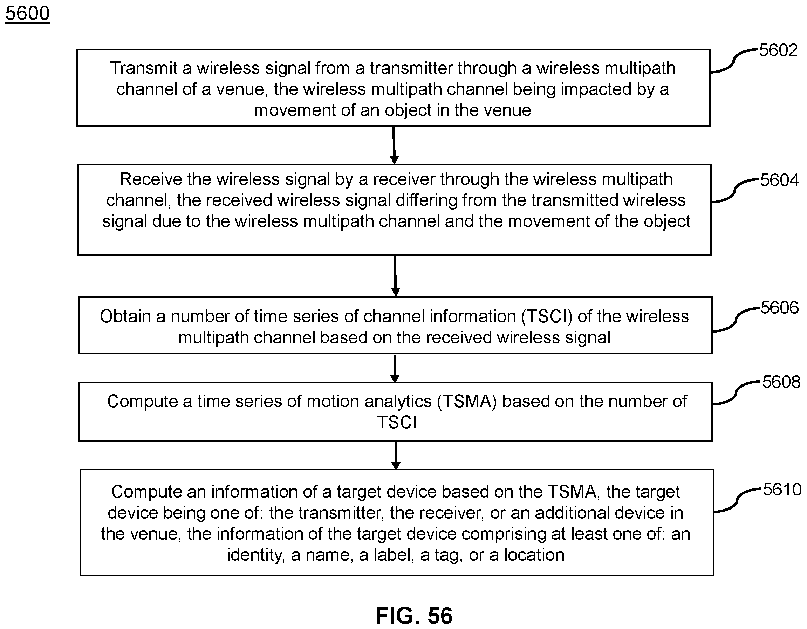

FIG. 56 illustrates a flow chart of an exemplary method 5600 for identifying devices used for wireless sensing, according to some embodiments of the present disclosure. In various embodiments, the method 5600 can be performed by the systems disclosed above. At operation 5602, a wireless signal is transmitted from a transmitter through a wireless multipath channel of a venue. The wireless multipath channel is impacted by a movement of an object in the venue. At operation 5604, the wireless signal is received by a receiver through the wireless multipath channel. The received wireless signal differs from the transmitted wireless signal due to the wireless multipath channel and the movement of the object. At operation 5606, a number of time series of channel information (TSCI) of the wireless multipath channel is obtained based on the received wireless signal. At operation 5608, a time series of motion analytics (TSMA) is computed based on the number of TSCI. At operation 5610, an information of a target device is computed based on the TSMA. The target device may be one of: the transmitter, the receiver, or an additional device in the venue. The information of the target device may comprise at least one of: an identity, a name, a label, a tag, or a location. The order of the operations in FIG. 56 may be changed according to various embodiments of the present teaching.

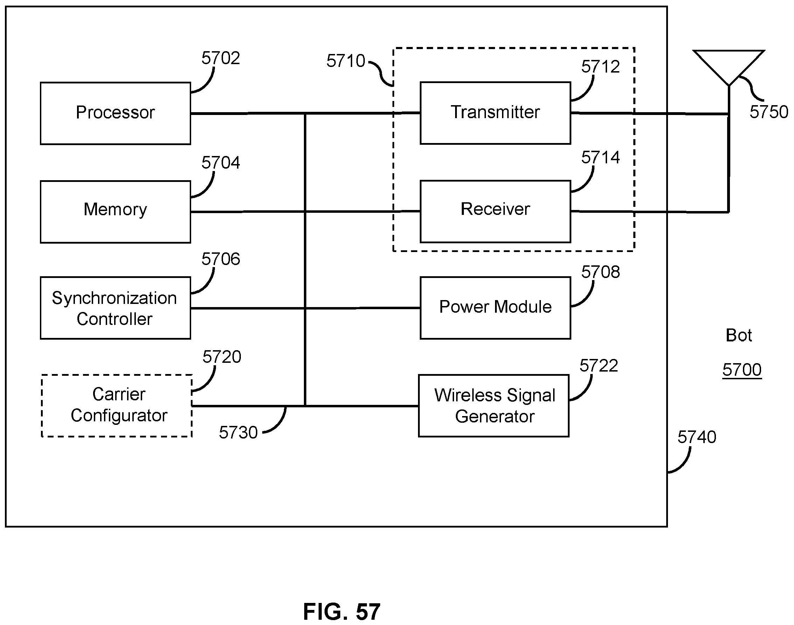

FIG. 57 illustrates an exemplary block diagram of a first wireless device, e.g. a Bot 5700, of a system for sound sensing or wireless sensing, according to some embodiments of the present disclosure. The Bot 5700 is an example of a device that can be configured to implement the various methods described herein. As shown in FIG. 57, the Bot 5700 includes a housing 5740 containing a processor 5702, a memory 5704, a transceiver 5710 comprising a transmitter 5712 and receiver 5714, a synchronization controller 5706, a power module 5708, an optional carrier configurator 5720 and a wireless signal generator 5722.

In this embodiment, the processor 5702 controls the general operation of the Bot 5700 and can include one or more processing circuits or modules such as a central processing unit (CPU) and/or any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable circuits, devices and/or structures that can perform calculations or other manipulations of data.

The memory 5704, which can include both read-only memory (ROM) and random access memory (RAM), can provide instructions and data to the processor 5702. A portion of the memory 5704 can also include non-volatile random access memory (NVRAM). The processor 5702 typically performs logical and arithmetic operations based on program instructions stored within the memory 5704. The instructions (a.k.a., software) stored in the memory 5704 can be executed by the processor 5702 to perform the methods described herein. The processor 5702 and the memory 5704 together form a processing system that stores and executes software. As used herein, "software" means any type of instructions, whether referred to as software, firmware, middleware, microcode, etc. which can configure a machine or device to perform one or more desired functions or processes. Instructions can include code (e.g., in source code format, binary code format, executable code format, or any other suitable format of code). The instructions, when executed by the one or more processors, cause the processing system to perform the various functions described herein.

The transceiver 5710, which includes the transmitter 5712 and receiver 5714, allows the Bot 5700 to transmit and receive data to and from a remote device (e.g., an Origin or another Bot). An antenna 5750 is typically attached to the housing 5740 and electrically coupled to the transceiver 5710. In various embodiments, the Bot 5700 includes (not shown) multiple transmitters, multiple receivers, and multiple transceivers. In one embodiment, the antenna 5750 is replaced with a multi-antenna array 5750 that can form a plurality of beams each of which points in a distinct direction. The transmitter 5712 can be configured to wirelessly transmit signals having different types or functions, such signals being generated by the processor 5702. Similarly, the receiver 5714 is configured to receive wireless signals having different types or functions, and the processor 5702 is configured to process signals of a plurality of different types.

The Bot 5700 in this example may serve as Bot or transmitter in any system disclosed herein, e.g. the Bot 211 in FIG. 2 for radio-assisted signal estimation in a venue, the Bot 2011 in FIG. 20 for wireless sensing, the Bot 4811 in FIG. 48 for identifying devices used for wireless sensing, or Tx, or Bot in any one of FIGS. 1-56. For example, the wireless signal generator 5722 may generate and transmit, via the transmitter 5712, a wireless signal through a wireless channel in the venue. The wireless signal carries information of the channel. Because the wireless signal is impacted by a motion of an object or a user in the venue, the channel information includes information from the object or user. As such, the motion can be sensed and detected based on the wireless signal. Or, the wireless signal may be reflected by a sounding or vibrating object in the venue, such that the channel information includes sound information from the object. As such, a speech or other expression can be detected or reconstructed based on the wireless signal. The generation of the wireless signal at the wireless signal generator 5722 may be based on a request for sound sensing from another device, e.g. an Origin, or based on a system pre-configuration. That is, the Bot 5700 may or may not know that the wireless signal transmitted will be used for wireless sound sensing.

The synchronization controller 5706 in this example may be configured to control the operations of the Bot 5700 to be synchronized or un-synchronized with another device, e.g. an Origin or another Bot. In one embodiment, the synchronization controller 5706 may control the Bot 5700 to be synchronized with an Origin that receives the wireless signal transmitted by the Bot 5700. In another embodiment, the synchronization controller 5706 may control the Bot 5700 to transmit the wireless signal asynchronously with other Bots. In another embodiment, each of the Bot 5700 and other Bots may transmit the wireless signals individually and asynchronously.

The carrier configurator 5720 is an optional component in Bot 5700 to configure transmission resources, e.g. time and carrier, for transmitting the wireless signal generated by the wireless signal generator 5722. In one embodiment, each CI of the time series of CI has one or more components each corresponding to a carrier or sub-carrier of the transmission of the wireless signal. The wireless sound sensing may be based on any one or any combination of the components.

The power module 5708 can include a power source such as one or more batteries, and a power regulator, to provide regulated power to each of the above-described modules in FIG. 57. In some embodiments, if the Bot 5700 is coupled to a dedicated external power source (e.g., a wall electrical outlet), the power module 5708 can include a transformer and a power regulator.

The various modules discussed above are coupled together by a bus system 5730. The bus system 5730 can include a data bus and, for example, a power bus, a control signal bus, and/or a status signal bus in addition to the data bus. It is understood that the modules of the Bot 5700 can be operatively coupled to one another using any suitable techniques and mediums.

Although a number of separate modules or components are illustrated in FIG. 57, persons of ordinary skill in the art will understand that one or more of the modules can be combined or commonly implemented. For example, the processor 5702 can implement not only the functionality described above with respect to the processor 5702, but also implement the functionality described above with respect to the wireless signal generator 5722. Conversely, each of the modules illustrated in FIG. 57 can be implemented using a plurality of separate components or elements.

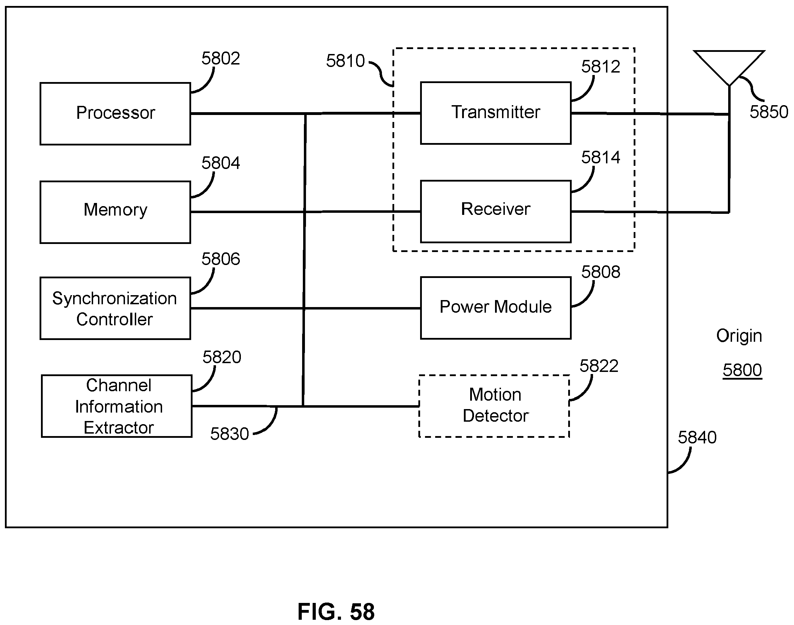

FIG. 58 illustrates an exemplary block diagram of a second wireless device, e.g. an Origin 5800, of a system for wireless sensing, according to one embodiment of the present teaching. The Origin 5800 is an example of a device that can be configured to implement the various methods described herein. The Origin 5800 in this example may serve as an Origin or receiver in any system disclosed herein, e.g. the Origin 212 in FIG. 2 for radio-assisted signal estimation in a venue, the Origin 2012 in FIG. 20 for wireless sensing, the Origin 4812 in FIG. 48 for identifying devices used for wireless sensing, or Rx, or Origin in any one of FIGS. 1-56. As shown in FIG. 58, the Origin 5800 includes a housing 5840 containing a processor 5802, a memory 5804, a transceiver 5810 comprising a transmitter 5812 and a receiver 5814, a power module 5808, a synchronization controller 5806, a channel information extractor 5820, and an optional motion detector 5822.

In this embodiment, the processor 5802, the memory 5804, the transceiver 5810 and the power module 5808 work similarly to the processor 5702, the memory 5704, the transceiver 5710 and the power module 5708 in the Bot 5700. An antenna 5850 or a multi-antenna array 5850 is typically attached to the housing 5840 and electrically coupled to the transceiver 5810.

The Origin 5800 may be a second wireless device that has a different type from that of the first wireless device (e.g. the Bot 5700). In particular, the channel information extractor 5820 in the Origin 5800 is configured for receiving the wireless signal through the wireless channel, and obtaining a time series of channel information (CI) of the wireless channel based on the wireless signal. The channel information extractor 5820 may send the extracted CI to the optional motion detector 5822 or to a motion detector outside the Origin 5800 for wireless sound sensing in the venue.

The motion detector 5822 is an optional component in the Origin 5800. In one embodiment, it is within the Origin 5800 as shown in FIG. 58. In another embodiment, it is outside the Origin 5800 and in another device, which may be a Bot, another Origin, a cloud server, a fog server, a local server, and an edge server. The optional motion detector 5822 may be configured for detecting sound information from a vibrating object or source in the venue based on motion information. The motion information may be computed based on the time series of CI by the motion detector 5822 or another motion detector outside the Origin 5800.

The synchronization controller 5806 in this example may be configured to control the operations of the Origin 5800 to be synchronized or un-synchronized with another device, e.g. a Bot, another Origin, or an independent motion detector. In one embodiment, the synchronization controller 5806 may control the Origin 5800 to be synchronized with a Bot that transmits a wireless signal. In another embodiment, the synchronization controller 5806 may control the Origin 5800 to receive the wireless signal asynchronously with other Origins. In another embodiment, each of the Origin 5800 and other Origins may receive the wireless signals individually and asynchronously. In one embodiment, the optional motion detector 5822 or a motion detector outside the Origin 5800 is configured for asynchronously computing respective heterogeneous motion information based on the respective time series of CI.

The various modules discussed above are coupled together by a bus system 5830. The bus system 5830 can include a data bus and, for example, a power bus, a control signal bus, and/or a status signal bus in addition to the data bus. It is understood that the modules of the Origin 5800 can be operatively coupled to one another using any suitable techniques and mediums.

Although a number of separate modules or components are illustrated in FIG. 58, persons of ordinary skill in the art will understand that one or more of the modules can be combined or commonly implemented. For example, the processor 5802 can implement not only the functionality described above with respect to the processor 5802, but also implement the functionality described above with respect to the channel information extractor 5820. Conversely, each of the modules illustrated in FIG. 58 can be implemented using a plurality of separate components or elements.

The following numbered clauses provide examples for wireless sensing.

Clause F1. A method/device/system/software of a wireless sensing system, comprising: transmitting a wireless signal from a Type1 heterogeneous wireless device of the wireless sensing system through a wireless multipath channel of a venue, wherein the wireless multipath channel is impacted by a movement of an object in the venue; receiving the wireless signal by a Type2 heterogeneous wireless device of the system through the wireless multipath channel, wherein the received wireless signal differs from the transmitted wireless signal due to the wireless multipath channel of the venue and the movement of the object; obtaining a number of time series of channel information (TSCI) of the wireless multipath channel based on the received wireless signal using a processor, a memory and a set of instructions; computing a time series of motion analytics (TSMA) based on the number of TSCI; computing an information of a target device based on the TSMA, wherein the target device is one of: the Type1 device and the Type2 device, wherein the information comprises at least one of: an identity, a name, a label, a tag, or a location.

The motion analytics based on the TSCI may be used for BOTH (a) computing the information of target device info (e.g. identity or location) and (b) wireless sensing. The TSMA may be used for both (i) computing the information of the target device and (ii) monitoring the motion of the object.

Clause F2. The method/device/system/software of the wireless sensing system of Clause F1, further comprising: wherein at least one of: the TSMA or the TSCI is used also for monitoring object motion in the venue in a wireless sensing task.

The target device info computation may require the object (e.g. a user, a pet) to perform a training movement (e.g. move towards the target device) > Automatic computation of a predicted/estimated/guessed/suggested information, without user input on user device. Present the predicted information on user device and allow user to confirm/reject the predicted info.

Clause F3. The method/device/system/software of the wireless sensing system of Clause F1 or F2, further comprising: wherein the object is a training object undergoing a planned movement; analyzing a behavior of the TSMA; analyzing the TSMA based on at least one of: a predicted behavior associated with the planned movement, or a predicted identity of the target device; computing a predicted information of the target device based on the comparison; presenting the predicted information on a user device of a user; computing the information of the target device interactively based on a user input on the user device, wherein the user input is a confirmation or a rejection of the predicted information.

The target device info computation may require the object (e.g. a user, a pet) to perform a training movement (e.g. move towards the target device). User-assisted computation of the information, based on a user input on a user device.

Clause F4. The method/device/system/software of the wireless sensing system of Clauses F1 to F3, further comprising: wherein the object is a user of the system; wherein the movement is a training movement; computing the information of the target device interactively by: instructing the user to do the training movement near the target device, presenting the TSMA on a user device of the user, receiving a user input on the user device, computing the information of the target device interactively based on the user input.

The object (e.g. a user, a pet) may be prompted to perform the training movement. The prompting may be visual, audio, mechanical, etc. The training movement may be a sequence of movements with associated timing. E.g. move towards the target device, pause for 5 seconds, move away from target device, pause for 5 seconds; and repeat the sequence for N times. E.g. move a hand in circular motion for N times. Pause for 10 seconds and do the circular motions for M times.

Clause F5. The method/device/system/software of the wireless sensing system of Clauses F1 to F4, further comprising: generating a prompting to the training object to undergo the training movement, wherein the prompting comprises at least one of: a signaling, a guidance, an instruction, a step-by-step instruction, a timing, a rhythm, an interaction with the object, an interactive instruction, a multi-modal prompting, a media prompting, a multimedia prompting, a visual prompting, a presentation, a text, an image, a graphics, a figure, a video, an animation, a playback, an audio prompting, an audio playback, a voice recording, a synthesized voice, a recorded voice, a mechanical prompting, a vibration, or a mechanical motion.

The user sees/hears/feels a presentation/audio presentation/visual presentation/mechanical presentation/visual display/animation of the TSMA.

Clause F6. The method/device/system/software of the wireless sensing system of Clauses F1 to F5, further comprising: generating a real-time presentation of the TSMA on the user device reflecting the training movement of the user near the target device, wherein the real-time presentation comprises at least one of: a visual presentation, an animated presentation, a multimedia presentation, an audio presentation, or a mechanical presentation.

The location of training object may be input by user.

Clause F7. The method/device/system/software of the wireless sensing system of Clauses F1 to F6, further comprising: wherein a location of the training object is unknown to the system but known to the user, computing another information of the location of the training object interactively based on another user input on the user device, wherein the another information comprises at least one of: an identity, a name, a label or a tag of a region of the venue.

Additional TSMA(s) may be computed based on respective TSCI associated with additional Type1 or Type2 devices. The TSMA may be displayed/presented/played/animated together with the additional TSMA(s). The user can look at/listen to/observe all the TSMA and find out the one that follows the training object's movement (e.g. training object=user). Even though the target device (either the Type1 or the Type2 device) may appear with unrecognizable name in the wireless sensing system, the user can follow the system prompting and do the training movements near the target device. Then the user can compare the displayed TSMA(s) and identify the target device (even though it still has unrecognizable name) because the TSMA associated with the target device would demonstrate a behavior closely related to the training movement.

Clause F8. The method/device/system/software of the wireless sensing system of Clauses F1 to F7, further comprising: wherein the target device is the Type2 device; wherein there is at least one additional Type2 device in the venue; transmitting a respective additional wireless signal from the Type1 device through the wireless multipath channel of the venue to each additional Type2 device; receiving the respective additional wireless signal by each additional Type2 device, wherein the respective received additional wireless signal differs from the respective transmitted additional wireless signal due to the wireless multipath channel of the venue and the movement of the object; obtaining a respective number of additional TSCI of the wireless multipath channel by each additional Type2 device based on each respective received additional wireless signal; computing a respective additional TSMA based on the respective number of additional TSCI for each additional Type2 device; computing the information of the target device based on at least some of the additional TSMA.

As there may be a large number of wireless devices in the venue, their TSMA may be displayed in groups (i.e. just some of them displayed simultaneously) so that the presentation/display is more user-friendly. The display for a device may be too small if a large number of TSMAs are displayed at the same time.

Clause F9. The method/device/system/software of the wireless sensing system of Clauses F1 to F8, further comprising: generating a real-time presentation of the TSMA and the at least some additional TSMA on the user device, wherein the TSMA and the at least some additional TSMA are presented visually on the user device in a side-by-side manner to enable visual comparison by the user.

Clause F10. The method/device/system/software of the wireless sensing system of Clauses F1 to F9, further comprising: wherein the target device is the Type1 device; wherein there is at least one additional Type1 device in the venue; transmitting a respective additional wireless signal from each additional Type1 device through the wireless multipath channel of the venue to the Type2 device; receiving the respective additional wireless signal from each additional Type1 device by the Type2 device, wherein the respective received additional wireless signal differs from the respective transmitted additional wireless signal due to the wireless multipath channel of the venue and the movement of the object; obtaining a respective number of additional TSCI of the wireless multipath channel by the Type2 device based on each respective received additional wireless signal; computing a respective additional TSMA based on the respective number of additional TSCI associated with each additional Type1 device; computing the information of the target device based on at least some of the additional TSMA.

Clause F11. The method/device/system/software of the wireless sensing system of Clause F10, further comprising: generating a real-time presentation of the TSMA and the at least some additional TSMA on the user device, wherein the TSMA and the at least some additional TSMA are presented visually on the user device in a side-by-side manner to enable visual comparison by the user.

Some possible training objects. Some possible training movement.

Clause F12. The method/device/system/software of the wireless sensing system of Clauses F1 to F11, further comprising: wherein the object comprises at least one of: a user of the system, a living object, a plant, an animal, a pet, a human, or a machine; wherein the movement comprises at least one of: touching the target device, tapping the target device, a movement towards the target device, a movement away from the target device, a radial movement with respect to the target device, a tangential movement with respect to the target device, a tapping motion, a repeating movement, a repeated movement, a periodic movement, a transient movement, a movement with a timing, a movement with a count, an intermittent movement, or a movement with timed pauses.

Some tasks may be performed upon identifying the target device.

Clause F13. The method/device/system/software of the wireless sensing system of Clauses F1 to F12, further comprising: performing at least one of the following based on the information of the target device: generating of a recommended configuration, presenting the recommended configuration on the user device, receiving a confirmation or rejection or modification of the recommended configuration based on a user input on the user device, customizing or configuring the target device, customizing or configuring the system, customizing or configuring a network or an inter-

connection of the system, customizing or configuring a server of the system, customizing or configuring an app on a user device, customizing or configuring a presentation of the system, customizing or configuring a wireless sensing task, a wireless sensing algorithm, a fusion algorithm, or an aggregation algorithm associated with the system, confirming an admissibility, acceptability, sufficiency, suitability or a qualification of the target device, confirming a role of the target device in the system, qualifying at least one of: the target device, the TSCI, the wireless signal, the transmission of the wireless signal, the reception of the wireless signal, and the obtaining of the TSCI, locating the target device, computing a coordinate of the target device with respect to a map, naming the target device, renaming the target device, obtaining a network configuration or interconnection of the system from the user, and obtaining from the user a configuration of the wireless sensing task, a wireless sensing algorithm, a fusion algorithm, or an aggregation algorithm.

Pattern recognition may be applied to TSMA.

Clause F14. The method/device/system/software of the wireless sensing system of Clauses s F1 to F13, further comprising: recognizing a pattern of the TSMA, wherein the pattern comprises at least one of: a monotonic increasing trend of a feature of the motion analytics in the TSMA as the object moves towards the target device in a neighborhood of the target device, a monotonic decreasing trend of the feature of the motion analytics in the TSMA as the object moves away from the target device in the neighborhood of the target device, a local maximum of the feature of the motion analytics in the TSMA at a point of closest approach of the object in the neighborhood of the target device, a positive derivative or differential of the feature of the motion analytics in the TSMA as the object moves towards the target device in the neighborhood of the target device, a negative derivative or differential of the feature of the motion analytics in the TSMA as the object moves away from the target device in the neighborhood of the target device, a zero derivative or differential of the feature of the motion analytics in the TSMA at the point of closest approach, a negative second derivative (or differential of differential) of the feature of the motion analytics in the TSMA at the point of closest approach, a repetition of the feature of the motion analytics in the TSMA, a relaxation oscillation of the feature of the motion analytics in the TSMA, and a damping of the feature of the motion analytics in the TSMA; computing the information of the target device based on the recognition of the pattern of the TSMA.

Clause F15. The method/device/system/software of the wireless sensing system of Clauses F1 to F14: wherein the motion analytics comprises at least one of: a magnitude, a phase, a product, a square, a square root, a sum, a weighted sum, an inverse, a mean, a weighted mean, a trimmed mean, a conditional mean, a geometric mean, a harmonic mean, a thresholding, a soft thresholding, a hard thresholding, a quantization, a logical value, a set, a collection, a time, an occurrence, an event, an event statistics, a label, a mapping, a time duration, a timing, a time period, a regularity, a periodicity, a repetition, a recurrence, a change, a differential, an impulsiveness, an anomaly, a time averaging, a sliding window, a filtering output, a lowpass filtering, a bandpass filtering, a highpass filtering, a maximum, a minimum, a local maximum, a local minimum, a conditional maximum, a conditional minimum, a transformation, a transform, linear transform, nonlinear transform, a Fourier transform, a Laplace transform, a Hadamard transform, a trigonometric transform, a sparse transform, a graph-based transform, a component, a spectral component, a spectral feature, a spectral characteristics, a principal component analysis, an independent component analysis, an eigen-decomposition, a singular value decomposition, an orthogonal projection, a non-orthogonal projection, an over-complete projection, a histogram, a sample mean, a standard deviation, a variance, a high order statistics, a centroid, a cluster center, a percentile, a median, a mode, a normalization, a correlation, a covariance, an auto-correlation, an auto-covariance, a cross-correlation, a cross-covariance, likelihood, probability distribution function, sample distribution, moment generating function, expected value, expected function, a length, an area, a volume, a shape, a contour, a shade, a location, a position, a localization, a coordinate, a distance, a direction, a displacement, a speed, a velocity, an acceleration, an integration, a derivative, a slope, a second derivative, a high order derivative, an angle, an angular distance, an angular speed, an angular acceleration, total variation, absolute variation, square variation, spread, dispersion, variability, deviation, absolute deviation, square deviation, total deviation, divergence, range, interquartile range, skewness, kurtosis, L-moment, coefficient of variation, quartile coefficient of dispersion, mean absolute difference, Gini coefficient, relative mean difference, median absolute deviation, average absolute deviation, distance standard deviation, coefficient of dispersion, entropy, variance-to-mean ratio, maximum-to-minimum ratio, variation measure, regularity measure, similarity measure, a similarity score, a distance, L-1 distance, absolute distance, L-2 distance, Euclidean distance, L-k distance, a norm, a medoid distance, a classification, a motion classification, a recognition, a gait, a gait cycle, a gesture, a handwriting, presence, absence, proximity, approaching, receding, breathing rate, heart rate, tidal volume, depth of breath, inhale time, exhale time, inhale time to exhale time ratio, airflow rate, heart heat-to-beat interval, heart rate variability, and another analytics.

In some embodiments, the present teaching discloses wireless sensing partner identification and qualification system. A Type2 device may be installed in a venue with many smart devices (e.g. IoT devices, WiFi enabled device, WiFi Direct enabled device, WiFi P2P enabled device, 5G device, Zigbee device) which can potentially serve as Type1 device to form a wireless sensing network with the Type2 device. The Type2 device may probe/scan/discover/identify/locate/find/search for/request/ authenticate/associate with/negotiate/connect/pair/register/connect to some of the smart devices to serve as Type1 devices so as to jointly form a wireless sensing network/system. The connection between the Type1 and Type2 devices may be a P2P (e.g. WiFi Direct) connection.

The smart devices (candidate Type1 devices) may include multiple smart TVs at different locations in the venue, smart speakers, smart set-top-boxes (STBs), smart lightings, smart bulbs, smart refrigerator, smart appliances, smart furniture, smart fixtures, smart sockets, smart plugs, smart chargers, smart ornaments, smart clocks, smart watches, smart smoke detectors, smart door bell, smart cameras, smart thermostats, smart vacuum cleaners, computers, tablets, phones, routers, base stations, etc. The Type2 device may be an Origin, a router, repeater/mesh router/mesh device, a base station, a 4G/5G mini/micro/nano/pico-cell base station, a Hex Command, a client, a WiFi client, an IoT device, or one of the smart devices. A smart device may function both as a Type1 device and as a Type2 device. The venue may be home, office, building, warehouse, facility, structure, etc. In some embodiments, compute an information of target device (e.g. Type1 or Type2 device) based on motion analytics computed from TSCI obtained/captured by Typel/Type2 devices during object movement.

The following numbered clauses provide other examples for wireless sensing.

Clause G1. A method/device/system/software of a wireless sensing system, comprising: transmitting a wireless signal from a Type1 heterogeneous wireless device of the system with N1 transmit antennas through a wireless multipath channel of a venue, wherein the wireless multipath channel is impacted by a movement of an object in the venue; receiving the wireless signal by a Type2 heterogeneous wireless device of the system with N2 receive antennas through the wireless multipath channel, wherein the received wireless signal differs from the transmitted wireless signal due to the wireless multipath channel of the venue; obtaining a number of time series of channel information (TSCI) of the wireless multipath channel based on the received wireless signal using a processor, a memory and a set of instructions, each TSCI associated with one of the N1 transmit antennas and one of the N2 receive antennas; computing a time series of motion analytics (TSMA) of the object based on the number of TSCI; computing an information of a target device based on the TSMA, wherein the target device is one of: the Type1 device and the Type2 device. The motion analytics based on the TSCI may be used for BOTH (a) computing the target device info (e.g. identity or location) and (b) wireless sensing.

Clause G2. The method/device/system/software of the wireless sensing system of Clause G1, further comprising: monitoring the motion of the object based on the TSMA.

Clause G2b. The method/device/system/software of the wireless sensing system of Clause G1 or G2, further comprising: prompting a training object to undergo a training movement to impact the wireless multipath channel so that the number of TSCI can be obtained and the TSMA and consequently the information of the target device can be computed. The target device info computation may require object (e.g. a user, a pet) to perform a training movement (e.g. move towards the target device).

Clause G3. The method/device/system/software of the wireless sensing system of Clauses G1, G2 or G2b, further comprising: wherein the object is a training object undergoing a training movement.

Clause G3b. The method/device/system/software of the wireless sensing system of any previous Clause G: wherein the object undergoes the training movement based on a prompting by the system.

Clause G3c. The method/device/system/software of the wireless sensing system of any previous Clause G: wherein the object undergoes the training movement in response to a prompting by the system. The location of training object may be needed.

Clause G4. The method/device/system/software of the wireless sensing system of any previous Clause G, further comprising: wherein the training object is at a known location. Some possible training objects.

Clause G5. The method/device/system/software of the wireless sensing system of any previous Clause G, further comprising: wherein the training object comprises at least one of: a user of the system, a living object, a plant, an animal, a pet, a human, or a machine. Some possible training movement.

Clause G6. The method/device/system/software of the wireless sensing system of any previous Clause G, further comprising: wherein the training movement comprises at least one of: a movement towards or away from the target device, a radial movement with respect to the target device, a tangential movement with respect to the target device, a repeating movement, a periodic movement, and a transient movement. A possible set up: user does training movement to identify/confirm target device.

Clause G7. The method/device/system/software of the wireless sensing system of any previous Clause G, further comprising: wherein the training object is a user of the wireless sensing system; wherein the user undergoes the training movement to identify or confirm the target device. The user may move towards or away from target device.

Clause G8. The method/device/system/software of the wireless sensing system of any previous Clause G, further comprising: wherein the user moves towards or away from the target device in the training movement. The target device may be identified.

Clause G9. The method/device/system/software of the wireless sensing system of any previous Clause G, further comprising: identifying the target device by computing an identity (ID) of the target device based on the TSMA and the training movement, wherein the information is the ID. There may be a guess/prediction/anticipation of the ID of device. The target device may be confirmed based on the guess/prediction/anticipation.

Clause G10. The method/device/system/software of the wireless sensing system of any previous Clause G, further comprising: confirming the ID of the target device based on a prediction of the ID of the target device. Some tasks may be performed upon identifying the target device.

Clause G11. The method/device/system/software of the wireless sensing system of any previous Clause G, further comprising: performing at least one of the following based on the ID of the target device: customizing or configuring the target device, customizing or configuring the system, customizing or configuring a network or an interconnection of the system, customizing or configuring a server of the system, customizing or configuring an app on a user device, customizing or configuring a presentation of the system, customizing or configuring a wireless sensing task, a wireless sensing algorithm, a fusion algorithm, or an aggregation algorithm associated with the system, confirming an admissibility, acceptability, sufficiency, suitability or a qualification of the target device, confirming a role of the target device in the system, qualifying at least one of: the target device, the TSCI, the wireless signal, the transmission of the wireless signal, the reception of the wireless signal, and the obtaining of the TSCI, locating the target device, computing a location of the target device, computing a coordinate of the target device with respect to a map, naming the target device, renaming the target device, obtaining a location of the target device from a user, obtaining a name or a label of the target device from the user, obtaining a network configuration or interconnection of the system from the user, and obtaining from the user a configuration of the wireless sensing task, a wireless sensing algorithm, a fusion algorithm, or an aggregation algorithm.

Clause G12. The method/device/system/software of the wireless sensing system of any previous Clause G, further comprising: analyzing a behavior of the TSMA associated with the movement of the object; computing the information of the target device based on the analysis of the behavior of the TSMA. Behavior of TSMA may be analyzed based on a prediction of identity of target device.

Clause G13. The method/device/system/software of the wireless sensing system of any previous Clause G, further comprising: analyzing the behavior of the TSMA based on a prediction of an identity of the target device. Pattern recognition may be applied to TSMA.

Clause G14. The method/device/system/software of the wireless sensing system of any previous Clause G, further comprising: recognizing a pattern of the TSMA; computing the information of the target device based on the recognition of the pattern of the TSMA. Pattern recognition may be applied to TSMA based on a prediction of identity of target device.

Clause G15. The method/device/system/software of the wireless sensing system of any previous Clause G, further comprising: recognizing the pattern of the TSMA based on the training movement and a prediction of the information of the target device; confirming the information of the target device based on the recognized pattern of the TSMA. Some possible patterns of TSMA associated with target device.

Clause G16. The method/device/system/software of the wireless sensing system of any previous Clause G: wherein the pattern comprises at least one of: a monotonic increasing trend of a feature of the motion analytics in the TSMA as the object moves towards the target device in a neighborhood of the target device, a monotonic decreasing trend of the feature of the motion analytics in the TSMA as the object moves away from the target device in the neighborhood of the target device, a local maximum of the feature of the motion analytics in the TSMA at a point of closest approach of the object in the neighborhood of the target device, a positive derivative or differential of the feature of the motion analytics in the TSMA as the object moves towards the target device in the neighborhood of the target device, a negative derivative or differential of the feature of the motion analytics in the TSMA as the object moves away from the target device in the neighborhood of the target device, a zero derivative or differential of the feature of the motion analytics in the TSMA at the point of closest approach, a negative second derivative (or differential of differential) of the feature of the motion analytics in the TSMA at the point of closest approach, a repetition of the feature of the motion analytics in the TSMA, a relaxation oscillation of the feature of the motion analytics in the TSMA, and a damping of the feature of the motion analytics in the TSMA. Some possible motion analytics.

Clause G17. The method/device/system/software of the wireless sensing system of any previous Clause G: wherein the motion analytics comprises at least one of: a magnitude, a phase, a product, a square, a square root, a sum, a weighted sum, an inverse, a mean, a weighted mean, a trimmed mean, a conditional mean, a geometric mean, a harmonic mean, a thresholding, a soft thresholding, a hard thresholding, a quantization, a logical value, a set, a collection, a time, an occurrence, an event, an event statistics, a label, a mapping, a time duration, a timing, a time period, a regularity, a periodicity, a repetition, a recurrence, a change, a differential, an impulsiveness, an anomaly, a time averaging, a sliding window, a filtering output, a lowpass filtering, a bandpass filtering, a highpass filtering, a maximum, a minimum, a local maximum, a local minimum, a conditional maximum, a conditional minimum, a transformation, a transform, linear transform, nonlinear transform, a Fourier transform, a Laplace transform, a Hadamard transform, a trigonometric transform, a sparse transform, a graph-based transform, a component, a spectral component, a spectral feature, a spectral characteristics, a principal component analysis, an independent component analysis, an eigen-decomposition, a singular value decomposition, an orthogonal projection, a non-orthogonal projection, an overcomplete projection, a histogram, a sample mean, a standard deviation, a variance, a high order statistics, a centroid, a cluster center, a percentile, a median, a mode, a normalization, a correlation, a covariance, an auto-correlation, an auto-covariance, a cross-correlation, a cross-covariance, likelihood, probability distribution function, sample distribution, moment generating function, expected value, expected function, a length, an area, a volume, a shape, a contour, a shade, a location, a position, a localization, a coordinate, a distance, a direction, a displacement, a speed, a velocity, an acceleration, an integration, a derivative, a slope, a second derivative, a high order derivative, an angle, an angular distance, an angular speed, an angular acceleration, total variation, absolute variation, square variation, spread, dispersion, variability, deviation, absolute deviation, square deviation, total deviation, divergence, range, interquartile range, skewness, kurtosis, L-moment, coefficient of variation, quartile coefficient of dispersion, mean absolute difference, Gini coefficient, relative mean difference, median absolute deviation, average absolute deviation, distance standard deviation, coefficient of dispersion, entropy, variance-to-mean ratio, maximum-to-minimum ratio, variation measure, regularity measure, similarity measure, a similarity score, a distance, L-1 distance, absolute distance, L-2 distance, Euclidean distance, L-k distance, a norm, a medoid distance, a classification, a motion classification, a recognition, a gait, a gait cycle, a gesture, a handwriting, presence, absence, proximity, approaching, receding, breathing rate, heart rate, tidal volume, depth of breath, inhale time, exhale time, inhale time to exhale time ratio, airflow rate, heart heat-to-beat interval, heart rate variability, and another analytics. There may be N type1 devices at N known locations, but the identity of each may be unknown and need to be determined.

Clause G18. A method/device/system/software of a wireless sensing system, comprising: transmitting a set of wireless signal from a set of Type1 heterogeneous wireless device of the system, each wireless signal from a respective Type1 device with a respective amount of transmit antennas through a wireless multipath channel of a venue, wherein the wireless multipath channel is impacted by a movement of an object in a neighborhood of a particular Type1 device in the venue; receiving the set of wireless signals by a Type2 heterogeneous wireless device of the system with N2 receive antennas through the wireless multipath channel, wherein the received wireless signal differs from the transmitted wireless signal due to the wireless multipath channel of the venue; obtaining a number of respective time series of channel information (TSCI) of the wireless multipath channel based on a respective received wireless signal associated with a respective Type1 device using a processor, a memory and a set of instructions, each TSCI associated with one of the N1 transmit antennas and one of the N2 receive antennas; computing a set of time series of motion analytics (TSMA) of the object, each TSMA based on the number of respective TSCI associated with the respective Type1 device; computing an information of a target device based on the set of TSMA, wherein the target device is the particular Type1 device. The motion analytics based on the TSCI may be used for BOTH (a) computing the target device info (e.g. identity or location) and (b) wireless sensing.

Clause G19. The method/device/system/software of the wireless sensing system of Clause G18, further comprising: monitoring the motion of the object based on the TSMA. The target device info computation may require object (e.g. a user, a pet) to perform a training movement (e.g. move towards the target device).

Clause G20. The method/device/system/software of the wireless sensing system of Clause G18 or G19, further comprising: wherein the object is a training object undergoing a training movement.

Clause G21. The method/device/system/software of a wireless sensing system of Clauses G18 to G20, comprising: wherein the object is a user of the wireless sensing system; wherein the user moves towards or away from the target device in the neighborhood of the target device. The target device may be identified.

Clause G22. The method/device/system/software of the wireless sensing system of Clauses G18 to G21, further comprising: identifying the target device by computing an identity (ID) of the target device based on the set of TSMA and the training movement, wherein the information is the ID. Some tasks may be performed upon identifying the target device.

Clause G23. The method/device/system/software of the wireless sensing system of Clauses G18 to G22, further comprising: performing at least one of the following based on the ID of the target device: customizing or configuring the target device, customizing or configuring the system, customizing or configuring a network or an interconnection of the system, customizing or configuring a server of the system, customizing or configuring an app on a user device, customizing or configuring a presentation of the system, customizing or configuring a wireless sensing task, a wireless sensing algorithm, a fusion algorithm, or an aggregation algorithm associated with the system, confirming an admissibility, acceptability, sufficiency, suitability or a qualification of the target device, confirming a role of the target device in the system, qualifying at least one of: the target device, the TSCI, the wireless signal, the transmission of the wireless signal, the reception of the wireless signal, and the obtaining of the TSCI, locating the target device, computing a location of the target device, computing a coordinate of the target device with respect to a map, naming the target device, renaming the target device, obtaining a location of the target device from a user, obtaining a name or a label of the target device from the user, obtaining a network configuration or interconnection of the system from the user, and obtaining from the user a configuration of the wireless sensing task, a wireless sensing algorithm, a fusion algorithm, or an aggregation algorithm. Behavior of TSMA may be analyzed.

Clause G24. The method/device/system/software of the wireless sensing system of Clauses G18 to G23, further comprising: analyzing a behavior of the set of TSMA associated with the movement of the object; computing the identity of the target device based on the analysis of the behavior of the set of TSMA. Behavior of TSMA may be analyzed based on a prediction of identity of target device.

Clause G25. The method/device/system/software of the wireless sensing system of Clauses G 18 to G24, further comprising: analyzing the identity of the set of TSMA based on a prediction of the identity of the target device. Pattern recognition may be applied to TSMA.

Clause G26. The method/device/system/software of the wireless sensing system of Clauses G18 to G25, further comprising: recognizing a pattern of the TSMA; computing the identity of the target device based on the recognition of the pattern of the TSMA. Pattern recognition may be applied to TSMA based on a prediction of identity of target device.

Clause G27. The method/device/system/software of the wireless sensing system of Clauses G18 to G26, further comprising: recognizing the pattern of the TSMA based on the training movement and a prediction of the identity of the target device; confirming the identity of the target device based on the recognized pattern of the TSMA. Some possible pattern of TSMA associated with target device. E.g. some behavior (increasing on approaching, max at closest approach, or decreasing on receding) may happen in target TSMA but not in non-target TSMA. The behavior may happen in both target TSMA and a non-target TSMA, in which case the feature is larger in target TSMA than in non-target TSMA.

Clause G28. The method/device/system/software of the wireless sensing system of Clauses G18 to G26: wherein a target TSMA is the TSMA associated with the target device; wherein a non-target TSMA is one of the set of TSMA that is not the target TSMA; wherein the pattern comprises at least one of: a monotonic increasing trend of a feature of the motion analytics in the target TSMA as the object moves towards the target device in a neighborhood of the target device, a monotonic increasing trend of the feature of the motion analytics in the target TSMA but not in the non-target TSMA as the object moves towards the target device in the neighborhood of the target device, a monotonic increasing trend of the feature of the motion analytics in both the target TSMA and the non-target TSMA, with the feature being greater in the target TSMA than in the non-target TSMA, as the object moves towards the target device in the neighborhood of the target device, a monotonic decreasing trend of the feature of the motion analytics in the target TSMA as the object moves away from the target device in the neighborhood of the target device, a monotonic decreasing trend of the feature of the motion analytics in the target TSMA but not in the non-target TSMA as the object moves away from the target device in the neighborhood of the target device, a monotonic decreasing trend of the feature of the motion analytics in both the target TSMA and the non-target TSMA, with the feature being greater in the target TSMA than in the non-target TSMA, as the object moves away from the target device in the neighborhood of the target device, a maximum of the feature of the motion analytics in the target TSMA at a point of closest approach of the object in the neighborhood of the target device, a maximum of the feature of the motion analytics in the target TSMA but not in the non-target TSMA at the point of closest approach, a maximum of the feature of the motion analytics in both the target TSMA and the non-target TSMA, with the maximum being greater in the target TSMA than in the non-target TSMA, at the point of closest approach, a positive derivative or differential of the feature of the motion analytics in the target TSMA as the object moves towards the target device in the neighborhood of the target device, a positive derivative or differential of the feature of the motion analytics in the target TSMA but not in the non-target TSMA as the object moves towards the target device in the neighborhood of the target device, a positive derivative or differential of the feature of the motion analytics in both the target TSMA and the non-target TSMA, with the feature being greater in the target TSMA than in the non-target TSMA, as the object moves towards the target device in the neighborhood of the target device, a negative derivative or differential of the feature of the motion analytics in the target TSMA as the object moves away from the target device in the neighborhood of the target device, a negative derivative or differential of the feature of the motion analytics in the target TSMA but not in the non-target TSMA as the object moves away from the target device in the neighborhood of the target device, a negative derivative or differential of the feature of the motion analytics in both the target TSMA and the non-target TSMA, with the feature being greater in the target TSMA than in the non-target TSMA, as the object moves away from the target device in the neighborhood of the target device, a zero derivative or differential of the feature of the motion analytics in the target TSMA at the point of closest approach, a zero derivative or differential of the feature of the motion analytics in the target TSMA but not in the non-target TSMA at the point of closest approach, a zero derivative or differential of the feature of the motion analytics in both the target TSMA and the non-target TSMA, with the feature being greater in the target TSMA than in the non-target TSMA, at the point of closest approach, a negative second derivative (or differential of differential) of the feature of the motion analytics in the target TSMA at the point of closest approach, a negative second derivative (or differential of differential) of the feature of the motion analytics in the target TSMA but not in the non-target TSMA at the point of closest approach, and a negative second derivative (or differential of differential) of the feature of the motion analytics in both the target TSMA and the non-target TSMA, with the feature being greater in the target TSMA than in the non-target TSMA, at the point of closest approach.

In another embodiment, the wireless motion sensing may be combined with other sensing/sensor information to make more sense of the motion statistics. For instance, in a house that was built long time ago, the walls/roofs are made of such materials that dynamics in nearby environment may affect the electromagnetic wave propagation more heavily than to houses recently built with newer materials. If there is a big tree with many leaves/branches close to the house/wall/roof and the leaves/branches wave wildly in a windy day/night, even if there is no motion happening inside the house, the wireless motion sensing may still detect the movement of the tree/leaves/branches and detection may be triggered. If a weather/wind sensor is another IoT device connected to the motion sensing system disclosed in the present teaching, when a false alarm happens, the motion sensing system may check the weather/wind sensor and fuse the sensor measurement and make better decision on the motion sensing inside the house.

In another embodiment, when such false alarms happen frequently in a neighborhood with the disclosed motion sensing system equipped, and the users report/feedback they are indeed false alarms as nobody causes motion, it may indicate there are unusual natural activities/movement such as earthquakes, and early detection of earthquakes is possible.

The following numbered clauses provide other examples for wireless sensing.

Clause H1. A system for wireless sensing, comprising: a transmitter configured to transmit a wireless signal through a wireless multipath channel of a venue, wherein the wireless multipath channel is impacted by a movement of an object in the venue; a receiver configured to receive the wireless signal through the wireless multipath channel, wherein the received wireless signal differs from the transmitted wireless signal due to the wireless multipath channel and the movement of the object; and a processor configured for: obtaining a number of time series of channel information (TSCI) of the wireless multipath channel based on the received wireless signal, computing a time series of motion analytics (TSMA) based on the number of TSCI, computing an information of a target device based on the TSMA, wherein the target device is one of: the transmitter, the receiver, or an additional device in the venue, wherein the information of the target device comprises at least one of: an identity, a name, a label, a tag, or a location.

Clause H2. The system of Clause H1, wherein the processor is further configured for: monitoring, based on at least one of the TSMA or the TSCI, the movement of the object in the venue in a wireless sensing task.

Clause H3. The system of Clause H1 or H2, wherein the processor is further configured for: analyzing a behavior of the TSMA, wherein the object is a training object undergoing a planned movement; performing an analysis of the TSMA based on at least one of: a predicted behavior associated with the planned movement, or a predicted identity of the target device; computing a predicted information of the target device based on the analysis of the TSMA; presenting the predicted information on a user device of a user; and computing the information of the target device interactively based on a user input on the user device, wherein the user input is a confirmation or a rejection of the predicted information.

Clause H4. The system of Clauses H1 to H3, wherein: the object is a user of the system; the movement is a training movement; and the processor is further configured for computing the information of the target device interactively based on: instructing the user to do the training movement near the target device, presenting the TSMA on a user device of the user, receiving at least one user input on the user device, and computing the information of the target device interactively based on the at least one user input.

Clause H5. The system of Clauses H1 to H4, wherein the processor is further configured for: generating a prompting to the object to undergo the training movement, wherein the prompting comprises at least one of: a signaling, a guidance, an instruction, a visual prompting, an audio prompting, a mechanical prompting, a vibration, or a mechanical motion.

Clause H6. The system of Clauses H1 to H5, wherein the processor is further configured for: generating a real-time presentation of the TSMA on the user device reflecting the training movement of the user near the target device, wherein the real-time presentation comprises at least one of: a visual presentation, an animated presentation, a multimedia presentation, an audio presentation, or a mechanical presentation.

Clause H7. The system of Clauses H1 to H6, wherein: a location of the object is unknown to the system but known to the user.

Clause H8. The system of Clauses H1 to H7, wherein the processor is further configured for: computing an additional information of the location of the object interactively and dynamically based on an additional user input on the user device, wherein the additional information comprises at least one of: an identity, a name, a label or a tag of a region of the venue.

Clause H9. The system of Clauses H1 to H8, wherein: the target device is the receiver; there is at least one additional receiver in the venue; the transmitter is configured to transmit a respective additional wireless signal through the wireless multipath channel of the venue to each additional receiver; each additional receiver is configured to receive the respective additional wireless signal, wherein the respective received additional wireless signal differs from the respective transmitted additional wireless signal due to the wireless multipath channel of the venue and the movement of the object; the processor is further configured for: obtaining a respective number of additional TSCI of the wireless multipath channel from each additional receiver based on each respective received additional wireless signal, computing a respective additional TSMA based on the respective number of additional TSCI for each additional receiver, and computing the information of the target device based on at least some of the additional TSMA.

Clause H10. The system of Clauses H1 to H9, wherein the processor is further configured for: generating a real-time presentation of the TSMA and the at least some additional TSMA on the user device, wherein the TSMA and the at least some additional TSMA are presented visually on the user device in a side-by-side manner to enable visual comparison by the user.

Clause H11. The system of Clauses H1 to H10, wherein: the target device is the transmitter; there is at least one additional transmitter in the venue; each additional transmitter is configured to transmit a respective additional wireless signal through the wireless multipath channel of the venue to the receiver; the receiver is configured to receive the respective additional wireless signal from each additional transmitter, wherein the respective received additional wireless signal differs from the respective transmitted additional wireless signal due to the wireless multipath channel of the venue and the movement of the object; the processor is further configured for: obtaining a respective number of additional TSCI of the wireless multipath channel from the receiver based on each respective received additional wireless signal, computing a respective additional TSMA based on the respective number of additional TSCI associated with each additional transmitter, and computing the information of the target device based on at least some of the additional TSMA.

Clause H12. The system of Clauses H1 to H11, wherein the processor is further configured for: generating a real-time presentation of the TSMA and the at least some additional TSMA on the user device, wherein the TSMA and the at least some additional TSMA are presented visually on the user device in a side-by-side manner to enable visual comparison by the user.

Clause H13. The system of Clause H1 to H12, wherein: the object comprises at least one of: a user of the system, a living object, a plant, an animal, a pet, a human, or a machine; and the movement comprises at least one of: touching the target device, tapping the target device, a movement towards the target device, a movement away from the target device, a radial movement with respect to the target device, a tangential movement with respect to the target device, a tapping motion, a repeating movement, a repeated movement, a periodic movement, a transient movement, a movement with a timing, a movement with a count, or an intermittent movement, or a movement with timed pauses.

Clause H14. The system of Clauses H1 to H13, wherein the processor is further configured for performing at least one of the following based on the information of the target device: generating a recommended configuration; presenting the recommended configuration on the user device; receiving a confirmation or rejection or modification of the recommended configuration based on a user input on the user device; customizing or configuring the target device; customizing or configuring the system; customizing or configuring a network or an interconnection of the system; customizing or configuring a server of the system; customizing or configuring an app on a user device; customizing or configuring a presentation of the system; customizing or configuring a wireless sensing task, a wireless sensing algorithm, a fusion algorithm, or an aggregation algorithm associated with the system; confirming an admissibility, acceptability, sufficiency, suitability or a qualification of the target device; confirming a role of the target device in the system; qualifying at least one of: the target device, the TSCI, the wireless signal, the transmission of the wireless signal, the reception of the wireless signal, and the obtaining of the TSCI; locating the target device; computing a coordinate of the target device with respect to a map; naming the target device; renaming the target device; obtaining a network configuration or interconnection of the system from the user; or obtaining from the user a configuration of the wireless sensing task, a wireless sensing algorithm, a fusion algorithm, or an aggregation algorithm.

Clause H15. The system of Clauses H1 to H14, wherein the processor is further configured for: recognizing a pattern of the TSMA; and computing the information of the target device based on the recognition of the pattern of the TSMA.

Clause H16. The system of Clauses H1 to H15, wherein the pattern comprises at least one of: a monotonic increasing trend of a feature of the motion analytics in the TSMA as the object moves towards the target device in a neighborhood of the target device; a monotonic decreasing trend of the feature of the motion analytics in the TSMA as the object moves away from the target device in the neighborhood of the target device; a local maximum of the feature of the motion analytics in the TSMA at a point of closest approach of the object in the neighborhood of the target device; a positive derivative or differential of the feature of the motion analytics in the TSMA as the object moves towards the target device in the neighborhood of the target device; a negative derivative or differential of the feature of the motion analytics in the TSMA as the object moves away from the target device in the neighborhood of the target device; a zero derivative or differential of the feature of the motion analytics in the TSMA at the point of closest approach; a negative second derivative (or differential of differential) of the feature of the motion analytics in the TSMA at the point of closest approach; a repetition of the feature of the motion analytics in the TSMA; a relaxation oscillation of the feature of the motion analytics in the TSMA; or a damping of the feature of the motion analytics in the TSMA.

Clause H17. The system of Clause H1 to H16, wherein the motion analytics comprises at least one of: a magnitude, a phase, a time, an occurrence, a transformation, a histogram, a sample mean, a standard deviation, a variance, a length, an area, a volume, a similarity score, a distance, a classification, a breathing rate, or a heart rate.

Clause H18. A wireless device of a system for wireless sensing, comprising: a processor; a memory communicatively coupled to the processor; and a receiver communicatively coupled to the processor, wherein: an additional wireless device of the system is configured to transmit a wireless signal through a wireless multipath channel of a venue, the wireless multipath channel is impacted by a movement of an object in the venue, the receiver is configured to receive the wireless signal through the wireless multipath channel, the received wireless signal differs from the transmitted wireless signal due to the wireless multipath channel and the movement of the object, and the processor is configured for: obtaining a number of time series of channel information (TSCI) of the wireless multipath channel based on the received wireless signal, computing a time series of motion analytics (TSMA) based on the number of TSCI, computing an information of a target device based on the TSMA, wherein the target device is one of: the transmitter, the receiver, or an additional device in the venue, wherein the information of the target device comprises at least one of: an identity, a name, a label, a tag, or a location.

Clause H19. The wireless device of Clauses H1 to H18, wherein: the object is a user of the system; the movement is a training movement; and the processor is further configured for computing the information of the target device interactively based on: instructing the user to do the training movement near the target device, presenting the TSMA on a user device of the user, receiving at least one user input on the user device, and computing the information of the target device interactively based on the at least one user input.

Clause H20. A method for wireless sensing, comprising: transmitting a wireless signal from a transmitter through a wireless multipath channel of a venue, wherein the wireless multipath channel is impacted by a movement of an object in the venue; receiving the wireless signal by a receiver through the wireless multipath channel, wherein the received wireless signal differs from the transmitted wireless signal due to the wireless multipath channel and the movement of the object; obtaining a number of time series of channel information (TSCI) of the wireless multipath channel based on the received wireless signal; computing a time series of motion analytics (TSMA) based on the number of TSCI; and computing an information of a target device based on the TSMA, wherein: the target device is one of: the transmitter, the receiver, or an additional device in the venue, the information of the target device comprises at least one of: an identity, a name, a label, a tag, or a location.

The features described above may be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that may be used, directly or indirectly, in a computer to perform a certain activity or bring about a certain result. A computer program may be written in any form of programming language (e.g., C, Java), including compiled or interpreted languages, and it may be deployed in any form, including as a stand-alone program or as a module, component, subroutine, a browser-based web application, or other unit suitable for use in a computing environment.

Suitable processors for the execution of a program of instructions include, e.g., both general and special purpose microprocessors, digital signal processors, and the sole processor or one of multiple processors or cores, of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory may be supplemented by, or incorporated in, ASICs (application-specific integrated circuits).

While the present teaching contains many specific implementation details, these should not be construed as limitations on the scope of the present teaching or of what may be claimed, but rather as descriptions of features specific to particular embodiments of the present teaching. Certain features that are described in this specification in the context of separate embodiments may also be implemented in combination in a single embodiment. Conversely, various features that are described in the context of a single embodiment may also be implemented in multiple embodiments separately or in any suitable sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems may generally be integrated together in a single software product or packaged into multiple software products.

Particular embodiments of the subject matter have been described. Any combination of the features and architectures described above is intended to be within the scope of the following claims. Other embodiments are also within the scope of the following claims. In some cases, the actions recited in the claims may be performed in a different order and still achieve desirable results. In addition, the processes depicted in the accompanying figures do not necessarily require the particular order shown, or sequential order, to achieve desirable results. In certain implementations, multitasking and parallel processing may be advantageous.

**Claims**

1. A method of a wireless sensing system, comprising:

configuring N1+1 heterogeneous wireless devices of the wireless sensing system in a venue to form N1 device-links in a star configuration,
wherein each device-link comprises two of the devices linked wirelessly, one functioning as a respective wireless transmitter device and the other one as a respective wireless receiver device,
wherein one device is at a central position of the star configuration being in all the N device-links, while each of the remaining N1 devices is at a non-central position of the star configuration being linked wirelessly to the central device in one of the N1 device-links, wherein N1>1;
partitioning the venue into N1+1 regions, wherein each region is a candidate location associated with an object;
associating the N1+1 regions with the N1+1 devices, each region with a respective device;
transmitting N1 wireless signals through a wireless multipath channel of the venue, with a respective wireless signal transmitted from a respective wireless transmitter device of a respective device-link,
wherein the wireless multipath channel is impacted by a motion of the object in the venue; receiving the N1 wireless signals through the wireless multipath channel, with the respective wireless signal received by a respective wireless receiver device of the respective device-link,
wherein the respective received wireless signal differs from the respective transmitted wireless signal due to the wireless multipath channel of the venue and the motion of the object;
obtaining N1 time series of channel information (TSCI) of the wireless multipath channel based on the N1 received wireless signals, with the respective TSCI based on the respective received wireless signal of the respective device-link using a respective processor, a respective memory and a respective set of instructions;
computing N1 linkwise motion statistics (link-MS) associated with the N1 device-links based on the N1 TSCI, with the respective link-MS associated with the respective device-link computed based on the respective TSCI;
computing a location associated with the object as one of the N1+1 candidate locations based on the N1 link-MS .

2. The method of the wireless sensing system of claim 1, comprising:
selecting the location as the central candidate location associated with the central device if:

(a) a percentage of all the N1 link-MS associated with all the N1 device-links satisfying a selection criterion is greater than or equal to a first threshold, wherein any device-link satisfies the selection criterion if the associated link-MS exceeds a second threshold.

3. The method of the wireless sensing system of claim 2, comprising:
selecting the location as a particular one of the N1 non-central candidate locations associated with a particular non-central device if:

(a) the percentage of all the N1 link-MS associated with all the N1 device-links satisfying the selection criterion is less than the first threshold, and
(b) a particular link-MS associated with the particular non-central candidate location satisfies the selection criterion to a maximum degree, and also satisfies a qualifying criterion, wherein any link-MS satisfies the selection criterion to the maximum degree if it is a maximum among all the N1 link-MS, wherein any link-MS satisfies the qualifying criterion if it is greater than a third threshold.

4. The method of the wireless sensing system of claim 1 to 3, comprising:

computing N1+1 motion scores associated with the N1+1 candidate locations based on the N1 link-MS;
selecting the location as a particular candidate location associated with a maximum among the N1+1 motion scores.

5. The method of the wireless sensing system of claim 1 to 4, comprising:

defining at least one default value and a set of level values for the motion scores,
wherein each respective default value for respective motion score of respective candidate location represents a respective null detection of the motion of the object at the respective candidate location based on the respective motion score,
wherein each respective level value for respective motion score of respective candidate location represents a respective detection of the motion of the object at the respective candidate location based on the respective motion score,
wherein any default value is smaller than all the level values;
performing one of (a), (b) or (c) in the following way:

if none of the N1 link-MS satisfies a selection criterion and none of the N1 link-MS satisfies a qualifying criterion,
perform (a),
else if all of the N1 link-MS satisfy the selection criterion and all of the N1 link-MS satisfy the qualifying criterion,
perform (b),

else
perform (c);
wherein (a) is performed by setting each of the N1+1 motion scores associated with all the candidate locations to a respective default value;
wherein (b) is performed by (b1) setting each of the N1 motion scores associated with the N1 non-central locations to a respective default value and (b2) setting the motion score associated with the central candidate location to respective level value based on an aggregate of the N1 link-MS, wherein the respective level value is monotonic non-decreasing with respect to the aggregate;
wherein (c) is performed by (c1) setting each of the N1 motion scores associated with the N1 non-central locations to a respective level value based on the respective link-MS, wherein the respective level value is monotonic non-decreasing with respect to the respective link-MS, and (c2) setting the motion score associated with the central candidate location to be a respective default value.

6. The method of the wireless sensing system of claim 3 to 5, comprising:

computing N1 second linkwise motion statistics (second link-MS) based on the N1 TSCI, each second link-MS associated with respective device-link computed based on respective TSCI;
selecting the location as the central candidate location associated with the central device if: a second percentage of all the N1 second link-MS associated with all the N1 device-links satisfying a second selection criterion is greater than or equal to a fourth threshold, wherein any device-link satisfied the second selection criterion if the associated second link-MS exceeds a fifth threshold.

7. The method of the wireless sensing system of claim 6, comprising:
selecting the location as a particular one of the N1 non-central candidate locations associated with a particular non-central device if:

(a) the percentage of all the N1 link-MS associated with all the N1 device-links satisfying the selection criterion is less than the first threshold,
(b) the second percentage of all the N1 second link-MS associated with all the N1 device-links satisfying the second selection criterion is less than the fourth threshold, and
(c) one of the following two cases is true:

(case 1) a particular link-MS associated with the particular non-central candidate location satisfies the qualifying criterion and also satisfies the selection criterion to the maximum degree,
(case 2) none of the N1 link-MS satisfies the qualifying criterion but a particular second link-MS associated with the particular non-central candidate location satisfies a second qualifying criterion by being within a second qualifying range and also satisfies the second selection criterion to a second maximum degree by being a maximum among all the N1 second link-MS.

8. The method of the wireless sensing system of claim 1 to 7, comprising:

computing N1 secondary linkwise motion statistics (second link-MS) based on the N1 TSCI, each second link-MS associated with respective device-link computed based on respective TSCI;
computing N1+1 motion scores associated with the N1+1 candidate locations based on the N1 link-MS and the N1 second link-MS;
defining at least one default value, a first set of level values and a second set of level values for the motion scores,

wherein each respective default value for respective motion score of respective candidate location represents a respective null detection of the motion of the object at the respective candidate location based on the respective motion score,

wherein each respective level value in the first set for respective motion score represents a respective detection of the motion of the object at the respective candidate location based on respective link-MS,

wherein each respective level value in the second set for respective motion score represents a respective detection of the motion of the object at the respective candidate location based on respective second link-MS,

wherein any default value is smaller than all the level values,

wherein each level value in the first set is greater than or equal to all level values in the second set;

if none of the N1 link-MS satisfies a selection criterion nor a qualifying criterion, and none of the N1 second link-MS satisfies a second selection criterion nor a second qualifying criterion, then setting each of the N1+1 motion scores associated with all the candidate locations to respective default value;

else if all of the N1 link-MS satisfy the selection criterion and all of the N1 link-MS satisfy the qualifying criterion, then setting each of the N1 motion scores associated with the N1 non-central locations to respective default value, and setting the motion score associated with the central candidate location to respective level value in the first set based on an aggregate of the N1 link-MS, wherein the respective level value in the first set is monotonic non-decreasing with respect to the aggregate;

else if all of the N1 second link-MS satisfy the second selection criterion and all of the N1 second link-MS satisfy the second qualifying criterion, then setting each of the N1 motion scores associated with the N1 non-central locations to respective default value, and setting the motion score associated with the central candidate location to respective level value in the second set based on a second aggregate of the N1 second link-MS, wherein the respective level value in the second set is monotonic non-decreasing with respect to the second aggregate;

else for each of the N1 motion scores associated with the N1 non-central locations:

if respective link-MS satisfies the selection criterion and the qualifying criterion, then setting respective motion score to respective level value in the first set based on the respective link-MS, wherein the respective level value in the first set is monotonic non-decreasing with respect to the respective link-MS;

else if respective second link-MS satisfies the second selection criterion and the second qualifying criterion, then setting respective motion score to respective level value in the second set based on the respective second link-MS, wherein the respective level value in the second set is monotonic non-decreasing with respect to the respective second link-MS;

else setting respective motion score to respective default value.

9. The method of the wireless sensing system of claim 1 to 8, comprising:

wherein each candidate location is associated with a current motion score;

wherein a respective motion score of each candidate location is available to update the respective current motion score;

for each candidate location:

in the case that the system is in an IDLE state:

if (a) a first percentage of time instances in a first time period with the motion of the object detected at the candidate location by the system is greater than a first threshold and (b) respective motion score of the candidate location is greater than respective default value, then

updating respective current motion score of the candidate location to be the respective motion score,

else

updating respective current motion score of the candidate location to be respective default value;

in the case that the system is in a MOTION state:

if a second percentage of time instances in a second time period with the motion of the object detected at the candidate location is less than a second threshold, then

updating respective current motion score of the candidate location to be respective default value,

else

updating respective current motion score of the candidate location to be the respective motion score.

**10.** The method of the wireless sensing system of claim 9, comprising:

wherein any candidate location has reliable detection at a time t if a percentage of time instances in an immediate past time period with the motion of the object detected at the candidate location exceeds a threshold;
in the case that none of the candidate locations has reliable detection at time t:

if at least one candidate location has reliable detection at least one time instance in a time window, then detecting the motion of the object at a particular candidate location with the largest motion score in the time window,
updating a current motion score of the particular candidate location at time t to be the largest motion score, and
updating a current motion score of all remaining candidate locations at time t to be respective default values,

else

not performing detection of the object motion at any candidate location at time t, and
updating respective current motion score of each the candidate locations at time t to respective default value;
in the case that at least one candidate location has reliable detection at time t:

detecting the motion of the object at a particular candidate location with the largest motion score in the time window,
setting the motion score of the particular candidate location at time t to be the largest motion score, for each candidate location:

if the candidate location has reliable detection at time t, then
updating respective current motion score of the candidate location in a first way based on respective motion score;
else if there is at least one reliable detection in the immediate past time period, then
updating respective current motion score of the candidate location in a second way based on respective motion score;

else
updating respective current motion score of the candidate location to be respective default value.

**11.** The method of the wireless sensing system of claim 10, comprising:

wherein there are N2 objects in the venue;
in the case that none of the candidate locations has reliable detection at time t:

if at least N2 candidate locations have reliable detection at least one time instance in the time window, then detecting the motion of the N2 objects at N2 candidate locations with the largest motion scores in the time window,
updating respective current motion scores of the N2 candidate locations to be the N2 largest motion scores,
updating respective current motion scores of all remaining candidate locations to be respective default values;
in the case that at least one candidate location has reliable detection at time t:

detecting the motion of the N2 objects at up to N2 candidate locations with the largest motion scores in the time window;
updating respective current motion scores of the up to N2 candidate locations to be the largest motion scores.

**12.** The method of the wireless sensing system of claim 1 to 11, comprising:

computing N1+1 first tentative scores associated with the N1+1 candidate locations based on the N1 link-MS, each first tentative score taking on a value from a first range of values;
computing N1+1 second tentative scores associated with the N1+1 candidate locations based on the N1 second link-MS, each second tentative score taking on a value from a second range of values;

computing the N1+1 motion scores based on the N1+1 tentative scores and the N1+1 second tentative scores.

13. The method of the wireless sensing system of claim 6 to 12, comprising:

computing N1 third linkwise motion statistics (third link-MS) based on the N1 TSCI, each third link-MS associated with respective device-link computed based on the respective TSCI;
selecting the location as the central candidate location associated with the central device if: a third percentage of all the N1 third link-MS associated with all the N1 device-links satisfying a third selection criterion is greater than or equal to a seventh threshold;
selecting the location as a particular one of the N1 non-central candidate locations associated with a particular non-central device if:

the percentage of N1 link-MS associated with all the N1 device-links satisfying the selection criterion is less than the first threshold,
the second percentage of N1 second link-MS associated with all the N1 device-links satisfying a second selection criterion is less than the fourth threshold,
the third percentage of N1 third link-MS associated with all the N1 device-links satisfying a third selection criterion is less than the seventh threshold, and
one of the following three cases is true:

(case 1) a particular link-MS associated with the particular non-central candidate location satisfies the qualifying criterion and also satisfies the selection criterion to a maximum degree, or
(case 2) none of the N1 link-MS satisfies the qualifying criterion but a particular second link-MS associated with the particular non-central candidate location satisfies the second qualifying criterion and also satisfies the second selection criterion to a second maximum degree, or
(case 3) none of the N1 link-MS satisfies the qualifying criterion, and none of the N1 second link-MS satisfies the second qualifying criterion, but a particular third link-MS associated with the particular non-central candidate location satisfies the third qualifying criterion and also satisfies the third selection criterion to a third maximum degree;

wherein the link-MS comprises a TRRS;
wherein the second link-MS comprises a micro-motion statistics;
wherein the third link-MS comprises a breathing statistics.

14. A wireless sensing system, comprising:

N1+1 heterogeneous wireless devices in a venue configured to form N1 device-links in a star configuration, wherein N1>1;
wherein each device-link comprises two of the N1+1 devices linked wirelessly, one functioning as a respective wireless transmitter device and the other one as a respective wireless receiver device;
wherein one of the N1+1 devices is a central device at a central position of the star configuration being in all the N device-links while each of the remaining N1 devices is at a non-central position of the star configuration being linked wirelessly to the central device in one of the N1 device-links;
wherein the venue is partitioned into N1+1 regions, each region being a candidate location associated with an object;
wherein the N1+1 regions are associated with the N1+1 devices, each region with a respective device;
wherein N1 wireless signals are transmitted through a wireless multipath channel of the venue, with a respective wireless signal transmitted from a respective wireless transmitter device of a respective device-link;
wherein the wireless multipath channel is impacted by a motion of the object in the venue;
wherein the N1 wireless signals are received through the wireless multipath channel, with the respective wireless signal received by a respective wireless receiver device of the respective device-link;
wherein the respective received wireless signal differs from the respective transmitted wireless signal due to the wireless multipath channel of the venue and the motion of the object;
wherein N1 time series of channel information (TSCI) of the wireless multipath channel are obtained based on the N1 received wireless signals, with the respective TSCI based on the respective received wireless signal of the respective device-link using a respective processor, a respective memory and a respective set of instructions;
wherein N1 linkwise motion statistics (link-MS) associated with the N1 device-links are computed based on the N1 TSCI, with the respective link-MS associated with the respective device-link computed based on the respective TSCI;

wherein a location associated with the object is computed as one of the N1+1 candidate locations based on the N1 link-MS .

15. The wireless sensing system of claim 14, further comprise:

at least one processor;
at least one storage device each storing a respective set of instructions that when executed by respective processor cause the respective processor to perform the method of any one of claims 2 to 13.

FIG. 1

**FIG. 2**

**FIG. 3**

EP 4 478 088 A2

**FIG. 4**

EP 4 478 088 A2

FIG. 5

**FIG. 6**

**FIG. 7**

EP 4 478 088 A2

**FIG. 8A**

FIG. 8B

FIG. 9

FIG. 10

**FIG. 11**

EP 4 478 088 A2

FIG. 12

FIG. 13

FIG. 14A

**FIG. 14B**

FIG. 14C

<u>1500</u>

Obtain a baseband mixture signal in a venue, the baseband mixture signal comprising a mixture of a first source signal and an additional signal, the first source signal being generated by a first motion of a first object in the venue — 1502

Obtain a radio feature of a radio signal transmitted from a transmitter to a receiver in the venue, the received radio signal being different from the transmitted radio signal due to a wireless channel of the venue and at least the first motion of the first object in the venue — 1504

Construct a first adaptive filter for the baseband mixture signal based on the radio feature — 1506

Filter the baseband mixture signal using the first adaptive filter to obtain a first output signal — 1508

Generate an estimation of the first source signal based on the first output signal — 1510

**FIG. 15**

EP 4 478 088 A2

**FIG. 16**

EP 4 478 088 A2

FIG. 17

FIG. 18

FIG. 19

**FIG. 20**

**FIG. 21**

FIG. 22

FIG. 23A

FIG. 23B

FIG. 24A

FIG. 24B

FIG. 25

EP 4 478 088 A2

2600

```
┌────────────────────────────────────────────────────────────┐
│  Transmit a wireless signal from a transmitter through a      │──2602
│  wireless multipath channel of a venue, the wireless multipath │
│  channel being impacted by a motion of an object in the venue  │
└────────────────────────────────────────────────────────────┘
```

Transmit a wireless signal from a transmitter through a wireless multipath channel of a venue, the wireless multipath channel being impacted by a motion of an object in the venue — 2602

Receive the wireless signal by a receiver through the wireless multipath channel, the received wireless signal differing from the transmitted wireless signal due to the wireless multipath channel and the motion of the object — 2604

Obtain N1 time series of channel information (TSCI) of the wireless multipath channel based on the received wireless signal, N1=N2*N3, N2 is a quantity of transmit antennas on the transmitter, N3 is a quantity of receive antennas on the receiver, each TSCI is associated with a respective transmit antenna of the transmitter and a respective receive antenna of the receiver — 2606

Compute N4 selected projections based on the N1 TSCI, N4 is a positive integer — 2608

Perform a sensing task associated with the motion of the object based on the N4 selected projections — 2610

FIG. 26

FIG. 27A

**FIG. 27B**

FIG. 28

FIG. 29

FIG. 30

FIG. 31

FIG. 32

EP 4 478 088 A2

```
┌─────────────────┐      ┌─────────────────────┐
│  For each link  │  ⇒   │  Calculate MS for each │
│     Get MS      │      │   loc based on MS on  │
│                 │      │    individual links   │
└─────────────────┘      └─────────────────────┘
                                    │
                                    ⇓
┌─────────────────┐  Yes ┌─────────────────────┐
│  Detected loc = │  ⇐   │    If there is      │
│  max(MS(Loc))   │      │    any MS on        │
│                 │      │    loc > th1        │
└─────────────────┘      └─────────────────────┘
```

**FIG. 33**

| Ground truth | Room1 | Room1 | Room2 | Room2 | Room3 | Room3 |
|---|---|---|---|---|---|---|
| Set 1 | 0.056s | -5.252s | 0.876s | 0.540s | 4.400s | 4.298s |
| Set 2 | -1.944s | -5.752s | 2.876s | 0.540s | 4.400s | 2.798s |
| Set 3 | -3.444s | -8.252s | 4.876s | 4.040s | 2.900s | -2.202s |
| MS | -3.444s | -8.252s | -1.624 | -1.460s | 3.900s | 3.798s |
| Subca Cov | 0.0560s | -4.752s | -0.624s | -1.460s | 3.900s | 3.798s |
| Subca Corr | -3.444s | -8.252s | -0.624s | -0.960s | -2.100s | -3.202s |
| MRC1 MS | -3.944s | -8.252s | -2.624s | -1.960s | -2.100s | -0.702s |
| MRC2 MS | -6.444s | -11.252s | -2.624s | -3.460s | -5.600s | -6.202s |

Single-way: Set 1, Set 2, Set 3

Multi-way: MS, Subca Cov, Subca Corr, MRC1 MS, MRC2 MS

Motion statistic (MS)

Proximity statistic (PS)

MRC-based MS

**FIG. 34**

| structure | Set1 | Set2 | Set3 | Multi-way MS | Cov | Corr | MRC1 MS | MRC2 MS |
|---|---|---|---|---|---|---|---|---|
| Overlap ratio | 0.74512 | 0.76707 | 0.68659 | 0.78415 | 0.89756 | 0.71707 | 0.7561 | 0.69024 |

| structure | Set1 | Set2 | Set3 | Multi-way MS | Cov | Corr | MRC1 MS | MRC2 MS |
|---|---|---|---|---|---|---|---|---|
| Detected ratio | 0.94673 | 0.93705 | 0.9201 | 0.93947 | 0.92736 | 1 | 0.94915 | 0.95884 |

| structure | Set1 | Set2 | Set3 | Multi-way MS | Cov | Corr | MRC1 MS | MRC2 MS |
|---|---|---|---|---|---|---|---|---|
| False alarm ratio | 0.45946 | 0.40541 | 0.55037 | 0.37346 | 0.13268 | 0.57002 | 0.4398 | 0.58231 |

FIG. 35

| Ground truth | Room1 | Room2 | Room3 |
|---|---|---|---|
| Set 1 | -0.052s | 1.999s | 1.340s |
| Set 2 | -2.052s | 1.999s | -1.160s |
| Set 3 | -6.052s | 4.999s | -9.160s |
| MS | -3.052s | 0.499s | -4.660s |
| Cov | -0.0520s | -0.0010s | 3.840s |
| Corr | -6.052s | -0.501s | -3.160s |
| MRC1 MS | -3.052s | -0.501s | -5.660s |
| MRC2 MS | -10.052s | -2.501s | -6.160s |

Single-way { Set 1, Set 2, Set 3

Multi-way { MS, Cov, Corr, MRC1 MS, MRC2 MS

Motion statistic (MS) } Set 1, Set 2, Set 3, MS

Proximity statistic (PS) } Cov, Corr

MRC-based MS } MRC1 MS, MRC2 MS

FIG. 36

EP 4 478 088 A2

| structure | Set1 | Set2 | Set3 | Multi-way MS | Cov | Corr | MRC1 MS | MRC2 MS |
|---|---|---|---|---|---|---|---|---|
| Overlap ratio | 0.74512 | 0.76707 | 0.68659 | 0.84318 | 0.92273 | 0.84091 | 0.81364 | 0.79545 |

| structure | Set1 | Set2 | Set3 | Multi-way MS | Cov | Corr | MRC1 MS | MRC2 MS |
|---|---|---|---|---|---|---|---|---|
| Detected ratio | 0.94673 | 0.93705 | 0.9201 | 0.94 | 0.95714 | 1 | 0.92571 | 0.94286 |

| structure | Set1 | Set2 | Set3 | Multi-way MS | Cov | Corr | MRC1 MS | MRC2 MS |
|---|---|---|---|---|---|---|---|---|
| False alarm ratio | 0.45946 | 0.40541 | 0.55037 | 0.53333 | 0.21111 | 0.77778 | 0.62222 | 0.77778 |

FIG. 37

EP 4 478 088 A2

**3800**

Determine a plurality of heterogeneous wireless devices and a plurality of device-links each comprising two of the heterogeneous wireless devices, one functioning as a transmitter and the other functioning as a receiver — 3802

For each respective device-link of the plurality of device-links, transmit a respective wireless signal from a respective transmitter of the respective device-link through a wireless multipath channel of the venue, wherein the wireless multipath channel is impacted by a motion of an object in the venue — 3804

Receive the respective wireless signal by a respective receiver of the respective device-link through the wireless multipath channel, the respective received wireless signal differing from the respective transmitted wireless signal due to the wireless multipath channel of the venue and the motion of the object — 3806

Obtain a respective time series of channel information (TSCI) of the wireless multipath channel based on the respective received wireless signal of the respective device-link — 3808

Compute a respective linkwise motion statistics (link-MS) for the respective device-link based on the respective TSCI — 3810

Perform a sensing task associated with the motion of the object based on at least one of: all the TSCI or all the link-MS — 3812

Compute a location in the venue associated with the sensing task based on all the link-MS — 3814

**FIG. 38**

**FIG. 39**

$$ms(t) = \begin{bmatrix} ms_1(t) \\ ms_2(t) \\ ms_3(t) \end{bmatrix}$$

$$lkd(t) = \begin{bmatrix} lkd_1(t) \\ lkd_2(t) \\ lkd_3(t) \end{bmatrix}$$

$$lvl(t) = \begin{bmatrix} lvl_1(t) \\ lvl_2(t) \\ lvl_3(t) \\ lvl_o(t) \end{bmatrix}$$

Overall detection
$$lvl_s(t) = \begin{bmatrix} lvl_{s1}(t) \\ lvl_{s2}(t) \\ lvl_{s3}(t) \\ lvl_{s0}(t) \end{bmatrix}$$

After stage I transition
$$lvl_I(t) = \begin{bmatrix} lvl_{I1}(t) \\ lvl_{I2}(t) \\ lvl_{I3}(t) \\ lvl_{I0}(t) \end{bmatrix}$$

After stage II transition
$$lvl_{II}(t) = \begin{bmatrix} lvl_{II1}(t) \\ lvl_{II2}(t) \\ lvl_{II3}(t) \\ lvl_{II0}(t) \end{bmatrix}$$

ADL engine output
$$lvl_{ADL}(t) = \begin{bmatrix} lvl_{ADL1}(t) \\ lvl_{ADL2}(t) \\ lvl_{ADL3}(t) \\ lvl_{ADL0}(t) \end{bmatrix}$$

# users

$ms(t)$ → RM Link detection → $lkd(t)$ → RM Location detection → $lvl(t)$

$mm(t)$ → MM Link detection → $lkd(t)$ → MM Location detection → $lvl(t)$

$br(t)$ → BR Link detection → $lkd(t)$ → BR Location detection → $lvl(t)$

→ Selection → $lvl_s(t)$ → Transition (within location) → $lvl_I(t)$ → Transition (across locations) → $lvl_{II}(t)$ → State Machine → $lvl_{ADL}(t)$

2 stage transition algorithm

150

EP 4 478 088 A2

$$\widetilde{m}_k(t) = \overline{m}_k(t)\mathbb{1}\{\overline{m}_k(t) > \gamma\}$$

Likelihood for motion and micromotion
m: motion/micromotion statistics

$$\overline{m}_k(t) = \underset{\tau=0,\cdots,W-1}{\mathrm{median}} m_k(t-\tau)$$

$$L_k(t) = \left| \frac{\widetilde{m}_k^p(t)}{\sum_{m\in\mathcal{S}_i} \widetilde{m}_m^p(t)} + \alpha\lfloor\widetilde{m}_k(t) - \gamma\rfloor_0 \right|^1$$

$$lkd_k(t) = \frac{1}{L}\sum_{\tau=0}^{L-1} L_k(t-\tau)$$

Note*: Window length W and threshold $\gamma$ are determined by the sensitivity level.

FIG. 40

EP 4 478 088 A2

$$\widetilde{br}_k(t) = \mathbf{1}\{l_b \le br_k(t) \le r_b\}$$

$$lkd_k(t) = \overline{br}_k(t)\mathbf{1}\{\overline{br}_k(t) \ge \eta_{b_1}\}$$

$br_1(t)$ → [Noise gating] → $\widetilde{br}_1(t)$ → [Sum window] → $\overline{br}_1(t)$ → [Thresholding] → $lkd_1(t)$

$br_2(t)$ → [Noise gating] → $\widetilde{br}_2(t)$ → [Sum window] → $\overline{br}_2(t)$ → [Thresholding] → $lkd_2(t)$

$br_3(t)$ → [Noise gating] → $\widetilde{br}_3(t)$ → [Sum window] → $\overline{br}_3(t)$ → [Thresholding] → $lkd_3(t)$

$$\overline{br}_k(t) = \sum_{\substack{\tau=0,\dots,V-1 \\ V=10}} \widetilde{br}_k(t-\tau)$$

**FIG. 41**

EP 4 478 088 A2

FIG. 42

EP 4 478 088 A2

## Level estimation

FIG. 43

FIG. 44

FIG. 45

$$lvl(t) = \begin{bmatrix} lvl_1(t) \\ lvl_2(t) \\ lvl_3(t) \\ lvl_o(t) \end{bmatrix}$$

# users

RM Location detection $\quad lvl(t) \quad\longrightarrow$

MM Location detection $\quad lvl(t) \quad\longrightarrow$ Selection $\longrightarrow lvl_s(t) = \begin{bmatrix} lvl_{s1}(t) \\ lvl_{s2}(t) \\ lvl_{s3}(t) \\ lvl_{s0}(t) \end{bmatrix}$

BR Location detection $\quad lvl(t) \quad\longrightarrow$

**FIG. 46**

4700

FIG. 47

FIG. 48

EP 4 478 088 A2

Motion statistics
response

FIG. 49

FIG. 50

EP 4 478 088 A2

**Edit Device**

Device name

Carly's Apple TV

Room name

Living Room

Remove device | Save

---

Are you sure you want to
remove this device?

No, don't remove | Yes, remove

**FIG. 51**

O1 – Hex Origin
O2 – TypeE Origin
H1 – Hex bot 1
H2 – Hex bot 2
E1 – TypeE bot 1
E2 – TypeE bot 2

**FIG. 52**

EP 4 478 088 A2

FIG. 53

# Motion on bot 1

**FIG. 54**

# Motion on bot 2

**FIG. 55**

| | |
|---|---|
| Transmit a wireless signal from a transmitter through a wireless multipath channel of a venue, the wireless multipath channel being impacted by a movement of an object in the venue | 5602 |

$\downarrow$

| | |
|---|---|
| Receive the wireless signal by a receiver through the wireless multipath channel, the received wireless signal differing from the transmitted wireless signal due to the wireless multipath channel and the movement of the object | 5604 |

$\downarrow$

| | |
|---|---|
| Obtain a number of time series of channel information (TSCI) of the wireless multipath channel based on the received wireless signal | 5606 |

$\downarrow$

| | |
|---|---|
| Compute a time series of motion analytics (TSMA) based on the number of TSCI | 5608 |

$\downarrow$

| | |
|---|---|
| Compute an information of a target device based on the TSMA, the target device being one of: the transmitter, the receiver, or an additional device in the venue, the information of the target device comprising at least one of: an identity, a name, a label, a tag, or a location | 5610 |

**FIG. 56**

EP 4 478 088 A2

**FIG. 57**

EP 4 478 088 A2

**FIG. 58**